(19) Europäisches Patentamt
European Patent Office
Office européen des brevets

(11) **EP 2 486 450 B1**

(12) **EUROPEAN PATENT SPECIFICATION**

(45) Date of publication and mention
of the grant of the patent:
**19.05.2021 Bulletin 2021/20**

(21) Application number: **09829537.1**

(22) Date of filing: **07.10.2009**

(51) Int Cl.:
*G03B 21/14* (2006.01)     *G02C 11/00* (2006.01)
*G02B 27/01* (2006.01)     *G06F 3/01* (2006.01)

(86) International application number:
**PCT/US2009/059908**

(87) International publication number:
**WO 2010/062481 (03.06.2010 Gazette 2010/22)**

(54) **NEAR TO EYE DISPLAY SYSTEM AND APPLIANCE**

AUGENNAHES ANZEIGESYSTEM UND GERÄT

SYSTÈME ET APPAREIL D'AFFICHAGE PROCHE DE L' IL

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(43) Date of publication of application:
**15.08.2012 Bulletin 2012/33**

(73) Proprietors:
• **Chaum, David**
  **Sherman Oaks, CA 91403 (US)**
• **Mossberg, Thomas W.**
  **Eugene, OR 97404 (US)**
• **Rogers, John R.**
  **Monrovia, CA 91016 (US)**

(72) Inventors:
• **Chaum, David**
  **Sherman Oaks, CA 91403 (US)**
• **Mossberg, Thomas W.**
  **Eugene, OR 97404 (US)**
• **Rogers, John R.**
  **Monrovia, CA 91016 (US)**

(74) Representative: **Reeve, Nicholas Edward
Reddie & Grose LLP
The White Chapel Building
10 Whitechapel High Street
London E1 8QS (GB)**

(56) References cited:
| | |
|---|---|
| US-A- 5 087 116 | US-A1- 2001 043 163 |
| US-A1- 2001 043 208 | US-A1- 2002 030 636 |
| US-A1- 2002 167 462 | US-A1- 2004 227 703 |
| US-A1- 2005 068 255 | US-A1- 2005 209 691 |
| US-A1- 2006 017 655 | US-A1- 2006 028 400 |
| US-A1- 2007 187 616 | US-A1- 2008 088 937 |
| US-A1- 2008 212 195 | US-A1- 2008 239 420 |
| US-B1- 6 181 475 | US-B2- 7 375 701 |

**Description**

FIELD OF THE INVENTION

The present invention is directed to near-to-eye display systems for providing images into the eye of a user, and more particularly to systems that direct light at redirector structures that redirect the light through the pupil of the eye to the retina.

BACKGROUND OF THE INVENTION

Near-to-eye display systems are of great commercial interest. There have been many attempts to develop so-called "head mounted displays." Some of the relevant performance measures for such displays include resolution, field of view, whether they can be "see through," whether they provide dynamic focus, and the extent to which they can be light weight and unobtrusive. Other example desired characteristics include ease with which such devices can be controlled by the user and integrated with verbal communication. Further example desired aspects include ability to capture images from the environment and accommodate those with visual disabilities.

Prior art US2008212195 A1 and US2005068255 A1 each disclose near-to-eye displays wherein a light redirecting means redirects modulated light towards the pupil of the user's eye.

SUMMARY OF THE INVENTION

The invention is defined in the claims, to which reference should now be made.

The human eye "sees" images in a natural scene by converting the angles of light entering the eye pupil into locations on the retina. Light arriving at the eye from a sufficiently far point in the environment can be regarded parallel rays, because the angle between the rays is so small, and is typically referred to as "collimated" light. The eye acts as a lens, converting the angle of each beam of collimated light entering the eye pupil into a corresponding spot where the light is focused on the retina. This is much as with the pixel detectors arrayed on the flat sensor of a camera focused on an object far away, except that the sensor array of the eye is formed as a concave inner surface of the eyeball. The inventive systems are preferably able, as will be explained, to create light beams at various angles and positions capable of entering the eye pupil and generating the desired pixel dots on the retina so that they can be seen. The range of angles that can be created is preferably such that the corresponding pixel dots fill a large enough portion of the retina that the resulting images are perceived as immersive as in an Imax theater or real life.

If the origin of light corresponding to a pixel location is not distant but at a nearby point, such as at arms length, the rays are not collimated but rather each appreciably radiates from that point and they enter the eye with angles that are significantly diverging from each other. The eye can "accommodate" for this by physically adjusting the shape of its "crystalline lens" so that rays entering the eye from points at that distance are bent inwards just enough that they focus to a sharp spot on the retina. If objects are not at the distance the eye is accommodating for, much like focusing on the wrong thing with a camera or when wearing somebody else's glasses, the corresponding image on the retina will be blurry. The inventive systems preferably vary the beams of light sent into the eye, from collimated (or slightly converging) to slightly diverging, in order to contribute to fooling the eye into believing that the object from which the light originates is at a certain distance. In some examples the distance to the object is known to the inventive system and in other examples the system's focus correction is calculated after measuring the accommodation of the eye, in effect autofocus on the retina, or the vergence angle between the eyes.

The color of light seen by the eye is recognized by sensor cells on the retina called cones. Each cone in effect outputs a simple measurement of the amount of light impinging on it. There are several types of cones, however, each with its own characteristic sensitivity to different wavelengths of light. The brain infers color from the relative magnitudes of responses of cones of different types when the cones are receiving the same light. With current display technology, an acceptable range or "gamut" of colors can be obtained from light by varying three wavelengths, such as red, green and blue. Some displays obtain wider color gamuts by using somewhat more than three wavelengths, approaching the limits of perception of the range of colors in the natural world. The present inventive systems modulate the amount of light for each of several colors of light independently in order to obtain perception of the desired colors.

Short pulses of light are integrated and perceived as continuous when their repetition rate is high enough. With current display technology, for instance, overall "flicker" is believed to be unnoticeable to most people above about eighty frames per second. The inventive systems are preferably capable of rates that similarly create the illusion of continuous illumination. Some of the sensors in the eye are actually faster than others and the inventive systems optionally, as will be explained, take advantage of this by supplying pulses of light at different speeds for different regions of the retina.

The pupil of the eye ranges from a minimal aperture of about 2mm in diameter for some people in very bright environments all the way up to as large as 8mm for some people under very low light. The pupil can, it is believed, be regarded as being typically around 4mm, particularly for average adults indoors. In some natural cases portions of the beam of light originating from a distant point are occluded and thereby prevented from entering the pupil of the eye, such as because only a small cross-section of the beam makes it into the pupil, as when the person is looking through a small opening, such as a door open only a crack. In such cases, however, the location of the resulting pixel dot on the retina is not changed -- as the location is determined only by the angle of the collimated beam -- but the amount of optical energy or luminance is reduced. The light that is sent into the eye by the inventive systems in some examples is a limited diameter beam. In some examples the beam may even be partly occluded or "clipped" by the iris at the edge of the pupil; however, the inventive systems in such cases preferably adjust the amount of optical energy in the beam so as to create the perception of the desired luminance.

The size of the beam entering the pupil does, however, influence the spot size on the retina. It is believed that, somewhat surprisingly, about a 2mm beam size is a "sweet spot" and generally results in the smallest spots on the retina. Substantially larger beams result in slightly larger spots owing to the imperfections of the optics of the eye; whereas substantially smaller beams result in significantly larger spots due to the optical phenomenon of diffraction. Thus, a 2mm collimated beam produces a spot size that is about as small as can be perceived; whereas, a beam that is roughly ten times narrower produces a spot that is about ten times larger by comparison.

The resolution or amount of detail perceived depends on the spot size of pixels on the retina. But some portions of the retina can sense a much smaller spot size than other portions. The highest-acuity portion of the retina, sometimes called the "foveal" region, corresponds to only a degree or a few degrees centered on the point of regard. Visual acuity drops off precipitously from there, reaching roughly eight times less just ten degrees out from the fovea. Thus, the eye sees in high-resolution in the foveal region near the point of regard, but substantially beyond that the resolution rapidly diminishes. Even though this reduced resolution is easy to verify, such as by noticing that it is impossible to read letters near a letter that the eye is fixated on (especially if the letters don't spell words), most people are unaware of it. The brain generally creates the illusion that we see in all directions with the same high resolution.

The present inventive systems in some examples supply beams of light that are roughly 2mm to the foveal region and optionally supply smaller beams for the more peripheral regions. Thus, these systems supply the appropriate beam size for the corresponding portion of the retina to allow the eye to see at its best, but may take advantage of using a smaller beam size where it does not substantially degrade perception.

The eye typically darts around continuously, stopping briefly in between. It moves in a ballistic manner in what are called "saccades" that are too fast to see during, and then comes to rest at "fixations" for roughly tenths of seconds at a time. The present inventive systems in some embodiments track the rotational position of the eye so to determine where it is looking to determine how to angle the beams in order to get them into the eye pupil. The larger beams are directed into the pupil by aiming into the center of the eye's rotation so as to provide the foveal pixel dots, and the remaining larger pixel spots are formed by optionally smaller peripheral beams aimed more obliquely at the particular position of the pupil at that time.

The providing of at least some beams into the pupil of the eye by some of the exemplary inventive systems is by multiple "redirectors," as will be defined later. An example of a redirector is a partially reflective mirror embedded in or on the inner surface of an eyeglass lens. Beams are launched at redirectors through a projector exit window or "exit pupil." Beams incident on a redirector are accordingly directed towards the eye and preferably at least partially directed into the pupil of the eye.

The positioning and orientation of the redirectors and the angles at which light is launched at them preferably allow them to provide a complete range of angles into the pupil of the eye. Thus, a contiguous image covers a perceived field of view. The foveal portion in some examples receives larger beams from near the point of regard aimed more straight into the eye to provide higher resolution, and the peripheral portion receives optionally smaller beams aimed more obliquely in order to be able to enter the pupil.

The redirectors for the peripheral portion of the image in some embodiments are divided into sets, each set arrayed over substantially the whole eyeglass lens. The redirectors of one such set are all substantially aimed at a potential location of the eye pupil; those of other sets are aimed at other respective locations of the eye pupil. Illuminating plural sets of such redirectors simultaneously, convenient in some embodiments, results in light from one set entering the eye pupil and light from the other sets impinging on the iris or other parts of the eye and not entering the eye pupil. Such arrangements are believed to provide a compact and economical example way to get beams of each peripheral angle into the eye.

The divergence of the beams launched at the redirectors is optionally varied to correspond to the desired focus accommodation, as already described. Each of the colors is preferably separately modulated. The rate at which "frames" are painted on the retina is preferably above a corresponding threshold as mentioned, such as approximately forty frames per second for the foveal portion and about eighty frames per second for the more peripheral portion.

The control of the pattern of light projected into the eye, in some example embodiments, can be the same whenever the user's eye is in a particular rotational position; whereas, the amount of each color of light projected at each instant varies dynamically with the images displayed. The supported range of positions of the eye pupil, in some examples, is divided into discrete "zones" and the control pattern of the projector for each zone is stored in a table corresponding to that zone. When rotation of the eye brings the eye pupil to a particular zone on the pupil sphere in such systems, and this is detected by the system, the corresponding table is used to control the projection. The image data is preferably updated at suitable rates as already described, while the control structure in some exemplary embodiments continues to be driven by the data from the table.

One example way to form such table data for a pupil position is to allow the projection system to output the full range of all possible output beams. A digital camera positioned optically where the eye would be detects when a pixel is illuminated. The configuration of the projection system is recorded along with each corresponding pixel. Another way to make such table of configurations and resulting pixels is by optical simulation, called ray tracing. The data so collected for a table is optionally first sorted to ensure that all pixels are covered and to recognize and optionally eliminate duplication in projector settings that result in the same pixel location on the retina. Then the table data is preferably organized so as to be convenient for the projector, such as in scanning systems for instance creating sub-tables for each scan line whose pixels are arranged in scan order.

In what will be called a "soft pixel" inventive aspect, the pixel positions are varied slightly from frame to frame in order to reduce the perception of digital artifacts, such as the jaggedness of a diagonal line, and optionally reduce flicker. A collection of control tables, in embodiments where they are used, may be cycled through to create this soft-pixel effect. In what will be called a "soft eye-box" inventive aspect, the position of the eyeball can vary within a range and the projector adapts the launch angles to compensate for the variation. Again, embodiments that are table driven may select different tables or modify tables to adapt the eye box. In what will be called a "soft retina" inventive aspect, images are mapped onto the good parts of a partly damaged retina so as to substantially allow perception of the full image. Such mappings in some exemplary embodiments are implemented without changing tables but by processing of the image data. In still other aspects, light or other electromagnet energy from the environment is brought into the projector to be sensed at least in part by the light traveling through the redirectors in reverse.

The redirectors are supported, in some exemplary inventive configurations, by an eyeglasses lens that is with or without corrective ophthalmic effect. The projected image in such a spectacle configuration is preferably launched from the same side of the lens as the eye and redirected back into the eye, while light from the environment also can enter as usual. In other inventive configurations the redirectors are positioned so as to receive light that is transmitted in through the side of a medium and to couple it out of the medium so as to be directed towards the eye. Such a medium optionally comprises an ordinary display, like on a current portable phone; but bringing it close enough to the eye lets the inventive system take over: first the display gets blurry because it's being brought to close to the eye and then the eye can see a high-quality virtual image that appears to be beyond the display. In still other exemplary inventive configurations, the redirectors are diffractive and positioned between the projector and the eye, such as in the case of a viewfinder or eyepiece.

The present invention also relates to a personal multimedia electronic device, and more particularly to a head-worn device such as an eyeglass frame having a plurality of interactive electrical/optical components. In one embodiment, a personal multimedia electronic device includes an eyeglass frame with electrical/optical components mounted in the eyeglass frame. The electrical/optical components mounted in the eyeglass frame can include input devices such as touch sensors and microphones, which enable the user to input instructions or content to the device. The electrical/optical components can also include output devices such as audio speakers and image projectors, which enable the eyeglass device to display content or provide information to the wearer. The electrical/optical components can also include environmental sensors, such as cameras or other monitors or sensors, and communications devices such as a wireless antenna for transmitting or receiving content (e.g., using Bluetooth) and/or power. Additionally, the electrical/optical components include a computer processor and memory device, which store content and programming instructions. In use, the user inputs instructions to the eyeglass device, such as by touching a touch sensor mounted on the side arm of the eyeglass frame or speaking a command, and the eyeglass device responds with the requested information or content, such as displaying incoming email on the image projector, displaying a map and providing driving instructions via the speaker, taking a photograph with a camera, and/or many other applications.

In one embodiment, a multimedia eyeglass device includes an eyeglass frame having a side arm and an optic frame; an output device for delivering an output to the wearer; an input device for obtaining an input; and a processor comprising a set of programming instructions for controlling the input device and the output device. The output device is supported by the eyeglass frame and is selected from the group consisting of a speaker, a bone conduction transmitter, an image projector, and a tactile actuator. The input device is supported by the eyeglass frame and is selected from the group consisting of an audio sensor, a tactile sensor, a bone conduction sensor, an image sensor, a body sensor, an environmental sensor, a global positioning system receiver, and an eye tracker. In one embodiment, the processor applies a user interface logic that determines a state of the eyeglass device and determines the output in response to the input and the state.

In one embodiment, a head-worn multimedia device includes a frame comprising a side arm and an optic frame; an audio transducer supported by the frame; a tactile sensor supported by the frame; a processor comprising a set of programming instructions for receiving and transmitting information via the audio transducer and the tactile sensor; a memory device for storing such information and instructions; and a power supply electrically coupled to the audio transducer, the tactile sensor, the processor, and the memory device.

In an embodiment, a method for controlling a multimedia eyeglass device includes providing an eyeglass device. The eyeglass device includes an output device for delivering information to the wearer, the output device being selected from the group consisting of a speaker, a bone conduction transmitter, an image projector, and a tactile actuator; an input device for obtaining information, the input device being selected from the group consisting of an audio sensor, a tactile sensor, a bone conduction sensor, an image sensor, a body sensor, an environmental sensor, a global positioning system receiver, and an eye tracker; and a processor comprising a set of programming instructions for controlling the input device and the output device. The method also includes providing an input by the input device; determining a state of the output device, the input device, and the processor; accessing the programming instructions to select a response based on the input and the state; and providing the response by the output device.

BRIEF DESCRIPTION OF THE DRAWINGS

Fig. 1 is a top-view schematic drawing of a head-mounted display system integrated into an eyeglass frame, positioned with respect to an eye, in an exemplary embodiment of the present invention.
Fig. 2 is a schematic drawing of the dual-beam projector shown in Fig. 1, as attached to the arm of the eyeglasses.
Fig. 3 is a schematic drawing of simplified human eye anatomy and definitions for the field of view.
Fig. 4 is a schematic drawing of definitions for gaze direction and the movement of the pupil in a human eye.
Fig. 5 is a flow chart describing usage of the display system according to an exemplary embodiment of the present invention.
Fig. 6 is a schematic drawing of projector light reflecting from a central-region facet and entering the pupil of the eye according to an exemplary embodiment of the present invention.
Fig. 7 is a schematic drawing of projector light reflecting from a different central-region facet and missing the pupil of the eye.
Fig. 8 is a schematic drawing of projector light reflecting from a still different central-region facet and missing the pupil of the eye.
Fig. 9 is a close-up schematic drawing of a single projector beam reflecting light off a cluster of peripheral facets.
Figs. 10-13 are schematic drawings of a single projector beam reflecting light off one of four clusters of peripheral-region facets, with light from a single location on the locus of pupil positions entering the pupil. From figure-to-figure, the projector beam scans from cluster-to-cluster.
Fig. 14 is a schematic drawing of the scanning projector beams from Figs. 10-13, superimposed to show a typical refresh cycle of the display system. Light from a single location on the locus of pupil positions enters the pupil.
Fig. 15 is a schematic drawing of the facet locations on an example faceted reflector, according to an embodiment of the present invention.
Fig. 16 is a schematic drawing of the predetermined locations on the pupil sphere, with an exemplary pupil location, according to an embodiment of the present invention.
Fig. 17 depicts an overview of an image system, according to an exemplary embodiment of the present invention.
Fig. 18 shows an example method for mapping a proximal optic and projector system onto a pixel layout, according to an embodiment of the present invention.
Fig. 19 shows a linked list of frame buffer entries according to an exemplary embodiment of the present invention.
Fig. 20 is an example method to scan a frame buffer onto the retina according to an embodiment of the present invention.
Fig. 21 shows a exemplary grid of predetermined pupil locations arranged on the surface of the eye according to an embodiment of the present invention.
Fig. 22 shows a two-dimensional depiction of an example peripheral redirector layout in the proximal optic corresponding to the pupil location grid in Fig. 21.
Fig. 23 is an example method of running the mid-level (frame level) processing of an exemplary system according to an embodiment of the present invention.
Figs. 24a-24c show three different techniques of directing light to the proximal optic along with corresponding representative light paths to the pupil according to exemplary embodiments of the present invention.
Figs. 25a-25f show, in three pairs of figures, three separate size beams of light being directed onto the eye and their corresponding footprints.
Figs. 26a-26j show different sectional views of exemplary beam footprint arrangements on the proximal optic redirectors according to embodiments of the present invention.

Fig. 27 shows a ray trace of a corrected light beam being directed off a continuous (elliptical) redirector to deliver collimated light, according to an exemplary embodiment of the present invention.

Figs. 28a-28b show schematics of exemplary light paths and different optical elements that can be used to direct light to the eye using a continuous redirector according to exemplary embodiments of the present invention.

Figs. 29a-29g show exemplary projection schemes according to embodiments of the present invention.

Figs. 30a-30c show example faceted redirector patterns on the proximal optic according to exemplary embodiments of the present invention.

Fig. 31 depicts rays of light being directed off of redirectors of the proximal optic in the direction of the center of the eye according to an exemplary embodiment of the present invention.

Figs. 32a-32g depict example launch mirror and redirector structures according to exemplary embodiments of the present invention.

Figs. 33a-33c show an exemplary redirector scheme employing a block of redirectors and a launch galvo array according to an embodiment of the present invention.

Figs. 34a-34e show example methods of producing light suitable for projecting onto the eye according to embodiments of the present invetion.

Figs. 35a-35d show block diagrams of producing light suitable for projecting onto the eye according to exemplary embodiments of the present invention.

Figure 101 is a schematic drawing of the geometry of an eye.

Figure 102 is a plot of spot sizes on the proximal optic and on the retina.

Figure 103 is a schematic drawing of an optical delivery system that allows for pixel-by-pixel writing of a scene.

Figure 104 is a schematic drawing of an exemplary grid of spots on a proximate screen.

Figure 105 is a schematic drawing of another exemplary array of proximate screen spots.

Figure 106 is a schematic drawing of an exemplary means for displaying multiple pixels simultaneously.

Figure 107 is a schematic drawing of a multi-pixel viewing mechanism.

Figure 108 is a schematic drawing of an image forming mechanism.

Figure 109 is a block and functional system diagram.

Figure 110 is a plan drawing of placement of eyeglass components.

Figure 111 is a plan drawing of eyeglass configurations.

Figure 112 is a plan drawing of configurations for wearer gesture, proximity and touch sensing.

Figure 113 is a plan drawing of configurations for audio transducers.

Figure 114 is a plan drawing of configurations for mechanical and signal connections.

Figure 115 is a top-view drawing of external connected auxiliary device configurations.

Figure 116 is a plan drawing of an external auxiliary device.

Figure 117 is a plan drawing of detachable accessories.

Figure 118 is a plan drawing of replaceable arm configurations.

Figure 119 is a schematic drawing of arrays of mirrors.

Figure 120 is a schematic drawing of two different mirror zones.

Figure 121 is a schematic drawing of a front optic configuration.

Figure 122 is a schematic drawing of a front optic and steering configuration.

Figure 123 is a schematic drawing of a communication arrangement.

Figure 124 is plan drawing of mirrors on the front optic.

Figure 125 is a plan drawing of macular aspects of mirrors on the front optic.

Figure 126 is a plan drawing of paramacular aspects of mirrors on the front optic.

Figure 127 is a cross-sectional drawing of beams reflecting from the large mirrors of the front optic.

Figure 128 is a cross-sectional drawing of beams reflecting from the large mirrors of the front optic.

Figure 129 is a cross-sectional drawing of beams reflecting from the small mirrors of the front optic.

Figure 130 is a schematic drawing of light sourcing means.

Figure 131 is a plan drawing of large mirrors on the front optic.

Figure 132 is a plan drawing small mirrors on the front optic.

Figure 133 is a cross-sectional drawing of beams reflecting from the large mirrors of the front optic.

Figure 134 is a cross-sectional drawing of beams reflecting from the small mirrors of the front optic.

Figure 135 is a cross-sectional drawing of reflectors on the front optic.

Figure 136 is a schematic drawing of a light delivery mechanism using a spatial light multiplexer.

Figure 137 is a schematic drawing of a light delivery mechanism using a spatial light multiplexer.

Figure 138 is a cross-sectional drawing of a light delivery mechanism using a spatial light multiplexer.

Figure 139 is a cross-sectional drawing of a passive mirror array.

Figure 140 is a schematic drawing of a passive combining mirror structure.

Figure 141 is a schematic drawing of a passive beam combining structure.

Figure 142 is a schematic drawing of a display system.

Figure 143 is a schematic drawing of vibrated element sources.

Figure 144 is a plan drawing of pixels on the retina related to vibratory structures.

Figure 145 is a schematic drawing of vibrated-element configurations.

Figure 146 is a schematic drawing of a steered array source.

Figure 147 is a schematic drawing of a steered array source with aperture.

Figure 148 is a schematic drawing of a direct source configuration with optional aperture.

Figure 149 is a schematic drawing of inductive coil coupling configurations.

Figure 150 is a schematic drawing of a surface diffractive grating element.

Figure 151 is a projection drawing of a diffractive element and mirror assembly.

Figure 152 is a cross-sectional drawing of a known straight line diffractive.

Figure 153 is a schematic drawing of an optical simulation of a diffractive.

Figure 154 is a projection drawing of a beam-shaping system.

Figure 155 is a schematic drawing of the diffractive gratings of a beam-shaping system.

Figure 156 is a block diagram of a display system.

Figure 157 is a block diagram of a safety system.

Figure 158 is a flow chart of a control system for a display system.

Figure 159 is a flow chart of a control system for a display system.

Figure 160 is a schematic drawing of light interacting with front-optic mirrors in a reflector zone system.

Figure 161 is a schematic drawing of light interacting with front-optic mirrors in a point-of-regard system.

Figure 162 is a schematic drawing of beam steering configurations.

Figure 163 is a schematic drawing of a minor scanning configuration of a front optic mirror structure.

Figure 164 is a schematic drawing of a major scanning configuration of a front optic mirror structure.

Figure 165 is a schematic drawing of a tilt pan system.

Figure 166 is block diagram of a tilt pan system.

Figure 167 is a schematic drawing of a display system.

Figure 168 is a schematic drawing of overlapping round redirectors.

Figure 169 is a schematic drawing of overlapping rectangular redirectors.

Figure 170 is a schematic drawing of an arrangement of redirectors.

Figure 171 is a schematic drawing of a waveguide.

Figure 172 is a cross-sectional drawing of a waveguide and related structures.

Figure 173 is a schematic drawing of beam sections from a surface.

Figure 174 is a block diagram of a display system.

Figure 175 is a schematic drawing of a holographic beam-to-beam exposure system.

Figure 176 is a schematic drawing of a holographic production exposure system.

Figure 177 is a schematic drawing of a holographic exposure system.

Figure 178 is a schematic drawing of the foveal portion of an eyeglass system.

Figure 179 is a schematic drawing of the peripheral portion of an eyeglass system.

Figure 180 is a schematic drawing of a multiplexing configuration.

Figure 181 is a schematic drawing of superimposed redirector structures.

Figure 182 is a cross-sectional drawing of a projection and proximal optic system.

Figure 183 is a schematic drawing of a steerable mirror array and peripheral illumination thereof.

Figure 184 is a schematic drawing of an eyeglasses projection system.

Figure 185 is a block diagram of an exemplary eyeglasses system.

Figure 186 is a flow chart of a display system.

Figure 187 is a plan drawing of an adjustable eyeglasses frame.

Figure 188 is a close-up drawing of an eyeglasses frame with proximal optic position adjustment.

Figure 189 is a plan drawing of a visor-style proximal-optic adjustment.

Figure 190 is a plan drawing of a proximal-optic clamp.

Figure 191 is a schematic drawing of launch mirror and redirector structures.

Figure 192 is a schematic drawing of a single-feed steerable reflector and launch-steerable reflector.

Figure 193 is a schematic drawing of source, feed, launch, and proximal optic redirector structures.

Figure 194 is a schematic drawing of a proximal optic and redirector structure.

Figure 195 is a cross-section drawing of a multi-layer proximal optic.

Figure 196 is a schematic drawing of redirector structures.

Figure 301A is a side elevational view of an electronic eyeglass device according to an embodiment of the invention, in an unfolded position.

Figure 301B is a side elevational view of a side arm of an eyeglass device according to another embodiment of the invention.

Figure 301C is a front elevational view of an electronic eyeglass device according to another embodiment of the invention, in an unfolded position.

Figure 302 is a front view of an electronic eyeglass device according to an embodiment of the invention, in a folded position.

Figure 303 is a front view of an electronic eyeglass device according to a n embodiment of the invention, in a folded position.

Figure 304 is a front view of an electronic eyeglass device according to an embodiment of the invention, in a folded position.

Figure 305A is a front view of an electronic eyeglass device according to an embodiment of the invention, in a folded position.

Figure 305B is a side view of the device of Figure 305A, in an unfolded position.

Figure 305C is a top view of the device of Figure 305A, in an unfolded position.

Figure 306A is a partial top view of an electronic eyeglass device according to an embodiment of the invention.

Figure 306B is a partial front view of the device of Figure 306A.

Figure 306C is a cross-sectional view of an optic lens according to an embodiment of the invention.

Figure 306D is a partial front view of an eyeglass device according to another embodiment of the invention.

Figure 306E is a side view of the eyeglass device of Figure 306D.

Figure 306F is a partial top view of the eyeglass device of Figure 306D.

Figure 307A is a partial top view of an electronic eyeglass device according to an embodiment of the invention.

Figure 307B is a partial top view of an electronic eyeglass device according to another embodiment of the invention.

Figure 307C is a partial top view of an electronic eyeglass device according to another embodiment of the invention.

Figure 307D is a partial front view of an electronic eyeglass device according to an embodiment of the invention.

Figure 308A is a partial side view of a side arm of an electronic eyeglass device according to an embodiment of the invention.

Figure 308B is a schematic view of a coil according to the embodiment of Figure 308A.

Figure 308C is a partial side view of the device of Figure 308A with a boot, according to an embodiment of the invention.

Figure 308D is a cross-sectional view of the device of Figure 308C, taken along the line 308D-308D.

Figure 308E is a front view of an electronic eyeglass device according to an embodiment of the invention.

Figure 308F is a top view of a storage case according to an embodiment of the invention.

Figure 308G is a top view of an electronic eyeglass device according to an embodiment of the invention, with a lanyard.

Figure 308H is a top view of an electronic eyeglass device according to another embodiment of the invention, with a lanyard.

Figure 309A is a side view of a side arm of an electronic eyeglass device according to an embodiment of the invention.

Figure 309B is a side view of an electronic eyeglass device with a replacement side arm, according to an embodiment of the invention.

Figure 309C is a close-up view of a hinge connection according to the embodiment of Figure 309B.

Figure 310A is a side view of an attachment unit for an electronic eyeglass device according to an embodiment of the invention.

Figure 310B is a side view of a traditional eyeglass frame, for use with the attachment unit of Figure 310A.

Figure 310C is a side view of an attachment unit according to an embodiment of the invention.

Figure 310D is a cross-sectional view of a side arm and attachment unit according to an embodiment of the invention.

Figure 311A is a flow chart of a control system according to an embodiment of the invention.

Figure 311B is a flow chart of a control system according to another embodiment of the invention.

Figure 311C is a flow chart of a control system according to another embodiment of the invention.

Figure 311D is a flow chart of a control system according to another embodiment of the invention.

Figure 312 is a block diagram of various components according to an exemplary embodiment of the invention.

Figure 313 is a block diagram of a control system according to an exemplary embodiment of the invention.

Figure 314A is a block diagram of a dual transducer system according to an embodiment of the invention.

Figure 314B is a block diagram of a dual transducer system according to an embodiment of the invention.

Figure 315A is a front view of a folded eyeglass frame according to an embodiment of the invention.

Figure 315B is a side view of an unfolded eyeglass frame according to an embodiment of the invention.

Figure 315C is a bottom view of an unfolded eyeglass frame according to an embodiment of the invention.

Figure 316 is a partial horizontal cross-sectional view of an eyeglass frame with a clamp, according to an embodiment of the invention.

Figure 317A is a partial side view of an adjustable eyeglass frame according to an embodiment of the invention.

Figure 317B is a partial side view of an adjustable eyeglass frame according to an embodiment of the invention.

Figure 317C is a partial side view of an adjustable eyeglass frame according to an embodiment of the invention.

Figure 317D is a partial horizontal cross-sectional view of an adjustable eyeglass frame according to an embodiment of the invention.

Figure 318A is a partial vertical cross-sectional view of an adjustable eyeglass frame according to an embodiment of the invention.

Figure 318B is a partial side view of an adjustable eyeglass frame according to an embodiment of the invention.

Figure 318C is a partial cross-sectional view of the adjustable eyeglass frame of Figure 318A taken along line Y-Y.

Figure 318D is a partial cross-sectional view of the adjustable eyeglass frame of Figure 318A taken along line Z-Z.

## DETAILED DESCRIPTION OF THE PREFERRED EMBODIMENTS

A "redirector" as used herein is a reflective or diffractive structure that changes the angle of light incident upon it. In one example, each redirector is a mirror or partially-silvered mirror surface, for instance formed as a coating on or embedded within a supporting or transparent structure. In another example, diffractive structures such as gratings are known to alter the direction of impinging light at least according to frequency. In still another non-limiting example diffractive structure, a so-called "Bragg" reflector (such as can be fabricated in volume holograms) allows for the redirecting of light of a limited frequency band. Gratings, Bragg reflectors, or other diffractive structures can, for instance, allow light trapped within a medium by total internal reflection to exit the medium at an angle related to the angle of incidence on the diffractive structure.

A light beam may be said to "walk on a redirector" when the center of the beam moves substantially laterally relative to the redirector. When walking a beam on a redirector, the resulting redirected beam may typically move across the pupil or "walk on the eye pupil." The beam (or at least part of it) then enters the eye pupil at a range of angles and generates corresponding pixels. The beam in some such examples pivots about a launch point in the projector. In other examples a beam may "walk on a launch surface" within the projector, so that it pivots around a point elsewhere. If the pivot point is substantially at a redirector, then there is no walk on the redirector but still walk on the eye pupil. If the pivot point is substantially at the eye pupil, then the beam walks on the redirector but not on the eye pupil. Wherever the pivot point, even if it moves, the light entering the eye preferably is of a range of angles that generates multiple pixels.

A projector launches beams of light through an exit window that are directed towards a collection of redirectors. The light is modulated so that at different instances in time it provides the illumination for different pixels, whether there is a single modulated stream or multiple simultaneous modulated streams.

A projector in some examples launches beams from one or more light steering elements that are each pivot points for the beams they launch. In other examples a beam is "fed," whether steerably or switchably, to varying locations on a steering element and the beam is narrower than the steering element and the beam "walks on the steering element." In further examples steering elements are in effect superimposed, such as by one or more beam splitters, into what will be called plural "layers of launch elements," where the light at least appears to originate from substantially the same location for regions on different steering elements. Layers are called "complete" if a beam of desired width can be launched from any lateral position on the combined layers, typically at an angle that can be varied. Some other non-limiting example projectors vary the position of the launch elements. Projectors also optionally include pre-conditioning of light, such as including varying the divergence of the beam and correcting for aberrations the beam will encounter, and post-conditioning, such as fold mirrors and filtering.

A projector in other non-limiting embodiments does not walk a beam on the redirectors or the eye pupil, but rather projects each beam angle using other techniques, for instance simultaneously from points on a so-called "spatial light modulator," such as an array of shutters or light emitters. For instance, a larger beam is directed at the spatial light modulator and the spatial pixels in the resulting beam are transformed into respective angles by bulk optical elements such as a lens. Further non-limiting examples combine the approach of launch elements with simultaneous projection of beams. For instance, a so-called "push-broom" configuration in effect uses a single line of a spatial light modulator and then steers the resulting line of angled pixel beams across a range of angles transverse to the line.

The redirectors are supported by a structure called herein a "proximal optic," as it is typically the element that is closest to the eye. In some examples redirectors are formed on a surface of the proximal optic or are embedded within it. Some proximal optics are substantially transparent or switchably so, allowing the eye to see through them to the environment beyond. In other non-limiting examples the proximal optic is not transmissive, and so light from beyond it is substantially blocked. The supporting structure may be configured to be ultimately positioned during use by the user's head, such as in the example of eyeglasses, or by the user's hands, such as providing display capability to a hand-held device, or by some other structure, such as with a kiosk or wall-mounted configuration.

The configuration of the proximal optic with respect to the projector and eye allows at least a portion of the redirected light to enter the eye. In some examples the projector and eye are positioned on the same side of the redirector support, such as when the support structure comprises the lenses of a pair of spectacles and the projectors are located along the temple side-arms of the frame. In other examples a projector is located on the side of the proximal optic opposite from the eye, such as in the case of a wall-mounted or eyepiece application. In yet other non-limiting examples, the projector sends light into the proximal optic transversely and the light is optionally totally internally reflected on its way to redirectors.

What will here be called "eye tracking" comprises whatever capture of information about the position of the eye pupil, the size of the eye pupil and/or the eyelid configuration. In some examples this is accomplished by separate optical structures, such as a camera aimed at the eye. In other examples it is accomplished by directing whatever electromagnetic radiation at the eye and measuring the energy returned. For instance, in some examples infrared beams are bounced off of the eye and the reflected energy level measured. In other non-limiting examples, the projection of light into the eye itself is used for tracking by measuring light that returns, such as light returning along the projection path or returning along another path. In some examples light is reflected from the retina and variations in the reflectivity of the retina are used to calibrate its position. In other non-limiting examples, the position of the eye is estimated by the position of the corneal bulge as it deforms the eyelid. In still other examples the position of the eyeball itself is tracked, such as its lateral displacement.

The "footprint" of a beam incident on the redirector here refers to the lateral spatial extent of the beam on the redirector structure. Where a beam pivot point is located substantially at the redirector, the footprint does not substantially vary over the time interval that the redirector is illuminated by that beam. Some examples of such a configuration include what will be called: "no spillover," where the footprint is substantially coextensive with the redirector; "gutter spillover," where the footprint spills over onto "gutter" areas (used here to mean areas between redirectors that do not redirect light into the eye); and "neighbor spillover" where the footprint includes some area on other redirectors adjacent to or near the redirector.

In the case of walk on the redirectors, what will be called "partial fill" is where the footprint is smaller than the redirector and "full fill" is where the beam is larger than and in fact overfills the redirector. For partial or full fill, three example cases are distinguished: "no spillover," where the footprint remains within the redirector; "gutter spillover" where the footprint extends beyond the redirector only onto gutter areas; and "neighbor spillover," where the footprint extends to one or more adjacent or nearby redirectors and the desired redirector is selected, as will be described.

Redirectors are in some embodiments arranged in more than one what will here be called a "layer," where an individual ray of light impinging on one redirector of a first layer also impinges on a redirector of a second layer. In some examples partial reflectance or diffraction allow multiple layers: a portion of the light may be redirected by the first structure and then another portion by the second, and so on for more layers if present. Such redirectors may be referred to as "semi-transmissive." A pattern of three or more layers that can redirect beams up to a certain beam width from any lateral location on a stack of layers will be referred to as "complete."

When the redirectors of a layer are selected, selection is here called "inter-layer" and when a redirector is selected from those in its layer, if any, the selection is called "intra-layer." In some examples, redirectors are "frequency selected," such as with Bragg reflectors that are effective over a narrow frequency band. For instance, one frequency-selectable layer may reflect one band of red while another reflects only an adjacent band of red. By also including reflectance for similar multiple bands of green and blue, for example, layers are frequency selectable and yet can reflect a full color gamut. In other examples, redirectors are "actively selected," such as by an electric signal that affects a liquid crystal structure. In still other non-limiting examples redirectors are said to be "angularly selected" when the angle received by the selected redirector causes light to enter the eye pupil but that same angle when received by non-selected redirectors upon which it is impinging results in light directed so as to not enter the pupil of the eye.

Some redirectors, called here "foveal redirectors," are intended to be used in sending light into the eye in order to contribute to the central portion of the image, the image near the instant point of regard. A foveal redirector preferably supports a beam diameter adequate for the central portion of vision and is preferably aimed so as to direct beams into the eye at an angle around that substantially of the optical axis of the eye. Foveal redirectors comprise one or more layers.

Other exemplary redirectors, referred to here as "peripheral redirectors," are intended to be used primarily for directing light into the eye in order to contribute to the peripheral portion of the image, that portion substantially apart from the portion near the current point of regard. The beam width supported by peripheral redirectors in some embodiments is significantly smaller than that used for the foveal redirectors, yet provides adequate spot size in accordance with the reduced acuity of peripheral vision as mentioned. Multiple layers of peripheral redirectors, owing to smaller size, are optionally physically positioned in effect on a single surface but are referred to as sets, "virtual layers" or simply layers for clarity. Each virtual layer of peripheral redirector, in some exemplary embodiments, is preferably oriented so as to direct its light substantially at a respective potential pupil location. Potential pupil locations will be referred to as points on a "pupil sphere" and the collection of such points supported by plural layers of peripheral redirectors will be called a "pupil sphere point grid."

The pupil sphere grid points in some examples, called "dense grid arrangements," are close enough together that substantially any pupil of a minimum diameter (of the range of pupil sizes specified) at any location within the grid will be enterable by light from a peripheral redirector corresponding to at most one pupil sphere grid point. The peripheral redirectors of a dense grid arrangement are preferably selectable, such as inter-layer, so as to prevent more than a single pixel instance of a projected beam from entering a maximum-sized pupil. In some such embodiments the set of layers illuminated is limited by the beam width projected and among those that are illuminated the selection is angular selection. Other non-limiting examples are called "shiftable grid arrangements." In such shiftable systems, the spatial location of the projection is shifted laterally, dynamically responsive to the eye rotation position, so as to in effect shift the pupil sphere grid points. The grid points in such a system are preferably far enough apart that: there is a shift amount so that for any pupil of a minimum diameter at any location within the grid light will enter it from a peripheral redirector; and similarly, there is a shift amount so that for any pupil of a maximum diameter at any location within the grid light will enter it from a peripheral redirector corresponding to at most one pupil sphere grid point.

The source of light in some examples includes modulation capability, such as with laser diodes, and will be referred to as "origin modulated." Modulation can also be introduced after the light is originated in what will be referred to as "post-origin modulated" systems. In some examples modulated light is multiplexed to different paths at different time instances, which is here referred to as "pre-multiplex modulated." In other examples multiplexing integrally includes modulation and is referred to here as "combined multiplex-modulation." In some other non-limiting examples a single origin beam is split, such as by a beam splitter, and then modulated and called "post-split modulated." What will be called "color combining" is when multiple separately modulated beams are spatially merged so as to be substantially co-linear, such as using beam splitters, prisms and/or dichroic coatings. Light originating mechanisms that include the ability to vary the color or frequency of the light are referred to here as "tunable origin."

Exemplary embodiments of the present invention will now be presented. Although the present invention is described with respect to these exemplary embodiments, it is to be understood that it is not to be so limited, since changes and modifications may be made therein which are within the full intended scope of this invention.

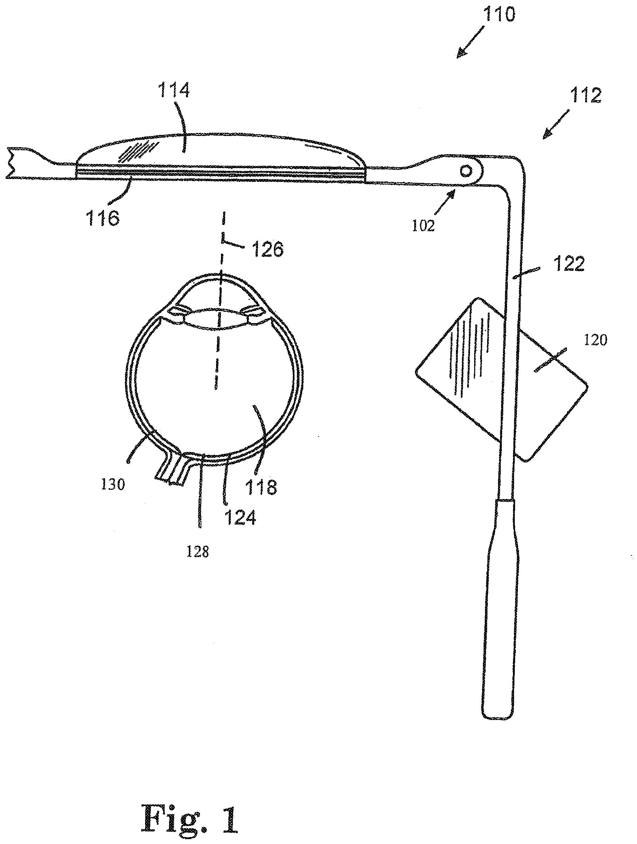

Fig. 1 is a top-view schematic drawing of an exemplary head-mounted display system 110 integrated into an eyeglass frame 112, positioned with respect to an eye 118, according to an embodiment of the present invention. Such a display system 110 may be referred to as a near-to-eye display, a head-mounted display, a virtual retina display, an optical retinal display, or any other suitable term. Such a system does not form a real image on a viewing screen placed in front of the eye 118.

The display system 110 includes a projector 120 that is secured onto a temple 122 of the eyeglass frame 112. The temple 122 may be referred to as an arm, an earpiece, a sidepiece, or any other suitable term. The temple 122 may optionally be attached by a hinge 102 to the rest of the frame 112, so that it may be folded flat. The temple 122 may also be rigidly attached to the rest of the frame 112, without a hinge 102.

Only one temple 122 of the frame 112 is shown in Fig. 1; it will be understood that there may be a second temple, with an optional display system for the other eye and that the two systems may cooperate and/or have common parts.

The eyeglass frame 112 supports a lens 114. The lens 114 may be any suitable refractive lens, with sufficient ophthalmic power to correct for nearsightedness (negative power) or farsightedness (positive power). Negative power lenses are thicker at the edge than at the center, and the positive lenses are thicker at the center than at the edge. Typically, refractive lenses for eyeglasses are meniscus-shaped, with a convex surface facing away from the eye and a concave surface facing toward the eye, although either or both surfaces may be planar. Optionally, the refractive lens may include one or more zones having different optical power, as is the case with bifocals or trifocals. Additionally, the lens may include diffractive elements.

The frame also supports a "proximal optic" 116, which in Fig. 1 is shown as being located on the eye-facing surface of the lens 114, longitudinally adjacent to the eye, but it may also be combined with the lens. The proximal optic 116 redirects light from the projector 120 toward the eye 118.

Note that the proximal optic 116 may be partially transparent or substantively transmissive, so that the projected image may be superimposed with a view of the actual surroundings. In other non-limiting cases, the proximal optic 116 is completely opaque, and the actual surroundings are completely obscured.

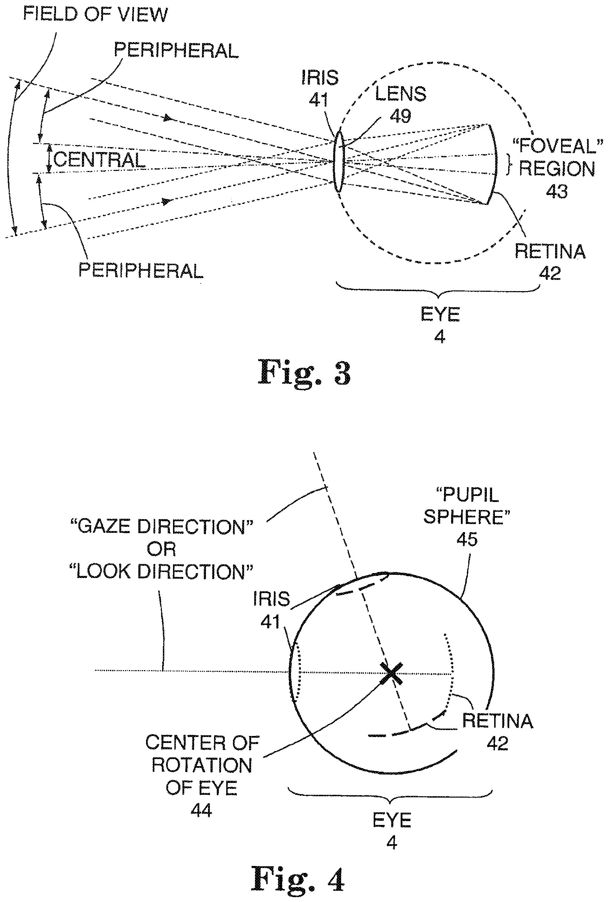

The eye 118 has a "gaze direction" 126, and the retina 124 has a "central" region 128 or "foveal" region, and a "peripheral" region 130. The structure of the eye 118 is discussed in more detail in Figs. 3-4 and the accompanying text.

Although the display system 110 is shown in Fig. 1 as being attached to or integral with an eyeglass frame 112, other mounting schemes are possible. For instance, the projector 120 and proximal optic 116 may be mounted on a helmet, a headband, hat, goggles, shield, visor, or any other suitable mounting that fixes the position of the projector 120 and proximal optic 116 with respect to one's eye. The projector 120 and proximal optic 116 may also allow for some relative motion of one's head. For instance, the projector 120 and proximal optic 116 may be attached to something fixed or moveable, such as a chair, wall, vehicle, or any suitable structure. Such a mounting may have some adjustments to allow for coarse positioning of the display system, but may allow the user to move within a particular range of motion during use. The range of motion for an eye during use may be referred to as an "eye box." The eye box may account for both a single-time variation in the placement of the optical system, such as from ill-fitting glasses, or may account for during-use movement, such as when the display system is not fixedly attached to one's head.

Furthermore, although the eyeglass frame 112 is shown reflecting light off a front-surface optical element toward the eye, other schemes are possible. For instance, the proximal optic 116 may be sandwiched between two or more other elements, may appear on the side of the lens facing away from the viewer, or may include elements or structures that do not necessarily lie in a single plane or on a single surface. Additionally, light need not strike the proximal optic 116 from the side facing the eye 118. For instance, the projector may direct light into the proximal optic 116 from the side of the proximal optic 116, where it may optionally undergo one or more internal reflections before exiting the proximal optic 116 toward the eye. The projector 120 may also direct light through the proximal optic 116, so that it is transmitted toward the eye 118. For the purposes of this document, the phrase "reflecting off the proximal optic" may include the cases of light entering the proximal optic from the side or front, then exiting the proximal optic toward the rear (toward the eye), in addition to the case of light striking and exiting the proximal optic on the side facing the eye.

In some cases, there may be one or more "fold mirrors" or other optical elements between the projector 120 and the proximal optic 116, which may for instance be located above or below the proximal optic, with respect to the wearer. These optional fold mirrors may be flat, or may be curved. Light from the projector strikes the fold mirror, and is reflected by the fold mirror toward the proximal optic.

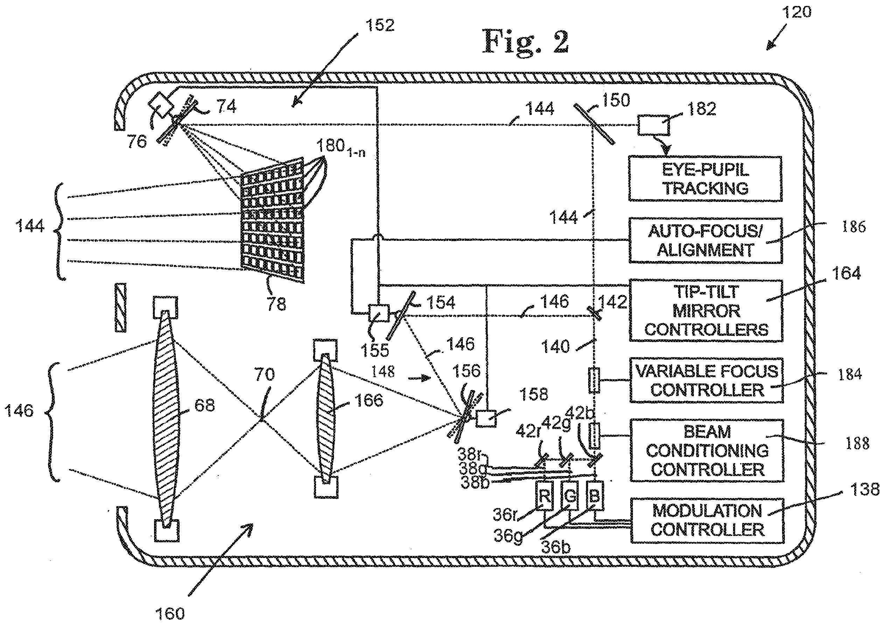

Fig. 2 is a schematic drawing of an exemplary projector 120 according to one embodiment of the invention, shown in Fig. 1 as attached to the temple 122 of the eyeglass frame 112.

Light originates with red, green and blue light sources 36r, 36g and 36b, respectively. The sources may be red, green and blue laser diodes, red, green and blue light emitting diodes (LEDs), broadband sources with spectral filters, or any suitable light sources. Three well-chosen colors can form a sufficiently large color gamut for the eye; the colors represent primary colors in a suitable color table, with the gamut being a triangle within the color table. In particular, laser diodes, with their current narrow spectral bandwidths, lie essentially along the outer perimeter of the color table, and may produce an extremely broad color gamut for the human eye. More than three light sources may be used, so that the color gamut may be increased beyond a triangular region. Each location on the proximal optic may have a respective phosphor that emits a particular wavelength or wavelength band when excited by the projector beam.

The red, green and blue light sources 36r, 36g, and 36b may be switched on and off or set to a predetermined level by their respective modulation controllers 138, which is drawn as a single unit in Fig. 2. The modulation corresponds to pixelated, dynamic video data, which typically has a frame refresh rate higher than that perceptible by the human eye. It will be appreciated that the images themselves may change less rapidly than the frame "refresh" rate, in order to reduce flicker without providing intermediate images. In some cases, the refresh rates may be different for different portions of the field of view. For instance, the central portion may have a refresh rate of 40 Hz, while the peripheral portion may have a refresh rate of 80 Hz. In other cases, the refresh rates are the same for all portions of the field of view.

In some cases, such as for laser diode light sources, the sources may be switched on and off rapidly, with the duty cycle (fraction of time spent being on) determining a time-averaged intensity level. Such a scheme is typically known as pulse-width modulation (PWM), where the "on" phases may use a single intensity level or may use multiple intensity levels.

The output beam may represent a raster scan of the full field of view, on a pixel-by-pixel basis. Such a raster scan may vary the intensity of the beam from pixel to pixel, and may, for example, project light from all three component colors simultaneously (spatial multiplexing) for each pixel, or project light sequentially from each of the three component colors (temporal multiplexing). If projected simultaneously, the colors may be spatially superimposed on top of each other, or may be juxtaposed for the output beam, which would then address three adjacent pixels in the field of view. Such raster scans are known from the field of television, and any suitable scan or other sequence may be used, provided that each pixel in the field of view is properly addressed, sequentially or non-sequentially, within the time frame of one refresh cycle.

Note that there may not be a one-to-one correspondence among locations on the proximal optic and locations in the field of view. As a result, the output beam may not be able to scan along contiguous locations on the proximal optic without some "jumping around" from location to location on the eye retina taking place.

For many current laser diode or LED sources, it is believed that the beam output is diverging, with a cone that may be rotationally symmetric or asymmetric. The respective laser or LED outputs may be collimated, and may optionally be compressed and/or expanded in one dimension to produce round beams. The collimated red, green, and blue outputs are shown as 38r, 38g, and 38b, respectively.

The collimated outputs 38r, 38g, and 38b are in the example combined with a series of dichroic filters to lie spatially on top of each other. Dichroic filter 42r may be a mirror that reflects red light. Dichroic filter 42g transmits red light and reflects green light. Dichroic filter 42b transmits blue light and reflects red and green light. Other suitable filters may be used, and the order of red, green, and blue may be shuffled.

If, for example, laser diodes are used as the light sources, their outputs are linearly polarized, and polarization effects may be employed in the filters to aid in combining the beams. For instance, a polarization-sensitive filter may transmit one polarization state, such as p-polarized light, and reflect the perpendicular polarization state, such as s-polarized light. Such a filter may be used, along with suitable polarization orientations of the respective lasers.

The collimated outputs 38r, 38g, and 38b may be combined to be spatially separated but parallel. For the discussion below, it is assumed that the beams are spatially coincident and form a beam 140.

There may be multiple red sources, multiple green sources, and multiple blue sources, all having respective modulation and collimation. Light from the multiple sources may all strike the same reflectors inside the projector, or may each have their own respective reflectors inside the projector. The multiple sources may form multiple output beams that address respective locations on the proximal optic.

As a further alternative, light from each source may be spatially modulated in parallel, by directing a beam onto a pixelated panel, each pixel having an independently controllable modulator. Light transmitted through or reflected from the pixelated panels may be directly toward the appropriate locations on the proximal optic.

As a still further alternative, the projector may use a single, multi-wavelength source, such as a "white LED," which uses absorption and subsequent re-emission by a phosphor to produce relatively broadband light. Light from this multi-wavelength source may be divided spectrally by wavelength-selective filters, and each wavelength band may be modulated individually.

The beam 140 may be sent through an optional "beam conditioning controller", which may statically or dynamically produce a desired wavefront aberration. Such a beam conditioning may be helpful in correcting upstream any additional wavefront aberrations that may occur downstream.

In some cases, the beam conditioning element at least partially compensates for predetermined wavefront aberrations of the proximal optic. In some cases, the beam conditioning element at least partially compensates statically for measured wavefront aberrations of the eye. In some cases, the beam conditioning element at least partially compensates dynamically for measured wavefront aberrations of the eye.

In some cases, an incident intermediate beam strikes the beam conditioning controller, and the output of the beam conditioning controller forms the nominally collimated beam. There are various components that could be used as beam conditioning elements, which include a pixelated panel, a deformable reflective surface or structure, and/or a spatial light modulator, among others.

The beam 140 may be sent through an optional "variable focus controller", which may statically or dynamically produce a desired amount of defocus in the beam. Defocus, as used here, means that a collimated incident beam may leave the variable focus controller converging or diverging. The variable focus controller may add a fixed amount of defocus to the entire field-of-view (constant amount over a refresh cycle), and/or may dynamically vary the defocus with particular pixels in the field-of-view. More specifically, the variable focus element may adjust the collimation once per frame, with the collimation adjustment being the same for each pixel in the frame. The variable focus element may also adjust the collimation dynamically for each pixel in the frame.

Note that the beam that exits the projector may be "nominally collimated," so that when the eye is completely relaxed and focusing on a distant object, the "nominally collimated" projector beam is brought to a focus by the eye at the retina. As used herein, the term "nominally collimated" is intended to include the cases where the variable focus controller adds a particular amount of defocus to the beam, in which the beam may not be strictly collimated, but may be slightly converging or diverging. In some cases, the variable focus controller accounts for nearsightedness or farsightedness of the eye. In some cases, the variable focus controller accounts for any accommodation of the eye (i.e., changes in power of the internal lens of the eye, caused by "focusing on" an object at a particular distance away from the eye).

An incident intermediate beam strikes the variable focus element, and the output of the variable focus element forms the nominally collimated beam. There are various components that could be used as variable focus elements, which include an electrowetting lens, a deformable reflective surface, and/or a spatial light modulator, among others.

In some cases, the variable focus element performs the collimation adjustment in response to a change in a gaze direction of the eye. In some cases, the variable focus element performs the collimation adjustment in response to an apparent depth of a particular object in the frame of the video data. In some cases, the variable focus element performs the collimation adjustment in response to a comparison of a gaze direction of the eye with a gaze direction of a second eye (sometimes referred to as "vergence"). In some cases, the variable focus element performs the collimation adjustment in response to a measurement of the focus of an internal lens of the eye.

Beam 140 strikes a beamsplitter 142 that directs a fraction of the light to a "small" beam 144 and directs the remaining fraction to a "large" beam 146. As drawn in Fig. 2, the "large" beam 146 directs light to the central (foveal) region of the field of view, the "small" beam 144 directs light to the peripheral region of the field of view, and the path of the "small" beam 144 further includes a camera or other suitable photodetector that can dynamically track the iris (or pupil) location and size. Other arrangements are possible, such as using a separate beam dedicated only to tracking the pupil, optionally with its own light source that may be in the infrared so as not to be visible to the eye, or using a "large" beam to deliver light both to the central and peripheral regions of the field of view.

The paths of the "large" 146 and "small" 144 beams may be similar in nature. For example, in Fig. 2, both beams strike a rotatable or pivotable mirror, propagate a particular distance, strike a second pivotable mirror, and ultimately exit the projector. Each mirror may have pivoting capabilities in two dimensions (or degrees of freedom, such as up-down and side-to-side), which allows a beam reflecting off such a mirror to take on many possible paths in three-dimensional space. The reflections off the two longitudinally-separated mirrors provides for control of both the position (in two dimensions) of the beam and the propagation angle (in two dimensions) of the beam, within a particular range.

We describe the paths of the "large" 146 and "small" 144 beams individually, and note that an array of reflectors 180, such as with pistons, may be used to replace any one or more single reflectors, and that a telescope 160 may be used to alter the beam size in either or both beams.

In the example shown, the small beam reflects off a beamsplitter 150 and strikes a pivotable mirror 74, which is pivotable in two dimensions. This two-dimensional tilt is known herein as "tip-tilt", which may allow for pivoting of the reflected beam within the "page," as drawn in the two-dimensional depiction in Fig. 2, as well as out of the page (i.e., three-diminsional with respect to the depiction in Fig. 2). The mirror may be pivoted by an actuator 76, which may be powered electrically and controlled electronically by the tip-tilt mirror controllers 164. The size of the mirror 74 itself may be comparable to a projection of the "small" beam 144 onto the mirror surface, and may have a buffer region surrounding the actual beam, to allow for tolerances, alignment, and the pivoting movement of the mirror itself.

The beam reflected off the mirror 74 may have a 2-D propagation angle within a particular range, and may appear to originate at or near the center of rotation of the mirror 74. The collimation of the beam may be unaffected by the reflection off the mirror; if the incident beam is collimated, for a planar mirror, the reflected beam is also collimated.

The reflected beam propagates to an array 78 of pivotable mirrors 180, which may be referred to herein as a micro-mirror array. There are "n" mirrors in the array, although any suitable number of mirrors may be used. In some cases, the individual mirrors 180 in the array are individually pivotable, and may each direct their individual reflections toward specific portions of the proximal optic.

In other cases, the individual mirrors 180 in the array all pivot together along one dimension, which may be referred to as a "fast" scan direction. An advantage of using small micro-mirrors is that they may be pivoted or rotated much more quickly than relatively large mirrors, due to their decreased mass. In some cases, the entire array 78 may be pivoted in the direction perpendicular to the "fast" scan direction; this "slow" scan direction may be performed as needed, or in a more DC-like manner than the "fast" scan.

The beam 144 reflecting off the array 78 or pivotable mirrors 180 then exits the projector 120.

The functions of the eye (pupil) tracker can be, for example, incorporated into the arm of the "small" beam path 144. Light returning from the eye follows the same beam path 144 in reverse, transmits through the beamsplitter 150, and strikes a photodetector 182. In some cases, the pupil tracker includes one or more relay lenses (not shown) that can image the pupil (or a suitable surface that includes a locus of all possible pupil positions) onto the photodetector. In other cases, the relay lenses may image a center of rotation of the eye onto the photodetector. In still other cases, the relay lenses may image an intermediate plane or surface onto the photodetector.

An eye tracker may be understood by one of ordinary skill in the art, as disclosed in, for example, Eye Tracking Methodology: Theory and Practice (2nd edition), by Andrew T. Duchowski (Springer-Verlag 2007).

The photodetector itself may be a single, monolithic detector, and the pupil tracker may include rapid motion of the mirrors, so that the relayed image of the pupil passes along an edge of the photodetector; such a setup would determine where the edge of the pupil is (in 2-D), and would provide a dynamic location of the pupil, and, in turn, a dynamic gaze direction for the eye.

The photodetector may also include one of more segments, each of which provides its own photocurrent to appropriate circuitry. A simple segmented detector may include two halves, while an extreme example of a segmented detector may be a camera array, having hundreds or thousands of pixels along each edge. In many of these segmented cases, the pupil tracker still determines a location of the pupil of the eye.

Optionally, the pupil tracker may also provide a size of the pupil, in addition to a location of the pupil.

In some cases, the pupil tracker detects a position of the edge of the pupil. In some cases, the pupil tracker scans an infrared beam across the eye, collects scanned light reflected from the eye, and senses a change in collected optical power to determine a position of the pupil of the eye. In other cases, the pupil tracker senses a change in spectral composition of the reflected light to determine a position of the pupil. In still other cases, the pupil tracker senses a change in polarization state of the reflected light to determine a position of the pupil.

For the "large" beam 146, which is split off from the "small" beam 144 by beamsplitter 142, the optical path includes, for example, reflection off two monolithic, pivotable mirrors 154 and 156, which have corresponding two-dimensional actuators 155 and 158, which are also controlled by the tip-tilt mirror controllers 164. One or both of the monolithic mirrors 154 and 156 may also be replaced by a pivotable mirror array, such as one similar to element 78 in the "small" beam 144, as already mentioned.

The path of the "large" beam 146 includes a beam expander 160, which can increase the diameter of the beam. The beam expander includes a first positive lens 166 and a second positive lens 68, arranged so that the rear focus of the first lens and the front focus of the second lens are coincident at internal focus 70. The ratio of the first and second lens focal lengths determine the expansion of the beam. For instance, if the second lens 68 has a focal length that is three times that of the first lens 166, then the emergent beam will have three times the diameter of the incident beam.

Note that such a beam expander is believed to have the property that as the beam is magnified, the changes in propagation angle from the pivotable mirrors are correspondingly demagnified. For instance, if the beam diameter is tripled, then the angular changes in the beam angle caused by mirrors 154 and 156 are divided by three. In some cases, this may be a useful property for amplifying angular changes; a beam compressor (rather than expander) would amplify the angular changes from the mirrors as the beam size is compressed. With such a beam compressor the mirrors 154 and 156 may have a larger footprint.

Note that as used herein, the term "footprint" is intended to mean the lateral extent of a beam, as projected onto a particular surface. Consider an example of a flashlight beam shining on a wall at near-grazing incidence. The beam itself may have a fairly small diameter, but may subtend a very large footprint in one direction when shined on a wall at grazing incidence. In general, the "footprint" of a beam along an inclined direction is expressed mathematically as the beam diameter divided by the cosine of the incident angle.

Although two longitudinally separated reflectors 154, 156 (one being segmented) are shown in Fig. 2 as redirecting the output beam, other possible steerable elements may be used. In some cases, one of the steerable elements is an array (or panel) of individually steerable elements, where the individually steerable elements may be pivotable mirrors, electrostatically actuated micromirrors, magnetically actuated micromirrors, spatial light modulator, and/or material having an adjustable refractive index. In some cases, for particular orientations, the steering elements are coplanar. In some cases, the first steering element directs an intermediate beam on the second steering element. In these cases, the effective launch position may be at the first steering element, and the effective launch angle may depend on a dynamic orientation of the second steering element.

An "exit pupil" is a property of an optical system, and is typically defined as the image of the aperture stop, as seen from image space. In practical terms, the exit pupil is a circle (or other shape) at a particular plane in space, through which all the light in the system exits. The exit pupil may not have a physical object at its location, but it generally has a well-defined location with respect to the other elements in the system.

The pupil tracker may dynamically measure the position and, optionally, the size of the pupil of the eye as it moves over the locus of all eye positions. The pupil position determines a "gaze direction", which is essentially where the viewer is looking. The dynamically measured pupil location is fed to the projector, which may produce at least one output beam. The output beam scans over the proximal optic (discussed in detail below), which directs light pixels into the pupil of the eye, and onto the retina of the eye. The output beam of the projector may, for example, be nominally collimated, corresponding to a "relaxed" state of the eye, in which the eye is "focused" on an infinitely distant object. The beam may also be adjusted so that it appears focused at a closer distance (for instance, three meters). The collimation of the projected beam may also be adjusted dynamically, to give "depth" to particular pixels in the field of view.

Next, we discuss terminology specific to the eye and the geometry associated with the eye.

Fig. 3 is a schematic drawing of simplified human eye anatomy and definitions for the field of view. Light from the surroundings of the eye 4 enters the eye 4 through a pupil 41. In humans, the pupil 41 of the eye 4 is generally round.

For the present purposes, we may overlook some of the specific structure of the eye, such as the cornea, the lens, and the intraocular fluids that occupy the space between them and adjacent to the retina of the eye. Here it will be assumed for clarity that light entering the pupil 41 of the eye 4 encounters an idealized lens 49 that focuses it onto the retina 42. Our idealized lens 49, in its relaxed state, takes collimated light from the surroundings and brings it to a sharp focus at the retina 42. Light entering the pupil 41 that is diverging or converging comes to a focus after or before the retina 42, and may appear defocused or "blurry" at the retina 42. Our idealized lens 49 may also "accommodate," or change its own focal length to bring into focus other distance ranges from the eye.

The field of view of the eye subtends a range of angles from the pupil of the eye. The "central portion" or "central region" of the field of view is at the center of the field of view, and generally includes a "gaze direction". The gaze direction can be at the center of the central region, or may be shifted to one side or another in the central region. In general, the resolution of the eye is greatest in the central portion of its field of view. A "peripheral portion" or "peripheral region" of the field of view is essentially all but the central portion of the field of view. In general, the peripheral region surrounds the central region.

In general, the resolution of the eye is less at the peripheral region than at the central region. This is consistent with some notions of peripheral vision. Peripheral vision may be very helpful in detection motion far away from our gaze direction, such as to avoid car accidents when driving. However, one generally cannot do many vision-intensive tasks, such as reading, using only peripheral vision, due to the decreased resolution in that portion of the field of view.

The structure near the center of retina responsible for the high resolution is known as the fovea. As a result, the region on the retina 42 corresponding to where the central region of the field of view is brought to focus may be referred to as a "foveal region" 43. As used in this document, the "foveal region" is intended to represent the portion of the retina that receives the central portion of the field of view, rather than the true structure of the fovea. The "foveal region", as used herein, may be larger than or smaller than the true fovea in the eye.

Fig. 4 is a schematic drawing of definitions for gaze direction and the movement of the pupil in a human eye. As described above, the "gaze direction" is within the central portion of the field of view. The gaze direction passes through the center of the pupil 41, and intersects the retina 42 at the center of the "foveal region" 43.

As the gaze direction changes, as a viewer directs his or her attention to various objects in the surroundings, the pupil 41 moves, as does the entire eyeball, including the lens and the retina 42. This movement of the pupil is generally along the surface of a sphere, known herein as an "pupil sphere" 45, which is the locus of all possible pupil 41 locations. A sphere is generally an excellent approximation for the movement of the pupil, since a significantly non-spherical structure would encounter resistance in a socket, and would have its motion impeded.

The center of the pupil sphere 45 is referred to herein as the center of rotation 44 of the eye 4. As the gaze direction changes, the pupil 41 moves along the pupil sphere, the retina 42 and other internal optics move along with the pupil, and the center of rotation 44 remains generally stationary.

Note that the eye, as drawn in Figs. 3-4, is not necessarily to scale. In particular, the retina of a real eye lies much closer to the curved back wall of the eyeball. In Figs. 3-4 and many of the drawings that follow, the retina is shown as being apart from the back wall of the eyeball for clarity, and to show that the retina is a separate structure from the pupil sphere itself.

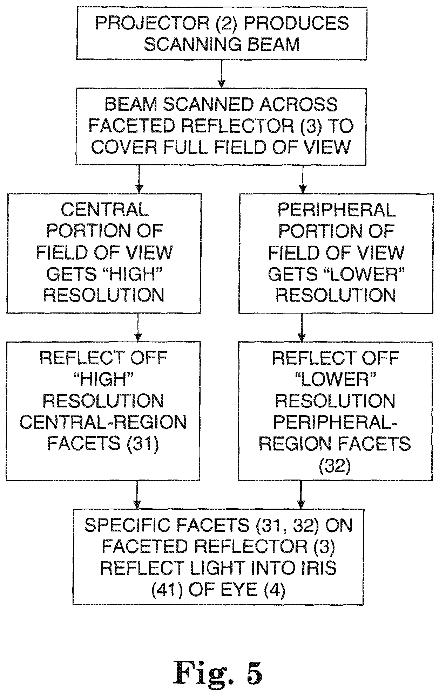

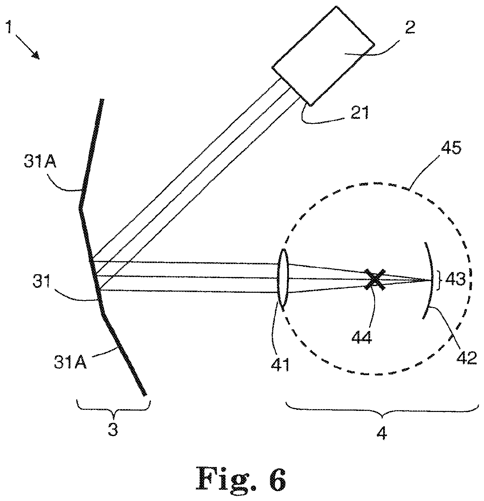

Fig. 5 is a flow chart describing usage of an exemplary display system according to an embodiment of the present invention. Fig. 5 refers to parts shown in later figures, for example, Figs. 6, 9, and 15.

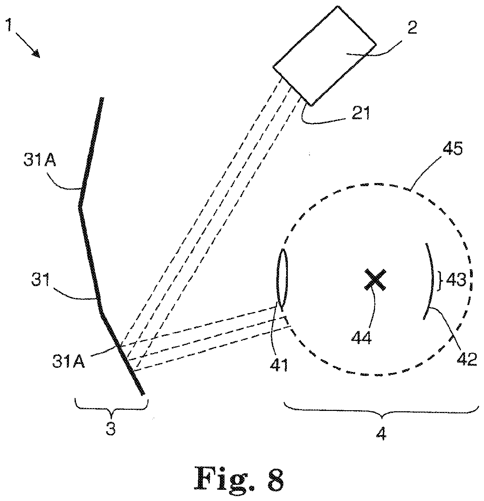

Referring now to Figs. 6-8, a projector 2 will be seen to produce at least one output beam. The beam from the projector 2 is in the example scanned across a faceted reflector 3, also known as a "proximal optic," to cover a full field of view. The full field of view is divided into a central portion, which includes the gaze direction, and a peripheral portion, which surrounds the central portion and generally includes the all of the full field of view except the central portion. Because the resolution of the eye itself is relatively "high" in the central portion and relatively "low" in the peripheral portion, the faceted reflector 3 may employ two sets of facets: a set of "central-region" facets 31 that are larger or provide higher resolution, and a set of "peripheral-region" facets 32 that are smaller or provide lower resolution. Light from the projector may be scanned from facet-to-facet on the faceted reflector 3, with reflections from the facets forming the various pixels in the field of view. Specific facets 31, 32 on the faceted reflector 3 reflect light into the pupil 41 of the eye 4. The light may be nominally collimated leaving the projector 2, and nominally collimated after reflecting off the facets 31, 32 on the faceted reflector 3, and nominally collimated entering the pupil of the eye, and brought to a focus on the retina by the internal optics of the eye. If there is some depth desired to particular pixels, the collimation of the beam leaving the projector may be adjusted within or external to the projector.

The distinction between "high" and "low" resolution may come from beam size entering the pupil.

The size of the beams from the central-region facets is relatively large, although smaller than the diameter of the pupil of the eye. A typical beam diameter is around 2 mm, although other beam sizes may be used. This 2 mm beam is small enough to neglect many of the wavefront aberrations that may be present in the foveal region of the eye. When brought to focus at the retina, the 2 mm-diameter beam produces a focused spot (an Airy disc pattern for a completely unaberrated beam) comparable to the spacing of the sensors in the foveal region of the retina.

For the peripheral-region facets, the size of the beams may be significantly smaller than those from the central-region facets. For example, a typical beam size from a peripheral-region facet may be around 0.2 mm, although other beam sizes may be used. This 0.2 mm diameter beam is small enough to neglect many of the wavefront aberrations at the edge of the field of view, which may unacceptably degrade the focused spot quality for much larger beams. When brought to focus at the retina, the 0.2 mm-diameter beam produces a focused spot roughly ten times the size of the central-region spot (assuming a 2 mm central-region beam diameter). Such a relatively large spot size is acceptable for peripheral vision, since the sensors from the peripheral region are effectively spaced much farther apart on the retina than from the foveal region (that is, vision acuity in the peripheral portion of the field of view is considerably lower than that of the foveal portion).

In other words, the central portion of the field of view receives "high" resolution, and the peripheral portion of the field of view receives "low" resolution. Both resolutions may be matched to the relative sensitivities of their respective portions on the retina. In some cases, there are two discrete zones in the field of view, which each have uniform "high" or "low" resolutions throughout. In other cases, there are three or more discrete zones, each of which has uniform resolutions throughout. In other cases, at least one zone has a continuous range of resolutions, such as higher resolution near the center of the field of view, and a gradual adjustment of the resolution throughout the zone. In still other cases, the resolution may be graded to continuously vary over the entire field of view.

We now describe the central-region facets 31, which may provide the relatively large beams into the eye that provide relatively "high" resolution in the central portion of the field of view.

The central-region facets 31 may be arranged in a generally tiled pattern on the faceted reflector. In some cases, the facets abut against each other, with little or no space between adjacent facets. In other cases, the facets may have a "grout region" or "gutter region" between them that absorbs or otherwise dissipates the light so that it does not enter the pupil of the eye. The grout region may also contain peripheral-region facets, as described later.

Each facet may be generally planar, so that beams reflected off them do not acquire any wavefront aberrations from the reflection, regardless of the wavelength of the incident light, the collimation of the incident light, or the location and propagation angle of the incident light. This absence of added aberrations, due to reflecting off the planar or nearly-planar facets, may, in some cases, be a significant advantage over using an ellipsoidal reflector to reflect light from the projector into the eye.

In some cases, the faceted reflector has a base curvature that is generally ellipsoidal, with one focus of the ellipsoid being at an exit pupil of the projector, and the other focus of the ellipsoid being at the center of rotation of the eye. In some cases, the facets themselves are located generally along the base curvature, and are generally flat approximations of the base curvature. For these facets, there may be one location on the facet, such as at the center, that is parallel to the base curvature.

For the central-region facets 31, a ray originating at the center of the exit pupil of the projector and reflecting off a location on each central-region facet may be reflected by the facet toward the center of rotation 44 of the eye 4. For the case of the central-region facets lying along the ellipsoidal base curvature described above, we may say that the ellipsoidal base curvature images the exit pupil of the projector onto the center of rotation of the eye.

The central-region facets 31 may be generally larger than respective projections of the beam onto the central-region facets 31, so that a single central-region facet 31 may receive the entire beam from the projector 2. The large size may be desirable in that the projector may walk a beam on a single facet, which can fill in some of the field of view between discrete locations.

Each central-region facet 31 may have a particular orientation, so that it reflects light from the projector in a particular direction. The difference in orientations of two adjacent central-region facets 31 may be generally large enough so that if light from one central-region facet 31 makes it into the pupil 41 of the eye, light from the adjacent portion on the adjacent central-region facet 31 is blocked from entering the pupil 41, usually by hitting the iris or the sclera of the eye. These central-region facet orientations and their optical effects are shown schematically in Figs. 6-8.

Fig. 6 is a schematic drawing of a portion of an exemplary display system 1, with projector light reflecting from a central-region facet 31 and entering the pupil 41 of the eye 4. A nominally collimated beam leaves the exit pupil 21 of the projector 2, strikes a central-region facet 31, and is reflected through the pupil 41 of the eye 4 onto the "foveal" region 43 of the retina 42. Note that the collimation may be adjusted in the projector, as described above; the figures are shown as being collimated for clarity.

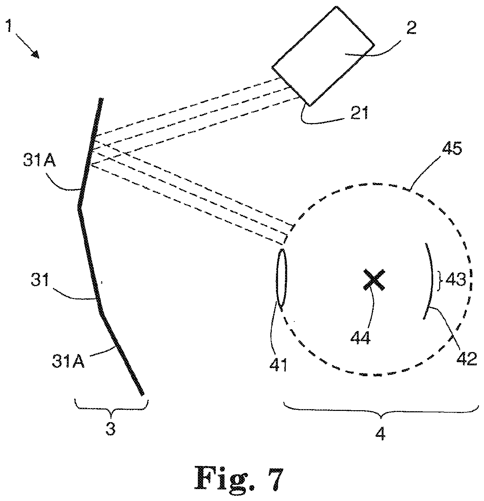

Figs. 7-8 are schematic drawings of projector light reflecting from different central-region facets 31A and missing the pupil 41 of the eye 4. Note that the rays originating from the center of the exit pupil 21 and striking locations within the central-region facets 31A are reflected toward the center of curvature 44 of the eye 4.

The central-region facet sizes and orientations may be chosen so that for each gaze direction, light from at least one central-region facet 31 is capable of entering the pupil 41 of the eye 4. For most other facets, however, the angular difference to the reflected rays may be large enough to keep the rays out of the pupil. In an exemplary embodiment, if a particular beam from the projector simultaneously strikes two adjacent central-region facets 31 and 31A, light from only one central-region facet 31 may enter the pupil, with light from the other central-region facet 31A being blocked.

The specific layout of the central-region facets may depend on the base curvature of the faceted reflector (i.e., the longitudinal planes at which the facets are located) and a nominal (minimal) pupil size, among other constraints. In some cases, the central-region facets are tiled in a generally triangular pattern. In other cases, the central-region facets are tiled in a generally rectangular or square pattern. In still other cases, the central region facets are tiled in a generally hexagonal pattern. Other patterns are anticipated.

Note that as described above, a beam incident on one particular central-region facet would produce a bright spot at one particular location in the central portion of the field of view. In order to fill in the remainder of the central portion of the field of view, the beam incident on the facet may be changed, such as a change in propagation angle. In some cases, the change involves both a change in propagation angle, in two dimensions, and a change in location, in two dimensions, which may be desirable for keeping the projected beam on a single central-region facet during such changing. Filling the central-portion of the field of view, it is believed, requires that light entering the pupil of the eye has a range of incident angles; light from a single incident angle would only produce one bright pixel in the central region of the field of view.

We now turn to the peripheral portion of the field of view, with light reflecting off the peripheral-region facets.

Like the central-region facets, the peripheral-region facets may be generally planar, so that they do not impart a significant amount of wavefront aberration onto the reflected beams.

The peripheral-region facets may need to provide smaller beams at the pupil of the eye, compared with the central-region facets 31. As a result, peripheral-region facets may be smaller than the central-region facets 31, and may be over-filled by the beam from the projector, with the reflected beam size depending on the peripheral-region facet size, rather than the beam size emergent from the projector. In some cases, the projector may emit both a large and small beam, as in Fig. 2; in other cases, a single large beam may be used, which underfills the central-region facets and overfills the peripheral-region facets.

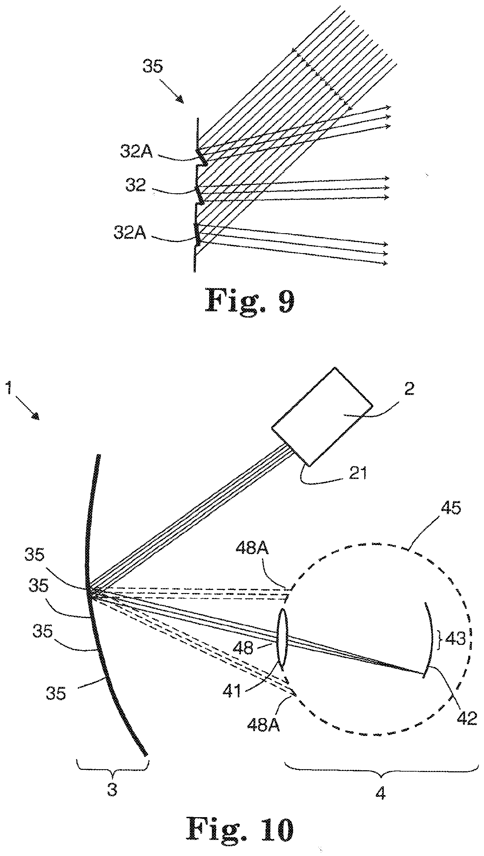

In some cases, a single beam from the projector may simultaneously illuminate several peripheral-region facets, with the light from each peripheral-region facet in the illuminated spot being directed in its own direction. Fig. 9 is a close-up schematic drawing of a single projector beam reflecting light off a cluster 35 of peripheral facets 32. The outgoing directions for the reflected beams are deliberately chosen, and are described below.

Unlike the central-region facets, in which the reflected directions are all generally aimed at the center of rotation of the eye, the reflections from the peripheral-region facets may be aimed at specific, predetermined locations on the pupil sphere of the eye in directions oblique to the center of rotation of the eye. In an exemplary embodiment, each predetermined location has sufficient corresponding peripheral-region facets directing light into the corresponding peripheral portions of the retina when the pupil is located at that predetermined location that the peripheral portion of the image is sufficiently displayed on the retina. As the gaze direction changes, the pupil moves around on the pupil sphere, and the predetermined locations may be chosen so that for each gaze direction (and, likewise, each pupil location on the pupil sphere), light from at least one predetermined location is capable of entering the pupil, with light from other predetermined locations being blocked from entering the pupil. In addition, the peripheral facets may be positioned so that any beam of incident light directed off of a particular facet but that also strikes an nearby facet does not create a noticeable disturbance in the intended image displayed on the retina. For example, adjacent facets may map to sufficiently separated predetermined locations.

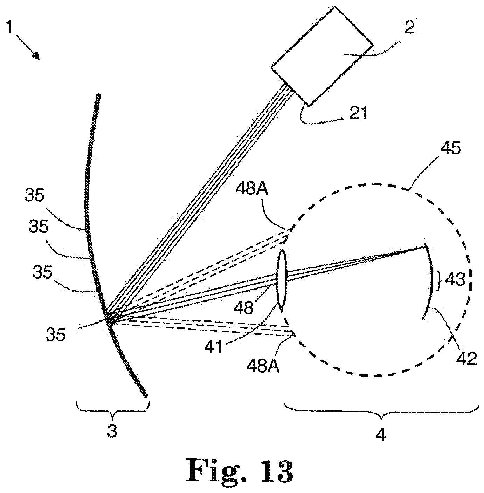

A specific example may be helpful in illustrating the possible placement and orientation of the peripheral-region facets. Figs. 10-13 are schematic drawings of a single projector beam reflecting light off one of four clusters 35 of peripheral-region facets, with light from a single location on the locus of pupil positions entering the pupil. From figure to figure, the projector beam scans from cluster to cluster. In this example, each cluster 35 includes three peripheral-region facets, although other number of facets may also be used.

In Fig. 10, light leaves the exit pupil 21 of the projector 2 and overfills the topmost cluster 35 of peripheral-region facets 32, 32A (as depicted in Fig. 9).

Light from one facet in the cluster is directed to predetermined location 48. Because the predetermined location 41 lies within or is coincident with the pupil 41, light directed to location 48 enters the pupil of the eye and is focused onto the retina 42 at an outer peripheral location of the retina.

Light from the other two facets in the cluster are directed to predetermined locations 48A, which are deliberately spaced away from location 48, and are blocked from entering the pupil 41.

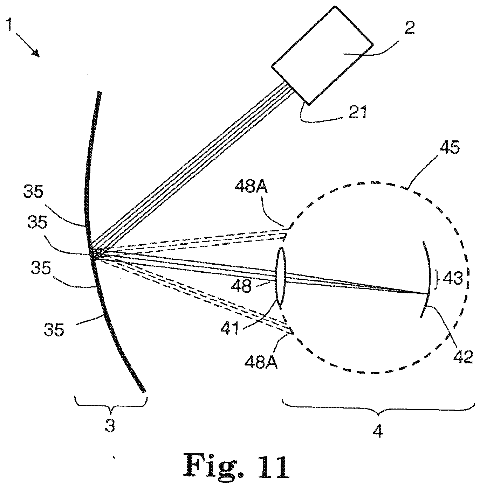

In Fig. 11, light leaves the exit pupil 21 of the projector 2 and overfills the next cluster down. The three peripheral-region facets in the cluster direct light to the same three predetermined locations on the pupil sphere 45 as those in Fig. 10. As with those in Fig. 10, light from predetermined location 48 enters the pupil 41 and is focused onto the retina 42 (although at a different location than the group of rays from Fig. 10, this peripheral location closer to the foveal region 43 of the retina than that depicted in Fig. 9), and light from predetermined locations 48A are blocked from entering the pupil 41 of the eye 4.

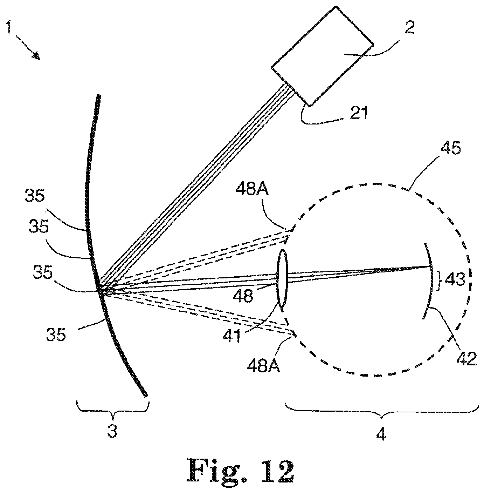

Likewise, Figs. 12-13 show illumination of the remaining two clusters of peripheral-region facets. In all cases, light from predetermined location 48 enters the pupil 41 and is focused onto the retina 42 at peripheral locations of the retina, and light from predetermined locations 48A are blocked from entering the pupil 41 of the eye 4.

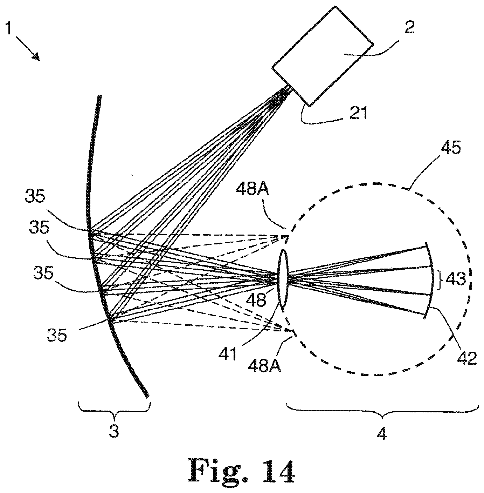

For clarity, Fig. 14 is a schematic drawing of the scanning projector beams from Figs. 10-13, all superimposed to show a typical refresh cycle of the display system. Light from a single predetermined location 48 on the locus of pupil positions (pupil sphere 45) enters the pupil 41, focuses on the retina 42 at a number of spots in the peripheral portion of the retina, with all other predetermined locations 48A being blocked.

Note that light from the peripheral facets that enters the pupil 41 strikes the retina 42 in the peripheral portions of the retina, which surround the central portion 43 of the retina 42. The central and peripheral regions of the retina may both be considered to be "contiguous illuminated regions" on the retina. Light from the central-region facets forms the central contiguous illuminated region on the retina, and from the peripheral-region facets forms the peripheral contiguous illuminated region on the retina.

Note also that the incident angle plays a large role in where light ends up on the retina. For light entering the pupil 41, the incident angle on the pupil and the corresponding location on the retina are in a one-to-one correspondence, with the actual location in the pupil of a particular ray determining only an angle at which the particular ray strikes the retina and not determining where on the retina it strikes. For light at a facet, or redirector, the relationship is not quite a one-to-one correspondence. For a pair of rays, both striking the same location on a redirector but at slightly different angles, both are redirected at slightly different angles toward the pupil and both strike the retina in slightly different locations.

The tiling of predetermined locations 48, 48A on the pupil sphere may be chosen so that for every gaze direction, or every location of the pupil 41 on the pupil sphere 45, light from at least one predetermined location 48 is capable of entering the pupil, with light from other predetermined locations 48A being blocked.

The predetermined locations 48 may be laid out in a geometrical manner, with a spacing that depends on, for example, the minimum pupil diameter. For example, the pattern may be square, hexagonal, or any other convenient tiling shape. For each, the spacing between adjacent predetermined locations may correspond to the minimal pupil diameter, so that as the pupil changes location (with a change in the gaze direction), as the light from one predetermined location becomes blocked by the iris or the sclera, light from another adjacent predetermined location becomes admissible by the pupil.

In some cases, the measured diameter of the pupil may be larger than a nominal pupil diameter, and the actual pupil may subtend more than one predetermined location. For instance, there may be a desired and an undesired predetermined location on the locus of all possible pupil locations within the actual pupil location. When this occurs, the projector might, for example, select only one (the desired) of the predetermined locations, illuminate clusters that correspond to the selected location, and not illuminate clusters that correspond to the non-selected location. More specifically, the projector may direct the projector output beam onto facets corresponding to the desired predetermined location, and not direct the projector output beam onto facets corresponding to the undesired predetermined location.

In general, the spacing of the predetermined locations may be dictated by geometrical concerns. In contrast, the spacing and placement of the peripheral-region facets may be afforded more flexibility. For each predetermined location, there may be several clusters of peripheral-region facets, each cluster containing a peripheral-region facet that corresponds to a point in the peripheral field of view when the pupil is located at that predetermined location (notice the four facet clusters and four corresponding points in the field of view in Fig. 14). The peripheral-region facets may be spread out over the entire faceted reflector 3, so that the entire peripheral field of view may be covered, for any given gaze direction. As stated above, the facets may correspond to discrete points in the peripheral portion of the field of view, with the area between the points being covered by varying the beam from the projector.

In some cases, the relatively small peripheral-region facets 31 are distributed among the relatively large central-region facets 32, within one or more of the larger central-region facets 32, along a boundary between adjacent central-region facets 32, or in the "grout" area between adjacent central-region facets 32. The "grout" region does not redirect any of the incident light into the pupil of the eye. Light hitting the grout may be absorbed, scattered, or otherwise redirected away from the eye. The peripheral-region facets 31 may be grouped singly, may be interleaved, or may be grouped in clusters 35, where each peripheral-region facet 32 in a cluster 35 corresponds to a different predetermined location 48 on the pupil sphere 45.

In some cases, the clusters include facets that correspond to only a subset of predetermined locations 48 on the pupil sphere 45, with the subsets varying from cluster-to-cluster. This may be useful if more than one predetermined location 48 is disposed within the actual pupil location, so that the undesirable predetermined location may be deliberately excluded by choice of illuminated clusters.

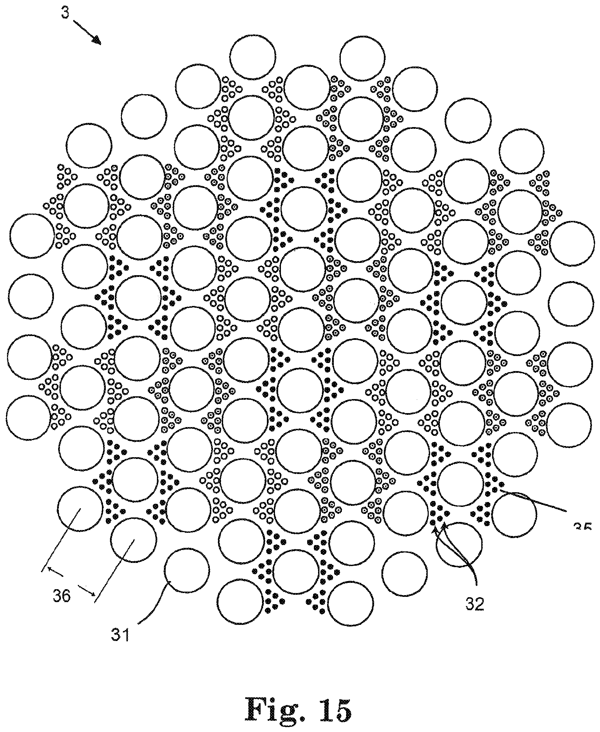

Fig. 15 is a schematic drawing of a two-dimensional depiction of one exemplary facet pattern; it will be understood that many other suitable facet patterns may be used as well. Note that these are essentially planar facets with their own particular angular orientations; they generally do not lie completely within a plane. Fig. 15 is intended to show only the locations of facets, as distributed over the faceted reflector 3.

The relatively large circles are the central-region facets 31, which direct a relatively high-quality image to the central portion of the field of view. Recall that in some cases, a light ray originating from the exit pupil 21 of the projector 2 that strikes a location on a central-region facet 31 is reflected to the center of rotation 44 of the eye 4. For every gaze location, light from at least one central-region facet 31 may be capable of entering the pupil 41 of the eye 4, with light from other central-region facets 31A being blocked from entering the pupil 41.

In Fig. 15, the central-region facets 31 themselves are relatively large, compared to the beam from the projector 2, and in many cases, the entire projector beam may fit on a single central-region facet 31. More specifically, because the projector beam strikes the central-region facets 31 at non-normal incidence, it is the projection (footprint) of the projector beam onto the central-region facets 31 that fits within the central-region facets 31.

The relatively small circles and dots are the peripheral-region facets 32. Recall that in some cases, a light ray originating from the exit pupil 21 of the projector 2 that strikes a location on a peripheral-region facet 32 is reflected to one of several predetermined locations 48 on the pupil sphere 45 at an oblique angle to the center of rotation of the eye 4. For every gaze location, light from at least one predetermined location 48 may enter the pupil 41 of the eye 4, with light from most of the other predetermined locations 48A being blocked from entering the pupil 41.

The peripheral-region facets 32 are, in this example, arranged in clusters 35, with each peripheral-region facet 32 in the cluster 35 directing light to a different predetermined location 48 on the pupil sphere 45. Although the example of Fig. 15 has six facets 32 per cluster 35, more or fewer than six facets 32 per cluster 35 may also be used. Within each cluster, the peripheral-region facets 32 are laid out in a triangular pattern, although any suitable layout pattern (shape) may be used, including a round pattern, an elliptical pattern, a rectangular pattern, or a linear (long and skinny) pattern. In some cases, the projection (footprint) of the projector beam is larger than the cluster 35, so that all peripheral-region facets 32 within the cluster 35 may be illuminated simultaneously.

As stated above, if the projector beam strikes each peripheral-region facet 32 at only one orientation, then the image at the retina looks like an array of discrete bright spots. In order to fill in the area between the bright spots and complete the field of view, the projector varies the beam. With a varied beam, light entering the pupil does so at a continuum of incident angles, rather than with discrete angles.

For the peripheral-region facets 32, it may be helpful in some cases if the scanning of the beam extends from cluster to cluster. As such, there may be multiple "flavors" of cluster, with each "flavor" having the same distribution of facets that service the same group of predetermined locations 48. In the example of Fig. 15, there are three "flavors" of cluster 35, represented by solid dots, empty circles, and dotted circles. The beam may be varied from cluster to cluster, by staying within a particular "flavor" of cluster.

Fig. 15, representing a two-dimensional depiction of facet locations of an exemplary three-dimensional faceted reflector 3, shows the lateral locations of the facets. In some cases, one or more facets has a depth (into or out of the "page," so to speak, in Fig. 15) that differs from the other facets. For instance, in some cases, the facets have a longitudinal location that matches that of a curved ellipsoidal reflector. In other cases, the facets are all located in the same plane (as would be the case in Fig. 1). In still other cases, one or more peripheral-region facets may have a different depth than one or more central-region facets.

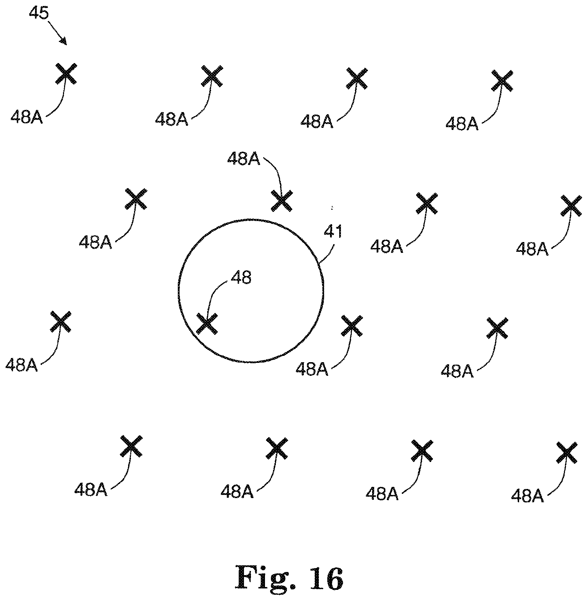

The peripheral-region facets 32 direct light from the projector to various predetermined locations on the pupil sphere 45. An example of the layout of these predetermined locations is shown in Fig. 16. It will be understood that these locations are on the surface of a sphere, and have been "flattened out" for display in Fig. 16.

In this example, the predetermined locations 48, 48A are laid out at the corners of equilateral triangles. As the viewer changes gaze direction, the pupil 41 moves around in the plane of Fig. 16, and generally accepts light from one or more predetermined locations 48. Light from other predetermined locations 48A lies outside the pupil 41, and is blocked from entering the pupil 41 of the eye 4. In this example, the spacing between adjacent predetermined locations is equal to the nominal pupil diameter; other suitable spacings may also be used.

In the example of Fig. 16, there are sixteen predetermined locations 48, 48A that subtend the usable solid angle of the pupil sphere 45. There may be more or fewer predetermined locations, such as 4, 6, 15, 18, 20, 15-20, 21, 24, 25, 21-25, 27, 30, 26- 30, 32, 33, 35, 31-35, 36, 39, 40, or more than 40. In practice, a typical angular extent of the gaze direction that may be covered is on the order of 90 degrees horizontally and 60 degrees vertically.

In the example of Fig. 16, the predetermined locations are laid out in a triangular pattern. The predetermined locations 48, 48A may also be laid out in a square pattern, a rectangular pattern, a hexagonal pattern, an irregular pattern, or any other suitable pattern or combination of patterns.

As noted above, if the actual measured pupil diameter is larger than the nominal diameter, so that more than one predetermined location 48 lies within the actual pupil 41 of the eye 4 (i.e., the circle 41 in Fig. 15 is enlarged and encircles more than one location 48), then the projector may avoid directing light to any clusters that include the undesirable predetermined location(s). For example, if the predetermined locations are laid out in a square pattern, and the pupil is large enough to encompass nine predetermined locations, then the clusters may have nine "flavors" to adequately cover the peripheral field of view, with the projector choosing one "flavor" to enter the pupil and avoiding sending light to the other eight "flavors". In other exemplary embodiments, by translating the projector location laterally, the locations on the eye sphere can be translated, for instance, to bring one into the pupil and/or others out from the pupil.

Thus far, the facets have been described basically as planar reflectors. A beam strikes the facet and reflects off the facet, with an angle of incidence equal to an angle of reflection. Each facet has its own particular orientation, so it can receive light from the exit pupil of the projector and direct it to a particular predetermined location, such as toward the center of rotation of the eye or toward a predetermined location at an oblique angle on the pupil sphere. Note that because the facets are planar (as opposed to for instance the curved base curvature of an ellipsoidal reflector), reflection off the facets themselves does not substantially alter the collimation of the beam. If the incident beam is collimated, then the reflected beam is also collimated. If the incident beam is converging or diverging, then the reflected beam is also converging or diverging, respectively. In addition, because the facets are planar, reflection off the facets does not impart any wavefront aberrations onto the beam (unlike reflection off an ellipsoidal reflector, which does impart wavefront aberrations for all rays away from the two foci of the ellipsoid). It will be understood that some exemplary facets may have a small amount of curvature, despite being referred to as "planar"; such slight curvature does not appreciably change the collimation of a reflected beam, over the spatial extent of the facet.

The facets themselves may be referred to as "redirectors." The facets may use any of a variety of physical phenomena to perform the redirection. The following paragraphs describe some exemplary ways the facets can redirect the incident light.

One exemplary type of facet is a true planar reflector. The facet is a smooth, flat surface that redirects the incident light according to the law of reflection, namely that the angle of incidence equals the angle of reflection (both with respect to a surface normal). In some cases, the reflection can occur off an uncoated substrate/air interface, giving a typical power (intensity) reflectivity of about 4-5%. The reflectivity can be boosted to close to 100% by applying a high-reflectance thin film coating to the facets, which can be metallic, dielectric, or use any suitable composition. If it is desired to make the faceted reflector semi-transparent, so that images on the retina may be superimposed with the viewer's surroundings, then any desired reflectivity between 0% and 100% can be obtained in a straightforward manner by a suitable thin film coating.

One way to produce a part with true reflectors is to mold it. Extrusion and injection molding can produce parts with extremely tight tolerances in three dimensions, and can easily satisfy the relatively loose tolerances on placement and angle for the facets. Other manufacturing techniques are also possible.

Another type of facet is a diffraction grating. A grating receives an incident beam and directs outgoing light into one or more diffracted orders, either in reflection or in transmission. The angular location of the diffracted orders is predicted by the well-known grating equation, which relates incident and exiting angles to wavelength, grating pitch (i.e., the center-to-center spacing of the grooves in the grating), and the diffracted order. The fraction of optical power that is directed into each diffracted order is determined by the shape and depth of the grooves. Given a specific set of design conditions and a particular polarization state (usually p- or s-polarization), it may be relatively straightforward to design a grating to have a large fraction of light directed into one order, and relatively small fractions of light distributed among the other orders. For instance, a blazed grating directs nearly all of its incident light into a single diffracted order.

There may be advantages to using diffractive surfaces or elements, such as gratings, to form the facets. For instance, because a grating can accept incident light from a variety of incident angles and can redirect the light into other angles, essentially regardless of the surface normal of the grating, gratings may allow for a variety of shapes for the faceted reflector. Specifically, the faceted reflector may have a substantially flat profile, rather than curved as an ellipsoid, with individual grating areas forming the respective facets on the flat surface. The faceted reflector may also be curved to match a particular surface, such as the near-facing surface in an eyeglass prescription. Another potential advantage is that a grating may allow the incident light to strike the facet from the interior of the faceted reflector, rather than from the side facing the eye. Such a grating may optionally allow the redirectors to work in transmission, where the light strikes each facet and is "redirected" in transmission, rather than "reflected".

In addition, because exiting angle is highly wavelength-dependent for non-zero diffracted orders, a shift in the source wavelength may produce a change in angle of the redirected light from the facet. This may be a useful feature if the wavelength of the source is well-controlled. The sources are typically red, green and blue laser diodes, although any tunable source may be used.

Diffractive structures generally are believed dispersive and accordingly may be regarded as wavelength dependent. In some exemplary embodiments different diffractive structures are used for each primary color and in other examples the same structure may be used for multiple wavelengths.

Another example type of reflecting mechanism is a Bragg reflector. Such a Bragg reflector may be designed for a particular wavelength and for a particular incident angle. The Bragg reflector may produce a high reflectance at its design wavelength and incident angle, but the reflectivity is believed typically to drop significantly as either the wavelength or the incident angle is shifted away from its design value. Unlike a grating, where a shift in wavelength may produce a shift in diffracted angle, a shift in wavelength for a Bragg reflector simply drops the reflectivity, without shifting the reflected beam. Basically, as a Bragg reflector is wavelength-detuned away from its design wavelength, it becomes transparent.

A Bragg reflector is formed as a "volume" optical element, as opposed to a "surface" element such as a diffraction grating, even if the volume over which it extends is not especially deep. Two or more materials are used to form a periodic structure, in which the refractive index varies periodically in a particular direction and is constant along planes perpendicular to the particular direction. Light sees a periodic structure that generates many small in-phase reflections, which interfere completely constructively only at the design wavelength and only at the design incident angle. Away from either the design wavelength or the design incident angle, the interference is not completely constructive, and the overall reflection is small or negligible. The "sharpness" of the reflection, with respect to wavelength and/or incident angle, increases with the number of cycles in the periodic structure.

The orientation of the refractive index variation (the "particular direction" cited above) is analogous to a surface normal for an ordinary planar reflector. The angle of incidence equals the angle of reflection; for the ordinary planar reflector, the angles are formed with respect to the surface normal, and for the Bragg reflector, the angles are formed with respect to the "particular" direction of the refractive index variation. Unlike an ordinary planar reflector, the Bragg reflector only has a high reflectivity for one set of incident and exiting angles.

Note that the Bragg reflector may be enveloped within other material, or may have a coating applied on it. The additional material atop the Bragg reflector may bend the incident and exiting beams in accordance with Snell's Law, much like a coated or embedded diffraction grating.

In some exemplary embodiments multiple Bragg reflectors may be used for each facet. For instance, a separate redirector may be used for each of red, green and blue wavelengths. These redirectors may be what is sometimes referred to as "multiplexed" into a single physical layer. In other examples, selectivity of redirectors is enhanced by having more than one for each color, such as with three different wavelengths of red. The bands would be relatively near, with for instance less than ten nanometers, but would be separate enough to be used to select the desired redirector. Similarly, there would be multiple colors of green near each other, and so forth for other colors colors. Again, whatever the number of types of Bragg reflectors, it is believed that multiple such reflectors can be combined in a physical layer and that multiple physical layers can be combined into a structure.

The depth between and among Bragg reflectors, as for other redirector structures, may provide an additional degree of freedom. This positioning of a redirector at a particular depth within a particular medium may be referred to as "longitudinal positioning" of the redirector, such as a long the z-direction. Likewise, "lateral positioning" may refer to the layout of redirectors along a particular surface, such as along the x-y directions. In some cases, the redirectors may be physically supported by, embedded on, or embedded within a supporting matrix, which may have a transmissive element, a redirecting layer, and a second transmissive element that longitudinally covers the redirecting layer.

Finally, some other exemplary types of facets may be switchable structures, such as switchable reflectors, switchable mirrors, switchable shutters, and switchable holograms.

In some cases, it may be desirable to have a structure on or within the proximal optic that reduces what may be referred to as "outward" stray light, such as light from the projector that is not redirected by the redirectors, but is instead transmitted out of a side of the proximal optic that is facing away from the user's eye. Such a stray light reducing structure may be on the side of the proximal optic, facing away from the eye. Such a structure may be absorptive, may be diffractive, may be a nanostructure, and/or may be switchable. Optionally, such a switchable structure may also reduce the amount of ambient light from the surrounding that is transmitted through the proximal optic to the eye.

System Concepts

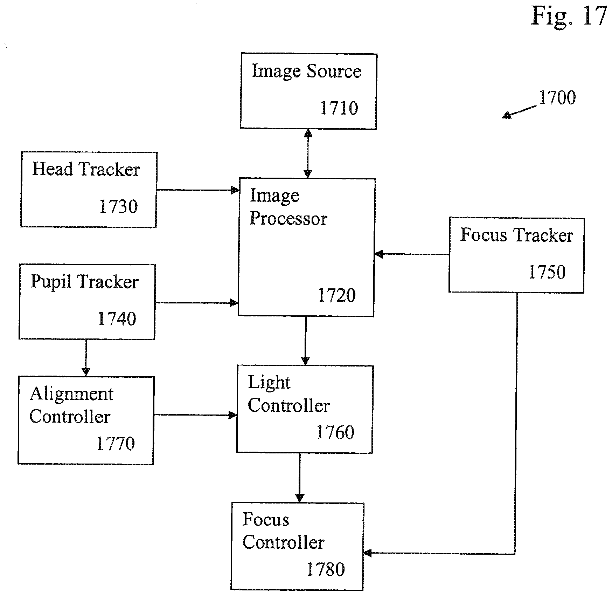

Fig. 17 depicts an overview of an image system 1700, according to an exemplary embodiment of the present invention. The image system 1700 includes an image source 1710 (for example, prerecorded video, computer simulation, still picture, camera, etc.). The image source may undergo image processing from image processor 1720 to render it into a form displayable by, for example, the projector 120 in Fig. 2. This processing, for example, may render the image into a set of frames, each frame representing a fraction of a second and containing the image data (for example, red, green, and blue intensity) for each of a set of pixels in some, for instance rectangular, pixel space representing a user's field of view.

The frames may further be divided into central portions of the image (correponding to portions being scanned to the foveal portion of the retina) and peripheral portions of the image. The central portion may use higher resolution (for example, higher density of pixels) than the peripheral portion, but lower refresh rates (for example, 40 Hz for the central portion versus 80 Hz for the peripheral portion). For example, the image processor 1720 combines the data from several adjacent pixels (through, for example, pixel averaging) to produce the peripheral portion.

In order to determine the central portion and the peripheral portion of an image, the image processor 1720 may need input from the pupil tracker 1740 (which corresponds to eye-pupil tracking 182 in Fig. 2) to know where on the pupil sphere the user's pupil is currently located. The pupil tracker 1740 tracks the location of the pupil at a given point in time. When the location changes, the pupil tracker may inform the image processor 1720 of the new location.

Depending on the image content or application, the image processor may also receive input from a head tracker 1730. The head tracker 1730 tracks a user's head position. This data, when combined with the data from the pupil tracker 1740, provides the current field of view from the user's eye with respect to the user's surroundings. This can be useful, for instance, when a transmissive proximal optic and projector system projects an object onto the user's retina in such a manner as to make the object appear fixed from the user's perspective of his or her surroundings. For example, the system may scan the image of a bottle onto the retina so that users see the imaginary bottle as fixed on a real surface, such as a table top, even when the users turn their heads or move their eyes).

A focus tracker 1750 may also provide input to the image processor. Focus tracking (that is, detecting the distance at which the user's eye is focused) can be done in a variety of ways. For example, if there is another eye tracker for the user's other eye, the focus tracker could compare the vergence angle made by the two pupils to determine a possible distance that the eye is currently focused. Another possible focus distance may be determined by knowing the distance of the nearest object in the line of sight of the user (i.e., what the eye appears to be currently looking at). A still further non-limiting example focus distance could be determined by measuring the eye's "crystalline lens," that is, the amount of focus being applied by the eye to the light being directed to the retina. Some of these focus distances may use input from other components, such as the pupil tracker 1730 or head tracker 1740, though this connection is omitted from Fig. 17 for clarity. The input from the focus tracker could be used by the image processor 1720 to "blur" the image data that would be out of focus from the user's perspective (when more efficient than attempting to focus the corresponding image data to a distance different from that which the eye is currently focused).

Depending on the type of image source 1710, as well as the input from sources such as the pupil tracker 1740, head tracker 1730, and focus tracker 1750, the image processor 1720 may request different data from the image source 1710.

Conceptually, each image frame produced by the image processor 1720 can be thought of as a two-dimensional array of pixels (x,y). Associated with each pixel (x,y) can be a color combination (r,g,b) representing, for example, individual color intensities r (red), g (green), and b (blue) from an example three-color gamut. These can be stored as a two-dimensional array of (r,g,b) values, where the dimensions represent the x and y values. Once built by the image processor 1720, the data can undergo mapping (described later) to translate the individual pixel values into scan times (or locations) and laser pulse modulations (organized in a frame buffer) sent to the light controller 1760 for driving the lasers (or other light source means) and light directing (for example, mirrors) that scan the corresponding image to the proximal optic and then onto the retina.

The light controller 1760 may perform the scanning by taking the frame buffer and, for each pixel of data, directing the corresponding beam of light towards the appropriate redirector. This may, for example, require timing a corresponding micro-mirror control, such as a galvo (if, for instance, the micro-mirror resonates in one degree of freedom) or applying the appropriate bias to a different micro-mirror control to adjust in another degree of freedom.

As the proximal optic and the light source (for example, projector) can be separate parts, there may be an alignment controller 1770 that maintains alignment between the projector and the redirectors on the proximal optic. For example, a few alignment redirectors could be specially located on the proximal optic and designed to reflect directly back to the projector, using, for instance, the pupil tracker to detect the returned light. This would allow the light controller 1760 to adjust, possibly on a periodic basis, for misalignment (for instance, by applying a simple correction to the mapping of the projector/proximal optic to the current predetermined location.) The alignment controller may also perform the alignment by adjusting the corresponding projector components, such as galvos.

Optionally, the focus controller 1780 can adjust the focus of the image data to make it appear to be at a certain distance from the user when projected onto the retina. This may take place on a periodic basis, and apply to the entire image. The focus controller 1780 may also use input from the focus tracker 1750 to know at which distance to make the corresponding scanned image appear to be focused.

Referring back to the example projector 120 of Fig. 2 according to an embodiment of the present invention, an image is projected onto the retina as a series of pixels and at a particular refresh rate. Each pixel has a particular color characteristic. A laser modulation controller 138 modulates light beams from lasers 36r, 36g, and 36b, thereby imparting color-specific image information to each respective light beam, to produce the color characteristic for each pixel. As described earlier, the three exemplary monochromatic beams 38r, 38g, and 38b may be combined into a single light beam 140.

The combined beam 140 may then undergo further treatment, such as beam conditioning under the control of beam conditioning controller 188 and variable focus under the control of variable focus controller 184. Beam conditioning controller 188 may statically or dynamically produce a desired wavefront aberration as described earlier. Such a beam conditioning may correct upstream any additional wavefront aberrations that may occur downstream. For example, beam conditioning controller 188 may correct for astigmatism of the combined laser beam 140. Variable focus controller 184 may statically or dynamically produce a desired amount of defocus in the beam as described earlier.

Auto alignment controller 186 may periodically check and control the alignment of the projector and the proximal optic. For example, when light comes back through the redirectors and is measured by, for instance, pupil tracker 182, this allows for the alignment of the proximal optic with the projector to be learned by the projector. To see this, notice that only redirectors return data with the modulated signature from portions of the eye (whether entering the pupil or not). The angular spacing between these determines the distance to the redirector array; but, the absolute angle to a redirector could be optained by measuring where the micro-mirror hits it in its resonant cycle and/or as steered directly. Moreover, the relative alignment of individual steering elements can be determined in a similar manner by, for instance, noting when they hit the same redirector.

Mapping Concepts

The proximal optic and projector system is configured to be capable of scanning every position within a field of view on the retina (full coverage), for a continuous range of pupil locations within the field of view. In an example implementation, the field of view may include a "central" (foveal) field of view and a peripheral field of view. The set of possible pupil locations may, in practice, be limited to a set (grid) of sufficiently spaced (predetermined) locations on the pupil sphere, or one set for the foveal and one set for the peripheral. The peripheral set may, in some embodiments, be moved laterally and so the grid spacing may be larger.

In order to perform the projecting according to one embodiment of the present invention, the proximal optic and light system is "mapped" for each of the predetermined locations on the eye sphere. The mapping may be performed separately for the central field of view and for the peripheral field of view. Since the same principles may apply to either mapping, consider mapping the central field of view from a particular predetermined location.

An image representing a field of view may be a set of pixels. For clarity of explanation, consider the image to be rectangular with a two dimensional array of pixels oriented in an X direction (horizontal) and a Y direction (vertical). At a given instant in time or frame (corresponding to the refresh rate, for example 40 Hz for the central field of view), each pixel has associated with it a color, whose color values can be controlled by mixing individual (primary) colors (defining a color gamut) in the right proportion and magnitude. That is, for a three-color (red/green/blue) gamut, each pixel can be described as five quantities: X coordinate, Y coordinate, red intensity (magnitude), green intensity, and blue intensity. These individual values could then be represented by numbers containing some number of bits, say 8-12, and arranged in the form (x, y, r, g, b), where each of x, y, r, g, and b are 8-12 bit numbers representing the X coordinate, the Y coordinate, the red value, the green value, and the blue value, respectively.

Since the image data may be organized by pixel address, and the projector system may direct light onto the proximal optic using different controls (degrees of freedom), it can be helpful to have a mapping from these degrees of freedom combinations onto a corresponding pixel space. One exemplary method of mapping the central field of view using the projector system 120 of Fig. 2 consists of using a resonant galvo micro-mirror 154 that resonates in the H (horizontal) direction at a frequency in the tens of kilohertz. The micro-mirror may also be controllable in the V (vertical) direction by applying a bias (vertical steering). Provided the amount of resonance and vertical steering is sufficient to direct light to the entire proximal optic, such a scheme would effect a micro-mirror "raster scan" of the proximal optic. By stepping through each of a set of possible V values (noting that the acuity of the eye is no better than one arc minute at the most central part, so depending on the desired resolution, a few thousand V values may suffice; the value should be at least as much as the number of pixel rows (Y values) being processed by the underlying imaging system) and scanning an entire H direction for each V value, an imaging device (such as a camera) can record each of the times and corresponding angles of light of the projector system on the proximal optic that would enter the eye pupil at predetermined location of interest. Other techniqus, such as ray tracing or analytical techniques, can be used to determine the corresponding incoming angles. Because the proximal optic is configured to provide full coverage, such a raster scan will hit sufficiently close to every (x, y) location in the pixel space that each pixel can be mapped to at least one such raster scanning position of the micro-mirror.

The raster scan can be discretized into separate H and V values (breaking up the H direction into several thousand values, as was done with the V direction, again being sure to use at least as many H values as pixel columns (X values) being processed in the underlying image system), with the corresponding pixel location scanned at those values during the mapping. That is, each discrete location (h, v) in the raster scan will correspond to some pixel (x, y) in the pixel space, or to no such pixel. While many such (h, v) combinations will not result in any light being directed into the pixel space (for example, the corresponding light beam hits a redirector that does not correspond to the predetermined location of interest), and many (h, v) combinations will result in light being directed at the same pixel (x, y) in the pixel space, there should be at least one (h, v) combination in the raster scan for each pixel (x, y) in the pixel space that results in light being directed to that pixel (because of full coverage). It should suffice for each pixel (x, y) in the pixel space to find one such combination (h, v) in the raster scan. This, then, would constitute a mapping of the raster scan to the pixel space.

In some embodiments, this mapping could be made more efficient, say by eliminating vertical positions (V values) in the raster scan that generate no pixels in the pixel space. In addition, it may be possible to eliminate more vertical positions of the raster scan by selecting (h, v) combinations from pixels with multiple raster scan combinations in such a manner as to avoid entire vertical positions of the raster scan. The mapping produces a one-to-one correspondence between pixels (x, y) in the pixel space and raster scan locations (h, v). This mapping is fixed for the particular predetermined eye sphere position. These raster scan locations can then be sorted, first by V value (to know which vertical positions need to be scanned), then by H value within each V value (to know when during the horizontal resonance to direct the light corresponding to the pixel associated with the particular raster scan combination). The final sorted list, which can be separately indexed by x and y because of the one-to-one correspondence, can be part of the mapping for the particular predetermined location.

At this point, the desired image can be projected by building a frame buffer and storing the corresponding r, g, and b values for each pixel (x, y) of the image frame into the buffer, mapping these values into the corresponding (h, v, r, g, b) list, sorted by h and v value, using the above mapping. The scanning would then consist of stepping through the different v values (vertical positions), where for each such v value, the micro-mirror is vertically steered to the corresponding v position. Then, as the micro-mirror resonates horizontally, each of the h values in the v position are processed, directing the projector to project light representing the r, g, and b values at the appropriate time represented by the corresponding h position. This process is repeated for each of the different v values in the mapping. Once the frame buffer is exhausted, a new frame buffer (corresponding to the next frame in the image, representing, for example, 1/40th of a second later) is loaded with pixel data and projected.

This scanning may continue frame-by-frame in this fashion until the pupil detector detects that the location of the pupil has changed such that a new predetermined location should be used. Once such a new predetermined location is predicted or found, that predetermined location's corresponding mapping would be loaded and the corresponding frame buffers would be built using that mapping.

The mapping for the peripheral field of view for a particular predetermined location may be built similarly. Since the peripheral portion generally represents far more of the image than the central portion, yet uses significantly less resolution for the retina to process, it may be desirable to use a much sparser array of pixels (using, for example, pixel averaging or other image processing techniques) to represent that portion. In addition, the peripheral portion of the retina is capable of more quickly detecting change than the central portion, so it may benefit from a higher refresh rate than that used for the central portion. For instance, a refresh rate of 75 Hz may be a more appropriate rate to keep the user from sensing the mechanics of the image scanning.

Example Mapping Procedure

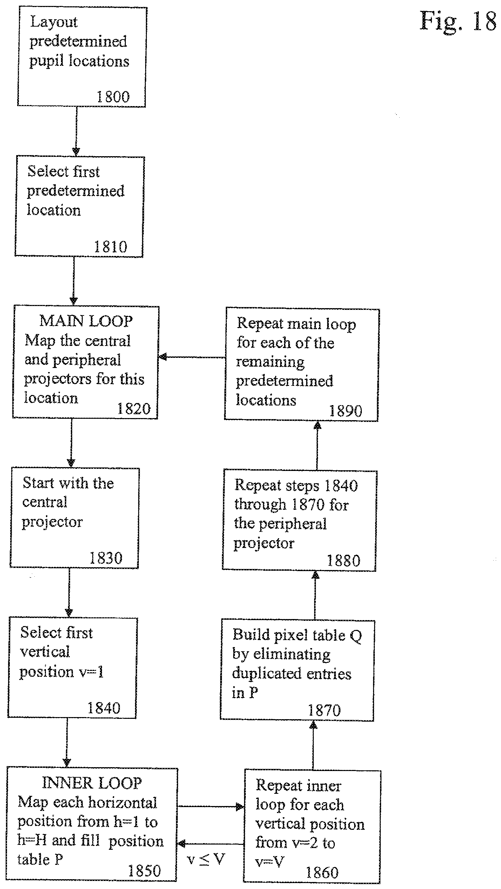

Fig. 18 shows an example method for mapping a proximal optic and projector system onto a pixel layout (representing, for example, the field of view of a user of the system), where the proximal optic contains two types of redirectors, one to cover the central (foveal) field of view and one to cover the peripheral field of view. In practice, there can be multiple types of redirectors and multiple projector systems for each type. The mapping procedure is believed extensible, provided that the projectors and proximal optic provide full coverage of light to the desired pupil sphere.

Assume again for clarity that the pixel layout is rectangular, arranged in an XxY layout with X pixels in the horizontal direction and Y pixels in the vertical direction. Assume further that the projectors are adjustable in two degrees of freedom, namely horizontal and vertical, and that these degrees of freedom can be specified in discrete quantities, say H different horizontal positions and V different vertical positions, where the the H×V total positions provide coverage of the desired field of view (that is, HxV needs to be at least as large as XxY, and may be significantly larger).

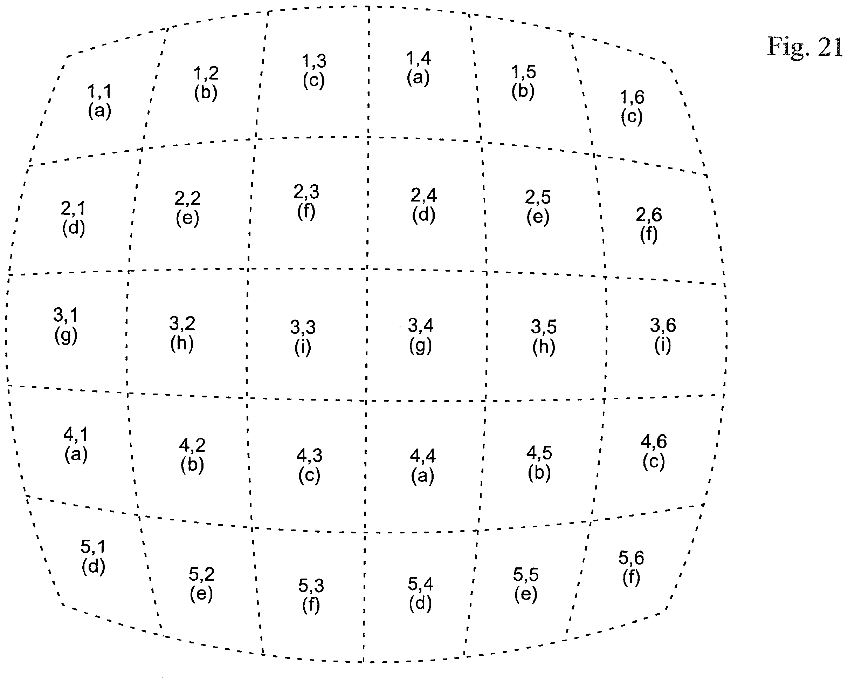

The method begins with 1800 laying out predetermined pupil locations with respect to the proximal optic. These can be in a regular grid, for example, and should be sufficiently dense so that they take into account all of the possible actual pupil locations on the eye, as discussed above. For example, see Fig. 21, which shows a somewhat rectangular grid of predetermined pupil locations arranged on the pupil sphere. For ease of description, assume that the predetermined locations are intended for both the central and peripheral redirectors, though this is not required. A camera or other instrument capable of recording light is positioned at the predetermined location currently being mapped. The camera will measure the incoming angle of light, redirected by the proximal optic, from the perspective of the predetermined location.

Next, 1810 select the first predetermined location. Then 1820 enter the main loop, where for each predetermined location, the proximal optic is mapped for the central projector and the peripheral projector. For clarity, 1830 the central projector mapping will be described in detail; the peripheral projector mapping may be done similarly.

In 1840, the first vertical position (v=1) is selected for the central projector system. Then 1850 the horizontal positions are scanned one by one from h=1 to h=H. That is, a pulse of light is emitted corresponding to the time that the horizontal position is at position h. For each position (h,v) of the projector, the angle of incoming light (if any) from the pulse is recorded by the camera. This angle can be converted to a corresponding (x,y) in the pixel space representing the user's field of view and stored in a position table P indexed by h and v. In 1860, v is incremented (v←v+1) and the process repeats for each remaining vertical position from v=2 to v=V. This completes mapping each of the projector positions onto the pixel space.

Because of full coverage of the proximal optic, each of the pixels (x,y) should end up in at least one projector position (h,v). Some of the entries in P may be empty (corresponding to no recorded light for those combinations) while some may contain duplicate pixel locations with those of other entries in P. Processing may be simplified 1870 by eliminating duplicate pixel entries in P, especially ones that lie in vertical positions whose only entries are duplicated in projector combinations using other vertical positions. This serves to lessen the number of distinct vertical positions that need to be scanned in order to reach all of the pixels. If duplicate entries are eliminated, another table Q can be built, indexed by x and y, containing the corresponding (h,v) position that produce light for each pixel (x,y) in the pixel space.

Tables P and Q are sufficient to efficiently map an image (organized by pixels) onto the projector system. Table P maps the projector positions onto the pixel space while table Q maps the pixel space onto the corresponding projector positions. The corresponding pixel data values (e.g., color intensities) can be assigned using table Q to their corresponding projector positions. Table P is sufficient to drive the projector system with pixel data values entered using table Q. If table P is sparse, other data structures (e.g., linked lists) can be used to allow more efficient processing of it by the projector system.

The mapping may be adjusted, in some exemplary embodiments, to conform to undamaged portions of a damaged retina. In some examples, damaged portions are not mapped to. Also, the pixels mapped may be "distorted," that is arranged in a non-uniform density, to allow more complete or useful images to be seen by the user. It is believed that users may be able to adapt to accept distorted images.

After mapping the central projector system, the peripheral projector system may be mapped 1880 by substantially repeating steps 1840 through 1870. The mapping procedure can then be repeated 1890 for each of the remaining predetermined locations.

Example Scanning Procedure

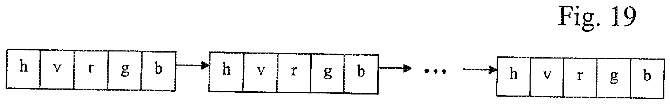

We will now describe an example method for scanning an image representing the current frame onto the retina. The image processor 1720 may, for example, produce frame-by-frame images in an XxY pixel space, that is, (r,g,b) values for each possible pixel (x,y), where r, g, and b are the corresponding red, green, and blue intensity values needed to drive the underlying projector system. While the above-described pixel mapping table (Q) may be sufficient to derive a corresponding (h,v) projector position to place this data, the projector may not be sufficiently responsive to jump arbitrarily from one (h,v) value to another and keep up with the desired refresh rate. As was also discussed above, however, a resonating micro-mirror structure will suffice for acceptable image resolutions and refresh rates if the image data is sorted in the v and h directions. The above mapping tables allow this sorting to be done without additional processing time. Consequently, the data can be assumed to come from the image processor 1720 organized in entries consisting of 5 values (h,v,r,g,b), sorted first by v and then by h. For instance, they may come as a linked list (frame buffer) as shown in Fig. 19.

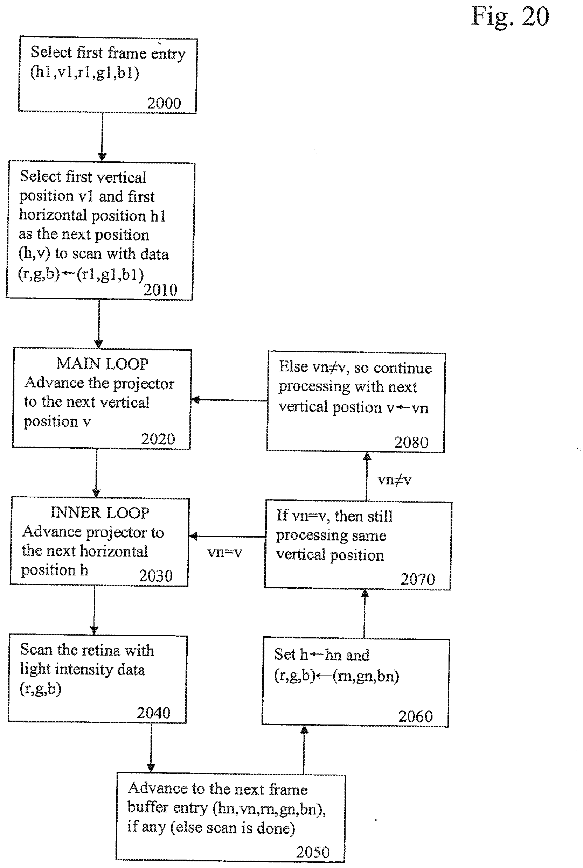

Fig. 20 is an example method to scan such a frame buffer onto the retina. The frame buffer consists of a linked list of frame buffer entries sorted by vertical position v, then horizontal position h. The method begins with 2000 selecting the first frame buffer entry (h1,v1,r1,g1,b1). Then 2010 the scanning is initialized to scan position (h1,v1) as the next scan position (h,v) and pixel data (r1, g1, b1) as the next pixel data (r,g,b).

The main loop 2020 starts by advancing the vertical position of the projector to value v. All of the entries in this vertical position are scanned before moving onto the next vertical position. The inner loop 2030 starts by advancing the horizontal position of the projector to value h. For a resonating micro-mirror, this may consist of waiting until position h in the resonance cycle. Then 2040 the light source is directed to scan the pixel data (r,g,b) via the suitable means (e.g., modulated laser light).

This completes scanning this frame buffer entry. If 2050 there are no more entries, scanning is complete for this frame buffer. Else 2060 the next entry (hn,vn,rn,gn,bn) is obtained, the next h value is set to hn, and the next pixel data (r,g,b) is set to (rn,gn,bn). If 2070 the vertical position does not change (that is, vn=v), the inner loop 2030 is repeated at the next horizontal position. Else 2080 the vertical position changes, so v is set to vn and main loop 2020 is repeated.

Again, in some exemplary embodiments, scanning may include only portions of a retina that are undamaged and avoid portions that are damaged.

This technique may be suitable for scanning both the central portion and the peripheral portion of the image data onto the retina.

Example Layout of Redirectors

Fig. 21 provides an example division of the pupil sphere into predetermined locations, in this case a somewhat rectangular grid of predetermined pupil locations arranged on the (three-dimensional) surface of the eye. There are five rows, numbered 1-5, and six columns, numbered 1-6. Each of the predetermined locations is assigned a two-part number r,c where r is the row number and c is the column number. For example 1,1 is the number of the predetermined location in the upper left corner which 5,6 is the number of the predetermined location in the lower right corner. Note that the actual predetermined locations are points on the pupil sphere. For example, the centers of the corresponding individual cells delineated in Fig. 21 could represent the predetermined locations. The cells then would mark the region of the pupil sphere assigned to that predetermined location. For instance, if the actual center of the pupil were anywhere in cell 3,4 then the corresponding predetermined location for this pupil location would be the center of cell 3,4.

The locations of the predermined locations on the proximal optic may be broken up into disjoint classes, where each class has the property that any two locations within the class are sufficiently far apart that even a maximal size pupil is not capable of encompassing two such locations. This depends on the distance between adjacent predetermined locations. For instance, it may suffice that the predetermined locations making up a class be at least three cells apart from each other. Fig. 21 shows a possible class assignment under such an assumption. The classes are identified by letter (a through i). With such a grid of predetermined locations, and a restriction that locations within the same class be at least three cells apart, nine is the fewest number of classes, but it is a sufficient number even if the grid is extended in both dimensions, as the pattern in Fig. 21 demonstrates.

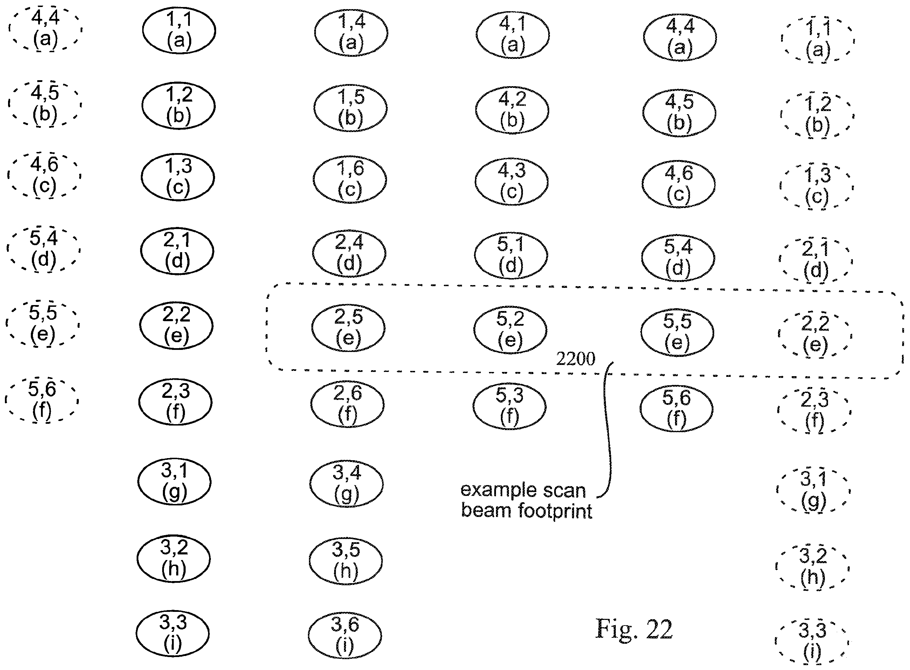

The purpose of the classes is to make it easier to lay out the corresponding redirectors on the proximal optic. Fig. 22 shows a somewhat simplified two-dimensional depiction of an example peripheral redirector layout in the proximal optic. Each labeled oval represents a redirector, configured to direct light to the corresponding predetermined location identified by the label. The layout appears to be a rectangular arrangement in this depiction, with each row of redirectors corresponding to a different class of predetermined locations from Fig 21. For illustration purposes, each of the 30 separate predetermined locations in Fig. 21 is assigned one oval formed by a solid line in Fig. 22, but the pattern of redirectors can be extended in both dimensions. For instance, the ovals formed by broken lines shows a sample extension in the row dimension. Thus, different ovals represent different redirectors, but they can direct light to the same predetermined location, as identified by the number assigned to the redirector.

Also shown in Fig. 22 is an example scan beam footprint 2200, which represents one pulse width of light from the projector (corresponding to at most one pixel for the desired predetermined location's field of view). The scan beam footprint 2200 is four redirectors wide, and traverses the row dimension in the example implementation. By making the class sizes sufficiently large (usually four, in this case), redirectors from the same class can be arranged so that redirectors representing the same predetermined location are not part of the same scan beam footprint (which could lead to multiple pixels being illuminated from the same scan pulse). In addition, by scanning only redirectors of the same class, redirectors representing neighboring or nearby predetermined locations are not part of the same scan beam (which could also lead to multiple pixels being illuminated from the same scan pulse, if the pupil is sufficiently large).

Example Mid-Level Processing

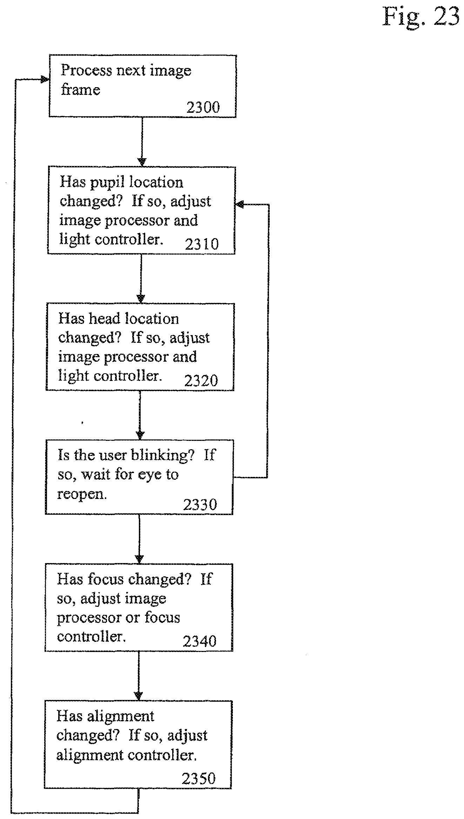

The above mapping and scanning procedures provide some of the low-level (within an image frame) implementation details. Fig. 23 shows an example mid-level (between image frames) processing routine. It starts with the 2300 process next image frame, doing the appropriate processing (as discussed above) to scan the next image frame onto the retina. This step may be repeated some number of times, depending on the refresh rate.

At this point, certain changes to the user's eye may be checked for. For instance, 2310 has the pupil location changed (as detected by the pupil tracker)? If so, the image displaying may need to be suspended until the new pupil location on the pupil sphere can be predicted or determined (by the pupil tracker), the appropriate image data obtained or reprocessed by the image processor, and new frame data built. In addition, 2320 has the head location changed (as detected by the head tracker). If the head location is being tracked, then a change in head location may cause new image data to be obtained or existing image data to be reprocessed in order to scan the data onto the retina in such a manner as to account for the head movement.

Next, 2330 is the user blinking (as detected by the pupil tracker). If so, image processing may be suspended until the eye opens and then the pupil location determined to see if there has been a change in pupil location. Eye trackers are anticipated that detect pupil movement through the eye lid. In step 2340, the user's focus is checked for (using the focus tracker). If it has changed, the image processor or the focus controller may adjust the image data or focus it to a different distance to reflect the change. Next, 2350 does the alignment (between the projector and the proximal optic) need correction (as detected by the alignment controller or pupil tracker). If so, the alignment controller may need to do the appropriate correction (for example, to the image frame data, or to the projector controls).

Once some or all of the different events that can affect the frame data projected to the user eye have been checked for and processed, the processing can resume 2300 at the beginning with the next set of image frame data, and the whole mid-level processing routine can be repeated.

Example Light Directing and Redirecting Types

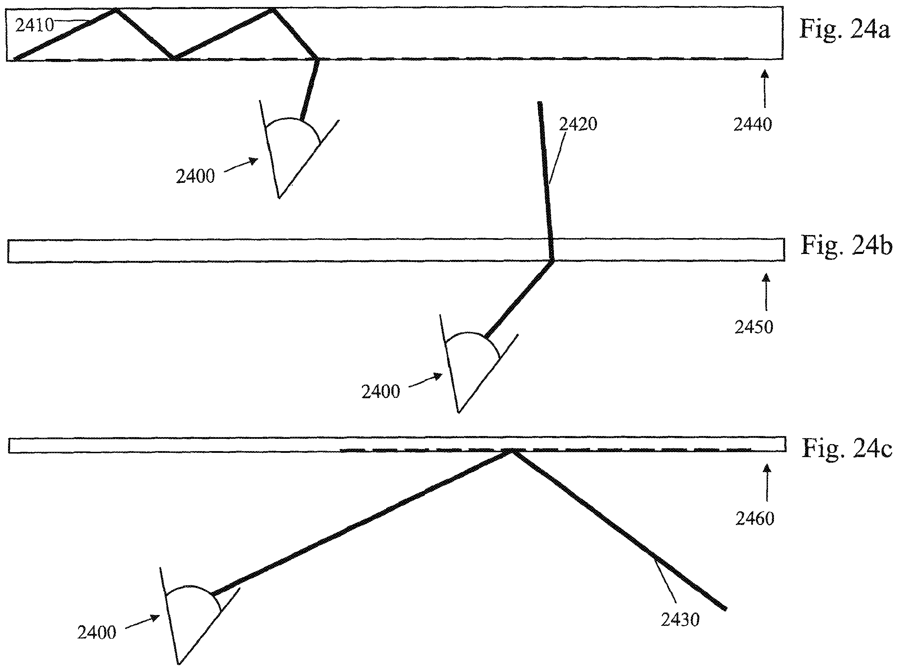

Figs. 24a-24c show three different techniques of directing light to the proximal optic along with corresponding representative light paths to the pupil 2400 according to exemplary embodiments of the present invention. Fig. 24a shows a side projection technique. Light 2410 enters from the side of a proximal optic 2440 configured with a waveguide, reflects internally, then exits in the direction of the pupil 2400. Fig. 24b shows a rear projection technique. Light 2420 comes from the rear of the proximal optic (from the perspective of the pupil 2400), hits a transmissive proximal optic 2450, and is redirected through the optic in the direction of the pupil 2400. Fig. 24c shows a front projection technique. Light 2430 comes from the front of the proximal optic (that is, from the same side that the pupil 2400 is on), hits a reflective proximal optic 2460, and reflects off the optic in the direction of the pupil 2400.

Beams of Light and their Footprints

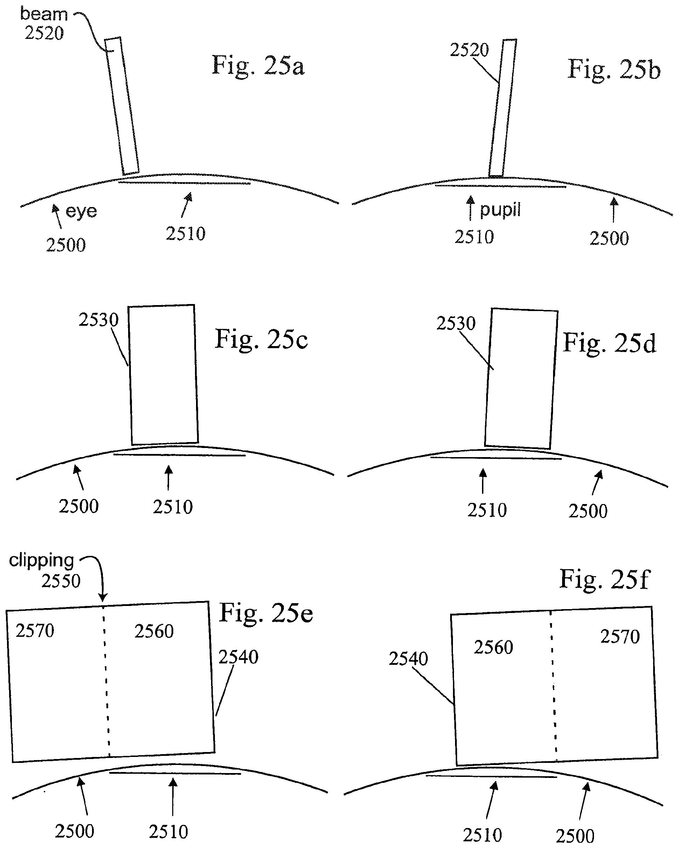

Figs. 25a-25f show (in three separate pairs of drawings) three distinct sizes of beams being directed at the pupil 2510 of an eye 2500 along with their corresponding footprints. Figs. 25a-25b show a narrow beam 2520 (as, for example, might be used to direct light to a peripheral portion of the retina) being directed at the pupil 2510. The beam 2520 is considerably narrower than the opening of the pupil 2510. Figs. 25c-25d show a large beam 2530 (as, for example, might be used to direct light to a foveal portion of the retina) being directed at the pupil 2510. This beam 2520 might be, for example, 2 mm in size, enough to provide high resolution on the retina while still fitting within even the smallest diameter pupil 2510.

Finally, Figs. 25e-25f show a very large ("fat") beam (as, for example, might also be used to direct light to the foveal portion of the retina using the full width of a large redirector) being directed at the pupil 2510. The beam 2540 is so large that clipping 2520 is taking place. That is, some portion 2570 of the beam 2540 is not even making it into the pupil 2510 (the beam 2540 is being "clipped"). Nonetheless, there is a substantial portion 2560 of the beam 2540 that is making it into the pupil 2510. While this provides resolution almost as good as a beam size closer to 2 mm (such as beam 2530), the amount of optical energy in the beam 2540 is less than with beams 2520 and 2530 as perceived by the eye 2500 because much of the beam 2540 is not entering the pupil 2510. As a result, the optical energy of such beams may need to be increased to deliver the same effective light to the eye 2500.

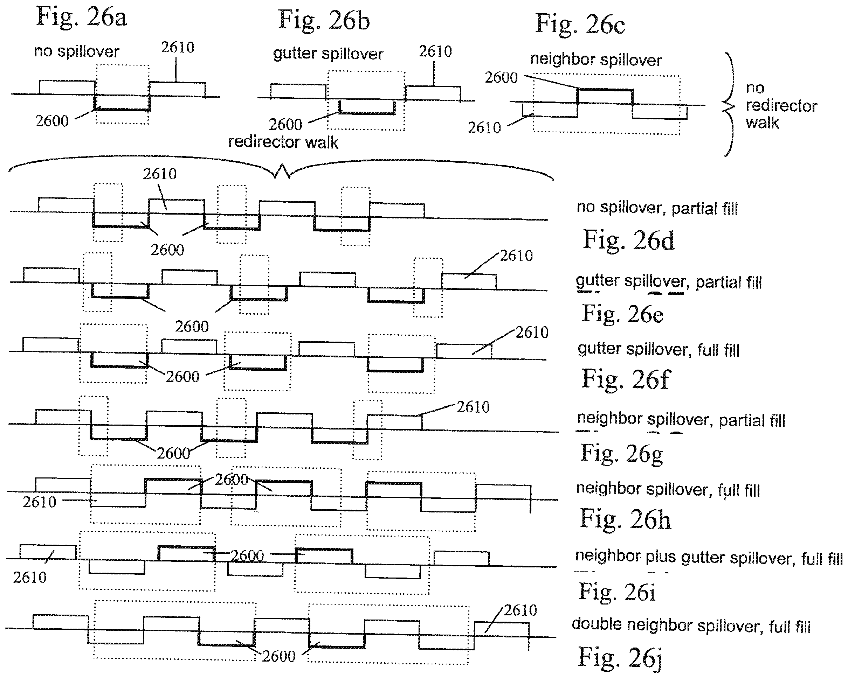

Figs. 26a-26j show different sectional views of exemplary beam footprint arrangements on the proximal optic redirectors according to embodiments of the present invention. Each of the figures depicts a cutaway view of a faceted redirector scheme, with targeted redirectors 2600 (containing solid bold lines) and neighboring redirectors 2610 (containing solid lines, but no bold lines). Beams of light are depicted as rectangles with dotted lines, whose width corresponds to the beams' width. Figs. 26a-26c represent "no redirector walk" configurations, where the beam is intended to hit the targeted redirector in one orientation (that is, without "walking" across the redirector) and use the full width of the redirector. Figs. 26d-26j, by contrast, represent "redirector walk" configurations, where the beam (represented in multiple locations with multiple targeted redirectors, for purposes of illustration) "walks" across the redirector as part of the scanning process. Several beam widths are shown for both the no redirector walk and the redirector walk examples.

Common to each implementation is the notion of "spillover." This is the amount of excess light (beam width), if any, that spills over the edge of the targeted redirector 2600. The examples show two possible locations for this spillover: into a "gutter" portion next to the targeted redirector (that is, a portion of the proximal optic surface that does not redirect light back to the eye), and into a neighboring redirector (or redirectors). Thus, there are three basic spillover possibilities, "no spillover," "gutter spillover," and "neighbor spillover," but gutter and neighbor spillover can take place simultaneously and neighbor spillover may span several redirectors on the same side as the spillover.

Also common to each implementation is the notion of "fill." "Fill" represents how much of the redirector surface area is being filled with the light beam. In a "full fill" implementation, all of the targeted redirector surface area is filled with light (for example, the no redirector walk examples in Figs. 26a-26c. By contrast, in a "partial fill" implementation, only a portion of the targeted redirector surface area is filled with light.

That said, Fig. 26a shows a "no spillover, no redirector walk" configuration, Fig. 26b shows a "gutter spillover, no redirector walk" configuration, and Fig. 26c shows a "neighbor spillover, no redirector walk" configuration (in this case, the spillover is to neighboring redirectors 2610 on both sides of the targeted redirector 2600). As already mentioned, these are all full fill configurations.

Figs. 26d-26j show redirector walk configurations, with walking being depicted as several beams, which from left to right in each figure occupy a different portion of the targeted redirector 2600 and neighboring gutter or redirectors 2610. Fig. 26d shows a "no spillover, partial fill" configuration, with a somewhat narrow beam (narrower than the targeted redirector 2600) walking from one end of the targeted redirector 2600 to the other. Fig. 26e shows a "gutter spillover, partial fill" configuration, with a portion of the narrow beam at the start and end of the walk occupying a gutter portion next to the targeted redirector 2600. Fig. 26f shows a "gutter spillover, full fill" configuration, similar to that of Fig. 26e only with a larger beam that is wide enough to always fully cover the targeted redirector 2600.

Fig. 26g shows a "neighbor spillover, partial fill" configuration, similar to that of Fig. 26e, only with neighboring redirectors 2610 adjacent to the targeted redirector 2600 and no gutter portion. Fig. 26h shows a "neighbor spillover, full fill" configuration, similar to that of Fig. 26g, only with a sufficiently wide beam to always cover the targeted redirector 2600. Fig. 26i shows a "neighbor plus gutter spillover, full fill" configuration, similar to that of Fig. 26h, only with a gutter portion bordering each redirector and a sufficiently wide beam to spillover into both the neighboring gutter and redirector portions. Fig. 26j shows a "double neighbor spillover, full fill" configuration, also similar to that of Fig. 26h, only with a beam so wide as to sometimes cover two neighboring redirectors 2610 on the same side of the targeted redirector 2600.

Continuous Redirector

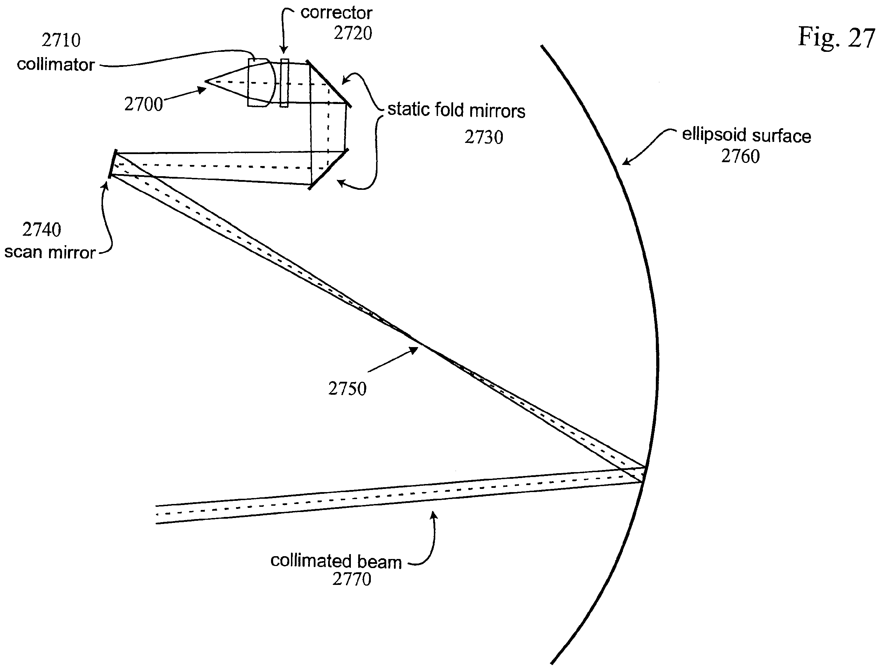

Fig. 27 shows a ray trace of a corrected light beam being directed off a continuous (elliptical) redirector to deliver collimated light, according to an exemplary embodiment of the present invention. While a continuous elliptically-shaped redirector may have the advantage that it can deliver a continuous image to the eye without the transitions that may be apparent in a faceted redirector scheme (which may be especially useful for the foveal redirector design), such a redirector has a disadvantage that collimated light delivered to such a redirector will not reflect off the redirector in a collimated form (unlike a planar redirector, such as a planar faceted redirector). As such, the eye will not be able to focus such light. This may be more apparent with larger beam sizes (for example, 2 mm), as may be used with foveal redirectors. To overcome this limitation, one may insert corrective optical elements into the optical path, as will be described.

In Fig. 27, light source 2700 directs a beam of light towards collimator 2710, which collimates the light beam. Such a beam would be ideal to deliver to the eye, but as mentioned above, such a beam cannot be redirected off an elliptical redirector 2760 and stay collimated. One way to address this is to insert a corrective component 2720 that corrects for the aberrations introduced by reflecting off the elliptical reflector 2760 and changes the focus of the collimated beam, making the beam come to a focus 2750 before the elliptical redirector 2760. The beam may then be directed to a scan (launch) mirror 2740 via one or more static fold (feed) mirrors 2730. The beam leaves the scan mirror at the desired launch angle, comes to a focus 2750 before the elliptical redirector 2760, and reflects off the redirector 2760 as a collimated beam 2770.

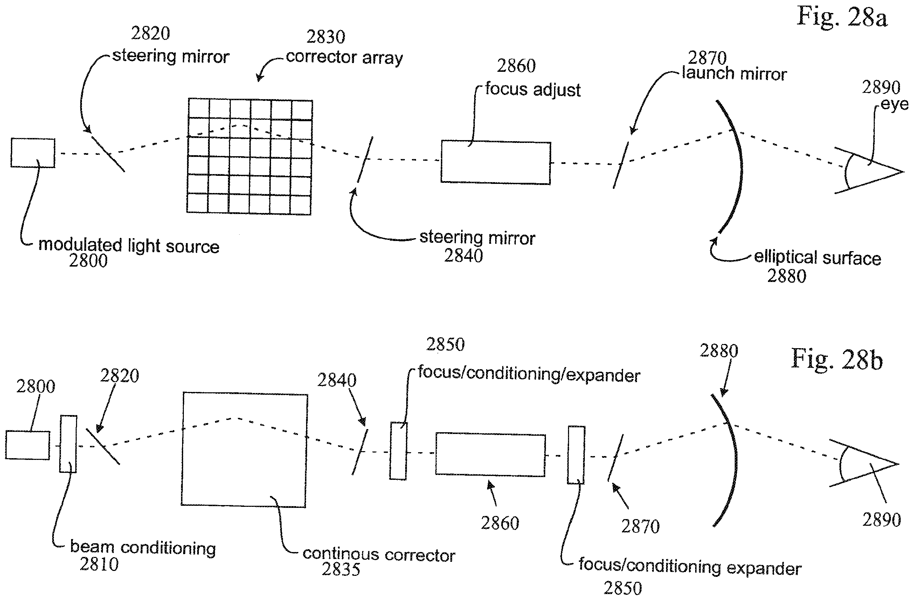

Figs. 28a-28b show schematics of exemplary light paths and different optical elements that can be used to direct light to the eye using a continuous redirector according to exemplary embodiments of the present invention. Each figure starts with modulated light source 2800 that emits a suitable collimated light beam. Such a beam may undergo beam conditioning 2810, as shown in Fig. 28b. As was mentioned above, the beam may need to be corrected for aberrations, which would be imparted after being redirected off the elliptical redirector 2880, before it can be launched to the elliptical redirector 2880. The correction may vary with the redirection location on the elliptical redirector 2880 (for example, a different correction for substantially each possible predetermined pupil location).

Two example methods of performing this variable correction are illustrated in Figs. 28a-28b. In Fig. 28a, a corrective array 2830 (for example, a reflective, diffractive, or refractive corrector array) is used. Each element of the corrective array 2830 may perform a correction for a different predetermined location on the elliptical redirector 2880. As such, first steering mirror 2820 directs the beam to the appropriate corrector on the array 2830, while second steering mirror 2840 realigns the corrected beam back into the optical path. In some examples second steering mirror 2840 may be omitted, with the corrective array 2830 configured to direct beams to launch mirror 2870; however, in this case focus adjust 2860 may be positioned upstream between modulated light source 2800 and corrector array 2830. In some examples, the positioning of the corrective locations may advantageously be arranged to reduce the need for angular movement of launch mirror 2870.

Fig. 28b shows a similar corrective approach, only a continuous corrector 2835 is used in place of the corrective array 2830. The continuous corrector 2835 may offer finer correction than is possible with the corrective array 2830. The beam may then undergo focus adjustment 2860 prior to launching off the launch mirror 2870 (in order to bring it to focus before the elliptical corrector 2880, as was described above). In addition, Fig. 28b shows other optical elements 2850 before and after the focus adjuster 2860 (elements such as focus, conditioning, or an expander, depending on the type of further beam modification desired).

After launching off the launch mirror 2870 to the desired location on the elliptical redirector 2880, the beam comes to a focus before the redirector 2880 and is directed in collimated form to the eye 2890.

The focus adjustment 2860 may need to be fairly precise when directing to different portions of the elliptical redirector 2880. In order to keep up with, for instance, a raster scan of the elliptical redirector 2880, the mapping (as described above) may, for instance, only change the focus 2860 once per scan line, emitting pulses only for pixels within the (perhaps narrow) portion of the elliptical redirector that may use the same amount of focus correction. An example of a suitable type of focus adjustment 2860 is disclosed in the article entitled "Dynamic focus control in high-speed optical coherence tomography based on a microelectromechanical mirror," by Bing Qi, et al, Optics Communications 232 (2004) pp. 123-128.

Projection Schemes

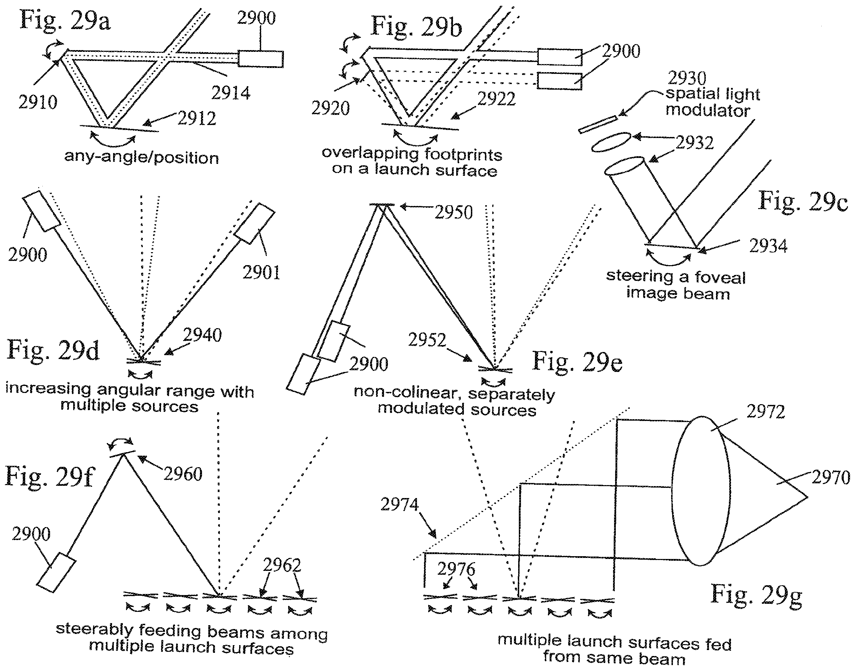

Figs. 29a-29g show exemplary projection schemes according to embodiments of the present invention. In general, light emanates from light sources 2900, hits various steerable redirecting surfaces (for example, mirrors), and is directed to the proximal optic.

Fig. 29a depicts an example "any launch angle, from any launch position" projection system with a light source 2900, a steerable feed mirror 2910, and a steerable launch mirror 2912. The mirrors 2910 and 2912 may be capable of steering at a high rate of speed (scan speed) to keep up with the scan pattern, and may be coordinated so that the desired redirection of light beam 2914 represents simultaneous control of both mirrors to effect the desired redirection (perhaps on a pixel-by-pixel basis). The feed mirror may be approximately "beam width" (that is, wide enough to direct intended beam size, to help save on size and weight) while the launch mirror 2912 may need to be large enough to handle both the width of the beam and the different launch locations it may take on from the feed mirror 2910. The light beam 2914 is depicted in its full width (with a dotted line representing the central ray). The beam 2914 leaves the light source 2900, is directed off the feed mirror 2910 to the launch mirror 2912 (at a desired launch location), and is launched off the launch mirror (at a desired angle) to the proximal optic (not shown).

Fig. 29b depicts an example "overlapping footprints on a launch surface" projector system featuring multiple light sources 2900, respective movable feed mirrors 2920, and a suitably large steerable launch mirror 2922. The corresponding footprints made by the multiple light beams on the launch mirror 2922 may overlap, to produce a fine (continuous) granularity of launch location on the launch mirror 2922 (that is, finer than a beam width). Because of this, the feed mirrors 2920 do not necessarily have to move quickly, nor do they necessarily coordinate with the launch mirror 2922 on anything more granular than a frame or pupil location basis.

Fig. 29c depicts an example "steering a foveal image beam" approach. Here, a foveal image is formed using spatial light modulator 2930. The image is directed through lens relay 2932, to steerable launch mirror 2934, and then to the proximal optic (not shown) in order to relay the image onto the retina. The whole beam is sent to the pupil, so the steerable launch mirror 2934 may move at pupil speed (that is, the mirror 2934 tracks the pupil).

Fig. 29d depicts an example "increasing angular range with multiple sources" approach. In this example, there are multiple light beam sources 2900 and 2901, sending light to steerable launch mirror 2940, and then to the proximal optic (not shown). The launch mirror 2940 may only be beam width and provide a limited range of steering (for example, to provide for faster steering or a smaller size than with another design). However, the light beam sources may be located so as to cover a different angular range when using the launch mirror 2940. For example, light source 2900 covers the dashed (two-dimensional depiction) portion of angle space while light beam 2901 covers the dotted portion of angle space. The portions may overlap slightly, as shown in Fig. 29d. This approach allows greater coverage than may be possible with a single light source design using launch mirror 2940.

In another exemplary embodiment, the range of motion of a reflector in a flexure structure includes a "rest" position that it returns to when energy is no longer introduced into the mechanical system. The ranges of angles that are used by the optical system would include ranges that exclude the rest position. Light from any of the sources feeding the device would be sent to a so-called "light trap" or other safe target when the mirror is in the rest position. By using multiple feed angles, such as have been described with reference to Figure 29d, the effective range of motion of the mirror can be increased. In particular, one feed may be used for a range on one side of the rest position and another feed for a range on an opposite side of the rest position. Advantages of such arrangements may include safety.

Fig. 29e depicts an example "non-colinear, separately modulated sources" approach. In this example, multiple beam sources 2900 may direct respective beams, slightly offset from each other, towards fixed feed mirror 2950, then to steerable launch mirror 2952, and then to the proximal optic (not shown). Since the light beams may be slightly offset from each other, this approach provides the ability to use multiple, for example, L concurrent light sources to increase the effective pixel scan rate than would be possible with a single light source. Note that the offset can be several scan lines apart between "adjacent" light source beams. That is, each of the L light sources 2900 may cover, for example, S contiguous scan line portions of the proximal optic. The L light sources 2900 can then be assigned to disjoint sets of S contiguous scan lines, which each light source can then scan in parallel with the other light sources. This contrasts with the "push broom" approach, where the L separate light sources scan L contiguous scan lines in parallel, then move onto another set of L contiguous scan lines, and so on.

Fig. 29f depicts an example "steerably feeding beams among multiple launch surfaces" approach. Here, light source 2900 directs a light beam to steerable feed mirror 2960, which directs the beam to one of the steerable launch mirrors 2962 from an array of such launch mirrors, which in turn directs the beam to the proximal optic (not shown). The individual launch mirrors 2962 may be beam width, which may result in smaller faster mirrors compared to a single large mirror, though the beam width size of the launch mirrors provides for a finite set of discrete launch surfaces versus a large continuous surface with finer granularity of launch position (as in Fig. 29b).

Fig. 29g depicts an example "multiple launch surfaces fed from same beam approach." In this example, there is a light source (not shown) directing diverging beam 2970 towards collimating lens 2972, which outputs a collimated beam towards beam splitter 2974 (for example, a half-silvered mirror), which directs a portion of the beam toward the array of steerable launch mirrors 2976, and then to the proximal optic (not shown), this time passing through the beam splitter 2974. Here, it is possible to have multiple launch mirrors 2976 direct their portion of the beam simultaneously.

Faceted Redirector Patterns

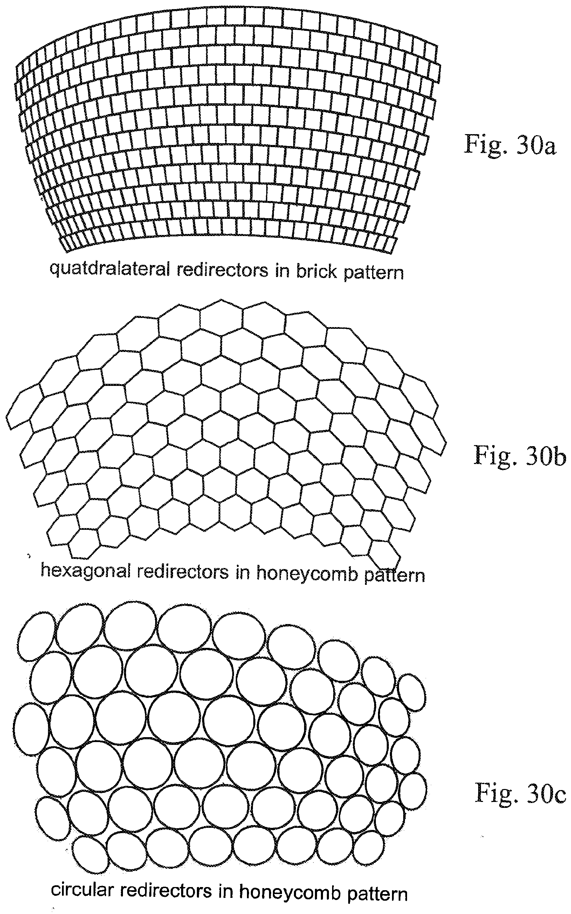

Figs. 30a-30c shows example faceted redirector patterns on the proximal optic according to exemplary embodiments of the present invention. Fig. 30a shows an example quadralateral redirector ("brick") pattern. Fig. 30b shows an example hexagonal ("honeycomb") pattern. Fig. 30c shows an example circular redirector pattern, also arranged in a honeycomb-like pattern. Other shapes and patterns are possible.

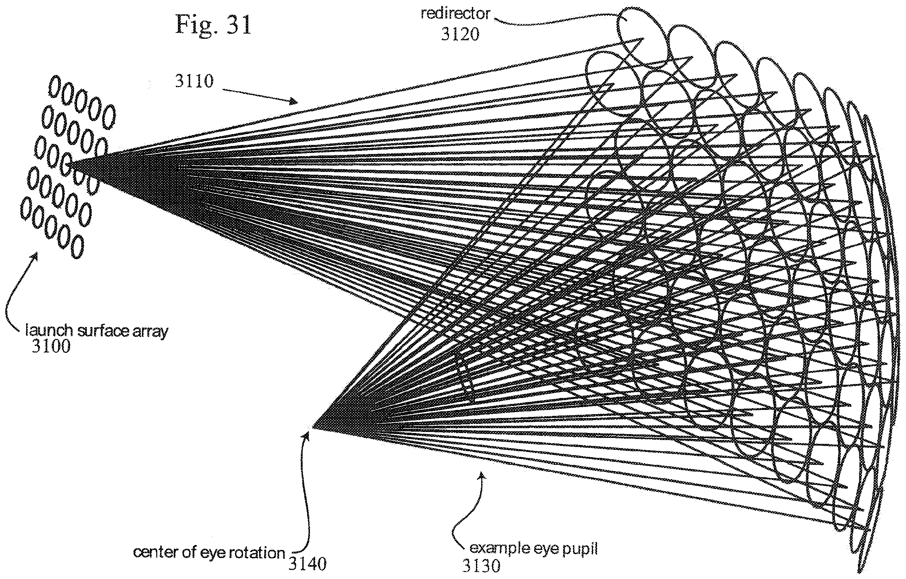

Fig. 31 depicts rays of light being directed off of redirectors of the proximal optic in the direction of the center of the eye according to an exemplary embodiment of the present invention. In Fig. 31, light is directed through a projection system (not shown) to launch surface array 3100 of launch mirrors, where rays of light 3110 are directed to a proximal optic with circular foveal redirectors 3120 arranged in a honeycomb-like pattern similar to that of Fig. 30c. Light from the foveal redirectors 3120 is directed to the center of eye rotation 3140, with those rays going through example eye pupil 3130 being directed to the foveal portion of the retina and those rays not going through the pupil 3130 being blocked by the iris or sclera of the eye.

Example Launch Mirror and Redirector Structures

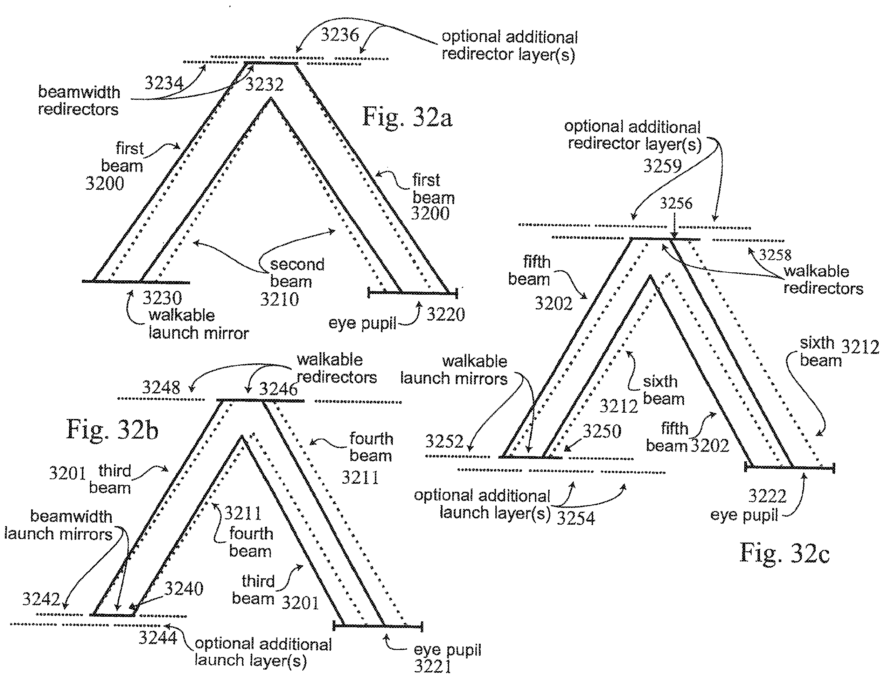

Figs. 32a-32g depict example launch mirror and redirector structures according to exemplary embodiments of the present invention.

Generally, a beam is launched from a launch mirror towards a redirector, which then directs the beam substantially into the pupil of the eye. The angles of substantially collimated beams entering the eye determine pixels on the retina, as will be understood, and a substantially continuous area of such pixels on the retina is believed desirable to create the perception of continuous images. The beam size, shape, and cross-sectional energy density delivered to the eye is preferably at least adequate for the desired amount of resolution on the retina. As the resolution perceived by the eye is known to diminish substantially further from the central portion of the retina, the beam size and other characteristics may be varied advantageously depending on the position on the retina, such as with larger redirectors for more central portions.

In some examples "redirectors" as understood here are mirror or diffractive structures including for example volume holograms; in other examples, where the launch locations are disposed along a path between the launch mirror and the eye, redirectors are transmissive diffractives such as gratings or volume holograms; and in still other examples, where light is launched through a waveguide, redirectors are diffractives such as gratings or volume holograms that allow the light to be coupled out of the total internal reflection regime of the waveguide and directed towards the eye.

While the present description refers for clarity and concreteness to one or more launch mirrors, it will be understood that other light steering technologies known could also be used in place of or to augment launch mirrors. Accordingly, the term "launch mirror" or "launch reflector" will be used interchangeably here in the context of launching light to refer to whatever beam steering technology or system. Moreover, one or more sources of light that supply light to a particular launch mirror potentially also influence the angle of the resulting launched beam. In some examples this supply of light is via "feed mirrors," used here to refer to any upstream beam directing system, whether fixed or operable, supplying light to at least one launch mirror using technology currently known. In some known technologies, a single tip-tilt mirror configuration is achieved by a pair of mirrors each with a single degree of freedom, sometimes in combination with lenses or fold mirrors. Such configurations are anticipated as being used in some launch mirror and/or feed mirror embodiments.

It will also be understood that in some embodiments the feed mirror supplies a beam that impinges on a launch mirror at plural locations. For example, a launch mirror may have a spatial extent large enough to accommodate various different beam what are referred to as "footprints" on the launch mirror. In other examples, light may be spilled off of a launch mirror by a fed beam positioned and angled so as only a portion of it impinges on the launch mirror and another portion spills off of the launchmirror, leading to advantageous increase in the angular range at the expense of some "clipping" and diminution in energy (suitable techniques for keeping possible resulting spilled light from becoming undesirable stray light that enters the eye, however, are of course also antici pated).

Light is originated from what will be called here a "source," examples of which are laser diodes, "VCELS," or other types of light emitting devices currently known. Typically, light from a source is further conditioned before being used in an image generation system. Conditioning includes known techniques for beam shaping, removing of anamorphism, collimation, changing curvature, influencing polarization, beam expansion or compression, and so forth. Modulation in some examples is by means of modulating the source; in other examples, modulation is provided after the source.

In some embodiments a single substantially collimated beam is used to create a single pixel at a single instant in time. In other examples, bundles of substantially collimated light comprise beams of rays of more than one angle and accordingly correspond to more than one pixel. The pixels in some example such muli-pixel beams are arranged in a line or other pattern to allow them to be "swept" across a range of angles in what is sometimes referred to as a "push broom" technique, producing a preferably covering pattern of pixels through modulation of energy at each of plural instants during each sweep, with one or more sweeps per interval of time occupying a "visual frame." In other examples, a substantially more two-dimensional pattern of beams is modulated once for each of plural ranges of positions of its footprint. Creating such bundles of collimated beams is known in the optics art and may be accomplished in any way known.

Bulk optical elements are optionally interposed between launch mirror(s) and redirectors. Examples of such elements include fold mirrors, "relay" optics used to enlarge or reduce beam width after launch, windows and/or filters. In other examples interposed elements change the curvature of beam wavefronts and/or clip beams. In further examples, whether or not bulk optics are interposed, launch mirrors may include curvature as may redirectors. Beam shape changes due to obliquity and anamorphism are also optionally taken into account in the design of the optical elements as will be understood.

The launch location for a particular beam preferably comprises a single steerable mirror surface so as to provide a single wavefront directed into the eye capable of resolving a corresponding spot on the retina. In some examples, launch mirrors comprise substantially a single beam width; the launch angle is potentially varied over a range of angles by beam steering, but the launch location remains substantially fixed (although it may exhibit some deviations from ideal behavior, such as a pivot point not exactly on the effective mirror surface, as may be convenient). In some further examples, a launch mirror comprises substantially more than a beam width of surface area; the beam may be launched from different locations on the launch mirror as well as at varying angles.

Plural launch mirrors of beam width may each provide a portion of the angular range for a redirector. Plural launch mirrors of larger than beam width are also anticipated, allowing both variation of launch mirror and "walking," used here to mean varying the point at which the beam impinges on a mirror. The related terminology "beam walk" or simply "walk," is also used here, and "walkable" is used to indicate capable of being walked. In related examples, more than one "layer" of launch mirrors is provided so that the mirrors can in effect be overlaid in space (as seen for example from the redirectors), such as for instance by including one or more beam splitters. In still further examples, enough layers of mirrors larger than beam width are arranged so that in effect there is a beam width mirror area for any effective launch location; the layers of mirrors overlap to the extent that each potential beam launch location is served by at least a beam-footprint-sized portion of a at least one mirror. Such full-coverage overlapping arrangements can for instance simulate the effect of a single larger steerable mirror but with the mass of each individual actual mirror being less than that of the larger mirror simulated, thereby reducing physical mass of individual mirrors, allowing for more rapid mirror movements.

Redirectors each preferably comprise structure that redirects substantially at least a portion of a beam wavefront so that the beam enters the eye pupil. In some examples, redirectors are substantially what will here be called "beam width." In such beam width examples, the angular variation of beams directed at the eye pupil results from the range of angles of the beams impinging on the individual redirectors. In other examples, redirectors substantially have an area greater than the footprint of the impinging beams and allow for what here again is called "beam walk" or simply "walk" on the redirector. In such cases, the angle of the beam passing through the pupil of the eye is varied at least in part as the location of the beam impinging on the redirector is varied as is the angle at which the beams are launched towards the redirector.

In some examples, whether redirectors are beam width or larger and capable of being walked (again here be called "walkable"), the beam directed at a redirector has a larger footprint than the redirector and at least part of the varying of the angle of incidence on the redirector is by varying the launch angle of this larger beam. The portions of the beam that "spill" over beyond the extent of a redirector are preferably kept from generating "stray light" of a type that would enter the eye pupil. One example way to keep such stray light out of the pupil is arrangements in which adjacent redirectors have an angle that differs enough so the light misses the eye pupil though it may impinge on the iris or sclera of the eye. Other examples comprise wavelength or polarization selectivity of adjacent redirectors. Still other examples comprise areas between redirectors that prevent such stray light from entering the eye pupil.

Partial "clipping" of the beam by the edge of the eye pupil (what may be referred to as the "iris") is also anticipated and compensated for by increasing the effective amount of optical energy so as to provide substantially the desired perceived brightness. More generally, with all the techniques described if portions of a beam are clipped or otherwise attenuated differently on the way to the eye, then varying the amount of optical energy so as to produce pixels of perceived uniform luminance is anticipated and preferred. Such compensation in some examples is pre-determined, such as based on calculations or measurements and in other examples it is measured by sensors and determined or adjusted at least partly dynamically.

In further examples, more than one "layer" of redirectors is provided so that the redirectors are in effect overlaid in space (as seen for example from the launch locations and/or the eye), such as for instance by the device of "multiplexing" in the construction of volume holograms or selectively/partially reflective coatings. Advantages of this can include for instance reducing the angular extent of the launch system as seen from the redirectors. In still yet further examples, enough layers are arranged such that in effect there is a redirector for substantially any location on the proximal optic (as seen for example from the launch locations and/or the eye). The layers of redirectors overlap to the extent that each location is served by a beam-footprint-sized portion of at least one redirector. Such complete overlap arrangements can for instance reduce the area of the eye pupil used by providing more angle and position options for the resulting beams.

A single example system may use varying combinations of the techniques already described. For instance, on a single proximal optic, some redirectors for example are beam width and receive beams of varying angle (with or without redirector clipping), while other redirectors are walked from single fixed launch locations, while still other redirectors are walked from varying locations. Each redirector is preferably served by one or more launch locations; however, some launch locations may serve only a portion of the redirectors. For instance, more than one projection location, comprised of one or more launch structures, in one example serve a single proximal optic, but without redirectors being shared or used by more than one projection location. It will also be appreciated that the beams fed so as to impinge on a launch mirror may themselves be provided from more than one or varying locations, resulting in a greater angular range for that launch mirror.

In some examples the redirectors are used to provide the central portion of the field of view are separate from those used to provide more peripheral vision. This takes advantage, as mentioned, of the known significantly different levels of spatial resolution of the central and more peripheral portions of human vision. For differing rotations of the eye, for example, different but generally overlapping portions of the same collection of redirectors are preferably used for the appropriate portion of the visual field. However, separate collections of redirectors are in some examples dedicated to each range of rotational positions of the eye preferably for peripheral portions of the image. An example peripheral system comprises launch mirrors and redirectors both of which are substantially beam width and each combination of launch mirror and redirector accordingly corresponds to a particular pixel. In some preferred examples, accordingly, central portions are served by larger redirectors with overlapping collections per point of regard and the peripheral portions served by separate collections of smaller redirectors per range of points of regard.

Detailed descriptions sufficient for those of ordinary skill in the art to make and use the inventive concepts will now be provided. Turning to Figs. 32a-32g, launch mirror and redirector structures are shown in section according to the teachings of the present invention. The figures comprise two-dimensional sections for clarity, but is intended to relate more generally to a three-dimensional version, such as by repeating the shown structure for multiple parallel such sections and forming two-dimensional arrays from the rows shown, as will be understood. The arrangements shown are where the launch location and eye are on the same side of the redirector structure for clarity, but would be readily understood to apply equally to cases where the launch locations are on the opposite side of the redirectors from the eye and/or where the redirectors are associated with a waveguide through which light directed from the launch structures.

The figures also for clarity each consider a single type of launch and redirector structure and without combining types of such structures and without distinguishing central from peripheral functions and without multiple launch location areas, such variations as would readily be understood. The "marginal" rays of some example beams are shown for clarity; the central, or "chief or "principal" rays are omitted for clarity. One example beam 3200-3206 is shown using solid lines and another example beam 3210-3216 is shown in dashed lines. Launch mirrors are for clarity shown in horizontal position; however, it will be understood that beams may impinge on them at varying feed angles and that the launch mirrors may vary the angle of the impinging beam.

Referring specifically now to Fig. 32a, illustrated is the case where redirectors are substantially beam width but launch mirror 3230 is substantially larger than beam width, i.e. "walkable." One redirector 3232 is shown operating in the example, but a series of such redirectors 3234 is shown in dotted lines adjacent to it. One optional layer of redirectors 3236 is shown dotted for clarity to indicate that there may be one or more such additional layers, such as for instance using multiplexed volume holograms as already mentioned. The first example beam 3200 is indicated by its marginal rays as launched from a location on the walkable and what may be seen to be oversized launch mirror 3230 that is to the left of the location from which the second beam 3210 shown dashed is launched.

The two beams 3200 and 3210 are shown impinging on the same redirector 3232 at substantially the same location. The difference in angle, as mentioned, is not shown by tilting the launch mirror 3230, although it may result from such tilt and/or the feed angle. The resulting angles towards the eye are shown as diverging by the same angle as the difference in launch angles in the example obeying the law of reflection. In an exemplary embodiment the launch position is "walked" across the launch mirror 3230, with the beam remaining aimed at the center of the redirector 3232. After reflection from the redirector 3232, the beam appears to sweep an angle from the stationary point on the redirector 3232. In such systems, as will be seen, walking the launch beam on the launch mirror 3230 provides variation in angle resulting in variation in angles entering the pupil 3220 of the eye (shown throughout Figs. 32a-32g as a horizontal line with small vertical lines indicating example limits imposed by the iris), with corresponding differing pixels locations as mentioned.

Fig. 32b illustrates the case where launch mirrors 3240, 3242, and 3244 are substantially beam width but redirectors 3246 and 3248 are substantially larger than beam width, i.e. walkable. One redirector 3246 is shown operating in the example, but a series of such redirectors 3248 is shown in dotted lines adjacent to it. Similarly, one beam-width launch mirror 3240 is shown operating, but a series of such mirrors 3242 is shown in the same layer in dotted lines. One optional lower layer of launch mirrors 3244 is shown dotted for clarity to indicate that there may be one or more such planes in effect substantially overlapped in space as already mentioned. Two example beams are shown, each in operation launched from the same operational launch mirror 3240 and they are shown impinging on the same operational redirector 3246 at different locations. As mentioned in the above example and elsewhere, variation in launch angle is not reflected in launch mirror 3240 orientation. In such systems walking the beam on the redirector 3246 by varying the angle of the launch mirror 3240 results in variation in angle entering the pupil of the eye. Since the beams 3201 and 3211 leave the redirector 3246 at different locations and are diverging, they enter the pupil 3221 of the eye at locations differing as a result of angular divergence and difference in locations on the redirector 3246.

Fig. 32c illustrates the case where both the launch mirrors 3250, 3252, and 3254 and the redirectors 3256, 3258, and 3259 are walkable. One redirector 3256 is shown operating in the example, but a series of such redirectors 3258 is shown in dotted lines adjacent to it; similarly, one launch mirror 3250 is shown operating, but a series of such mirrors 3252 is shown in the same layer in dotted lines. Optional multiple layers of redirectors 3259 and launch mirrors 3254 are shown dotted, as have already been described with reference, respectively, to Figs. 32a-32b. In operation, the fifth and sixth example beams 3202 and 3212 are shown launched from substantially the same location on the walkable launch mirror 3250 at different angles and thus impinging on the example operational redirector 3256 at differing locations and entering the eye pupil 3222 at different angles from different locations, much as already described with reference to Fig. 32b.

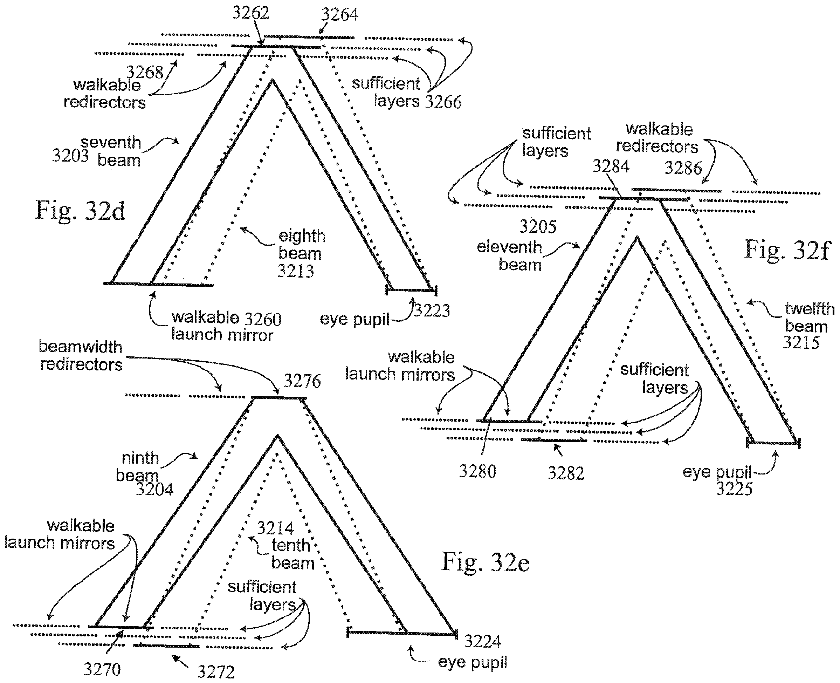

Fig. 32d shows a configuration with an arrangement of redirector layers 3266 that allows beams with substantially any launch position and angle within certain ranges to be redirected by a single redirector. In some non-limiting examples the selection of redirector comprises: angular selectivity of volume hologram multiplexed or layered structure; spectral selectivity of such volume hologram structures; or "spatial multiplexing" where more than one reflective structure is provided, but light from one is angled to make it into the pupil of the eye and the light from the others does not. Such redirector selection techniques are also applicable to the multiple layers already described with reference to Figs. 32a-32c.

A walkable launch mirror 3260 is shown in the example. In operation, the seventh beam 3203 will be seen to be redirected by a redirector 3262 in the middle of the three example layers 3266 shown, whereas the eighth beam 3213 launched to the right of the seventh beam 3203 can be seen to be redirected by the operational redirector 3264 on the top layer. The redirectors 3268 not used in the example operation described are shown in dotted lines, as with Figs. 32a-32c. The example shows the two beams 3203 and 3213 entering the pupil 3223 at substantially the same point;

this is believed an advantage of such a configuration, as mentioned more generally earlier, providing more energy into a smaller eye pupil or more selectivity of which portion of the eye pupil is used in the case that certain portions are known to have better optical characteristics.

Fig. 32e shows a configuration with an arrangement of launch mirror layers that allows beams to be launched with substantially any launch position and angle, within range. In the example the redirectors are shown as beam width and of a single layer, although in some examples they may not be either as already described with reference to Figs. 32b-32c. It is believed, however, that if there are locations as seen from the center of the eye pupil where no beam-width portion of a redirector is located, then a beam cannot be provided that enters the pupil without clipping for that angle.

In operation two launch mirrors 3270 and 3272 shown as solid are used in the example, one on the upper layer that reflects the ninth beam 3204 towards the center of the redirector 3276 and one on the lower layer that reflects the tenth beam 3214 toward the center of the same redirector 3276 in the example. The beams 3204 and 3214 are then indicated as impinging on the operational redirector 3276 shown solid and being directed towards the eye pupil 3224. It is believed that this configuration offers a large "effective" launch mirror; that is, beams can be launched from any location over an area covered by the layers of launch mirrors. Since the mirrors 3270 and 3272 are substantially smaller than the single large mirror such as described already with reference to Fig. 32a, they are believed as already mentioned more generally to be able to be of lower mass and operate more rapidly. Note the larger pupil region 3224 due to the beamwidth redirector 3276.

Fig. 32f shows a configuration with an arrangement of launch mirror layers like that already described with reference to Fig. 32e and an arrangement of redirectors as already described with reference to Fig. 32d. In operation, the eleventh beam 3205 is shown being launched by a mirror 3280 on the top layer and sent to the eye pupil 3225 by a redirector 3284 in the middle layer. The twelfth beam 3215 similarly is shown launched from a launch mirror 3282 in the bottom layer and redirected from a redirector 3286 in the top layer. Both beams 3205 and 3215 enter the pupil 3225 of the eye at substantially the same point. It is believed that the result is relatively faster steering than the launch mirrors of Fig. 32e combined with the narrow pupil of Fig. 32d.

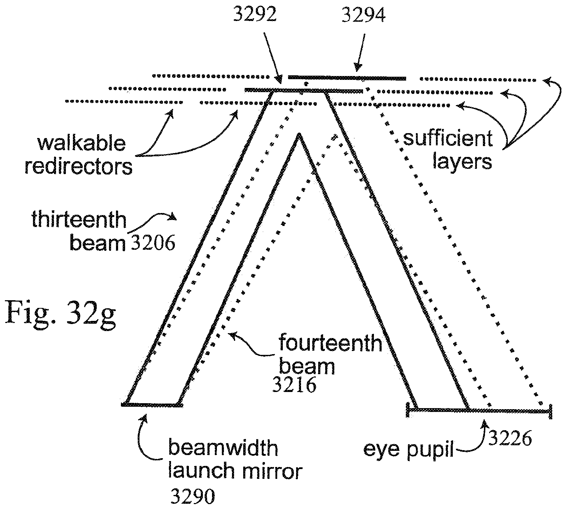

Fig. 32g shows a configuration with a beamwidth launch mirror 3290 and an arrangement of redirectors as already described with reference to Figs. 32d and 32f. In operation, the thirteenth beam 3206 is shown being launched by mirror 3290 and sent to the eye pupil 3226 by a redirector 3292 in the middle layer. The fourteenth beam 3216 similarly is shown launched from launch mirror 3290 and redirected from a redirector 3294 in the top layer. The beams 3206 and 3216 enter the pupil 3225 at different points, leading to a large pupil region like that of Fig. 32e.

Example Block of Redirectors and Launch Galvo Array

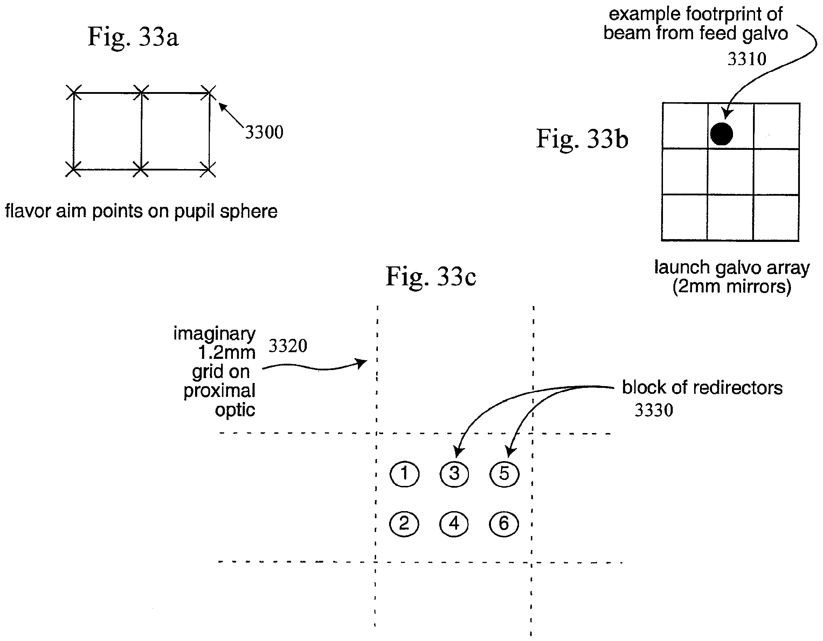

Referring now to Figs. 33a-33c, an exemplary redirector scheme employing a block of redirectors and a launch galvo array is shown. In this example, as shown in Fig. 33a, there are 6 flavor aim points 3300 on the pupil sphere. The flavor aim points 3300 work similarly to predetermined positions on the pupil sphere described in other embodiments, except there may be fewer of them and they may be further apart. For instance, in this example the flavor aim points 3300 are separated by greater than the maximum pupil diameter.

Continuing with this example in Fig. 33c, the flavor aim points 3300 are used to organize peripheral redirectors 3330 on the proximal optic. The peripheral redirectors 3330 on the proximal optic are each shaped to reflect a 200 micron beam. There is a grid 3320 of approximately 1.2mm on the proximal optic and within each cell of the grid there are six peripheral redirectors 3330, called a "block" of redirectors. The six redirectors of a block are each of a different "flavor." Those redirectors of the same flavor direct light from the center of the projector to the same point on the sphere determined by the possible rotational positions of the eye pupil. There are thus six such "flavor aim points" and they are arranged in a rectilinear pattern of three rows and two columns. For a larger field of view a larger number of flavors and corresponding flavor aim points would be used. The position of the redirectors of any one flavor are such that a 1 mm beam projected from the projector will only impinge on at most one redirector of that flavor at a time. And because the flavor aim points 3300 are spaced apart by more than the largest pupil diameter, light redirected by flavors other than the one being used to direct light into the pupil (whether from the same block or an adjacent block) does not enter the pupil but impinges on the iris and sclera of the eye.

Continuing this example with Fig. 33b, the projector consists of nine steerable "launch" galvo mirrors, arranged in a tightly-spaced three by three rectangular pattern. The launch galvo mirrors are 2 mm in diameter. Feeding these launch galvos are one or more "feed" mirrors, each sized so as to feed a 1 mm beam diameter, as shown by example 1 mm beam footprint 3310.

In operation, the position and diameter of the eye pupil would be known. This would then determine a particular closest flavor aim point. In the special case where the flavor aim point is located in the exact center of the eye pupil, only that launch mirror would be used. If the flavor aim point is more generally located within the eye pupil circle, then the central launch mirror will be used for at least many of the beams delivered to the eye. If, however, the flavor aim point is located outside of the pupil circle, then the launch galvo that will bring it closest into the center of the eye pupil will be used for many of the beams.

The launch galvos scan the incident beam across the proximal optic. The position of the feed beam on the launch galvo surface may be varied per scan line but is not varied within a scan line. In order to deliver the desired set of pixels, the number of scans that will include the redirector of the corresponding flavor, again in the special case where the aim point is in the center of the pupil, will be the number of pixels subtended per block. Similarly, the number of pixels "flashed" for a particular scan of such a redirector will be the same number of pixels subtended per block.

Example Origins of Light

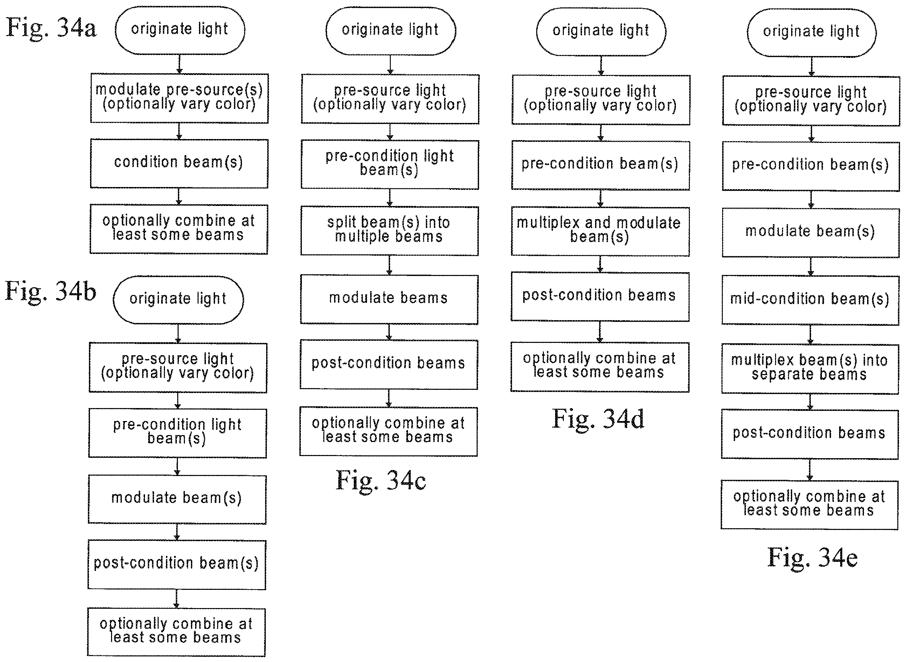

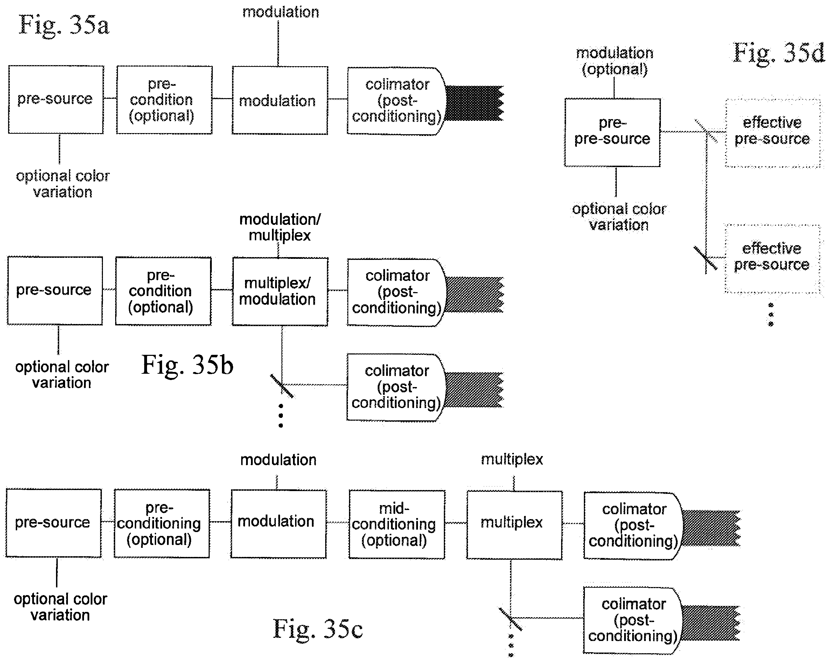

Turning now to Figure 34a-d and 35a-d, four exemplary light sourcing configurations are shown. Referring to Figure 34a, light is modulate and optionally varied in color as it is sourced before being conditioned. The optional combining of beams step in Figure 34a is shown in figure 35d, where a series of beamsplitters serves as an example of a way to combine multiple sources into a collinear beam.

In some examples a source may be split and then each part separately modulated as shown in Figure 34c; multiple instances of figure 35a would provide the structure, one for each split.

Referring to Figure 34b, the modulation step is separate from the sourcing and optionally preceded by pre-conditioning and post conditioning. Corresponding structure is disclosed in Figure 35a. The structure of Figure 35b includes that of 35a, but the there is a multiplexing stage that includes introducing modulation in the multiplexed outputs. Figure 34d shows corresponding steps with the injection of the multiplex and modulate step.

Figure 35c shows the structure and figure 34e shows the process, substantially similar to that of the other examples in these figures, but with the modulation preceding the multiplexing. As elsewhere here, optional conditioning may be inserted between other elements or steps.

Providing, from a substantially thin waveguide surface to a nearby human eye or eyes light that appears to come from a further distance than that surface and that has substantially high resolution and/or other desirable display characteristics would be advantageous. In some examples the device is self-standing and in others it is hand-held, like current cellular phones or portable gaming consoles. In still other examples, it is in the form of a pair of eyeglasses that optionally also transmissively combine the view of the wearer's environment with rendered images. In still other examples, the device provides a conventional display panel as part of its surface visible at least some of the time. Novel combinations of all the abovementioned formats are also anticipated, such as a single unit that can seamlessly be viewed as a display at arms length, viewed as a window into a virtual world when held closer than the eye can comfortably focus, and when brought even closer can be used as a lorgnette or quizzing glass and even attached to the viewer with or without cooperation of other head-worn structures.

A brief non-limiting summary of some exemplary aspects, as will be appreciated, is now provided. In some exemplary aspects, the system transmits beams of visible light through total internal reflection in a substantially flat waveguide and the beams are selectively released from the waveguide and aimed substantially at an eye. In other exemplary aspects, the beams are steered to exit at distinct portions of the waveguide and each beam has angular content comprising multiple pixels. In still other exemplary aspects, the waveguide may be disposed between a conventional pixel array display and the viewer and the array may optionally be used to supply the peripheral pixels of a foveated display. In yet other exemplary aspects, the beams are steerable towards an eye by means of variable frequency and dispersive optics or by means of structures including variable prism. In still yet other exemplary aspects, focus is varied after the beams leave the waveguide so as to conform to focus desired at the eye. In yet still further exemplary aspects, sensing of the eye position, spatial position, vergence and/or focus of the eye(s) provides improved and/or stabilized directing of the beams to the eye(s) and/or focus adjustment.

The following sections address various specific aspects of the systems and method disclosed above. Each section may be read relatively independently of the others, and may even be read out of sequence, if desired.

PROXIMAL-SCREEN IMAGE CONSTRUCTION - OVERVIEW

The construction of visual images via reflection or diffraction of light from what will herein be called a "proximal screen" or simply a "screen" substantially placed in close proximity to one or both of a person's eyes is of significant commercial interest. Such images may be employed in viewing what will herein be called "constructed" images, whether static or dynamic, such as those comprising movies, video games, output from cameras, so-called "heads up display" application content, text of all types, notifications, time of day, and so on. If a proximal screen is at least partially transparent, the constructed image may be viewed in "superposition" with, or also herein "combined" with, what will be referred to herein as the "actual scene" or "scene" image. Such an actual scene is what is typically transmitted through the so-called "lenses" of eyeglasses and originates from the viewer's physical surroundings. A proximal screen may, in just one example, be realized in the form of one or both the lenses of a pair of eyeglasses and result in perception of the combination of the constructed and scene images. Although a proximal screen may in such embodiments have size substantially the same as a traditional eyeglass lens, its morphology and manufacture may differ.

Accordingly, in one exemplary aspect, it is an object of the present section to construct images that conveniently allow users to read a limited amount of text, such as is used today in so-called text messaging and instant messaging. Other examples of text include time, date, temperature, appointments, incoming message alerts, emails, posts, web content, articles, poems, and books. In some settings such text may be desired to be read without conspicuous action by the user and/or without substantially interfering with the view related to other activities. Activation and/or control of a text view may even be, for instance, in some examples, by the direction of regard by the eyes.

In another exemplary aspect, it is an object of the present invention to construct video images that conform to available video content. In many examples video content is available in formats such as NTSC-DVD 720×480 (PAR1), PAL-DVD-16:9e 720x576 (PAR1), HD-720i/p 1,280×720, HD-1080i/p 1920x1080, DCI-2k 2048x1080, DCI-4k 4096x2160, and UHDV 7,680x4,320. In some cases these formats include separate left and right eye views. So-called "field of view," often expressed as an angle subtended by the "virtual" screen, whether from side-to-side or along the diagonal, is sometimes regarded as a figure of merit in such viewing systems. Being able to render such content in a way that is appreciated by the viewer, such as where the effective screen position and size can be adjusted, is also believed desirable. Moreover, a wide color gamut and reduced artifact perception are also believed desirable.

In yet another exemplary aspect, it is an object of the present invention to accept and provide constructed images responsive to real-time image streams, including video cameras and other sensor systems. In some examples, such sensors are arranged to correspond to the user's field of view and even point of regard. Various wavelengths of electromagnetic energy are anticipated, such as ultraviolet, visible, infrared, and so forth.

In some examples the images are arranged so as to be combined with the actual scene and augment it for enhanced or altered viewing by the viewer.

In still another exemplary aspect, it is an object of the present invention to construct images aimed at providing rich interactive environments generally, for instance such as engaging electronic gaming. Image content is generated by the gaming system, whether local and/or remote. However, it may in some examples be responsive to the actual scene observed by the player, such as captured by cameras or sensors.

In a further exemplary aspect, it is an object of the present invention to construct images that are perceived to be substantially similar to actual scenes viewed by the user. In some example embodiments, an observer using the present invention may experience constructed images that are substantially indistinguishable from an actual scene viewed through traditional eyeglasses.

In yet a further exemplary aspect, the user's point of regard and/or the amount of focus of the user eye and/or the dilation of the pupil may be input to the system are measured from time to time or continuously. They are used, for example, in formation of images, construction of images, rendering of images, in the present inventive systems and more generally are optionally stored and/or supplied to automated systems.

In still yet a further aspect, in order to enhance the perception of the constructed image, in some embodiments, it may be corrected substantially in accordance with characteristics of the viewer's eyes.

PROXIMAL-SCREEN IMAGE CONSTRUCTION - BACKGROUND

Accordingly, an understanding will be appreciated of the manner in which light is incident from an actual scene onto a transparent screen proximal to the eye. This will allow for more ready comprehension of the novel image construction systems disclosed here, which in some embodiments substantially attempt to duplicate the wavefront structures that would be produced at the proximal screen by actual scenes. As will be disclosed, not all aspects of an actual scene's wavefront structure may be necessary in order to construct an image that substantially re-creates a viewer's perception of the scene. As one example, it is believed that, in an inventive aspect to be described in more detail, the proximate screen need not be continuous.

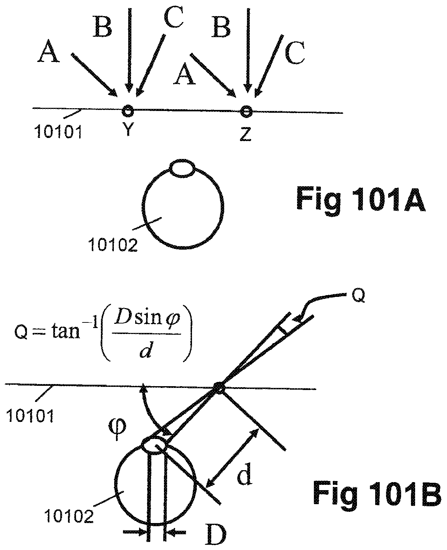

In Figure 101A, rays from specific actual scene points are shown passing through a visual input plane 10101 located close to an eye 10102 substantially where the proximal screen may be located in some embodiments. Such actual scene points will for clarity, as will be appreciated, be considered as "pixels" or "scene pixels" here. The set of scene pixels, as will be understood, are considered for clarity to cover the scene so as to provide the effective view of it. The distance from the input plane 10101 to the eye 10102 will be considered, for concreteness in exposition, to be on the order of 25 mm, as is believed typical with eyeglasses.

Figure 101A shows two points on the input plane, denoted Y and Z. Also shown are rays incident from an actual scene. Rays A, B, and C from point locations in the actual scene, substantially scene pixels, are commonly labeled for each of the points Y and Z. It will be understood that rays from each scene pixel pass through each of the two points on the input plane 10101, as is believed substantially the case for all points on an unobstructed input plane 10101. The rays of the commonly-labeled points are shown as parallel, in accordance with the example actual scene being distant. Rays from a single pixel of a close actual scene, such as those comprised of objects relatively close to the observer, would as is known not be parallel. In such cases of close objects, the eye is believed to typically adjust its power so as to focus the non-parallel rays onto the retina. The eye accommodates for closer object distances until the input wavefront is so curved (rays so angled) that the eye cannot focus them. While individual eyes have differing powers, a typical rule of thumb is that rays from objects closer than about 250 mm cannot be focused by most adults of certain approximate age and the object distance of 250 mm is typically referred to as the "near point." The image forming method and device disclosed will be able to present input rays of various degrees of parallelism and therefore construct scenes having various perceived distances from the eye.

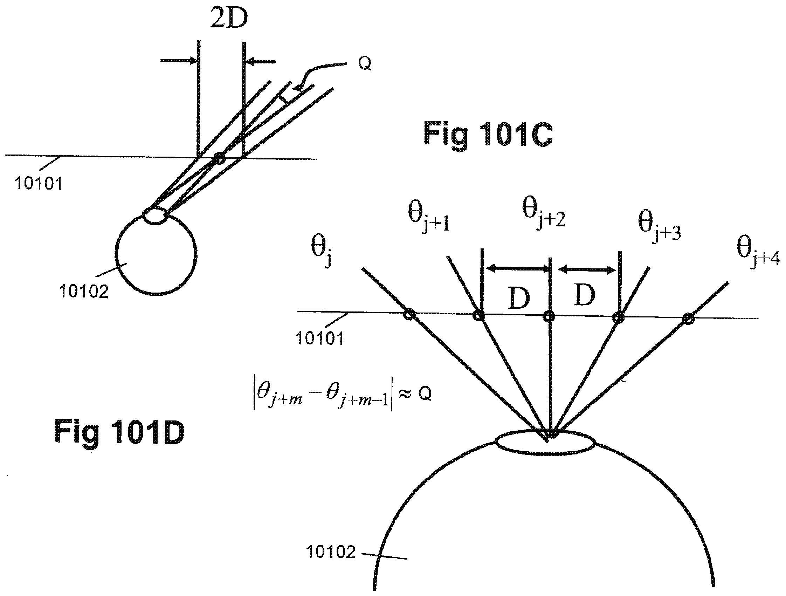

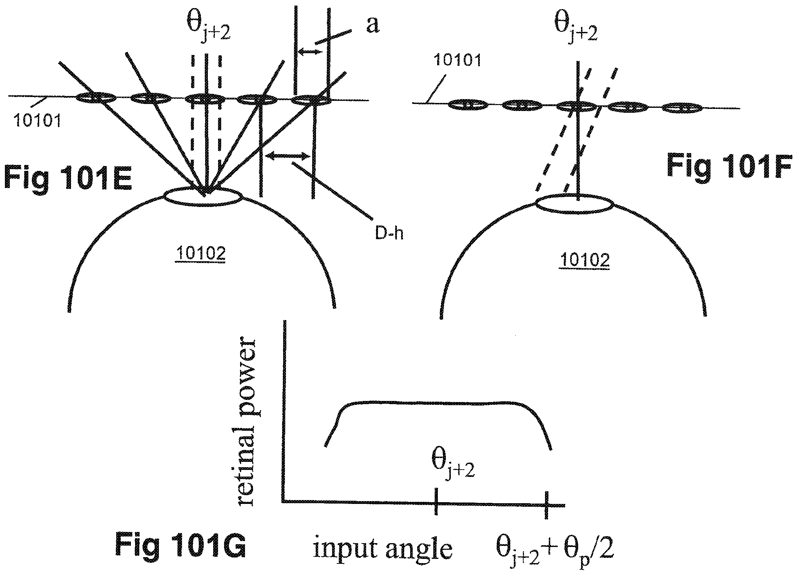

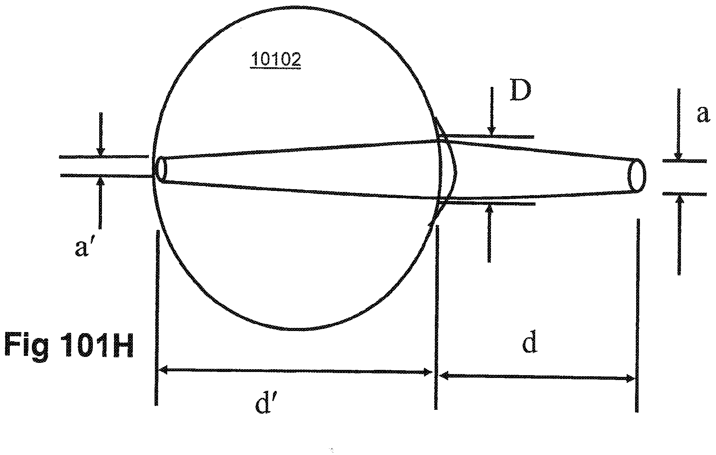

Figure 101B shows how, for those rays passing through a particular point on the input plane 10101, only those falling within a certain solid angle Q actually enter the pupil, even though rays from many more widely positioned scene pixels may pass through that point on the input plane. The solid angle of rays from the scene that is captured by the eye from each point on the input plane 10101 typically varies from point-to-point on the input plane 10101 as will be appreciated from the depicted geometry and formula provided in the figure. It should particularly be appreciated that each point on the input plane 10101 actually supplies light for what will herein be called a "set" of pixels in the actual scene. Adjacent points in the input plane 10101 provide illumination for partially-overlapping sets of such scene pixels. The degree of overlap decreases as the points become further apart. For large enough lateral displacements along the screen, points on the screen source disjoint sets of pixels to the retina. Since light reaching the retina from each scene pixel passes through the input plane 10101 at multiple points, it will be understood that some of those points can be obstructed without substantially eliminating the pixel's optical input to the eye. It will also be appreciated that, although Figure 101 is drawn in a plane for clarity, the concepts introduced are readily translated to the full three-dimensional case and to a proximate screen of a planar or curved form. Accordingly, but provided that the optical power from the various pixels is reasonably balanced, it is believed that obscuration of portions of the input plane, and hence substantially of a proximate screen, may not lead to substantial and/or uncorrectable perceived image degradation.

It will also be appreciated that if a region on the input plane 10101 were to receive and transmit a substantially collimated input beam from the scene, changes in the angle of that beam would in effect steer the output beam leaving the plane to 10101 varying points on the retina.

Figure 101C provides an indication of how wide a region on the input plane 10101 is required to accept all of the light from the scene entrant to the eye from the angular range Q. This may be relevant for some embodiments, since each proximal screen point would supply light from some range of constructed input solid angles Q. In order to capture all rays from scene pixels that are entrant to the retina from a single point on the input plane it is believed that a region is needed whose diameter is approximately twice the diameter D of the pupil.

Figure 101D is aimed at explicating how far points on the input plane 10101 need be laterally separated before the set of actual scene pixels that they effectively source becomes disjoint. Minimally separated input plane points having disjoint pixel sets are shown. When the points are separated by approximately the pupil diameter, the set of retinal pixels that they provide light to become disjoint. The distribution of input plane points is shown for clarity in two dimensions, but may be extended into three dimensions in some examples as a grid of points covering the proximal screen with separations of approximately D to provide for sourcing all desired actual scene pixels.

Although, a grid of screen source points with approximate spacing of D can in principle provide retinal illumination for all scene pixels, in constructing a practical device, screen source points in some examples may usefully be separated by somewhat less than D, for instance 0.5D to 0.9D. One example reason for such reduced spacing in some embodiments is believed to be in order to provide redundancy for pixels at the edge of each spot's coverage area since for such pixels some clipping of source beams at the edge of the pupil may occur, reduce retinal spot size, and reduce available pixel power. Power lost to pupil clipping can, however, be compensated for in a modulation device in accordance with some aspects of the invention that controls power sent to the various pixels. It is accordingly believed advantageous in some embodiments to configure the screen source spot grid with spacing less than D so as to reduce the clipping effect.

Turning to Figure 101E, an array of spots on the input plane is shown arranged on a grid of spacing D-h. The spot diameter is a. If h=0, the spots provide light to largely disjoint sets of retinal pixels. As h increases compared to D, each spot need supply only a portion of its accessible retinal pixels since the pixel sets served by adjacent spots increasingly overlap.

Referring to Figure 101F, a beam emanating from one source spot near the extreme of angles (pixels) sourced is shown in dashed lines. For such extreme angles, the source beam may be partially clipped by the pupil and be diminished in power relative to the case when the source beam addresses more centrally located pixels as already described with reference to Figure 101E.

Referring to Figure 101G, the power reaching retinal pixels from a single input plane spot as a function of angle relative to the central angle is depicted schematically. The power falloff at the edges of the spot's angular sourcing region is believed to occur substantially because of beam clipping by the pupil. Suitable values of h and a it is believed can be employed to reduce this effect, as can dynamic power compensation on the part of the modulation means used to source light to the various pixels as will be described.

PROXIMAL-SCREEN IMAGE CONSTRUCTION - ADDRESSING A SINGLE PIXEL

It is believed, at least to a first approximation and for distant images, that the eye substantially maps rays of the same propagation direction onto a single point on the retina. For scenes that are near, the eye maps "families" or beams of light rays appearing to emanate from a scene pixel onto a single retinal pixel. Owing to the diffractive nature of light, there is an inverse relationship between the size of a scene pixel and the minimal divergence of the rays emanating from it. As a result, it is believed preferable to use substantially finite areas on the proximate screen to launch beams that will illuminate small spatial regions on the retina. The constraints of image formation, as will be appreciated, may be related to the relationship between spot size on the proximate screen and spot size on the retina. The smaller the retinal spot, it is generally believed, the higher resolution that can be perceived, at least until the eye's intrinsic resolution limits are reached.

In Figure 101H, a schematic depiction is provided of a light beam directed from the proximate screen into the eye 10102 that represents a single pixel of a distant scene. The beam occupies a spot of diameter a on a proximate screen, distance d from the eye having diameter d', passes through the pupil, which is of diameter D, and is focused onto the retina, resulting in a spot size of a.

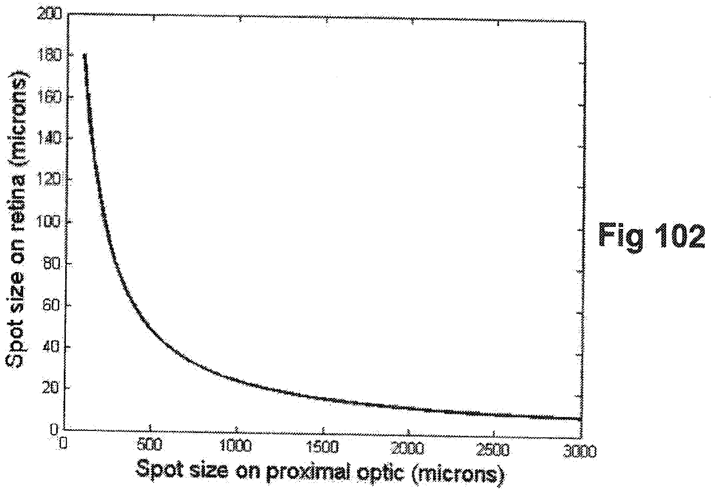

Turning now to Figure 102, the approximate retinal spot size is plotted as a function of proximal screen spot size, for d = d' = 25 mm and for light of substantially mid-visible wavelength. Aberrations from the eye are neglected, in accordance with the teachings of the present invention to be described further, as they can be compensated for by suitable conditioning of the light beam launched from the proximate screen. In the calculation of the plot, the light leaving the proximate screen is assumed "diffraction limited" in that its divergence is set to the diffractive minimum. As will be appreciated from the plot, once the source size on the proximate screen drops much below the pupil diameter, the retinal spot size increases rapidly and results in fewer discrete pixel spots on the retina.

PROXIMAL-SCREEN IMAGE CONSTRUCTION - PIXEL-BY-PIXEL IMAGE PAINTING

The present invention includes, as will be appreciated, embodiments and their combinations directed at constructing a retinal image via reflection or diffraction from a proximate screen.

By controlling the angle with which a light beam from a specific finite diameter spot of the proximate screen travels towards the eye, it is believed that control is achieved over which one of many retinal pixels is addressed. Modulation of said light beam as its pupil-incident angle changes provides for the differential illumination of each pixel, such as in grayscale, binary, monochrome, multiple separate colors, or various combined color gamuts. The number of pixels in each dimension, as well as in some examples even the aspect ratio of pixels, may vary as mentioned earlier with reference to legacy formats. One related advantage of pixel by pixel imaging will be understood to be the ability of a single device, within the range of its capabilities, to construct pixels of different aspect ratios and sizes as desired at different times. It is also believed as has been mentioned that only some areas of the proximate screen need be used for particular pixels. For a single proximate screen area, scene pixels within a solid angle of approximately Q, as has been described already with reference to Figure 101B, may be written on the retina. If, for instance, the proximate screen spot and pupil are both taken as 2 mm in diameter and the eye is looking straight ahead at the proximate screen 25 mm in front, the angular diameter of the vision cone that can be supplied by the spot is believed to be somewhat less than about 6 degrees.

Roughly 250 by 250 pixels of resolution are believed available in such an example angle with a retinal spot size of 15 microns. One example way to address this array of pixels is to vary, according to a raster or other pattern, the direction from which light is incident on the proximate screen. Variation of the incident angle provides, via the law of reflection or principles of diffraction (such as if a grating surface is employed), the needed variation in the angle of the light beam propagating from the proximate screen toward the eye. It is not necessary, however, that the spot on the proximate screen be located directly in front of the eye. It is believed that, at least for some orientations of the eye, the spot may be located anywhere on the proximate screen so long as the light reflected or diffracted from it can be aimed to enter the pupil.

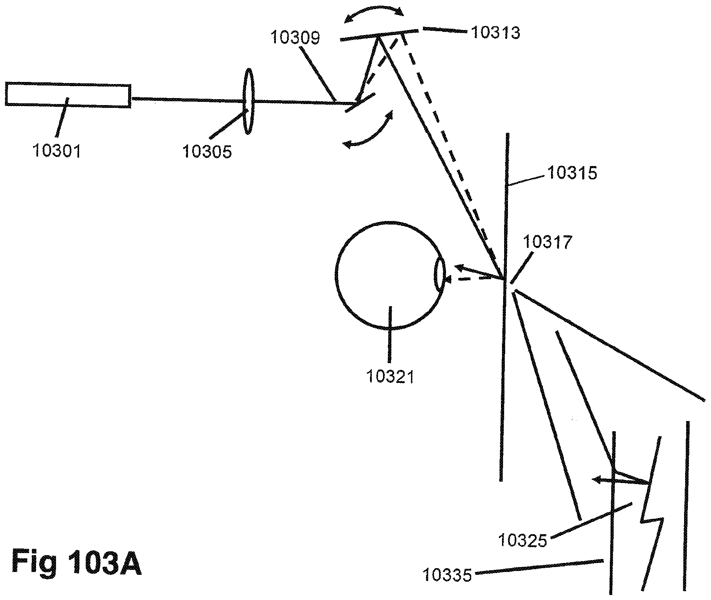

Turning now to Figure 103A, an optical delivery system is schematically shown that allows for the pixel-by-pixel writing of a scene, such as having the approximate characteristics described in the preceding paragraph. The light source 10301 provides optical power and optical modulation. It may for example be monochromatic, entail successive writing of multiple colors such as three "primary colors," or combine various frequencies of light at the same time. In some examples it may, for instance, provide diffraction-limited light or spatially filtered light preferably with similar divergence properties. In the case of three successive colors, for instance, individual pixels are scanned three successive times and each time at a corresponding power level, so as to create the perception of full color as would be understood. Lens 10305, or another suitable optical element such as a curved mirror or diffractive lens in the optical path, alters the optical wavefront as needed to provide the wavefront curvature desired as it enters the eye. Adjustment of lens 10305, such as by varying its position or effective curvature as is known for variable focus optical elements, can result in images of different apparent distances from the eye. In some exemplary embodiments focus is controlled to provide that the combined actual scene transmitted through the proximate screen 10315 and the constructed images reflected or diffracted from the screen 10315 have the same apparent distance and are superimposed so as to be simultaneously in focus.

The two example moveable mirrors comprising the exemplary mirror system shown for clarity in two dimensions are preferably moved in cooperation with each other. Mirror 10309, for instance, displaces the optical signal beam on mirror 10313, while mirror 10313 is rotated so as to keep the optical beam at substantially the same spot 10317 on the proximate screen 10315. The spot size on the mirrors 10309, 10313 and the proximate screen 10315 may be set to be similar to the pupil size so as to provide the substantially high resolution described earlier (or assuming a minimum pupil size). In an exemplary three-dimensional embodiment and mirror arrangement, as will be readily understood, both mirrors 10309, 10313 will optimally provide angular rotation about two axes, for example, about the horizontal and the vertical.

The rays incident on and emergent from the proximate screen spot 10317 in Figure 103A do not appear to obey the law of reflection relative to the proximate screen surface 10335, which can be realized in a number of ways, some of which will be described as examples. The proximate screen differs from the input plane already described in that it is of a substantial thickness and, in some exemplary embodiments, is in effect formed by a method comprising two steps. In the first step, a slanted mirror surface 10325, oriented to connect input and output rays of Figure 103A via the law of reflection, is produced. This surface is partially reflective, such as resulting from a metal coating, for instance aluminum, or a dielectric stack. The reflective coating or layer, or another material of substantially similar transmissivity, preferably spans gaps between spots on the proximate screen so that transmitted images from the actual scene remain substantially uniform, albeit somewhat dimmer at least for some wavelengths. In the second fabrication step, a second layer of material is combined having a substantially smooth exterior surface 10335. The smoothness of this surface is intended to provide that transmitted scene images are substantially undistorted.

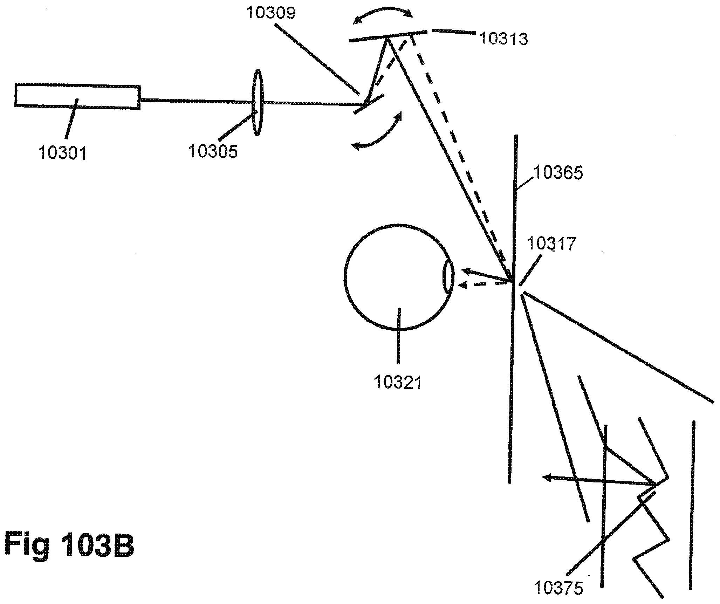

Figure 103B shows schematically another illustrative example of a proximate screen 10365 that includes diffractive structures 10375 in keeping with the teachings of the invention. In the example these structures are formed on operative surfaces. The input and output angles to the proximate screen shown in Figure 103A may be realized in other examples by forming a diffractive structure 10375 in or on the proximate screen 10365. The angular-relationship between input and output rays relative to a diffractive are governed by the grating equation suitably applied as known in the art. Suitable choice of the grating period and orientation are believed to allow, as will be appreciated, a substantially wide range of input-output beam configurations. Should a diffractive structure for instance be formed on the inner surface of the proximate screen, the input beam may require shaping so that the beam diffracted toward the eye is roughly circular in settings where such substantial circularity or other shape is desired. Circular shaping may, for instance, be realized by employing one or more cylindrical lenses in the input optical train as, as has been disclosed in other sections of this document.

Diffractive structures are selected to provide that only one diffractive output order enters the eye, at least in some exemplary preferred embodiments, as will be understood by those of skill in the art. The properties of the diffractive are chosen to provide the input-output beam angular-orientation desired. With the diffractive geometry shown in Figure 103B, where the diffractive surface 10375 is nearly normal to the input signal beam, advantageous inventive "angle change amplification" is believed obtained. Owing to the properties of diffractives, when the incidence angle of a beam approaching in the vicinity of the normal is changed by Din, the angular change, Dout, of an output beam oriented far from the normal will change by more than the change of the input beam. In particular, it is believed that Dout / Din = cos (Qin) / cos (Qout), where Qin and Qout are the respective angles of the input and output beams relative to the diffractive normal. In exemplary embodiments anticipated here, this is believed to mean for instance that the angular range requirement for the input mirrors may be reduced while still providing means to reach all pixels addressable from a given proximal screen location. Diffractive mechanisms are generally known to be dispersive and accordingly have output beam angle that depends on color. In some examples, different frequencies are sourced sequentially, as has been mentioned, and the same retinal pixel may be addressed by the same screen spot for all the frequencies. In other examples, the same retinal pixel may be addressed by different spots on the screen owing to the different angles corresponding to different colors.

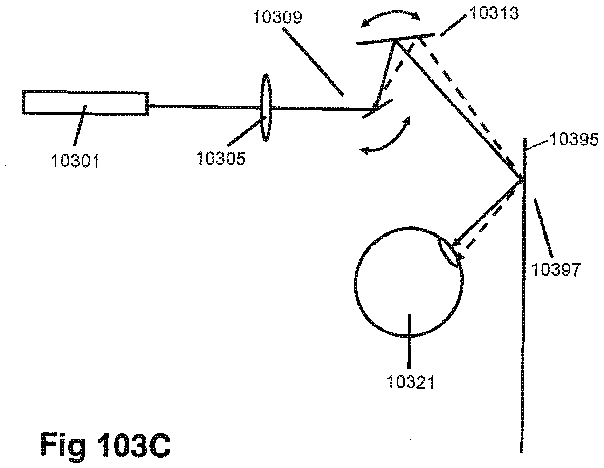

Turning to Figure 103C, yet another illustrative example in keeping with the teachings of the invention includes delivery to the eye of the image information via the proximate screen surface 10395. Exemplary delivery spot 10397 is positioned so that the law of reflection provides the needed input-output beam configuration. The constructed image is observed substantially when the eye is positioned in a particular orientation as shown. Diffractive structures, and such structures formed on dichroic coatings so as to be responsive to limited frequency bands, are anticipated generally here and are another example for use in such embodiments. It will be appreciated that the proximate screen may not be transparent and may in some examples be substantially a part or attached to a part of the frame of a pair of eyeglasses.

In the forgoing exposition, it has been assumed for clarity that the steering mirrors acted so as to change the angle of the light beam as it enters the eye, but keep its intersection with the proximate screen fixed. Alternatively, the steering mirrors may act to translate the proximate screen spot while at the same time controlling the angle of the beam as it enters the eye. There is an advantage to the latter procedure since then the optical signal beam may remain centered on the pupil rather than moving toward the pupil side (see Figure 103A) and potentially experiencing a clipping on the pupil side. The clipping effect may result in a lower power delivery to outlying pixels as well as some diffractive blurring.

The proximate screen 10395 can, as will be appreciated, generally for instance be flat or curved. On transmission, it may have zero optical power or any net optical power or powers as commonly desired to provide the user good images from the transmitted scene during use, as is well known in the eyeglasses art. The flat internal reflector referred to in the above paragraphs may also be curved to provide optical power for the reflected signal and/or to enlarge the spot size on the retina, although it is believed preferable in at least some examples to provide any needed optical correction in lens 10305 or via additional wavefront shaping optical elements. As the internal surface of the proximate screen also affects the wavefront of the signals reflected or diffracted from internal faces, that surface can be employed to control the wavefront of the beams writing the constructed images.

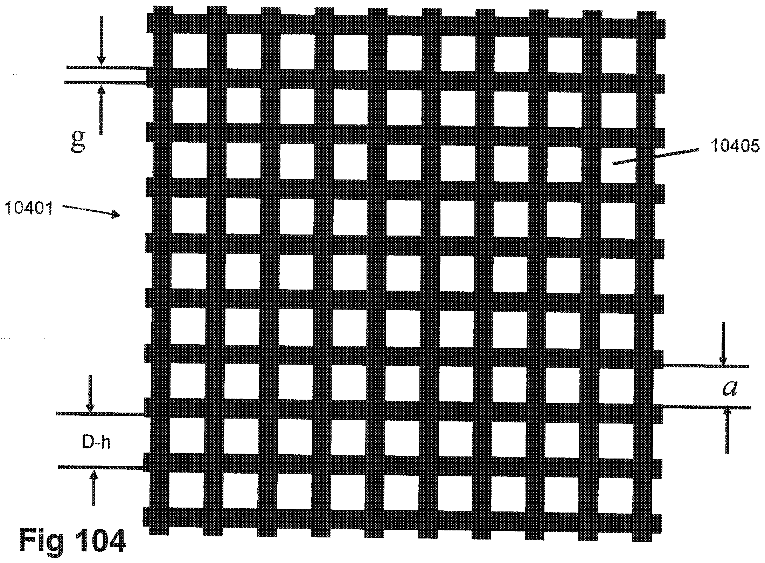

Turning now to Figure 104, depicted schematically is an exemplary grid 10401 of spots on the proximate screen in keeping with spirit of the invention. For clarity in exposition and ease of understanding, the example spots are square and in a rectangular array. However, it will be understood that any suitable pattern of spots may be used and that other patterns may offer advantages, such as more efficient packing or less regular structure. The spots have side a, grid spacing D-h, and inactive zones of width g surrounding each. Spot 10405, for example, controls a certain angular range of pixels contributing to an image. In some embodiments, such a single spot may provide the number of pixels and angular range sufficient for the intended display function. For example, when a substantially small text construction is visible from a particular eye position. More generally, more spots may be added to provide wider angular ranges over which images can be viewed. Exemplary values of a and h, in some embodiments, are believed on the order of D/2 and D/5, respectively.

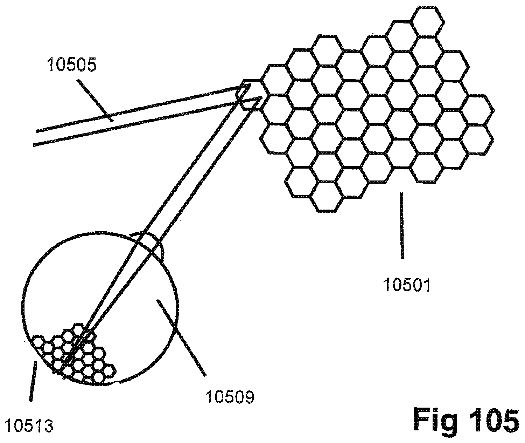

Turning now to Figure 105, another exemplary array 10501 of proximate screen spots is shown schematically. Also shown are corresponding regions 10513 of the retina. Each proximate screen spot correlates to a specific retinal region. Pixels within a given retinal region are addressed by the angle of the beam 10505 incident on the corresponding spot on the proximate screen. After completing a scan of the pixels in one retinal region, in some examples, the mirrors may be adjusted to access another screen spot and thereby access the pixels in its corresponding retinal region, and so on. In other examples, however, the scan pattern includes partial filling of spots to create an effect, related to so-called "interleaving" or the multiple images per frame in motion picture projection, that allows at least some users to better experience lower true frame rates.

The incidence angles used to scan a retinal region's pixels will preferably be correlated with the rotational position of the eye 10509 so that, for a particular eye rotational position, pixels associated with a particular screen spot will in fact enter the eye 10509. The retinal region 10513 correlated with a given screen spot 10501 will substantially change depending on the eye's orientation. In some example embodiments, display control mechanisms may take such remapping into account when assigning which scene pixels to route to the various screen spots. Also, in some examples, as the head moves relative to a scene or constructed scene, the constructed content may be shifted so as to create the illusion of a scene fixed relative to the environment.

PROXIMAL-SCREEN IMAGE CONSTRUCTION - MULTI-PIXEL DISPLAY

In some settings, it may be desirable to display multiple pixels simultaneously rather than a single pixel sequentially as described earlier.

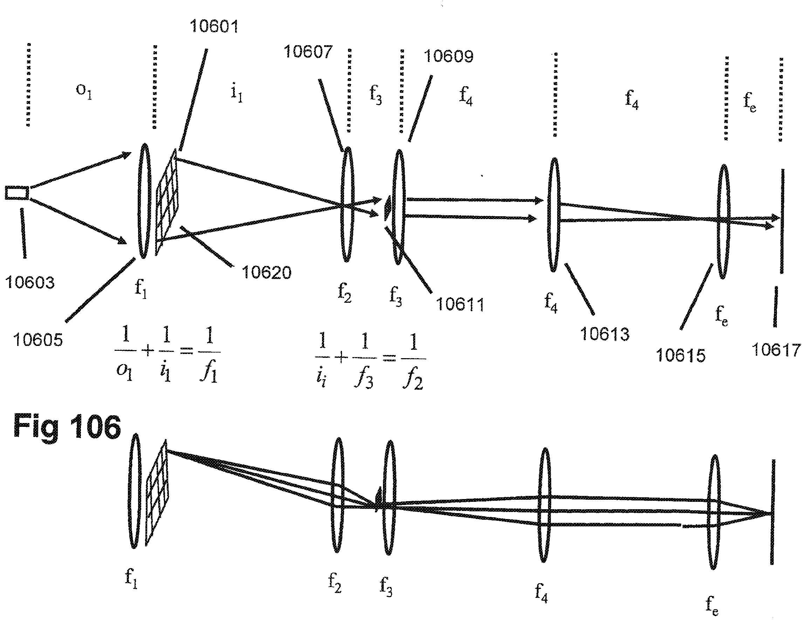

Turning to Figure 106, an exemplary means for displaying multiple pixels simultaneously is schematically depicted in accordance with the teachings of the present invention. The upper portion of the figure shows the central rays. The lower portion of the figure shows the corresponding pixel beam including marginal rays.

Starting from the left, light source 10603 is depicted along with its cone of coverage. The light source may, for instance be a laser, LED, Vixel, or whatever source of light, preferably of sufficient power to cause the eye to see pixels simultaneously originated in the exemplary transmissive two-dimensional pixel modulator 10620. The central rays can be seen starting from pixel sources 10601 that are part of the spatial light modulator 10620. Spatial modulator 10620 may comprise a one or two-dimensional array of modulation devices wherein each separate spot acts to control the amount of light incident from source 10603 that passes through modulator 10620. Other example spatial light modulator schemes are also anticipated, such as for example reflective, e.g. so-called LCOS, or emissive, such as so-called OLED or other self-illuminated image forming devices, obviating the need for a separate source as would be readily understood. Also, combinations of sources and modulators, such as a row or other configuration of sources, are also anticipated as will be understood.

Following source 10603 is a lens 10605, which images the source onto a following lens 10607. Since the rays from source 10603 pass through the center of lens 10607, they are believed not substantially deflected by it. The light emerging from source pixels of 10601 may be mutually coherent or incoherent. Lens 10607 is configured to create an image, reduced in the arrangement shown, of the pixel source 10601 at location 10611, substantially directly in front of lens 10609. Lens 10609 acts to collimate central pixel rays that passed substantially undeflected through the center of lens 10607. Since lens 10609 and image 10611 are substantially co-located, lens 10609 creates a virtual image for lens 10613 that is co-spatial with image 10611. Lens 10613 is placed a focal length from image 10611 and lens 10609, thereby creating a virtual image of the pixel source at negative infinity to be viewed by the eye's lens 10615. Lens 10613 also acts to focus the prior collimated pixel central rays substantially to a common spot preferably at or just prior to entry into the eye. The light from the pixel source will typically reflect or diffract from the proximate screen as described above between lens 10613 and entry into the eye substantially at 10615. The convergence angle of the central pixel rays established by lens 10613 determines the separation of pixels on the retina and therefore the apparent size of the pixel array. Spacings between various components are given above and connecting equations are given in the middle of the figure, as will be appreciated.

The bottom portion of Figure 106 depicts the corresponding evolution of a pixel beam including marginal rays. The divergence of the pixel beam emergent from the spatial modulator 10620 is preferably set substantially by either diffraction through the pixel aperture or the angular size of the source convolved with the pixel aperture, whichever is larger. Preferably, this emergent divergence is configured so that the pixel beam entering the pupil 10615 is comparable to the pupil size. On emergence from spatial modulator 10620, the pixel beam diverges until reaching lens 10607 and then converges to form image 10611. Being substantially in immediate proximity to lens 10609, the pixel beam passing through image 10611 diverges through lens 10609 and is subsequently collimated by lens 10613. The pixel beam remains collimated until reaching the pupil where the eye's focusing power acts to focus the beam onto the retina in a small spot. This spot is believed at least potentially near diffraction limited when, as already mentioned, the pixel beam is substantially comparable in size to the pupil prior to entry. Exemplary ways to control the exact wavefront of the pixel beam prior to eye entry, so as to bring the projected image into focus simultaneously with the actual scene transmitted by the proximate screen, include adjustment to the positions or effective power of the various lenses or other optical elements performing similar functions. As mentioned earlier, the pixel source light may conveniently be reflected or diffracted from the proximate screen between lens 10613 and entry into the eye at 10615.

The apparatus of Figure 106 will provide for the simultaneous illumination of all pixels within a certain retinal region. For example, such means are optionally applied to provide a low-resolution display, such as text readout, that is viewable substantially only for a particular limited viewing direction of the eye.

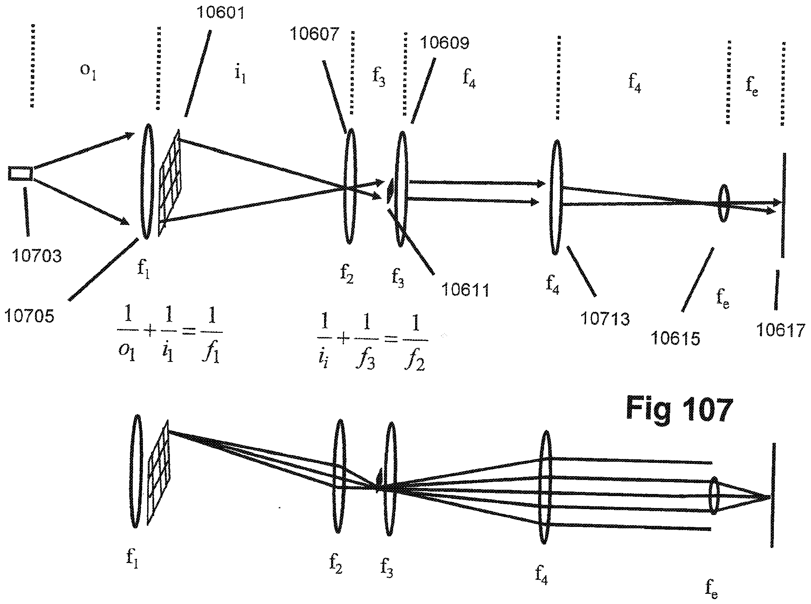

Turning to Figure 107, depicted is a multi-pixel viewing mechanism similar to that of Figure 106 except substantially that the multi-pixel source emits over a wider solid angle so that the light incident on lens 10713 from each pixel nearly fills or in fact overfills the lens aperture. In this case, the eye may rotate throughout a spatial region whose size is comparable in lateral dimensions to that of lens 10713. Such a situation is believed useful for allowing the viewer to naturally adjust the so-called "point of regard" so as to take advantage of retina's regions of high acuity.

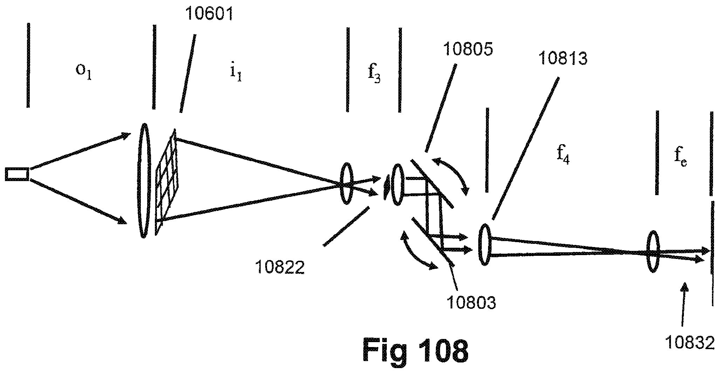

Turning finally to Figure 108, shown is an exemplary image forming mechanism similar to that shown in Figure 106 and similar to that of Figure 107, except for movable mirrors 10803 and 10805, is depicted in accordance with an aspect of the invention. The proximate screen (not shown for clarity in the schematic views of Figures 106-108) deflects the light transmitted by lens 10813, following mirror 10803, so as to enter the eye 10832. In some preferred exemplary configurations, lens 10813 and the preceding image generation and handling elements will be mounted on the side of the head providing for light transmitted through lens 10813 to hit the proximate screen and reflect or diffract into the eye at a certain rotational position or range of positions. The mirrors shown in Figure 108 allow for the concatenation of multiple separate multi-pixel images to form a stitched image having a higher pixel count than conveniently generated via the multi-pixel image generator 10801. A pixel array image 10822 is again formed.

The mirrors act to shift the angular orientation of the pixel beams' central rays while at the same time applying a spatial shift to provide for continued transmission through lens 10813 and illumination of the pupil when oriented to view the corresponding image. The angular shift introduced by the mirrors is typically applied discretely and configured so as to provide angular steps approximately equal to the full angular spread of pixel beam central rays so that after application of an angular shift image pixels fall onto the retinal surface immediately adjacent to a retinal region illuminated for a different mirror setting. While it may be typical to position successive multi-pixel display regions contiguously, optionally in some embodiments non-contiguous pixel placement is provided, wherein the eye will perceive image-free regions between multi-pixel display images.

EYEGLASSES ENHANCEMENTS

Eyeglasses including prescription glasses and sunglasses are already worn by a large fraction of the population and they can provide a platform for a variety of applications beyond passive vision enhancement, eye protection and aesthetics. For instance, enhanced eyeglasses are anticipated that offer improved vision, integration of features requiring separate devices today, and inclusion of capabilities not currently available. Examples include provision of video images, voice interfaces, user controls, text communication, video/audio content playback, eye tracking, monitoring of various meteorological and biological parameters, and so forth.

The present section is accordingly directed at such enhancements and related features. Additional objectives are practical, efficient, economical, compact, user-friendly, convenient embodiments, as will be more fully appreciated when the remainder of the specification is read in conjunction with the drawing figures.

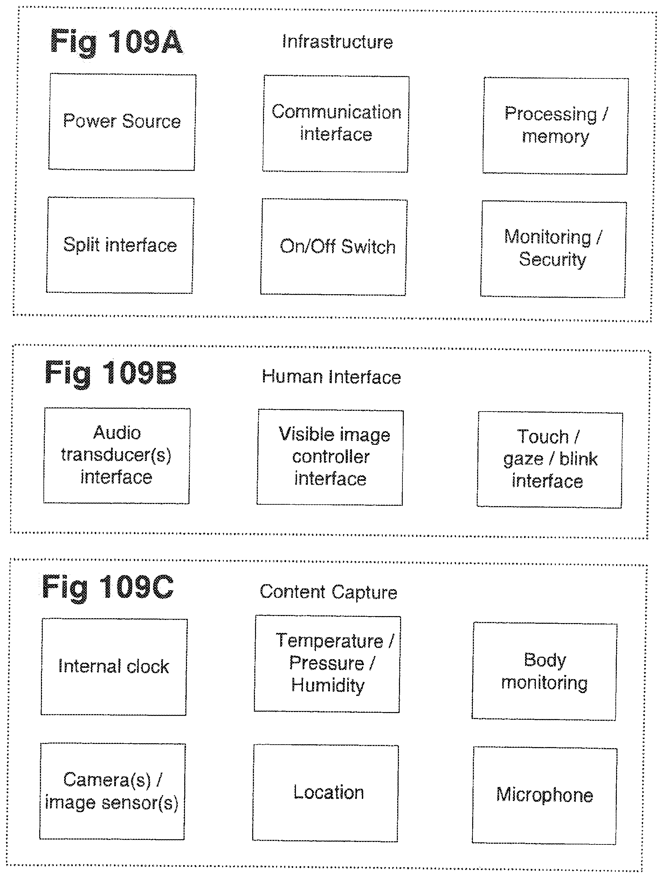

Turning now to Figure 109, a detailed exemplary overall block and functional diagram is shown in accordance with the teachings of the present invention. Exemplary parts of the eyeglasses system disclosed are shown in an exemplary division into three general functional families: "infrastructure," including those common elements supporting the other parts and functions; "human interface," those interfaces substantially aimed at providing information and feedback to the wearer and obtaining instructions and feedback from the wearer; and "content capture," those components and systems directed at obtaining or developing information that can be supplied to the wearer. As will be appreciated, in some examples components or functions cross the boundaries among the families and other elements not shown for clarity may be included broadly within the families.

Referring to Figure 109A, what will here be called "infrastructure" is shown comprised of several components. The device in some embodiments comprises its own what will be called "power source," whether electrical or otherwise, is typically stored in portable devices and/or supplied, for purposes of "charging" or operation, through contact-less or contact-based conduits, as will be described later in detail. Batteries, charging circuits, power management, power supplies and power conversion, comprising typical examples, are all widely known in the electrical engineering art.

The device in some embodiments comprises a "communication interface" between the device and the outside world, such as through radio frequency, infrared, or wired connection, whether local to the wearer or wider area is anticipated. Various communication means suitable for communication between a portable device and other devices, such as portable or stationary, whether remote, local, carried, worn, and/or in contact from time to time, are known in the art. Examples include inductive, capacitive, galvanic, radio frequency, infrared, optical, audio, and so forth. Some non-limiting examples popular today comprise various cellular phone networks, Bluetooth, ultra-wideband, Wi-Fi, irDA, TCP/IP, USB, FireWire, HDMI, DVI, and so forth.

The device in some embodiments comprises what will be called "processing means and memory means," such as to control the function of the other aspects of the device and to retain content, preferences, or other state. Examples include computers, micro-computers, or embedded controllers, such as those sold by Intel Corporation and DigiKey Inc., as are well known to those of skill in the digital electronics art. Other example aspects comprise memory or associated memory circuits and devices and all manner of specialized digital hardware, comprising for instance gate arrays, custom digital circuits, video drivers, digital signal processing structures, and so forth.

When the device is divided into parts, such as detachable parts and/or parts worn separately, connection between the parts includes what will be referred to here as "split interface" means, such as to detect the presence and configuration of the parts and to provide for the communication of such resources as power and information. Many of the communication interface means already mentioned are applicable. For galvanic, optical, infrared and some other connection schemes, parts and systems are available from companies such as DigiKey.

In the case of portable devices that include power locally, provision in some embodiments is provided to allow power to be substantially turned off by what will be called an "on/off" switch or function when not in use, by the user and/or automatically such as when no use, removal from the head, folding, or storage is detected, as will be mentioned further.

Other exemplary infrastructure functions include "monitoring" parameters, such as temperature, flexure, power level, to provide alarms, logs, responses or the like, as are well known to those of skill in the systems art. What will be called "security" provisions are whatever means and methods aimed at ensuring that non-owners are unable to operate the device, such as by detection of characteristics of the wearer and/or protected structures generally. Mechanisms such as user identification, authentication, biometrics, rule bases, access control, and so forth are well known to those of skill in the field of security engineering.

Referring to Figure 109B, what will here be called "human interface" provisions, which are means and methods for allowing the wearer and/or other persons to communicate information optionally with feedback to the infrastructure already described. Several example aspects are shown. What will be called "audio transducers" are capable of providing sound to the wearer, such as monaural or stereo, by coupling through air or body parts such as bones. Such transducers, such as are available from Bose and DigiKey Inc. in some examples, or special transducers in other examples, can provide audio capture, such as utterances by the wearer and sounds from the environment. Audio feedback, such as the sound snippets commonly played by computers to provide feedback to their users or verbal cues, are well known examples of interface design to those of skill in the user interface art. Audio provides a way to get information to the user, obtain information from the user, and also provide feedback to the user while information is being conveyed. Another aspect of an audio transducer interface is the control of the audio itself, such as setting the volume and or other parameters of the sound and, for example, rules for when and how sounds are played to the user and when and how sounds are captured from the user and/or environment. Feedback for such input, may be visual or tactile for instance.

What will be called a "visible image controller interface" optionally provides images, such as text, stills, and video to the wearer. Such an interface is also directed at providing feedback to the wearer, accepting input from the wearer by wearer gestures and/or actions visible to the system, and also for providing the wearer a way to influence parameters of video playback, such as brightness and contrast, and rules for when and how visible imagery is provided to the wearer. Feedback for such input may also be tactile or auditory for instance.

What will be called "tactile/proximity" interfaces allow the wearer to provide input through touch and proximity gestures. Feedback for such input, whether tactile, auditory, or visible, for instance, is also anticipated. Eye-tracking and blink detection are other examples of user interface inputs, as are well known to those of skill in the user interface art. Feedback to the wearer may be through tactile sensation, such as with vibration or temperature may generally inform the wearer and optionally provide the wearer with silent notification alerts or the like.

Referring finally to Figure 109C, what will be called "content capture" provisions are shown comprised of several examples. An internal clock provides such things as time of day and/or date. Such clocks are readily available, such as from DigiKey Inc. Temperature is another example of generated content that wearers may be interested in. Temperature sensors are available for instance from DigiKey Inc. Other types of weather-related information, such as barometric pressure and relative humidity, are also anticipated and measurement devices are well known in the meteorological art. All manner of body monitoring, such as heart rate, blood pressure, stress, and so forth are anticipated, as are well known in the medical devices and bio-feedback arts. More rich are images, such as visible, infrared, ultraviolet, and the like, obtained by image capture sensors, facing in whatever direction, as are well known in the imaging sensor art. Location sensing, such as through so-called GPS and inertial sensors, allows location in a macro-sense and also head/body movement, such as for purposes of image adjustment and gestures. Another exemplary content capture is external sound through "microphones." Various combinations of audio sensors provide cancellation of extraneous sound or locking-in on particular sound sources owing to such aspects as their direction and spectral density.

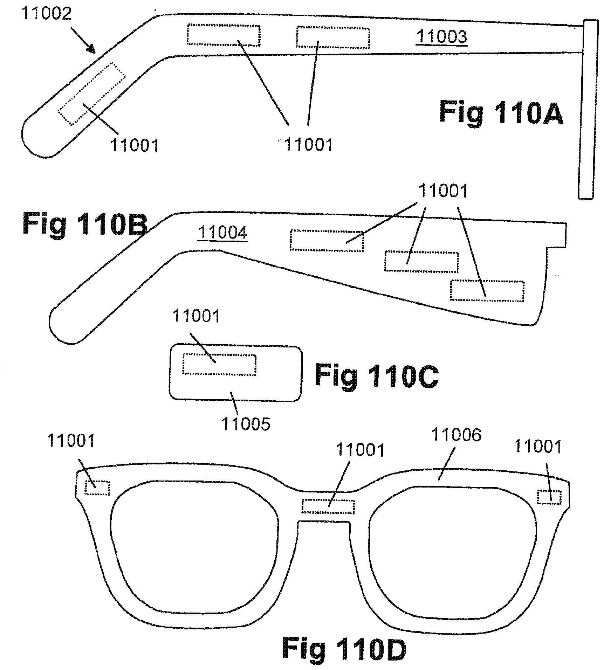

Turning to Figure 110, exemplary placement of components 11001 is shown in plan view in accordance with the teachings of the present invention. In some examples, components are populated on substrates that are then covered, laminated, or over-molded. In other examples, substrates may be mounted on the surface and/or covered by elements adhered by fasteners, welding, adhesives, or the like. Components may also be mounted directly to the structural or aesthetic components or layers of the frame, such as using printed or other connector technologies.

Referring to Figure 110A, a side view is shown of an exemplary pair of glasses 11002 with some example components 11001, such as have already been described with reference to Figure 110, placed relative to a temple sidearm 11003.

Figure 110B gives another example of related placement of components 11001 in a removable member, shown as an interchangeable sidearm 11004, such as will be described further with reference to Figure 110.

Figure 110C indicates some example placement of a component 11001 in the auxiliary device 11005 illustrated with reference to Figure 110.

Finally, Figure 110D indicates some examples of placement of components 11001 in the front face 11006 of the eyeglasses frame.

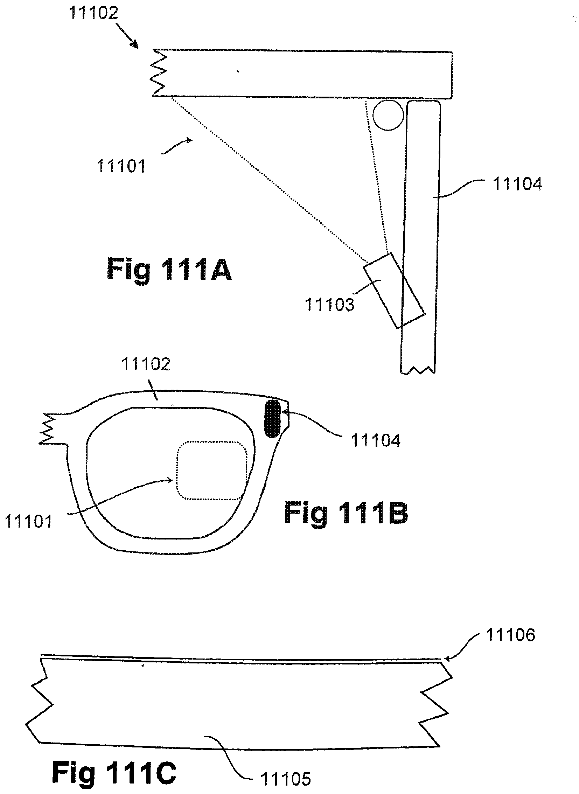

Turning to Figure 111, exemplary configurations for projection of images 11101 visible to the wearer and/or capture of images from the eye in accordance with the teachings of the present invention are shown.

Figure 111A shows a section through the horizontal of a right corner of a pair of glasses 11102 that include an image projection device 11103 and/or a camera oriented angularly onto the "lens" of the eyeglasses 11102. The temple 11104 of the eyeglasses 11102 is also show. The light is sent back from the lens into the eye of the wearer and an image impinges on the retina. Similarly, light reflected from the retina, including that projected, as well as light reflected from other portions of the eye is captured.

Figure 111B shows a front plan view of the example one of the eyeglasses eyes with the part of the lens used in the example imaging indicated by a dashed line.

Figure 111C is a cross-section of the example lens 11105 indicating that it includes a coating surface 11106, such as preferably on the inner surface. The coating 11106 preferably interacts with the projected light to send it into the pupil of the eye and/or return light from the eye to the camera. Coatings 11106 are known that reflect substantially limited portions of the visible spectra, such as so-called "dichroic" coatings. These have the advantage that they limit the egress of light from the glasses and can, particularly with narrow "band-pass" design, interfere substantially little with vision by the wearer through the glasses.

In one example type of eye tracking system, the camera 11103 described here captures images of the eye and particularly the iris and the sclera. In order to determine the rotational position of the eye, images of these features of the eye are matched with templates recorded based on earlier images captured. In one example, a training phase has the user provide smooth scrolling of the eye to display the entire surface. Then, subsequent snippets of the eye can be matched to determine the part of the eye they match and thus the rotational position of the eye.

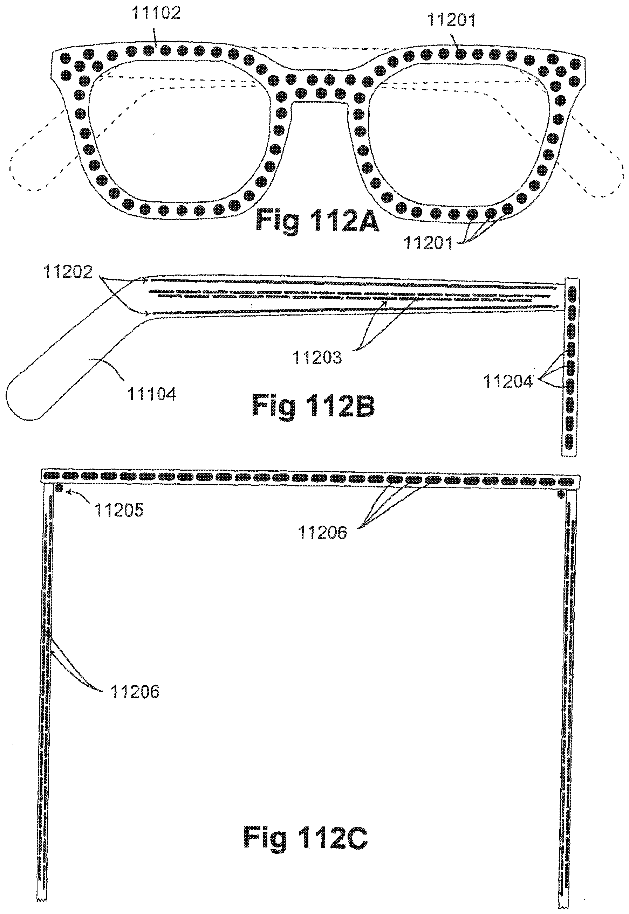

Turning to Figure 112, exemplary configurations for wearer gesture, proximity and touch sensing are shown in accordance with the teachings of the present invention. The sensors 11201 are shown as regions, such as would be used in capacitive sensors, but are not intended to be limited to any particular sensing technology. All manner of touch interfaces including proximity gestures are anticipated. For example, the wearer might adjust a level, such as brightness or sound level, by a sliding gesture along one or the other sidearm or by gestures simulating the rotating a knob comprised of an "eye" of the frame, being one of the frame portions associated with one of the lenses. In another example, grasping a temple sidearm between the thumb and finger(s), the sidearm becomes something like a keyboard for individual finger or chord entry. Position of the thumb in some examples acts as a "shift" key. In examples where images are provided to the wearer, preferred embodiments indicate the positions of the fingers, preferably distinguishing between proximity and touching. Also, the meaning of locations is preferably shown, whether static, such as for particular controls, or dynamic, such as for selection between various dynamic text options.

Referring to Figure 112A, shown are exemplary placement of sensors 11201 on the frame front of a pair of eyeglasses 11102. One common sensing technology is so-called "capacitive," as is well known in the sensing art and implemented in chips such as the Analog Devices AD7142 and the Quantum QT118H.

Referring to Figure 112B, shown are some other example placements of various sensors. For instance, two converging lines 11202 are shown on the temple arm 11104, to suggest proximity sensing and so-called "slider" sensing, also shown in the example of capacitive sensors. Additionally, positional sensors are shown as two alternating patterns of strips 11203, such as would be understood to detect one or more touch positions as well as sliding. Furthermore, the edge of the frame front is shown with sensors 11204 arrayed around it.

Referring to Figure 112C, a top and/or bottom view of an eyeglasses frame arrayed with sensors is shown. The hinges 11205 can be seen connecting the frame front to the earpiece sidearm. Sensors 11206 line the edges including the parts shown.

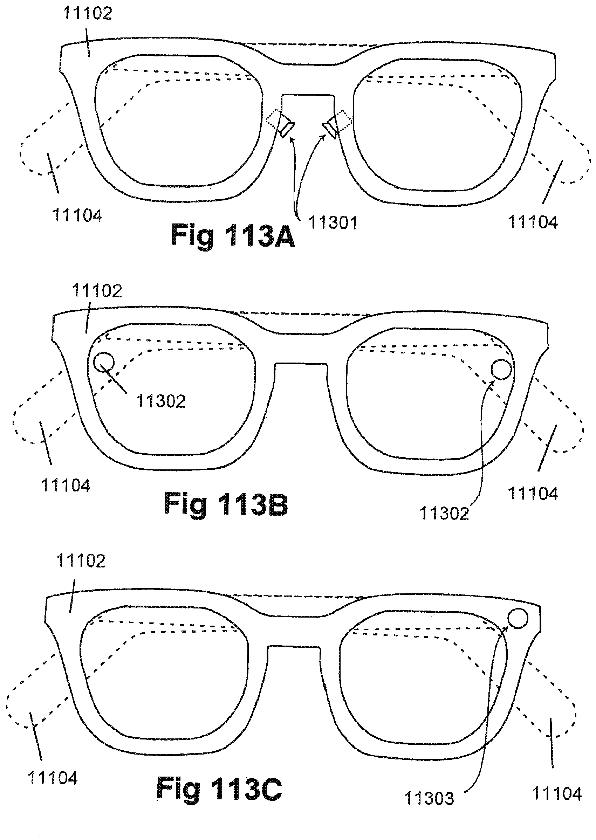

Turning to Figure 113, exemplary configurations for audio transducers 11301 are shown in accordance with the teachings of the present invention. One example type of audio transducer is a microphone. Another is a so-called "bone conduction" device that sends and/or receives sound through bones of the skull. For example, sound is rendered audible to the wearer by sound conducted to the inner ear and/or spoken utterances of the wearer are picked up from the skull.

Referring to Figure 113A, shown is an advantageous and novel arrangement in which the "bridge" portion of the eyeglass frame structure substantially rests on the nose bone of the wearer and these points of contact are used for bone conduction of sound. For instance, the transducers 11301 may rest directly on the nose, as shown for clarity, or they may be configured to conduct through other elements, such as pads or a metal bridge. A pair of transducers 11301 is shown for clarity and possibly for stereo effect. However, a single transducer is also anticipated.

Referring to Figure 113B, shown is an alternate example placement of a bone conduction transducer 11302. It is mounted on the inside of the temple 11104 so that it contacts the skull substantially behind the ear as shown. Some pressure is preferably provided for good sound conduction.

Referring to Figure 113C, shown is an audio and/or imaging pickup transducer 11303. In some examples it is aimed at detecting sounds in the environment of the wearer as well as optionally utterances made by the wearer. Multiple such sensors and arrays of such sensors are anticipated. In some examples, a sound is generated, such as to alert people, help the owner find the spectacles, and/or for ultrasonic ranging or the like. In other examples the sensor is a video camera or night vision camera, aimed forward, sideways, or even backwards.

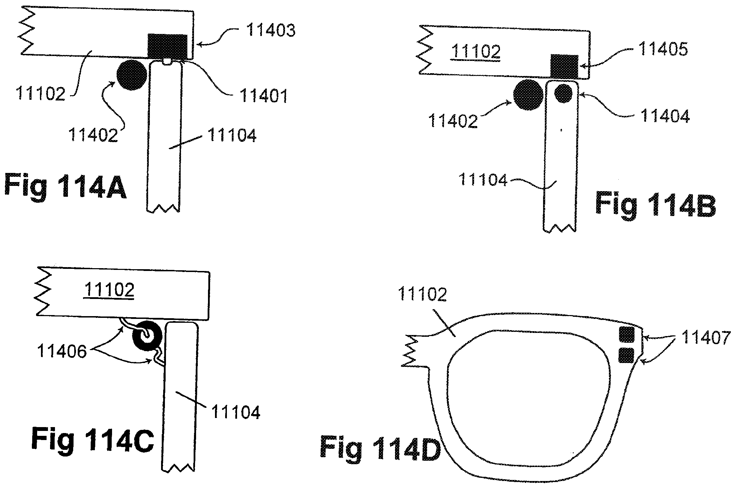

Turning to Figure 114, exemplary configurations for mechanical and signal connection and power switching between sidearm and frame front are shown in accordance with the teachings of the present invention. Figures 114A-B are primarily directed at so-called "on/off" switching at the hinge. Figures 114C-D are primarily directed at power provision through the hinges. However, the two aspects are related in some examples, such as where a slip-coupling includes a power switching capability or where switch contacts are used for providing power.

Referring to Figure 114A, shown is a section through the horizontal of the right corner of a pair of glasses 11102 configured with a mechanical button 11401 at the junction between the sidearm 11104 and the frame front. In this example, the hinge 11402 can be whatever type including a standard hinge. A switch body is shown included in the frame front with a button 11401 protruding in the direction of where the sidearm 11104 contacts the frame in the open wearable position. When the frame is being worn, or in some examples when it is lying open, the button 11401 is substantially pushed by the end of the sidearm 11104 and power is supplied for various purposes, such as those described elsewhere here. When the frame is not open, however, such as folded, power is substantially cut off. In some examples the spring-loaded button 11401 comprises one or more contacts between the two components of the frame. Such switches 11403 are known to be small, such as the DH Series manufactured by Cherry or the D2SW-P01 H by Omron.

Referring to Figure 114B, an alternate shutoff switch arrangement is shown comprising a so-called "reed switch" 11404 and permanent magnet 11405. Such switches are known to be small, such as that disclosed by Torazawa and Arimain in "Reed Switches Developed Using Micromachine Technology," Oki Technical Review, p76-79, April 2005. When the frame is open, the magnet is sufficiently close to activate the switch, as is known. When the frame is closed, the magnet is far enough away and/or oriented such that the switch closes.

Referring to Figure 114C, an arrangement allowing wire conductors 11406 to pass through an eyeglasses hinge is shown also in horizontal section. The conductors pass through a substantially hollow hinge. In some examples the conductors can be completely hidden, such as disclosed for doors by U.S. Patent No. 4,140,357, titled "Electric hinge," and issued to Francis T. Wolz et al. on February 20, 1979. In other examples, the conductors are in the form of a ribbon and may not pass through the hinge.

Referring to Figure 114D, a plan view of a single eye of a frame front including hinge parts 11407 is shown. There are two example hinge parts 11407, one for each of separate parts of an electrical circuit. The parts are substantially separate hinge components, cooperating to form a substantially adequately strong hinge assembly. However, they are mounted to substantially insulating material, such as plastic resin from which the frame is formed. Each hinge part forms in effect a so-called slip coupling and, as is known for such couplings, such as disclosed in U.S. Patent 3,860,312, titled "Electric slip coupling," and issued to Frank Gordon Jr. on January 14, 1975, can have provisions to interrupt or cut off power in certain ranges of angular positions.

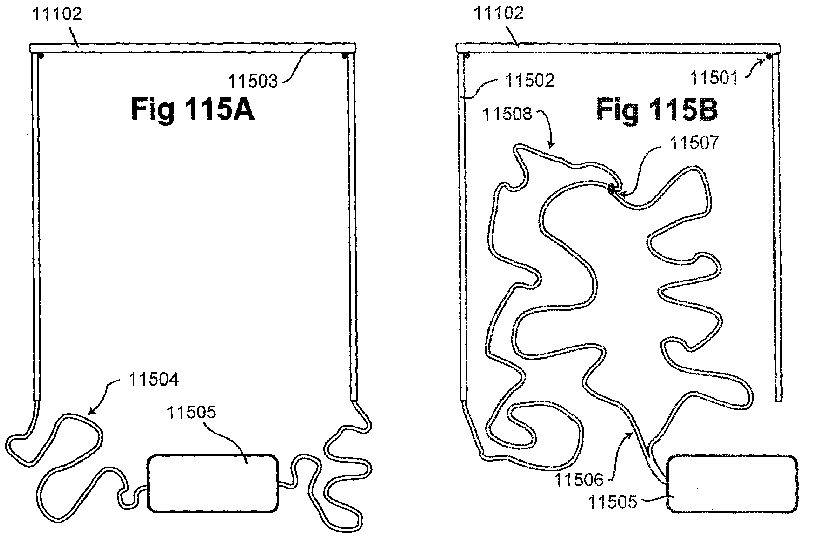

Turning to Figure 115, exemplary external connected auxiliary device configurations are shown in accordance with the teachings of the present invention. Two examples are shown in substantially similar plan view with the eyeglasses fully open and viewed from the top. The hinges 11501 can be seen along their axis of rotation joining the temples 11502 to the front face 11503.

Referring to Figure 115A, a so-called "retainer" cord 11504 arrangement is shown. Ends of each cord are shown emanating from respective ends of corresponding temple arms 11502. In some examples, the connection to the arm 11502 is detachable, such as a connector not shown for clarity. In some particular examples the cords are detachable with low force in substantially any direction, such as by a magnetic connector as are known. Another example is the rubber ring clips currently used, but where each clip provides a contact for a different part of a circuit.

The "payload," 11505 shown configured between the two cords and substantially flat for convenience in wearing, may perform multiple functions. In one example it performs a cushioning role; in another it is decorative. In further example functions, however, it includes component parts that support or augment functions of the glasses. For instance, it may contain power storage or generation such as batteries that supply power to the glasses, whether for charging onboard power storage or for operation. Another example is memory for content or a connection through which memory devices and/or other interface devices can be accessed. In still another example, a radio transceiver is included. Yet further examples include audio microphones to augment sound capture and additional touch panel surfaces, such as those described with reference to Figure 113.

Moreover, whatever functions may be performed by the payload 11505 configured in a tethered mode, may also be performed by a wirelessly connected payload, such as one connected by radio frequency, optical, audio, or other communication technologies and wherever attached or carried on the body or among the accessories of the wearer. For instance, a belt buckle, skin patch, portable phone/computer, wristwatch, or the like may serve at least in part as such a payload. A wearer, as an example, may input selections or other information by gesturing near and touching such a payload while receiving visual feedback of their gestures and touches through the glasses display capability.

Referring to Figure 115B, a tethered necklace configuration 11506 is shown as another example. The "feed" 11508 tethers, via a connector 11507, to the necklace, which includes the payload. Again, the connector may be detachable for convenience. The necklace 11506 may server as an antenna itself.

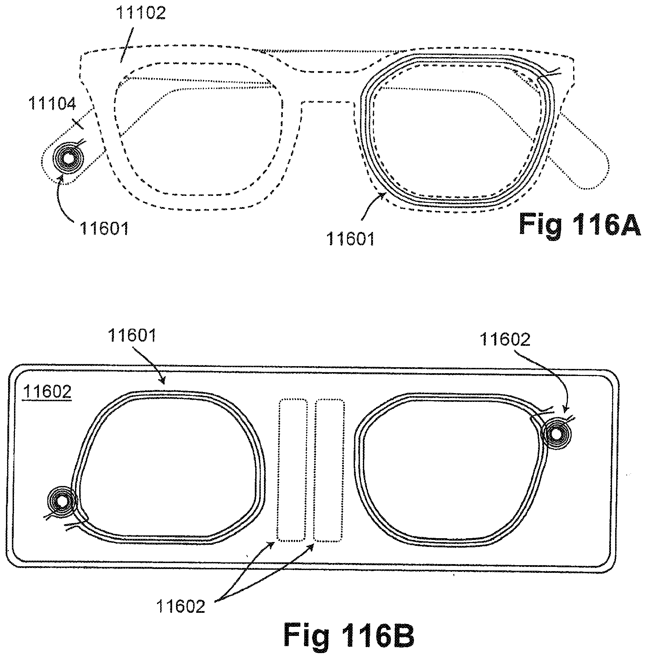

Turning to Figure 116, an exemplary external auxiliary device is shown in accordance with the teachings of the present invention. In one example, the device communicates information and/or power using electrical coils in substantially close proximity. Other suitable power and communication coupling means are known, such as for instance capacitive and optical coupling. The example shown for clarity depicts a storage case or stand into or onto which the glasses may be placed when not used in the example of coil coupling. The power and communication components in the case or stand shown can be used, for instance, to re-charge the power storage mechanisms in the glasses and/or to perform docking synchronization and data transfer functions between the glasses and the outside world, including downloading/uploading content and updating clocks.

Referring to Figure 116A, an example shows coils 11601 optionally located for instance in the temple 11104 or around the eye of the glasses; one or both types of locations or other locations are anticipated. Such coils can be formed by printing, etching, winding, or otherwise on substrates or layers within the frame or on its surface or on detachable or permanently affixed modules. Means are known for coupling power and/or information over such single coil pairs.

Referring to Figure 116B, an example shows coils 11601 included in a glasses case 11602 or storage stand. Four coils are shown to illustrate various possibilities. For instance, a single coil in glasses and case is believed sufficient if the case enforces an orientation of the glasses. When stand allows all four orientations (upside down and flipped left-for-right) and the glasses contain both coils (one facing forward and the other backward when folded), the glasses can always be charged. When a case contains four copies of one type of coil (two on bottom, as shown, and two on top similarly oriented) and the glasses contain one instance of that type, any orientation allows coupling.

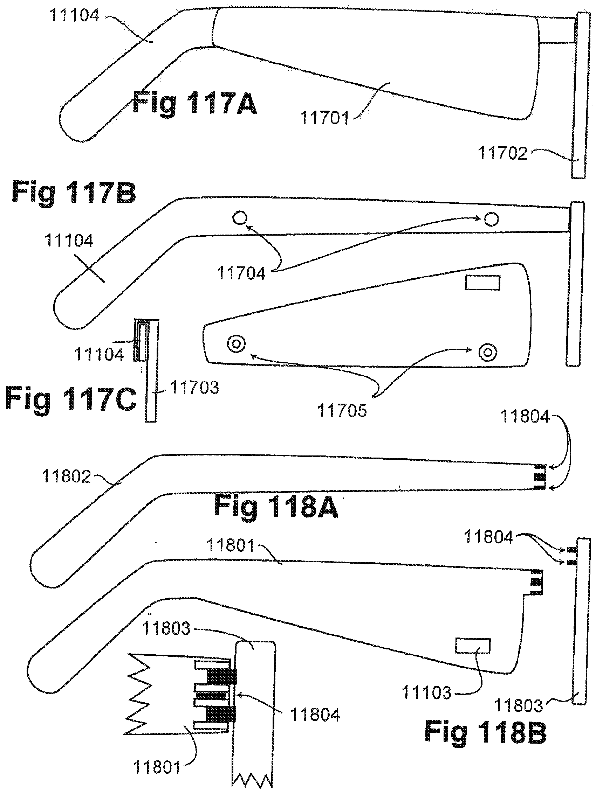

Turning to Figure 117, exemplary detachable accessories are shown in accordance with the teachings of the present invention. While various configurations and styles of accessories are readily appreciated, some examples are shown in the form of a "temple attachment" to illustrate the concept. It will be appreciated that some of the examples include configurations where the glasses frame does not anticipate the attachment and the attachment is therefore generic and applicable to a wide range of frames. Adhesives, fasteners, clamps and the like for such fixing of the attachment are not shown for clarity. The attachment means anticipated in some frames preferably includes coupling for power and data transfer, such as by galvanic, inductive, and/or capacitive connection.

Referring to Figure 117A, the temple attachment 11701 is shown attached to the temple arm but not to the frame front 11702. Other examples include attachment to the front 11702 of the frame.

Referring to Figure 117B, an example temple attachment means is shown comprising fasteners on the arm 11704 and on the attachment 11705. For instance, snaps are an example as are magnets as well as hooks and loops. The fasteners are shown as an example as one part on the arm and the mating part on the attachment. The attachment is shown flipped top-for-bottom so as to expose the fasteners. Also, shown in the example is a camera and/or light source, as described elsewhere here such as with reference to Figure 113.

Referring to Figure 117C, another example attachment means 11703 is illustrated in section perpendicular to the main axis of the temple arm. The attachment fits over and/or clips onto the arm.

Turning finally to Figure 118, replaceable arm configurations are shown in accordance with the teachings of the present invention. In some settings there may be advantage in the wearer or at least a technician being able to replace one or both temple arms with arms having an accessory or different accessory function.

Referring to Figure 118A, two temple arms 11801, 11802 and a frame front 11803 that they optionally attach to are shown. The lower arm, which includes the example projector/camera, will be considered an accessory arm 11801 while the upper arm is a plain arm 11802, although both could be different accessory arms. The hinge is detachable. The example configuration for achieving this shown includes two hinge "knuckles" 11804 mounted on the frame front. These are preferably electrically isolated so that power and/or signals can be supplied over them. The mating structure on the frame includes the middle knuckle, which preferably includes a spacer formed from an insolating material so as not to short circuit the electrical paths provided. In one example, when the two parts of the hinge are interdigitated they snap together. For instance, the outer knuckles are urged towards the middle knuckle, such as by spring force owing to the way they are formed and mounted. A detent, such as a ball mating in a curved cavity, not shown for clarity, snaps the two together as would be understood.

Referring to Figure 118B, a detail of the exemplary hinge structure is shown in the connected configuration.

## MIRROR ARRAY STEERING AND FRONT OPTIC MIRROR ARRANGEMENTS

Steering a beam from a variety of launch positions can be accomplished through a large steerable mirror and front optic mirrors can be arranged in zones only one of which is used per rotational position of the human eye. A potential disadvantage of steering a large mirror is that it tends to be slow owing to its mass. Also, potential disadvantage of exclusively using one zone per eye position is that for eye positions near the edge of a zone maximum-sized mirror may be required from two or more zones within a limited space, resulting in reduced maximum mirror size or increased mirror spacing. The former can result in decreased spot size on the retina and the latter in increased mechanism size.

Accordingly, and in keeping with other aspects of the inventive concepts disclosed in other sections of this document, various inventive aspects are disclosed here to address the above and provide further objects, features and advantages as will be appreciated from the following and the figures and description.

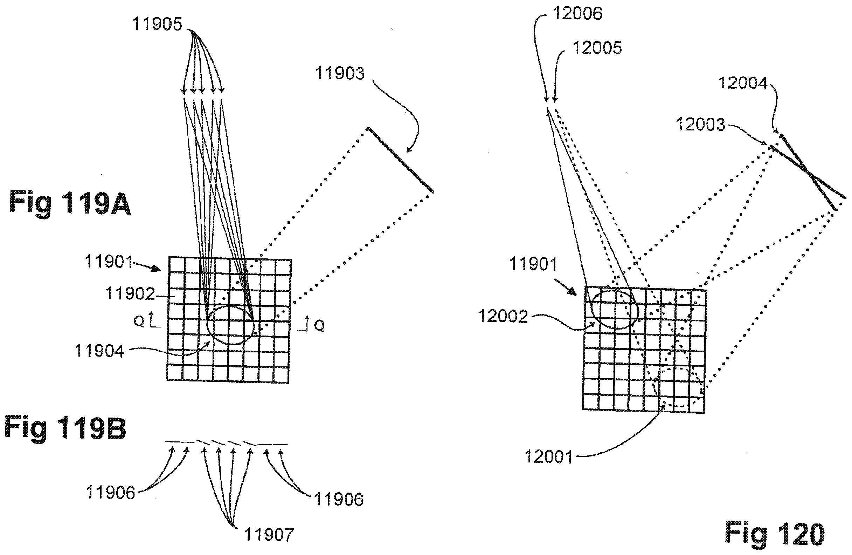

Referring now to Figure 119, an example array 11901 of mirrors 11902 and its use in steering beams to front-optic mirrors is shown in accordance with the teachings of the invention. A combination plan, schematic, and orthogonal projection view is provided in Figure 119A and a corresponding section, through a cut plane indicated by direction lines Q-Q, is shown in Figure 119B. A single mirror 11903 is shown as an example of the source origin of the beams, each impinging on the mirror array at substantially the same mirror locations and from the substantially the same angle, as shown, and resulting in substantially the same beam "footprint" 11904 on the mirror array. By varying the angle, in general both so-called "tip" and "tilt," the beams at different points in a so-called "time sequential" process are directed substantially at different of the front optic mirrors, as can be seen by the different focus points 11905 shown.

This and other drawings generally, as will be appreciated, are not to scale for clarity and practicality. Also, this and other drawing, as will be appreciated, show substantially a two-dimensional slice of structure, even though the full three-dimensional generalization of the structure is anticipated.

The steering of the mirrors comprising the array is illustrated in Figure 119B where some mirrors 11906 are shown as "unused" and others 11907 as "used." The position of the unused mirrors 11906 is believed inconsequential and shown in as a "neutral" horizontal position. The angular orientation of the used mirrors 11907 is shown so as to direct the incident beam at one of the corresponding focus points 11905 or mirrors on the front optic. The mirror array 11901 acts on parts of the beam and its efficiency is believed related to the so-called "fill factor" of the array 11901. Advantages of the structure are believed to include that the smaller mirrors 11902 are capable of faster motion and may be more readily fabricated and take up less vertical space.

Referring now to Figure 120, an exemplary configuration including two different zones 12005, 12006 for the same eye position is shown in accordance with the teachings of the invention. Two different beam footprints 12001, 12002 are shown, at substantially opposite locations on the mirror array 11901. As will be understood, when the eye is near the boundary between two zones for example, then one of the footprints will be towards the edge of the array 11901 and, if the array 11901 is suitably sized as shown, this can bring the footprint needed to reach an adjacent cell of another zone onto the mirror array 11901. This mirror of the second zone when illuminated from this position on the mirror array is believed to be able to provide spot locations on the retina that are adjacent to those provided by the mirror of the first zone. The example sourcing of light to the array shown is by a "supply" mirror that is rotatably positioned to reflect light from a fixed source location, shown in a first mirror position 12003 and a second mirror position 12004. Such mirrors generally here can also be formed as mirror arrays.

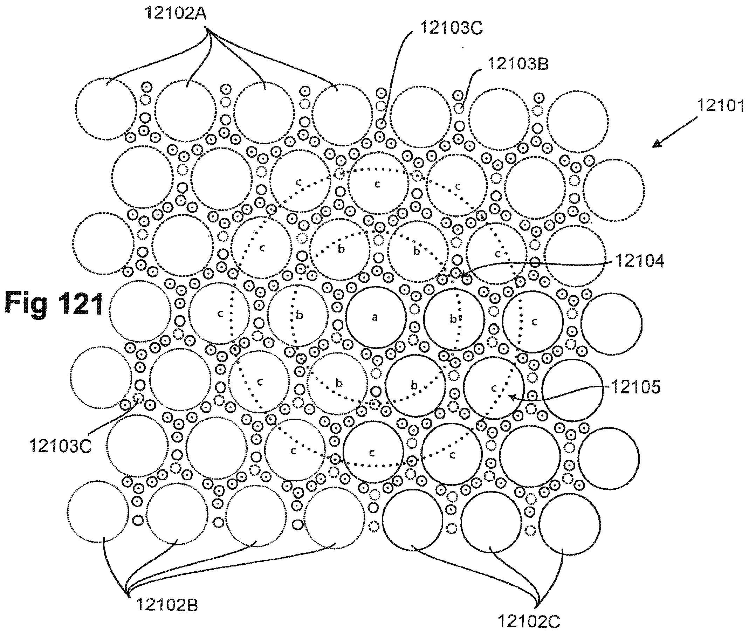

Turning now to Figure 121, an exemplary front optic configuration and use is shown in accordance with the teachings of the invention. Three example zones are included in the portion of the front optic 12101 shown, with interfaces between the three zones shown as rings 12104 and 12105. Other portions may have a single zone, the interface between exactly two zones, or an interface between four or more zones. Of course all manner of mirror shapes and sizes are anticipated within the scope of the invention, but without limitation for clarity and simplicity in exposition an example comprising two round mirror sizes is described here. What will be called a "major" mirror may be of a diameter preferably on the order substantially of a millimeter or two. What will be called a "minor" mirror may be on the order substantially of a tenth to a half millimeter in diameter.

Accordingly, as will be seen, there are three groupings of major mirrors 12102, one corresponding to each of a first 12102A, a second 12102B and a third 12102C zone. Corresponding minor mirrors 12103 of the respective zones 12103A, 12103B, 12103C are also indicated, preferably covering with a substantially uniform spacing. Some additional minor mirrors are shown without indicating their zones, as more than three zones may be included. Mirrors of a zone, as has been described in the other sections of this document, are substantially directed at the eye position range corresponding to that zone.

In the example shown, the major mirror labeled "a" at the center of the rings shown is substantially aligned with the optical axis or the foveal axis of the eye. In order to obtain spot sizes on the retina adequately small for the concentric radial distance corresponding to the ring "b" of major mirrors shown, such as for a "foveal" or para-foveal region of the retina, additional surrounding major mirrors are used as indicated. Some of these surrounding mirrors are from the same third zone as the mirror "a." Others of the mirrors of the ring are from other zones, the first and second in the example. It will be appreciated that in a case when "a" is surrounded by mirrors of its own zone, a simpler configuration results as anticipated in earlier disclosures and a single footprint on the steering mirror array may be used. As has been described with reference to Figure 120 already explained in the example of two zones, the sourcing of light to the front optic from sufficiently differing angles can result in contiguous regions being covered on the retina by the major mirrors of the adjacent but differing zones. When desired a second ring, such as may be referred to as a "macular" ring concentric with the first ring may similarly be employed, as may subsequent concentric rings.

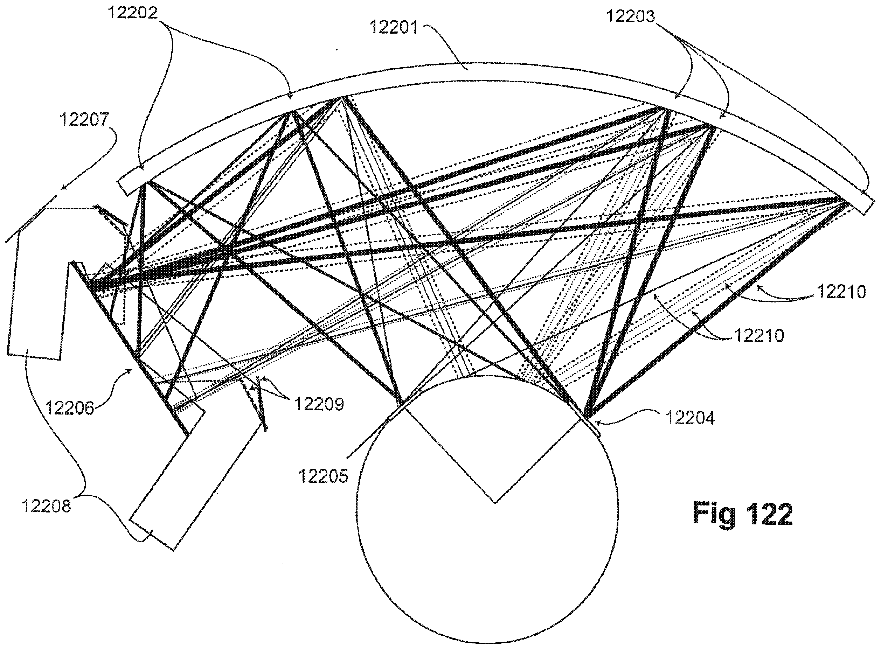

Turning now to Figure 122, an exemplary combination schematic and section of a front optic and steering configuration is shown in accordance with the teachings of the invention. This exemplary embodiment includes a front optic arrangement aspect as well as a steering aspect. The front optic "eyeglass lens" 12201 comprises one "mirror" 12202 or the like per angular position from the eye for some regions and two mirrors 12203 for other positions in a second example region.

The mirrors that are used for a single angular position are illustrated with two beams of the same width for clarity. The outermost of the two beams for a mirror, the beam with the larger included angle, has its right leg incident substantially on the example pupil position 12204 with the eyeball rotated forty-five degrees clockwise. Similarly, the rightmost leg of the inner beam is incident on the example pupil position 12205 at forty-five degrees counterclockwise. The left legs of these beams are placed on the mirror array at positions determined by the mirror angle, which is chosen somewhat arbitrarily but so that they land fully on the mirror array 12206, taking into account a substantially larger "beam" width or cone that can be anticipated and depending on the sourcing of light to be described. By varying the location of the footprint on the mirror array between these two extreme positions, as will be understood, the right leg can be steered to anywhere on the pupil between the two extreme positions.

Using more than one front-optic mirror per angular range, such as two in the example, as will be appreciated, provides a savings in terms of the effective size of the mirror array used, since it is believed that different ranges can be covered using different front-optic mirrors. The division of the ranges between the mirrors can, of course, be varied but preferably result in substantially contiguous coverage. The two mirrors are shown substantially overlaid, so that four beams 12210 are shown for each mirror location. The wide beam is shown to highlight its overlaying two beams using the other mirror, one on each leg. The narrow beam overlays a beam that uses the other mirror, but the overlay is on just one leg. Again, for each mirror there are two beams representing the range of points on the eye that mirror covers. Each beam is shown with uniform width but not all beams having the same width. The point on the eye where one range ends and the other takes over is where the medium beam is overlaid on the widest beam. In the examples this transition point on the eye has been chosen somewhat arbitrarily so that the extreme point on the mirror array is the same for both mirrors.

The steering mechanism is shown as an array of mirrors, as described elsewhere here, fed by "source beams" 12208 directed by active mirrors 12209. The source beams 12208 are illustrated as substantially wider to indicate that a wider beam or cone may be used. The active mirrors 12209 are illustrated as two example positions, believed extreme positions approximately twenty-degrees apart and with a pivot point offset substantially from the center. These are merely examples for concreteness and clarity. A passive so-called "folding" mirror 12207 is included merely to illustrate an example technique that may be useful in some example packaging configurations.

In operation, modulated source beams are developed and directed at the corresponding steering mirrors and sequentially steered to the front-optic mirrors. The source beams are provided in some examples using a "spatial light modulator," such as a ferroelectric LCOS or OLED. The small arrays of pixels resulting form the modulator are combined by an optical system, such as a preferably variable focus lens, such as that sold by Varioptic of Lyon France. Shutters or active mirrors, as examples, may limit the source beams shown to a single such source beam at a time, or in other examples multiple source beams may be processed at overlapping times. The particular active mirror receiving the source beam steers it by reflecting it so that it impinges on the mirror array at the location, such as stored in a table. For a particular mirror on the front optic next in sequence, the active mirror receives a beam and directs it at the portion of the mirror array dictated by the angle required for the corresponding mirror on the front optic in order to reach the pupil at the corresponding eye rotation sensed, as will be understood. The sequence of mirrors on the front optic is optionally varied in order to minimize perceivable artifacts.

In other examples, not shown for clarity, a row of one or more single-pixel light sources, such as are generated from a laser or row of separate modulators/lasers, is scanned by a so-called "raster scan" resonant mirror across the surface of the active mirror. The scanning function and so-called "dc" steering function are believed combinable into a single mirror, such as the active mirror shown in the illustration; or, the functions can be performed by separate mirrors or the like. During the scan, which is relayed by the mirror array to a particular mirror on the front optic, the light sources are modulated to produce the portion of the image rendered on the pupil that corresponds to the particular front-optic mirror. In the case of multiple modulators or sources, it is believed preferable to arrange the sources substantially perpendicular to the direction of the scan so that they in effect each paint a row of pixels as the combination of them is scanned across. Thus, in such examples each mirror on the front optic can receive a single scan per "frame" interval and the scan comprises in parallel multiple scan lines, one line per modulated light source. In other examples, a two-dimensional array of light sources is used, and they can be flashed, such as multiple times per mirror.

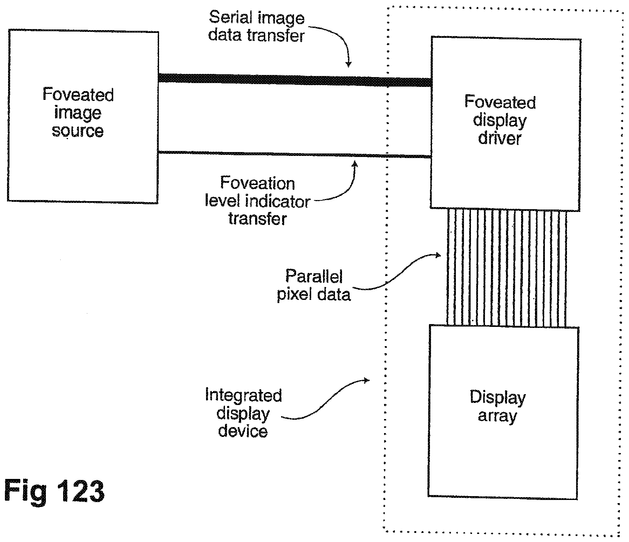

Turning now to Figure 123, a combination schematic, layout, and block diagram of an arrangement for communicating for display and for displaying of foveated data is shown in accordance with the teachings of the invention. The source of foveated image data is any type of communication, processing or storage means, such as for example, a disc, a communication receiver, or a computer. The data is shown comprised of two portions, both of which may be combined in a typical communication architecture, such as one being considered data and the other being considered control. The communication shown may be comprised of a very high-speed single serial line or a bus structure comprising several high-speed lines and optionally some ancillary lines, as is typical of such data communication structures. The raw data, no matter how communicated, comprises two related components. The actual image data, such as for each pixel of a so-called "key frame," comprises a collection of "levels" for each of several colors, such as RGB used to reconstruct the color image in the particular color gamut. The foveation level indicator provides information related to the raw image data and relates to the level of resolution involved in that particular region of the data. For example, a portion of the raw pixel data in a foveal region may be indicated by the foveation level indicator as having high resolution, whereas a portion in a substantially peripheral region may be indicated as low resolution.

The foveated display driver receives the two inputs, however encoded, and stores the resulting image in local storage structures for use in driving the actual display array. Preferably the storage structures are flexibly allocated so that the low-resolution data is not "blown up" to occupy the same storage space as the equivalent region of high-resolution data. For example, a general purpose memory array is adapted with pointers to the regions, where each region is stored in appropriate resolution. The "pointers" may be in dedicated memory structures or share the same memory as the pixel data. However the structure is implemented, a set of substantially parallel outputs that are used to sequentially drive the actual display array in real time are provided. For example, a dedicated controller or other similar circuit fetches/routes the pixel data to the raw display lines. It may, for instance, sequence through a series of "frames," where each frame corresponds to one of the front-optic mirrors already described with reference to Figure 122, and for each a series of memory locations is read out, translated by the algorithm, and placed in a buffer register ready to be gated onto one or more parallel outputs to the display pixels. This controller means expands, on the fly, the low-resolution pixels to the high-resolution format of the raw display. This is accomplished by a suitable algorithm, such as digital blurring or anti-aliasing or the like as are known in the art.

In a preferred implementation, the foveated display driver is integrated into the same device, such as a so-called "chip" or substrate as the actual display array, so that the parallel data paths to the actual display pixels are "on chip." Accordingly, the amount of data communicated and the amount of on-board storage are believed reduced by substantially an order of magnitude.

A particular design for a single eye in an eyeglasses format will be introduced and described in detail with reference to the figures, but the specific dimensions and/or arrangements are given as examples for clarity and should not in any way under any circumstance be interpreted to limit the scope of the invention.

SYSTEM FOR PROJECTING IMAGES INTO THE EYE - AN EXAMPLE

A particular exemplary design will now be described in an overall manner without reference to the figures for clarity and without limitation.

The lenses of a pair of eyeglasses include "mirrors" of two diameters, 1.65 mm 0.125 mm. The mirrors are partially reflective or reflect limited bands of light, so that the wearer can see through them substantially as usual. The coatings are preferably applied over a complete surface for uniformity and the whole mirror structure can it is believed to occupy a layer of about 1 mm thickness inside the lens. The larger mirrors give a spot size on the retina of about 0.015 mm (15 microns) and cover a 2.7 mm diameter. The smaller mirrors give a 0.12 mm spot size and cover a 5.2 mm diameter. These numbers assume a minimum pupil diameter of 2.7 mm, which is believed present for most indoor viewing. However, the numbers do not include any clipping.

The large mirrors are arranged in a hexagonal grid with 2.3 mm center-to-center spacing along three axes. Each large mirror is oriented to reflect from the fixed "source origin" point to the nearest point on the eyeball. This point on the eye is the center of the pupil when the eyeball is rotated so that its optical axis is aimed at the center of the mirror. The set of large mirrors is divided into disjoint "triples" of mirrors in a fixed pattern. The three mirrors of each triple are each adjacent to the other two, their centers defining an equilateral triangle. Each triple has associated with it six "clusters" and each cluster contains six small mirrors. A consequence of this arrangement is that each three-way adjacent large mirror triangle, whether or not it constitutes a cluster, determines a gap that contains a cluster of six small mirrors.

The coverage of the large mirrors on the retina is believed complete for a circular region around the eye's optical axis. By moving the effective source of light from the fixed source origin point, concentric rings are covered. Larger spot size, corresponding to lower resolution, is used for larger rings, where such lower resolution is believed sufficient.

The large mirrors are used to cover three regions on the retina: a central disc and two concentric bands. The tiling alignment of the central six mirrors is believed the most critical, as it corresponds to the area of the eye with the highest acuity. This is the "foveal" disc, defined here as enclosed by the circle of one degree radius from the center of the retina. The full 1.65 mm mirror diameter is used for the foveal disc, giving a spot size on the retina of about 0.015 mm (15 microns). Around the central foveal disc there is a second circle, called here the "macular" circle, defined to be a circle on the retina corresponding to two degrees on all sides of the optical axis. A reduced beam size and corresponding spot size of 0.03 mm (30 microns) could be used for the mirrors that serve the band between the foveal disc and macular ring (called the macular band), but that do not impinge on the foveal disc, although for simplicity this is not considered. The third concentric circle is called here the "paramacular" circle. Two concentric rings of mirrors cover the band between the macular and paramacular circles (called the macular band), as is believed sufficient. The spot size required in the paramacular band is about sixty microns. This is achieved using about a 0.25 mm diameter eccentric part of some of the large mirrors in the band.

The ability to "steer" or move the origin point, about 5 mm in all directions, is believed adequate to in effect change its position so that light from the outer ring of large mirrors used for a particular eye position is able to reach the furthest part of the minimal pupil.

A point on the eyeball corresponds to a large mirror that feeds it light from the source origin, but such a point corresponds to a whole set of small mirrors that feed it light from points distributed all over the front optic. Consequently, there are such sets of small mirrors for each of many "zones" on the eyeball. More particularly, considering the set of small mirrors aimed at a single example such zone (one thirty-sixth of all the small mirrors): these mirrors are arranged uniformly across the lens and they provide a substantially uniform coverage of angles from the front optic to the particular zone on the retina and are aimed at the center point of the zone. So as to compensate for any deviation of the optical axis of the eye from the center of the nearest zone, the source origin is offset so that the beams enter the pupil, for which a maximal offset similar to that used for the large mirrors is believed sufficient. For any particular eye rotation, light is provided to all mirrors of a zone, apart from the few mirrors whose retinal surface is fully covered using the large mirrors. Tiling of the small mirror images, which are lower resolution on the retina, is preferably lined up with that of the paramacular band.

SYSTEM FOR PROJECTING IMAGES INTO THE EYE - DETAILED DESCRIPTION

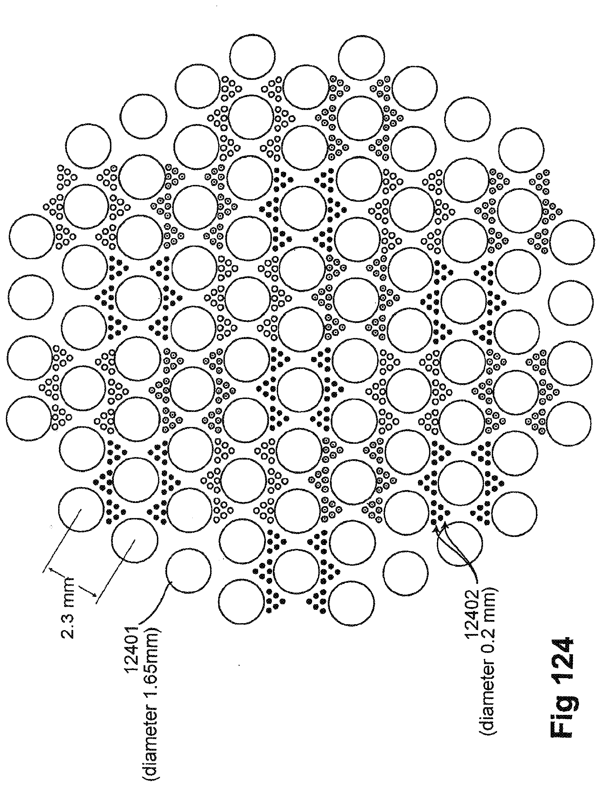

Turning now to Figure 124, a detailed exemplary plan view of mirrors on the front optic, such as an eyeglasses lens, is shown in accordance with the teachings of the invention. The center-to-center spacing of the large mirrors 12401 is shown as is the example hexagonal or honeycomb packing arrangement as will readily be appreciated.

Also shown are smaller mirrors 12402, such as slightly curved so that the pixel size they generate is the desired size smaller than is achievable with the 0.2 mm diameter. As will be appreciated, the small mirrors are arranged in six triangular clusters, each cluster containing six mirrors, the collection of thirty-six such mirrors being referred to as a "star" of mirrors. The pattern is shown in lighter color repeated across the front optic. It will be seen that each star of mirrors in effect occupies in terms of spacing the same areas as three large mirrors.

It is believed that there are many more small mirrors than needed to cover the retina. An example use for all the small mirrors is to reduce the amount of angle steering required to source light to the front optic. A particular example, which will be described in more detail and elaborated on further later, is to use one complete retina-covering set for each of multiple possible zones of eye rotation. Thus, wherever the pupil is, a retina-covering set of small mirrors should point nearby and the sourcing mechanism need only bring this point closer if needed so as to enter the pupil. In the example there are thirty six such retina-covering sets.

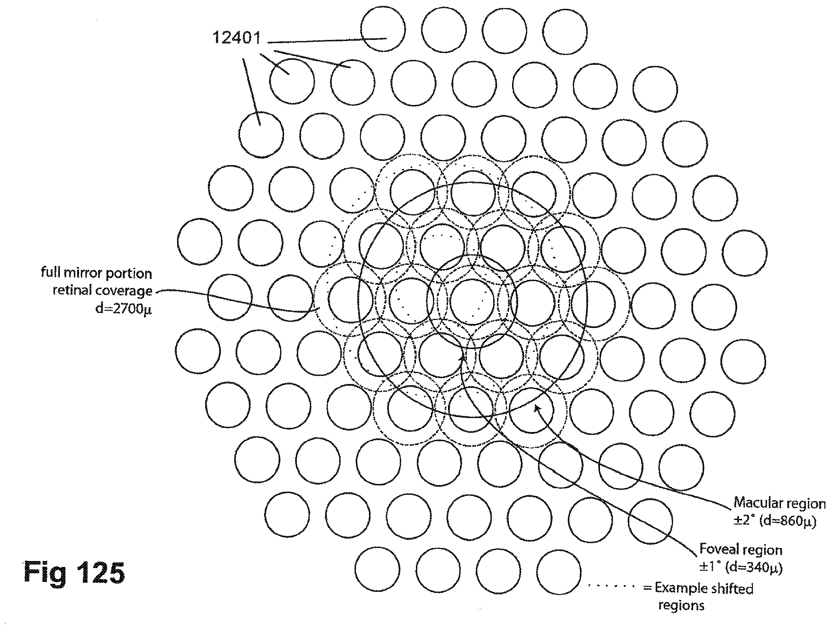

Turning now to Figure 125, a detailed exemplary plan view of macular aspects of mirrors on the front optic is shown in accordance with the teachings of the invention. In particular, only the large mirrors 12401 as already described with reference to Figure 124 are shown for clarity. Overlaid on the mirror diagram, for conceptual ease as will be appreciated, are shown various circles indicating the corresponding regions on the retina for a particular instance. The empty circles shown in solid lines correspond to the position of the eye oriented so that the foveal region is centered. The macular band is shown as concentric. An example misaligned case, shown in dotted lines, is believed the worst cast misalignment. The filled discs centered on each large mirror are believed to correspond to the regions on the retina covered by pixels formed by light reflected from the corresponding mirror. The larger mirrors are used fully for these circles, giving a pixel size of about 0.015 mm (15 microns), believed substantially adequate for the foveal region. The "macular" band, as it is called for convenience here and only loosely related to the anatomical term, is an area between concentric circles in which a resolution of substantially half that of the foveal disc is believed needed by the eye. The slight gap visible in the upper left in covering the worst-case example is believed readily covered by, for example, use of more mirrors or by extending the range of the mirrors nearby, possibly suffering some clipping by the pupil if it is at a minimal dilation.

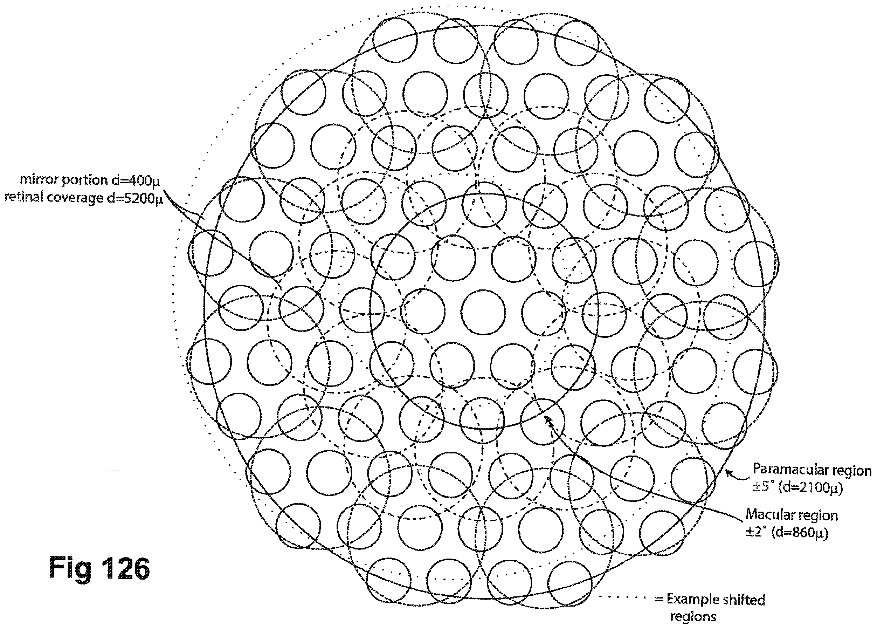

Turning now to Figure 126, a detailed exemplary plan view of paramacular aspects of mirrors on the front optic is shown in accordance with the teachings of the invention. The "paramacular" band, as it is called for convenience here and also only loosely related to the anatomical term, is the bounded area beyond the macular ring already described with reference to Figure 125. The resolution believed required by the eye for this band is believed substantially half that for the macular region. This region is believed coverable by use of the same mirrors, but with a smaller spot size, such as about 0.4 mm, providing the desired pixel size and also a correspondingly larger coverage circle. As mentioned, however, such smaller effective circle sizes may not be used. Again the dotted line shows what is believed a worst-case misalignment and is optionally covered by use of more mirrors or larger circles from the mirrors used. As will be appreciated, not all the mirrors shown are used, as will be more clearly seen when the present Figure is compared to that to be described.

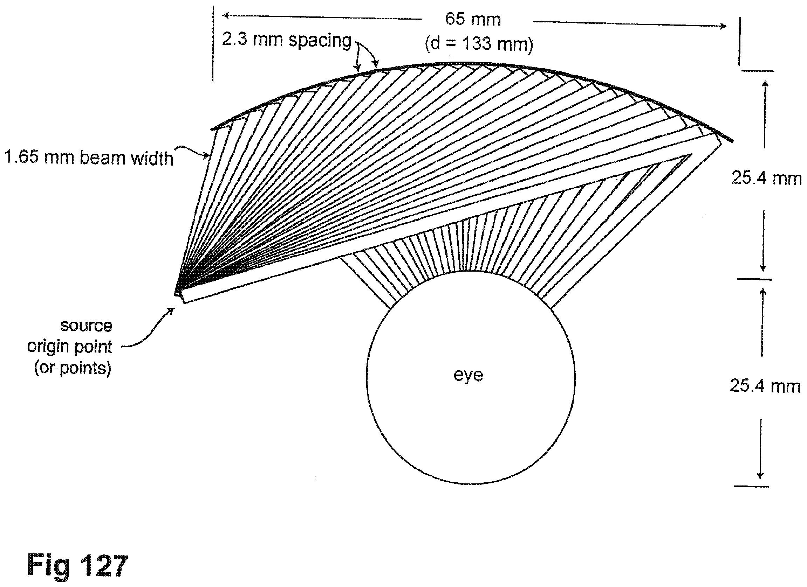

Turning now to Figure 127, a detailed exemplary section through the eye and front optic of an example arrangement of beams related to the large mirrors on the front optic is shown in accordance with the teachings of the invention. The front optic is taken for clarity to be a curved transparent "lens" (although shown without any power for clarity) comprised of the large mirrors as shown in one color. An example curvature and spacing from the eye are shown and dimensioned only for clarity, as has been mentioned. The beams impinge on the eyeball substantially perpendicular to it, as will be appreciated, so that they are substantially able to supply pixels to the foveal region when the eye is aimed at them. It will be appreciated that the optical axis and foveal axis of the eye are not the same, but for clarity here the foveal axis will be considered operative. The mirrors in the row across the front optic shown are arranged in this example for simplicity to all correspond to substantially the same origin point shown. Other example arrangements with multiple origin points will be described later.

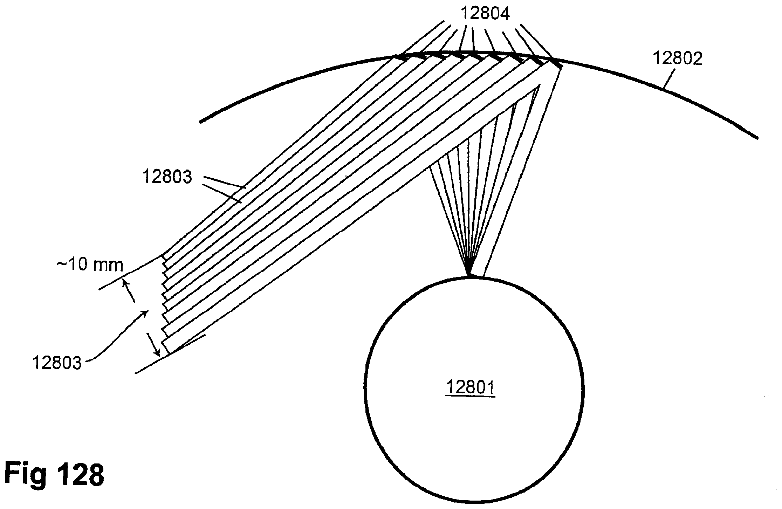

Turning now to Figure 128, a detailed exemplary section through the eye 12501 and front optic 12502 of an example viewing instance of beams 12503 related to the large mirrors 12504 on the front optic 12502 is shown in accordance with the teachings of the invention. The mirrors 12504 already described with reference to Figure 125 are unchanged but nine example beams 12503 are arranged to enter the pupil. Accordingly, as a consequence of the law of reflection obeyed by the mirrors, the origin points of the beams are splayed.

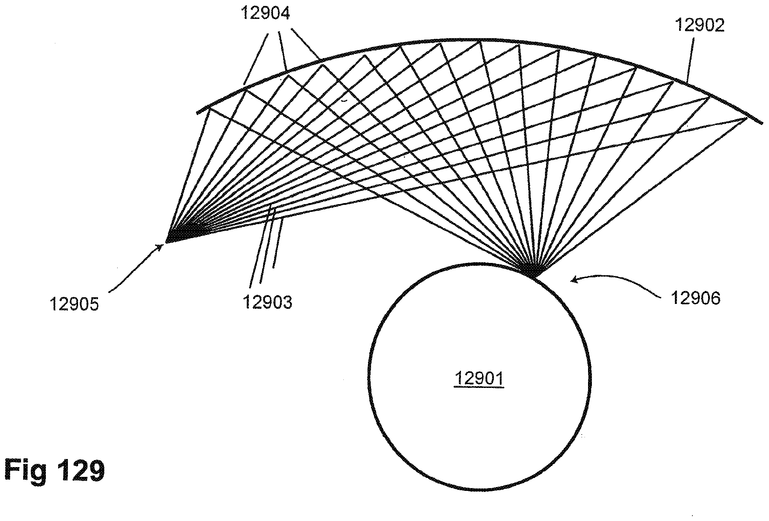

Turning now to Figure 129, a detailed exemplary section through the eye 12901 and front optic 12902 of an example viewing instance of beams 12903 related to the small mirrors 12904 on the front optic 12902 is shown in accordance with the teachings of the invention. The pupil 12906 is shown corresponding to an example rotation of the eye 12901. Only the particular set of small mirrors 12904 comes into play to facilitate provision of light to the eye for the region around the parafoveal, as has been explained. In the example, a single source origin 12905 is shown for clarity, although multiple such points are considered in later examples.

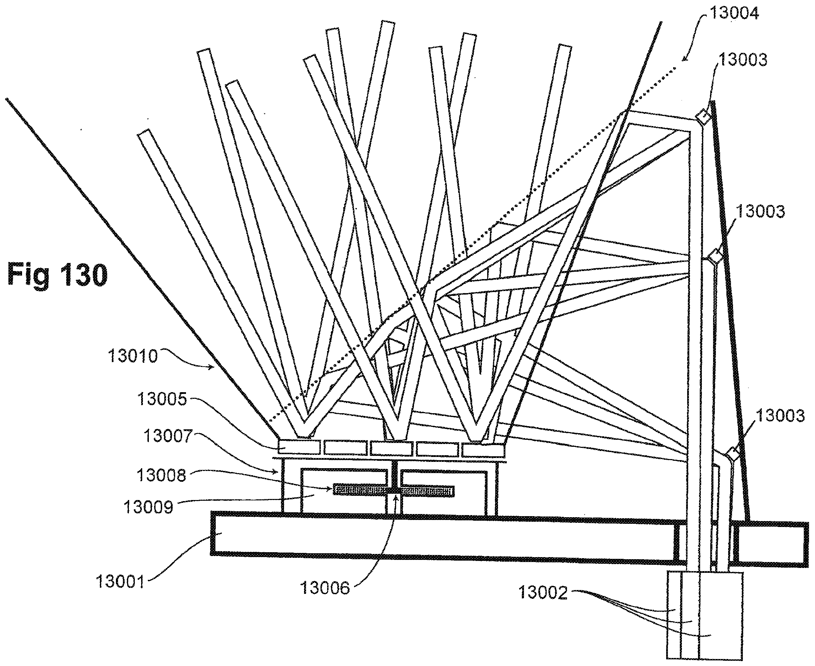

Turning now to Figure 130, a detailed section of an exemplary light sourcing means and system is shown in accordance with the teachings of the invention. The frame 13001 or inertial reference is shown in bold outline, which preferably corresponds to the frame of reference of the front optic and provides support, such as portions of or attached substantially to the frame of a pair of eyeglasses. Modulated beam sources 13002, such as lasers or collimated LEDs are shown for completeness as will be appreciated. However, variable focusing and other pre-conditioning means for the sources, such as disclosed in other sections of this document, are not shown for clarity. The front optic is potentially positioned above, as the output angle boundary lines 13010 show the range of angles of light sent upward, and the range of angles is substantially sixty degrees, being substantially that apparently called for in the examples already described with reference to Figures 127-128.

So as to allow the angular range required of the large mirrors to be kept substantially within current integrated mirror performance, or at least to be reduced, multiple small galvo mirrors 13003 reflect the light from the beam sources to the large galvo mirrors (such as via a beamsplitter 13004). The large galvo mirrors 13005 take the various angles input to them and reflect the light out at a modified angle, believed up to about plus or minus ten degrees in the example. The light sent to the front optic in order to create the pixels on the retina is sent from varying angles, as will be understood and described in more detail in other sections of this document. The small galvo 13003 and large galvo 13005 have cooperating movement so as to create the varying angle at the eye and substantially fixed or potentially moving across the pupil point of entry into the eye. For example, the small galvo 13003 launches the beam at varying positions on the large galvo mirror 13005 and the large galvo 13005 compensates to keep the output beam incident at the desired points. Thus, there is large motion to point towards a particular mirror on the front optic and also small motion to render different pixels using that front optic mirror.

In some settings and example uses the wearer may not return to or keep the eye in a substantially enough fixed relation to the frame. The present steering system can provide the corresponding adjustment by means of an actuator. In the example, the large galvos 13005 are attached to a substrate 13006 that is in effect a stage that can be translated substantially in its plane by flexing of "posts" 13007 that support it in relation to the inertial frame. Such translation stages are known in the art of microscope sample positioning. An example voice coil actuator is shown. This comprises a fixed permanent magnet assembly 13009 and one or more moveable voice coils 13008 shown. The coils 13008 are attached relatively rigidly to the platform as shown. Current in the coils 13008 exerts sideways forces on the stage and the posts 13007 bend to allow lateral motion. The motion can compensate for movement of the eye relative to the frame 13001 and also, in some examples, and as needed by smaller and faster movements, centering the large galvos 13005 in the position needed to make optimal use of the available pupil. Sensors and positive feedback mechanisms not shown for clarity, as will be understood, are employed for controlling positioning the voice stage.

A variety of approaches to allowing the desired mirror size and at the same time keeping mirrors from colliding are anticipated. In some example, adjacent front optic mirrors are oriented slightly differently to use different origin points so that the corresponding mirrors are located substantially beyond range of each other. In other examples, an instance of which will be described, nearby mirrors are oriented slightly differently in order to share a common mirror, thereby reducing the number of large galvos used. The example shown of five large galvos (i.e. steerable mirrors) is a row in the pattern to be described.

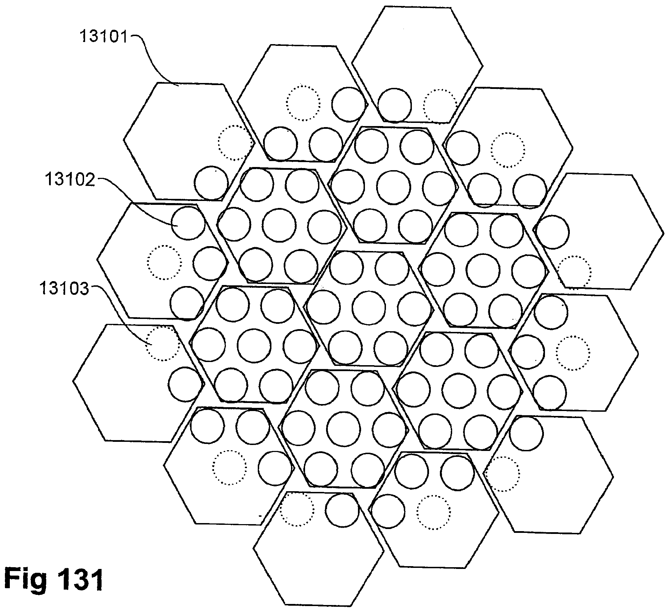

Turning now to Figure 131, a detailed exemplary plan view of an orientation pattern for large mirrors on a front optic is shown in accordance with the teachings of the invention. Each hexagon corresponds to a "large mirror pointing cluster" 13101, being a set of large mirrors on the front optic all aimed substantially so that they can obtain light from the same mirror or location of the sourcing origin. Where they deliver the light onto the eye, corresponding to such a sourcing point, can be as already described with reference to Figure 127. In particular, when the eye is substantially aimed in the direction of a particular mirror, but as the eye rotates, the beam may need to originate from different points. However, each successive mirror, as described with reference to Figure 119 at the origin point, comes into play at substantially the same time for all the beams. The lateral displacement of the steering mechanism described is another example way to align beams with mirrors and the pupil. Owing, however, to the reduced lateral distances on the eye compared to on the front optic (about a factor of three in the example here) and to the relatively larger size of the pupil, especially when it is dilated beyond the minimum assumed, such considerations may not come into play in some system or at some times.

The particular arrangement of large mirrors already described with reference to for instance Figure 123 are shown as circles 13102, but the hollow circles 13103 though shown earlier were not used to create coverage on the retina in the examples so far and may accordingly be considered "skipped" here. It will be seen, then, that the pattern of hexagons can be shifted by a single mirror in any direction along each of the three main axes parallel to the sides of the hexagons, without any non-skipped mirror leaving the enclosing nineteen hexagons. This is believed to mean that no matter which contiguous set of large mirrors on the front optic is closest to cover a the paramacular region for a particular position of the eye, the set of nineteen large galvos in the steering apparatus can source the needed light.

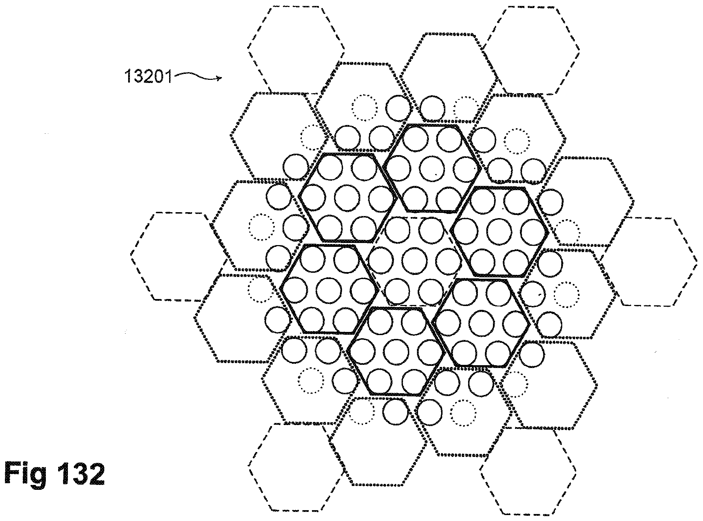

Turning now to Figure 132, a detailed exemplary plan view of an orientation pattern 13201 for small mirrors on a front optic is shown in accordance with the teachings of the invention. It will be appreciated that there are about thirty-six times more small mirrors than are believed needed and that this overabundance can be used to reduce the range of source origin points provided, as has been mentioned. One way to do this is for each batch, of the total thirty six batches, to be assigned its own "well-spaced" point on the eye and to take light from a single source point for this. In an example improvement, related at least to the steering system already described with reference to Figure 130, not just one source origin point but a collection of origin points is used. This lets the work be distributed among more than one large galvos. Of course a separate steering mechanism can be employed for the small mirrors, but re-using the mechanism for the large mirrors has apparent economy and efficiency, especially since it is believed that it will be overly capable based on the performance of galvos currently available.

The example shown is aimed at providing that at least one complete and undivided batch of large galvos applies, no matter how the point of regard is aligned with the pattern on the front optic. This may not be a necessary condition, but if it is satisfied then it is easy to see that all the points on the retina are covered by the single batch, as opposed to having to mix batches. An example construction of this type is illustrated using a pattern similar to that shown in Figure 131. The pattern of Figure 131 is shown as well in dashed lines, with the pattern for the small mirrors being from the seven solid hexagons with the colored hexagon in the middle. It is accordingly believed that the effort is divided up among seven mirrors, and that the division is arranged to be substantially even. As will be appreciated, if the pattern is shifted to any aligned pattern, which is assumed workable by the argument mentioned earlier related to the lateral dimensions on the eye being reduced, then at least one complete pattern of a central hexagon and its surrounding six hexagons is included among the positions covered by the large mirrors of the example steering system of Figure 130.

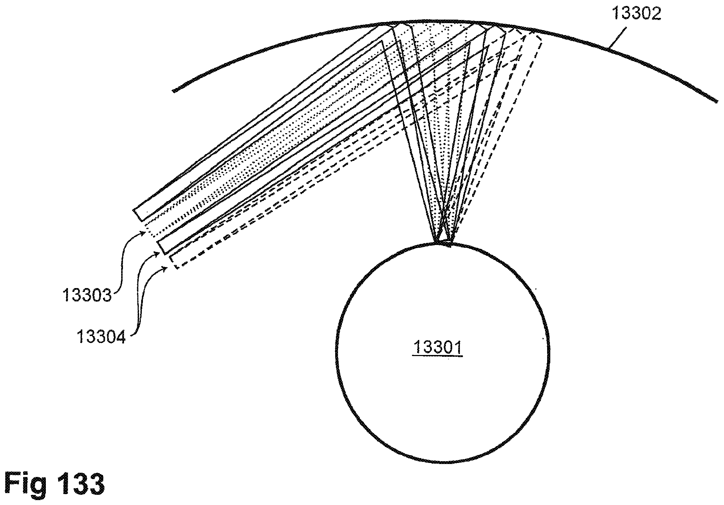

Turning now to Figure 133, a detailed exemplary section through the eye 13301 and front optic 13302 of an example arrangement of beams related to an example orientation pattern of the large mirrors on the front optic is shown in accordance with the teachings of the invention. Instead of all the beams being splayed substantially evenly as was described with reference to Figure 128, the beams are directed at particular mirror locations. In the example, the mirror locations are according to the pattern described with reference to Figure 131. Accordingly, it will be appreciated that following along a row (any of the three orientations) will result in three mirrors in a row associated with one steering mirror 13303 and then two times two mirrors 13304 in a row before the pattern repeats. Thus, the pattern shown in the present figures is an example corresponding to the section shown, where the full clusters are in the pattern two, three, two, two, when viewed from top to bottom.

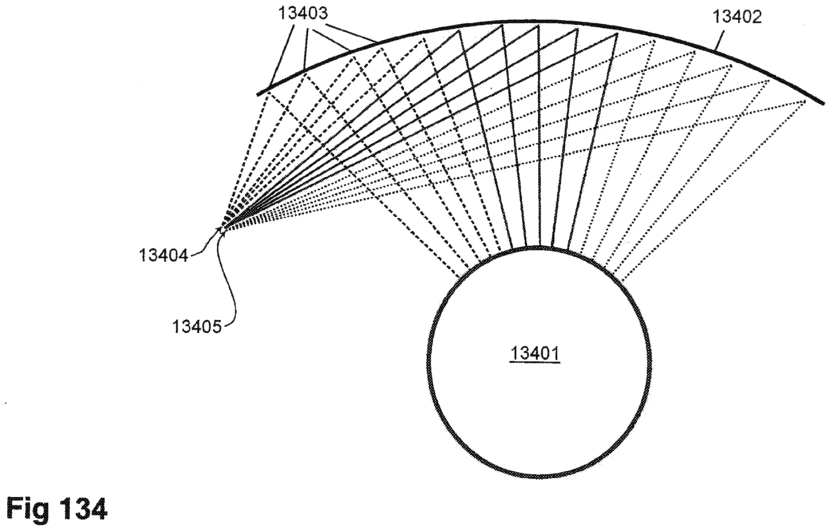

Turning now to Figure 134, a detailed exemplary section through the eye 13401 and front optic 13402 of an example arrangement of beams related to an example orientation pattern of the small mirrors 13403 on the front optic 13402 is shown in accordance with the teachings of the invention. Each batch of small mirrors 13403 is shown oriented so that it shares, instead of a single origin point, a set of origin points 13404, 13405. The example pattern is chosen for clarity such that the beams do not cross between the front optic and origin points, although this is arbitrary. This allows the sharing of steering mirrors shown in Figure 133. In the example shown, three steering mirror locations are used, corresponding to the maximum number in a single row that the section is through.

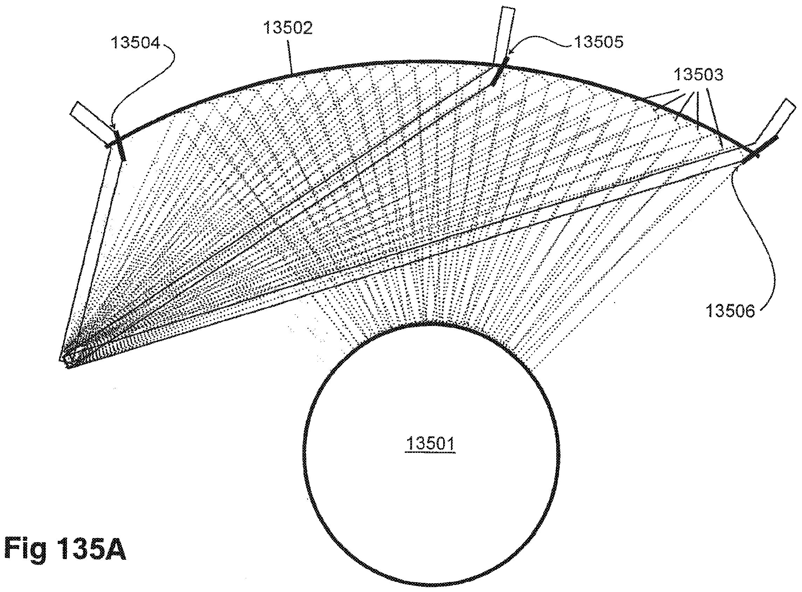

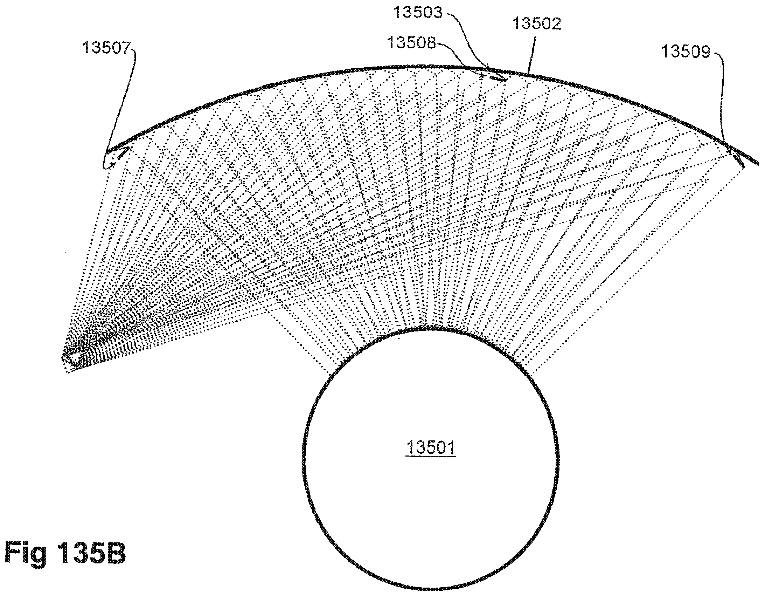

Turning now to Figure 135, detailed sections through the eye 13501 and front optic 13502 of exemplary arrangements of reflectors 13503 on the front optic 13502 for obtaining light from the environment of the wearer are shown in accordance with the teachings of the invention. Two exemplary arrangements are shown, one using more of its own optical paths and a second using more parts of the existing paths.

Figure 135A shows three example additional reflectors 13504, 13505 and 13506. All the large mirrors on the front optic would preferably actually be accompanied by such large reflectors, but only three examples are illustrated for clarity to avoid clutter. As will be seen, the reflectors bring in from the environment the beams of light that are substantially co-linear with the beam from the front optic to the eyeball. When the eyeball is rotated so that the pupil is aligned with one such beam, the light from the reflector impinges on the origin point and is split from the source beam using a beam splitter, as would be understood and disclosed in other sections of this document, and detected. Examples of such electromagnetic radiation that can be so reflected and detected include the visible portion of the spectrum as well as parts of the IR and ultraviolet spectrum.

Turning to Figure 135B, another example way to capture energy from the environment that would impinge on the retina is shown that uses more of the already-described optical paths. Again three exemplary mirror positions 13507, 13508 and 13509, are shown and an additional reflector is shown included for each. This reflector is oriented substantially perpendicular to the beam from the front optic to the eye, as shown. The result is believed to be that the light from the corresponding points in the environment are reflected substantially back to the mirror of the front optic and from there to the origin point where they are detected as described.

In this example, the reflectors for outside light and the mirrors of the front optic preferably reflect a small percentage of the desired radiation, such as a broad spectrum of the visible. However, to reduce interference related to the sourced light, various thin film coatings and the like may be used. For example, when the sourced light is narrow bands of, for instance, RGB, the mirror on the front optic can be coated to reflect these narrow bands very efficiently and to substantially reflect the broader band much less efficiently, as is known. Similarly, the reflector for generated light may in some examples be coated to pass the narrow bands and only reflect the rest of the broader band. The result is believed to be that most of the sourced light is contained by the front optic and not attenuated or reflected substantially by the addition of the reflector for outside light, yet a portion of the outside light (apart from the narrow bands) is reflected to the detectors. Similar techniques can also be applied for the small mirrors but, as will be appreciated, are not shown for clarity.

In some examples the overall level of external light is reduced, such as by an LCD shutter or passive neutral density "sun glasses" like techniques. This then allows the sourced light to make up a significant fraction of the light incident on the pupil, without substantially increasing the level of illumination compared to the external environment. In turn, this allows the filling in of images with images of better focus or other enhancement, such as for night vision or the like.

LIGHT SOURCING FOR IMAGE RENDERING

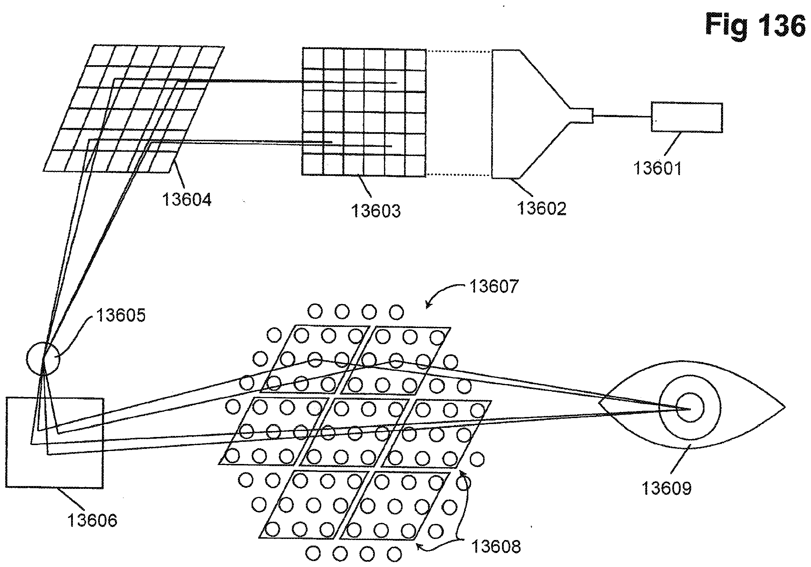

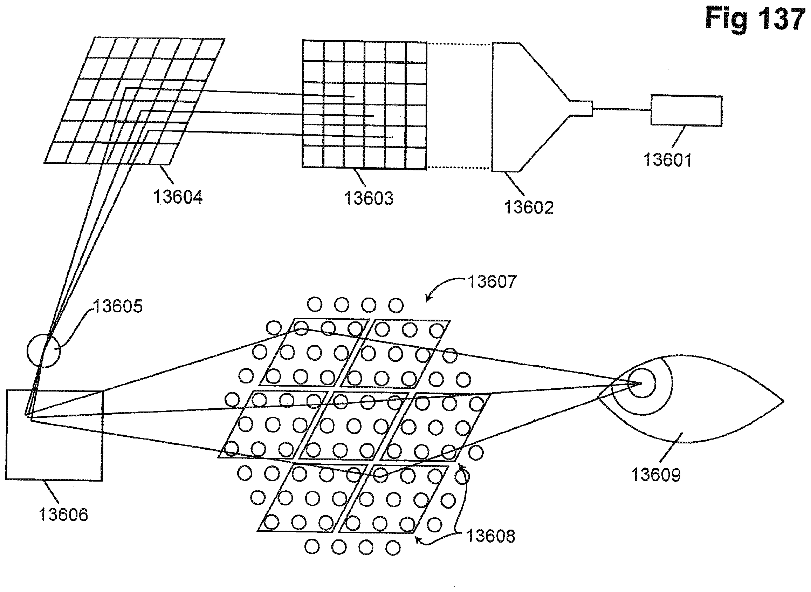

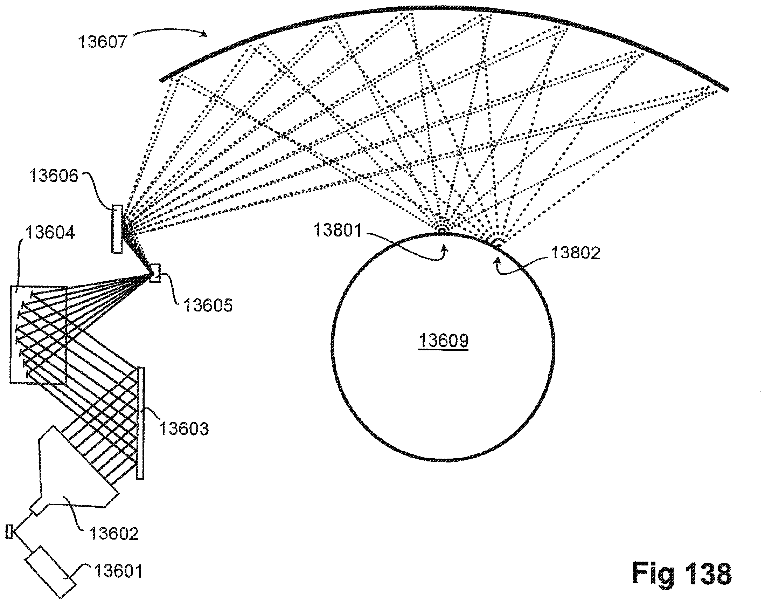

An example comprised of 0.5 mm mirrors arranged in nine zones is used for concreteness but without any limitation. Figures 136-137 illustrate a schematic view of an inventive aspect including a spatial light modulator, each illustrating principal rays for a different example zone. Figure 138 then shows in cross-section an example configuration according to the schematic of Figure 136 and 137 and including rays for both zones.

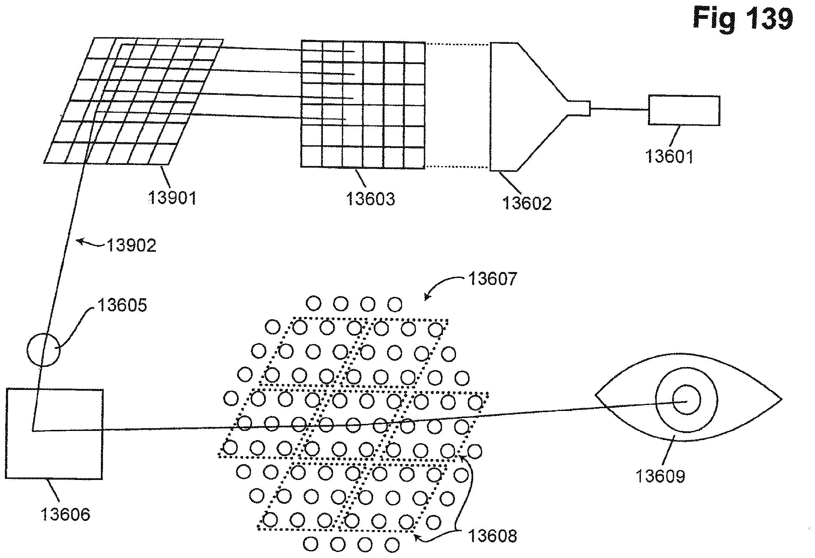

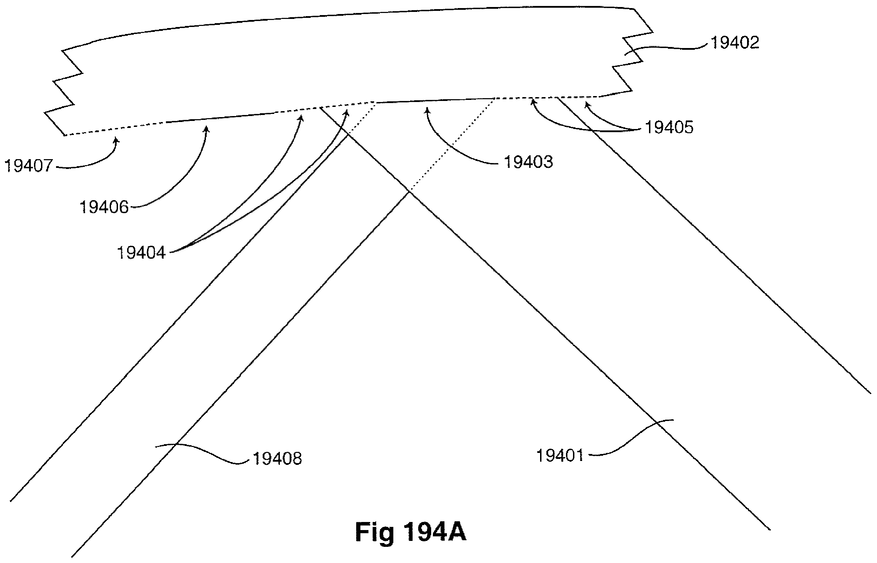

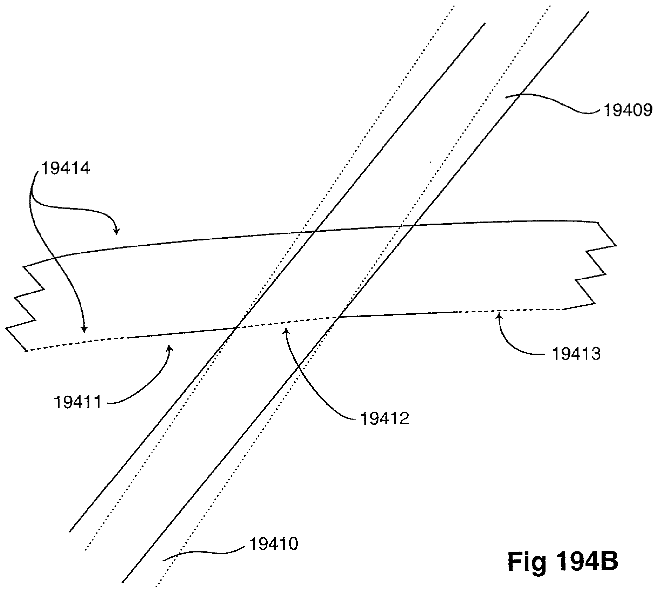

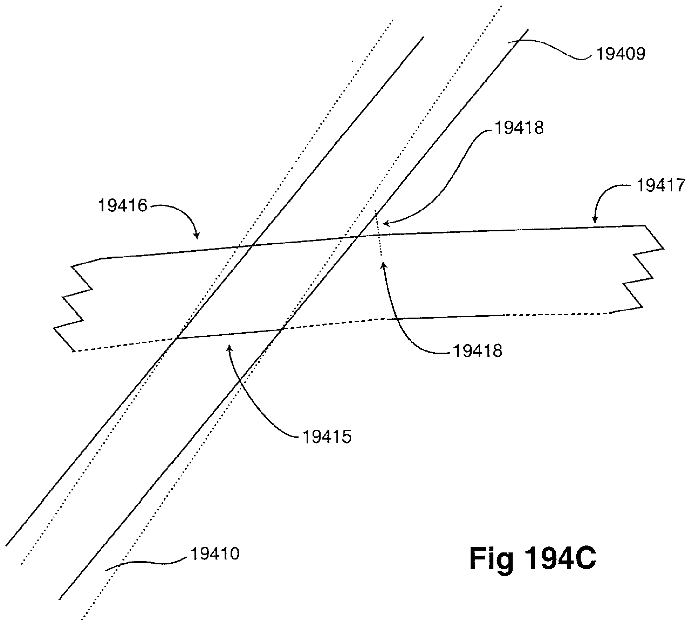

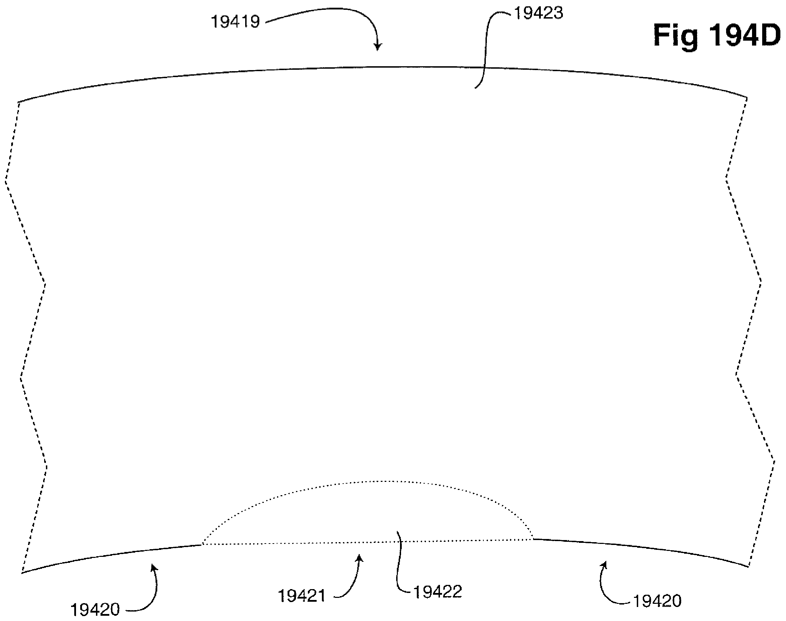

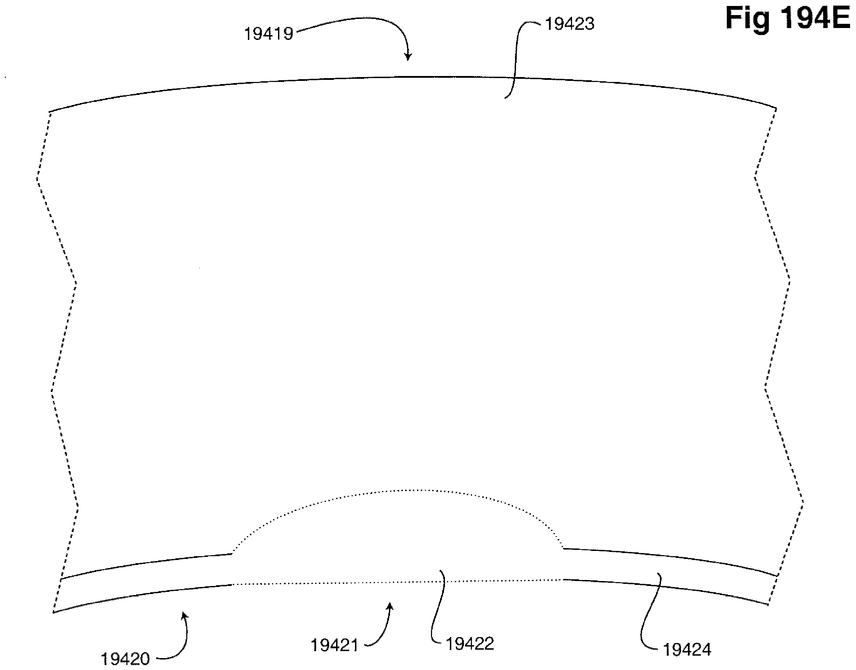

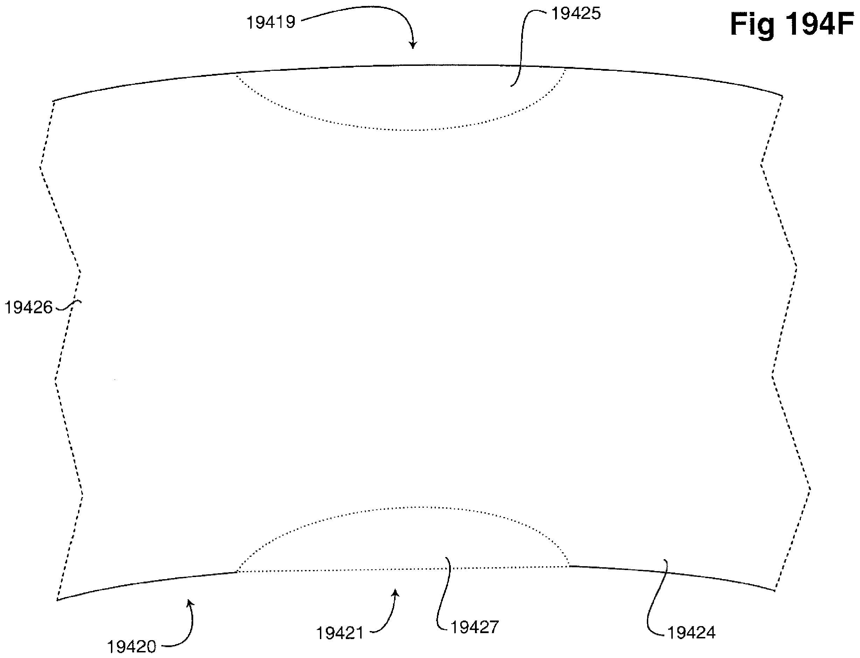

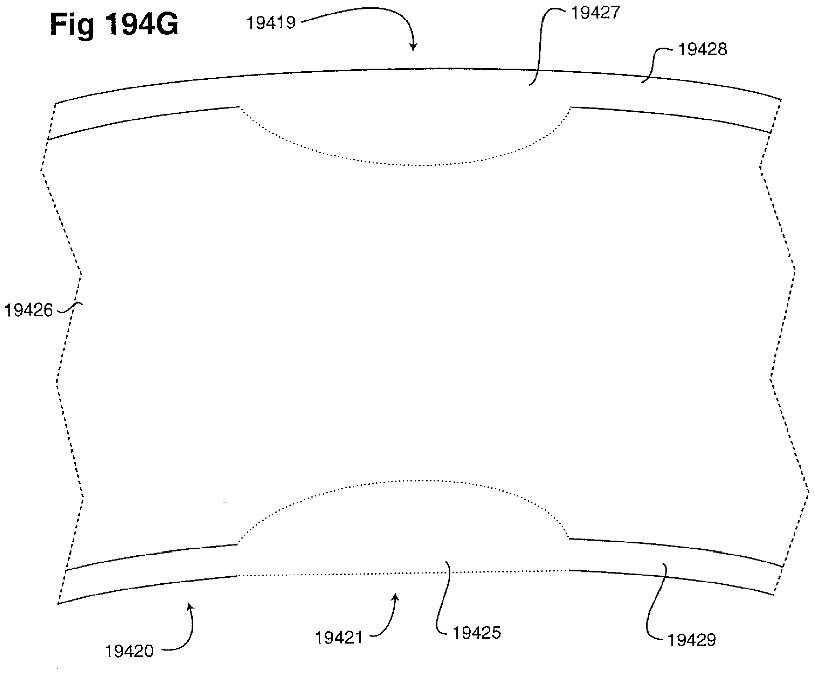

An aspect, presented in Figures 139-142, relates to a variation on the exemplary embodiment of Figures 136-138 in which multiple beams occupy similar spatial positions. The concept is introduced by a schematic in Figure 139 and then examples are given for RGB and more general combinations in Figures 140-141, respectively. A corresponding schematic view is presented in Figure 142.

A further aspect, presented in Figures 143-145, allows in effect "painting pixels on the retina with a multi-pixel brush." Figure 143 provides several example optical schematics related to the approach and Figure 144 shows examples of patterns on the retina. Finally, Figure 145 indicates the approach to steering taken by some example embodiments.

In one exemplary combined embodiment, the approach described with reference to Figures 136-138 would be used for the so-called "peripheral" pixels and that described with dereference to Figure 143-145 would be used for the higher-resolution so-called "foveal" pixels.

A still further aspect, described with reference to Figure 146-148, includes a light source array that in effect provides cones of light that impinge on the front optic elements at a range of distances and are steered to the front optic by a single large galvo.

Turning now to Figure 136, an optical schematic of an exemplary light delivery mechanism using a spatial light multiplexer is shown in accordance with the teachings of the present invention. The schematic view will be seen to start with the laser 13601 in the upper right. The laser 13601, or whatever source, will be assumed to produce the three or more colors of light needed for full color if desired, such as by combining separate LEDs or lasers through a beam splitter not shown for clarity or by a tunable laser or LED. The next step in the schematic sequence is a so-called "beam spreader," 13602 such as are well known and sometimes formed by in effect operating a telescope in reverse. The spread beam illuminates the surface of the so-called "spatial light modulator" 13603 (what will be referred to here as an "SLM"), which may for instance be of the so-called "LCOS" type or more desirably the currently much faster ferroelectric type SLM such as those produced by Display Tech of Longmont, Colorado.

Three example principal rays are shown, corresponding to the central zone (zone five in row major order). Each one is launched from the center of a pixel on the modulator 13603. Each of these central rays, in the example, defines a corresponding collimated beam. Each central ray impinges on a corresponding fixed passive mirror in the passive mirror array 13604 shown. These mirrors are each tilted so that they launch the beam incident on them onto the center of the small galvo steerable mirror 13605 shown next in the schematic sequence. The motion pattern of the small galvo cooperates with that of the large galvo 13606 to keep the beams incident on the front-optic mirrors to be described. Each ray is shown impinging on the large galvo 13606 at a different point as they reflect from the small galvo 13605 at different angles. Accordingly, the beams land on the center mirror of each set of nine mirrors 13607 of the front optic. The mirrors are shown, in the example configuration, grouped by the parallelogram 13608 grouping shape that typically would not actually be physically present on the front optic. These mirrors of zone five send the beams to the center of the pupil when the eye 13609 is looking straight ahead.

Turning to Figure 137, an optical schematic of an exemplary light delivery mechanism using a spatial light multiplexer 13603, like that shown in Figure 136 but for different example rays, is shown in accordance with the teachings of the present invention. The schematic is substantially the same as that already described with reference to Figure 136 except that the principal rays shown are for zone one and correspond to the eye 13609 in an upper left position. The rays up to the point of the small galvo 13605 are, as will be appreciated, the same for each zone and thus allow every pixel of the SLM 13603 to be used for each zone. The pattern is shifted slightly on the large galvo mirror 13606 and/or angled differently, however, causing it to be incident on the front optic mirrors 13607 of zone one.

Turning now to Figure 138, an example embodiment of the schematic already described with reference to Figure 136 and Figure 137 is shown in horizontal cross section. The light is sourced from the laser 13601 and spread by the beam spreader 13602 to illuminate the SLM 13603. The beam from each pixel of the SLM 13603 is incident on its own reflector of the passive mirror array 13604, which is tilted to send it to the center of the small galvo 13605. As will be appreciated, in the example mentioned above, there are only a few hundred pixels on the modulator and corresponding passive mirrors in the array, but there are substantially nine times more mirrors on the example front optic. Thus, the small galvo 13605, in combination with the large galvo 13606, selects the zone to be used by a slight offset.

Two example zone ray collections in the plane of the section are shown in this example for in effect the same beams (with optionally different modulated intensity) incident on the passive mirror array 13604: one is for zone five 13801, the middle zone, and the other is for the zone six 13802 off to its right. Each zone ray collection is shown incident on the eye 13609 at its respective center point. It will be understood that the angular distance between the zones is assumed fixed, not the linear distance. Alternatively, however, additional small galvos can be introduced to handle each "grouping" of front-optic elements with suitably close angular distance.

Turning now to Figure 139, a schematic view of an exemplary combining passive mirror array 13901 in accordance with the teachings of the present invention is presented. The schematic is similar to that already described with reference to Figure 136, however, it will be seen that four example locations on the passive mirror array combine their outputs to produce what appears to be a single beam or substantially a single or slightly offset overlay of beams 13902, whether combined at the same time or at distinct times. Thus, the output is shown as substantially a single principal ray reflecting from a zone five surface on the front optic and entering the pupil of an eye in central or "zone 5 position."

Turning to Figure 140, a combined sectional and schematic view of an exemplary passive combining mirror structure for combining different colors of light is shown in accordance with the teachings of the present invention. A series of beam splitters is in effect created to combine the beams 14001, as will be understood generally, and in this example aimed at combining colors that are modulated by different portions of the spatial light modulator structure. In this exemplary embodiment of the concept illustrated three beams of light are shown impinging on the passive reflector structure 14002 from the SLM. Each beam can thus be modulated separately by the SLM. The beams are combined, by a prism structure shown 14003, into in effect a single beam. Thus, three pixels of the SLM are used, each modulating a separate one of the red, green, or blue color components (or whatever set and cardinality is used for whatever color gamut) and the combined beam output 14004 includes the combined full color.

Turning now to Figure 141, a combined sectional and schematic view of an exemplary passive beam combining structure 14103 is shown in accordance with the teachings of the present invention. Multiple beams 14101 are shown entering the passive prism beam combiner structure 14102. In this example configuration, each coated surface 14103 may be angled somewhat differently. Also, as will be appreciated, each beam may impinge on the coated surface at what is in effect a different position relative to the central axis of the structure, as indicated by the "beam boundaries" 14104 shown relative to the section for clarity, thereby changing the effective point of origin of the beam. Only changing the angle, keeping the central rays intersecting on the surface, is believed to yield only an angular change and relates to the example considered more specifically with reference to Figure 145 as will be described. Changing both the angle and the intersection point (principal rays meeting, if at all, off the coated surface), is believed to allow the beams to result in nearby if not adjacent pixels on the retina. The passive mirror array, already described with reference to Figures 137-138, is in the example schematic of Figure 139 in effect adapted to combine beams 14105 into substantially the same space. In the particular example shown, a single transparent combiner structure uses coated surfaces to reflect the beams incident from the SLM along substantially the same output axis. It will be appreciated, however, that other configurations of combining prisms, such as a tree structure where two already combined beams are themselves combined, is also an example type of structure included within the scope here but not shown for clarity.

Turning now to Figure 142, a combined sectional and schematic view of an exemplary overall system including passive beam combining structure is shown in accordance with the teachings of the present invention. The figure shows as an example combining four beams, but can also be considered an example of the RGB combining (such as with four "primary" colors) as already described with reference to Figure 140 or more general combining as already described with reference to Figure 141. The arrangement of the sectional view is similar to that already describe with reference to Figure 138, except that the passive mirror array 13604 is differently configured and only two of its output beams are shown as examples (though, as will be appreciated, two separate instances related to galvo positions are shown). The principal rays of the eight beams when leaving the spatial light modulator 13603 are shown substantially parallel and uniformly spaced. Four of the beams impinge in the example upon one prism combiner sequence and the other four adjacent beams impinge on the other combiner structure.

The result from the passive mirror array is shown for clarity here as substantially two beams. It may for instance in some examples as will be appreciated in fact be eight beams with slightly different angles and at least two effective launch points or two full color beams. The output will be regarded, however, as two beams here for purposes of considering how they interact with the front optic and reach the pupil. As will be seen, in one configuration of the galvos the beams are oriented to impinge on the center of zone five and in another configuration of the galvos on the center of zone six. The solid (non-dotted) lines indicate zone five and the dotted lines zone six. The two example front optic regions used can be seen to be nearby each other as suggested by the nearby status of the beams leaving the passive mirror array.

Turning now to Figure 143, schematic views of exemplary vibrated element sources are shown in accordance with the teachings of the present invention. An example approach is shown to increasing the number of pixels rendered on the pupil when the scanning of the large galvo is too slow to allow the desired number of scan lines to be written directly. The small galvo is what will here be called "vibrated," or moved substantially rapidly, so that a pattern of pixels is drawn along the higher-speed path induced by the vibration. The pattern of pixels from one such higher-speed path is then repeated at each interval along the slower-speed path of the large galvo scan. Examples of such patterns on the retina will be described with reference to Figure 144. Figure 143 shows some non-exhaustive example configurations for generating such patterns.

Referring now to Figure 143A, an example without small galvos is shown. The source 14301, which may in this example radiate a cone of light, is shown on the left. The light leaving it impinges on the large galvo14303, which moves in a scan pattern, such as horizontal fast and vertical slow. A particular reflective element on the front optic 14304 acts as an aperture stop and allows part of the light to impinge on the retina of the eye 14305, where it is believed that substantially a spot results. As the large galvo 14303 moves, the effective position of the source 14301 is scanned through space and results in the corresponding pixels being rendered on the retina. The optional selective shutter 14302, such as a reflective LCOS or a transmissive LCD shutter is controlled so as to limit the portions of the front optic 14304 onto which the light from the source impinges. This shutter 14302 may optionally be combined before the large galvo 14303, after the large galvo 14303, or even be integrated as part of the large galvo 14303, as will be understood. In this example a resonant structure, not shown for clarity, can optionally be added, such as by a crystal that bends the light through it or by attaching a resonant surface to the large galvo 14303.

Referring to Figure 143B, a resonant galvo 14306 is shown taking light from whatever source, such as an LED or part of a SLM, and sending it on to the larger scanning galvo 14303, where it continues on as in the other examples. A resonant galvo 14306 preferably vibrates or resonates at a speed substantially higher than the larger galvo 14303 can conveniently be moved, so as to allow for the distribution of additional points on the retina along the slow scans, as has been mentioned and will be illustrated further with reference to Figure 144. It is well known that small galvos can have resonant frequencies in the tens of kilohertz, which may be suitable in some embodiments of the inventive concepts described here. The motion in resonance is small compared to the scan line to achieve the example pattern type to be described. It will be appreciated that this embodiment does not in the example described for clarity correct the origin point but rather varies the angle of origin through the resonance. This is in contrast to the example to be described with reference to Figure 143C. In some examples of this configuration the small galvo performs the steering functions that it performs in embodiments without the vibration and at the same time also vibrates. In other examples, the small gavlo is supported on a vibrating structure or includes a vibrating structure along with its other components.

Referring now to Figure 143C, an exemplary embodiment comprising two vibrating elements 14306 is shown. Light from whatever source impinges on a first vibrating element 14306, shown in the example as a small galvo, and is then substantially launched at a rapidly changing angle (or with another parameter, such as polarization, varying rapidly) towards the second vibrating element 14306, which launches the light from a substantially varying position and with a substantially varying angle. In one example, the two galvos 14306 vibrate in a cooperating manner substantially similar to that of two galvos controlled directly to keep the beam incident on the center of the front-optic mirror and yet vary its point of origin, as has been disclosed in other sections of this document. More generally, the vibratory structures cooperate or are coordinated such that the launched angle and position combination of the resulting beam is such that it can substantially be reflected by a beam-width structure in the front optic or enter the pupil through a limited if not beam-width aperture or some compromise between these as described later. In the particular example illustrated, the resulting beam is moved slowly in effective origin position by being reflected by the large galvo shown.

Referring finally to Figure 143D, a combination of a vibrating structure and a small galvo 14307 to steer the resulting beam towards the large galvo 14303 and ultimately to the front optic 14304 is shown.

Turning to Figure 144, an exemplary plan view of pixels on the retina related to vibratory structures is shown in accordance with the teachings of the present invention. Increasing the number of pixels effectively rendered on the retina for a given large galvo speed and pattern is believed achievable by in effect vibrating one or more elements as has been mentioned and its effect on the image on the retina shown here.

In the first example, Figure 144A, the pattern on the retina is created by spots that are included on a sine wave pattern superimposed on the scanning pattern, as will be understood by those of skill in the art with reference to the drawing. In particular, it will be seen that the vibration causes the effective scan line to be wavy and thus have increased length, allowing for more dots to be placed without dots substantially overlapping and resulting in more pixels 14401 on the retina. The dots are intended to indicate substantially the center of a spot. Six scan lines are shown, each comprised of about twenty sinusoidal waves comprising about eight spots each, yielding a substantially square pattern on the retina. Some sinusoidal nodes 14403 are called out for clarity and the central scan lines 14402 are shown as well.

Referring now to Figure 144B, an alternate pattern is generated where the sine wave is oriented angularly and so that the spots can be rendered on a substantially vertical segment of each three-hundred-sixty degree full cycle. Thus, the individual pixels on the retina can be substantially in a rectilinear pattern because of the way the combined trajectory 14404 includes substantially vertical segments. One advantage of such an approach is that the pixel locations 14405 are close to the rectangular arrangement, and even the square pixel aspect ratio, currently in use.

Turning now to Figure 145, combination schematic and sectional view of exemplary vibrated-element overall configurations are shown in accordance with the teachings of the present invention. Figure 145A shows the principal rays 14501 and is partly overlapped on the same drawing sheet for ease in reading, as will be appreciated, with Figure 145B that shows the corresponding beams 14502. The small difference in angle of the principal rays can be seen to propagate through the mirrors 14503 in Figure 145A. It will be seen that already at the point of the front optic 14504 the principal rays are too far apart to be incident on the 0.5 mm passive mirror located there in the example. Nevertheless, as will be readily appreciated in view of Figure 145B the substantially wider beams can impinge on the smaller mirror and thus result in beams of appropriate diameter directed at the pupil of the eye. The beams arriving at the pupil will, it is believed, have diverged and spread to an extent that still allows them to enter the pupil.

Turning now to Figure 146, a schematic view of an exemplary steered array source in accordance with the teachings of the present invention is presented. The source array 14601 can be any suitable means of generating the light, in the example shown as pixel source regions on a plane and oriented substantially perpendicular to a plane. One example is an array of light emitting devices, such as OLEDs or whatever other technology. Another example arrangement, as would be readily understood, is a transmissive array that is lighted from the back. A further example arrangement is a reflective array, such as a typical LCOS, preferably using ferroelectric material, such as those sold by Boulder Non-Linear Systems. The light impinges on the large galvo 14602 that directs it successively, in operation to the various front optic elements 14603, preferably visiting each once per frame, such as twenty-four to one hundred times per second. The order may optionally be varied from frame to frame for an improved viewing experience for a given speed. The power remaining in the light wavefront impinging on more distant elements is reduced, due to divergence, and this effect is preferably compensated for to produce the perception of a more uniform image. After leaving the front optic 14603, the light enters the pupil of the eye 14604.

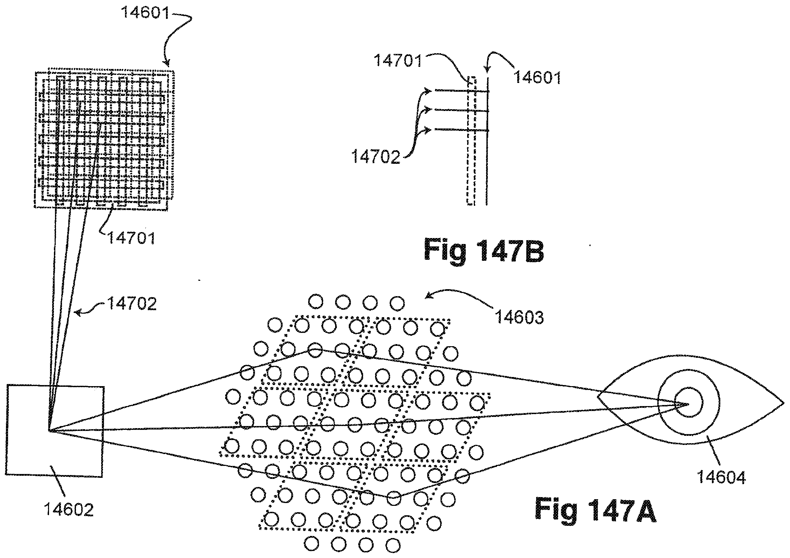

Turning now to Figure 147, a schematic view of an exemplary steered array source with aperture in accordance with the teachings of the present invention is presented. The schematic plan view of Figure 147A indicates the aperture array 14701 imposed in such a way that it blocks light with too much angle deviation from the normal. In one example, it is an opaque structure placed in front of an emissive array. In another example, it is located behind the modulating array in a transmissive arrangement. One advantage of such an arrangement is believed to be the reduction of stray light, for example light that would impinge on front-optic elements other than the one steered to at a particular time or more generally preventing unnecessary scatter of light. Referring to Figure 147B, a side view section is inset for clarity. It indicates an arrangement where the light leaving the array 14601 passes through the aperture array, as indicated by the example rays 14702 aimed at the galvo 14602.

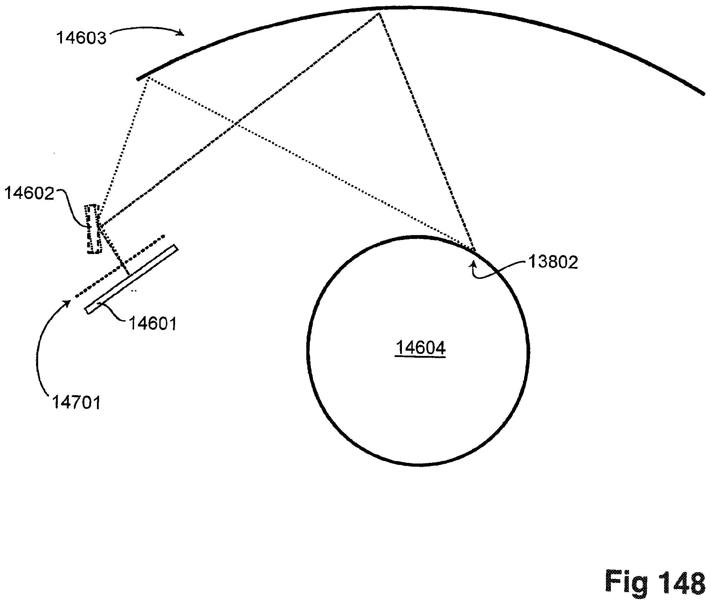

Turning now to Figure 148, combination schematic and sectional view of a direct source configuration with optional aperture is shown in accordance with the teachings of the present invention. The light source array 14601, as already described with reference to Figure 146 is show launching light at the large galvo 14602. In one configuration of the large galvo 14602, it reflects the light to near the center of the front optic 14603; rotated slightly counter-clockwise, it sends the light towards the near corner of the front optic 14603. Both reflections impinge on substantially the center of zone six 13802.

As will be appreciated, but now shown for clarity, the effective cone of light from each pixel on the light source array diverges 14601. In the example embodiment shown, when the cone reaches the center of the front optic, it has a wider spread than when it reaches the shorter distance to the near corner. Accordingly, the cone is cropped more by the one front optic element, when it is the same size, as by the other. This difference in illumination is compensated for in the driving of the source array.

In another set of examples, presented for concreteness and clarity in exposition, the front optic mirrors or dichroics may be on the order of 1 mm in diameter and center-to-center spacing on the front optic on the order of 2.5 mm. As another concrete example, pixels of the light source may be on the order of 0.01 or 0.02 mm (10 or 20 microns). For efficiency, a nearly collimated beam might be used to generate the light from a spatial modulator, so that the cones are not too divergent.

Many variations and extensions will be understood to be possible in keeping with the spirit of the invention and inventive concepts disclosed, for example:

In general, related to all the front-optic mirror or diffractive structure schemes contemplated here and in the other sections of this document, it will be understood that the front-optic structure may in some variations be such that the beams impinge on it in essentially a single point per structure or, in other examples, over a range of central positions so that the beams enter the pupil with their central ray at a central point relative to the pupil. More generally, the point at which the beams converge may be anywhere between the front optic and the pupil (or even between the pupil and the retina). It will further be appreciated that some clipping may be allowed either by the front optic element or by the pupil.

In other example variations, instead of a beam spreader, as described such as with reference to Figure 136, one or more conical beam sources, such as LEDs or the like are used. The geometry of the passive mirror array, if used, is adapted accordingly. When an array of such sources is present, they can be used to create images that are then allowed through to one front optic at a time by the SLM. For peripheral locations on the retina, a single source (whether one or more LEDs) can uniformly supply light, with downstream modulation by the SLM, to all the corresponding points on the front optic; but for higher-resolution portions of the image, the array of sources can be modulated to create the image and this is allowed through just one of the SLM pixels to the corresponding position on the front optic. Thus, time is divided between in effect "broadcast a single pixel at a time to all the peripheral points" and "monopolization of the time slot for a particular front optic element related to the foveal or macular region." As another example, a somewhat sparse array adequate for low resolution is flashed for each peripheral location, but that pattern is flashed in a set of staggered slight shifts so that an array of pixels results that includes a number of pixels equal to the base number of pixels times the number of flashes. The density of the overall resulting rectangular array of flash points can be adjusted by the offset shift amounts, providing a degree of freedom or two that can aid in the tiling of the images on the retina. Blurring of the peripheral pixels may be provided, for instance, by alternate source LEDs or a liquid crystal.

POWER CONNECTION

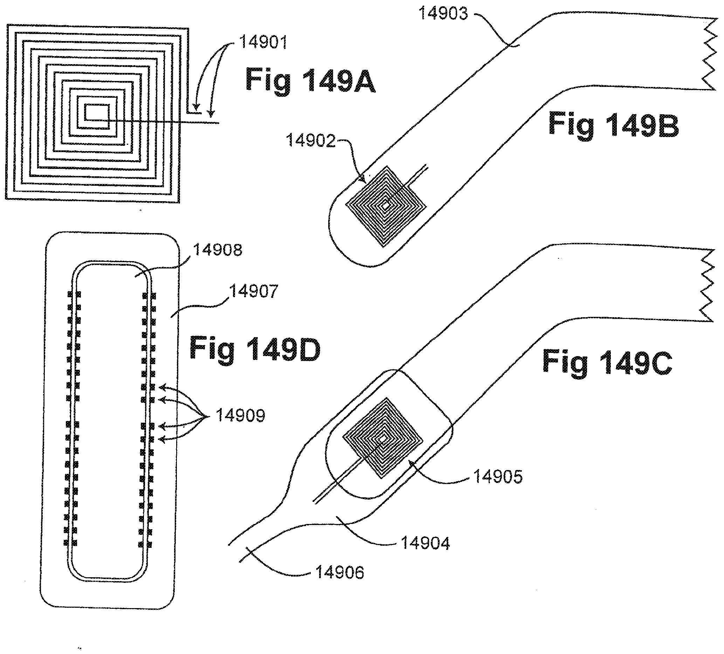

Referring now to Figure 149A, an example of an inductive coil coupling means 14901 is shown for clarity and concreteness. Such coils are able to transfer power and high-speed data, such as is known in the art, for instance as disclosed by K. Chandrasekar et al in "Inductively Coupled Board-to-Board Connectors," Electronic Components and Technology Conference, 2005. Such coils can in some examples be "printed," such as by etching away conductive areas on a substrate. Capacitive coupling is also known and potentially used here, but is not shown for clarity.

Referring to Figure 149B, an inductive coupling 14902 embedded in eyeglasses frame, such as substantially near the end of the sidearm earpiece 14903 is shown. Example ways to fabricate such a structure include forming the coil structure by known means and then adhering, laminating or potting it into the sidearm. Again, capacitive structures not shown for clarity are applicable separately or in addition to inductive structures.

Referring to Figure 149C, an example mating lanyard end boot 14904 is shown fit over the sidearm end. A suitable coil structure 14905 is formed within the preferably substantially deformable boot. The boot is shown fit over the end of the sidearm earpiece, presumably so that it is held in place by the elasticity of the material it is made from (and/or the material the sidearm earpiece is made from). The lanyard 14906 exits from the end boot. Again, capacitive structures are applicable but not shown for clarity.

Referring to Figure 149D, a section through an exemplary inductive coupling boot 14907 surrounding a side arm 14908 is shown. The earpiece can be seen surrounded by the lanyard end boot and the cross-sections of the coils 14909, such as printed coils, can be seen arranged substantially near each other.

DIFFRACTION GRATINGS

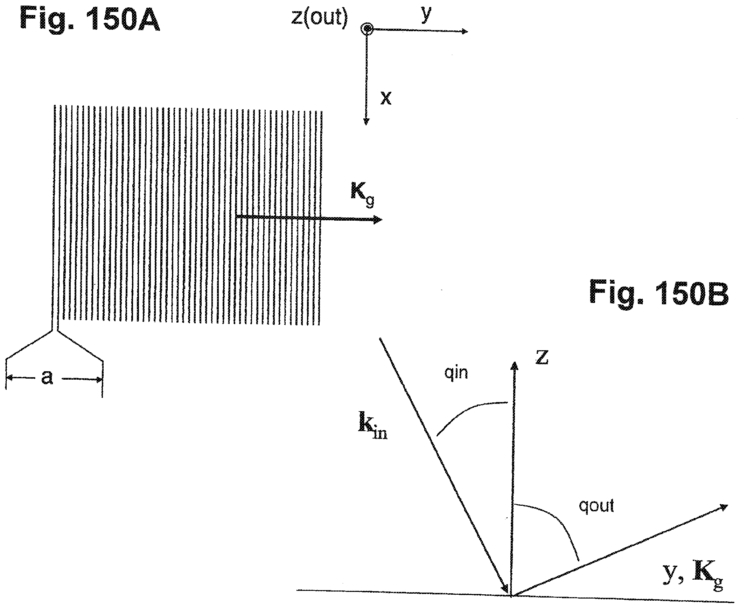

Turning now to Figure 150, a schematic view of an exemplary surface diffractive grating element is shown for the purpose of characterizing such known types of structures and describing how they can be designed generally. The diffractive grating element defines a substantially planar surface assumed in this example to lie in the xy-plane. The diffractive grating element can be characterized by a complex surface having a periodic spatial variation, complex reflectivity denoting reflectivity that includes both amplitude and phase of the reflected light.

The surface normal vector of the diffractive grating element in this example is parallel to the z-axis. In a more general case the diffractive grating element surface can be curved, in which case the grating normal is position-dependent and is defined locally relative to a plane tangent to the surface of the diffractive grating element.

The reflectivity can vary periodically in amplitude, phase, or both as a function of position on the diffractive grating element surface. As shown in the exemplary diffractive grating element of Figure 150A, reflectivity is substantially invariant with respect to translation parallel to the x-axis and exhibits periodic variation with respect to translation along the y-axis. Regions of constant reflectivity are referred to as diffractive contours, which in the example of Figure 150 are substantially straight lines substantially parallel to the x-axis. The orientation of the diffractive contours in Figure 150 and the reference axes are chosen for expositional convenience only. As described further below, diffractive contours can be straight or can follow curvilinear paths. They can be continuous or they can be dashed, segmented, or otherwise partially written to control overall effective contour reflectivity, to enable overlay of multiple diffractive grating element structures, or for other reasons.

The diffractive grating element can be characterized by a wavevector Kg which lies in the plane of the diffractive grating element and is oriented perpendicular to the diffractive contours. The magnitude of Kg is 1/a, where a is the spacing between diffractive contours measured along a mutual normal direction. In diffractive grating elements more complex than the example shown, having curved or variably spaced diffractive contours, the wavevector can be defined locally for small regions over which contour spacing and orientation is relatively constant.

Monochromatic light having wavelength L, incident on the diffractive grating element from some direction, can be assigned a wavevector kin oriented along a direction normal to its wavefront. In the language of geometrical optics, kin is parallel to the ray representing the input light. The wavevector kin has the magnitude 1/L. When the input light has a range of spectral components, wavevectors having a corresponding range of magnitudes can represent the various spectral components. When the input light has a spatially varying wavefront, the wavevector can be defined locally for small regions over which the wavevector is relatively constant.

The case where the wavevector Kg of the grating, the wavevector kin of the incident beam, and the surface normal N are substantially coplanar (i.e., when Kg lies in the plane of incidence) is schematically depicted in Figure 150B. In that case the diffractive grating element properties, input and output directions, and the wavelength are related according to the grating equation:

$$m \times L / a = \sin(qin) - \sin(qout),$$

where m can be any integer (including zero) that provides a real solution for the output angle, L is the wavelength, a is the center-to-center spacing of the periodic features in the grating, qin is the incident angle, and qout is the exiting angle. Both qin and qout are formed with respect to a surface normal. The output angle is defined to be positive when on the opposite side of the surface normal relative to the input angle.

In more general cases, when the wavevector Kg does not lie in the plane of incidence, the output wavevector can be determined by decomposing the input wavevector into components parallel to and perpendicular to the plane of the diffractive grating element. Those components are denoted as the vector quantity kpin and the scalar quantity kzin, respectively. Analogous components for the output wavevector are the vector quantity kpout that the scalar quantity kzout, respectively. The values permitted for those quantities are given by the diffractive equations:

$$kpout = kpin + m \times Kg \text{ (all but m are vector quantities)},$$

and

$$kzout^2 = |kpin|^2 + |kpout|^2 \text{ (all but kzout are vector quantities)},$$

where m is any integer including zero that results in a real value for kzout.

The diffractive grating elements of the embodiments may be designed using the following approach based on ray optics and the above-specified diffraction equation. First, trajectories of the rays incident on the diffractive grating element and the rays diffracted at each point of the diffractive grating element (on a certain convenient grid) are defined in accordance with the desired functionality. Then diffractive equations above are used at each point of the grid to calculate local k-vector of the diffractive element. The local k-vector defines the orientation and the value of the local period of the diffractive element as mentioned at each point of the grid. Thus, the configuration of the diffractive contours of the entire diffractive element may be defined. The approach is viable for designing diffractive grating structures for beam transformation in both one and two dimensions.

Another exemplary approach to designing diffractive grating elements is to use a holographic design approach based on computed interference between simulated optical signals, as disclosed in U.S. Patent Application Serial Number 11/376,714, entitled "Etched surface gratings fabricated using computer interference between simulated optical signals and reduction lithography", filed on March 14, 2006 by Thomas W. Mossberg, Dmitri Iazikov and Christoph M. Greiner. While the above mentioned application refers to photoreduction lithography as the preferred fabrication method, other methods including e-beam writing, diamond turning, mechanical ruling with ruling engine, holographic exposure, maskless photolithography and writing with a laserwriter, followed where appropriate by resist development and etch, may be used.

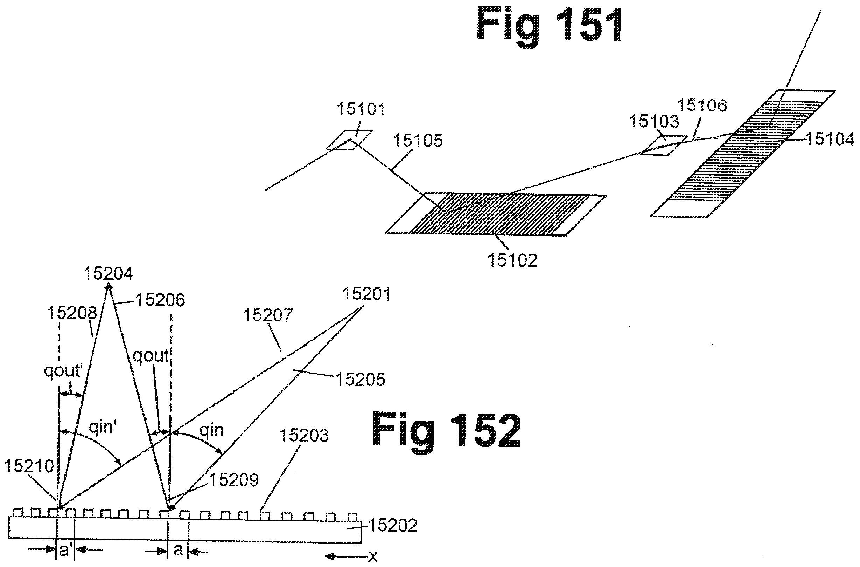

Turning now to Figure 151, a diffractive element and mirror assembly is shown in a projective view that changes divergence in one dimension in accordance with the teachings of the present invention. Two diffractive grating elements 15102 and 15104 are oriented perpendicularly to . each other with independently adjusted galvo steering mirrors 15101 and 15103 and may change divergence of the light beam in two dimensions, controlling for instance focus and astigmatic properties of the light beam. Mirror 15101 is oriented in such a way that beam 15105 is perpendicular to the straight diffraction contours of diffractive grating structure 15102. Similarly, mirror 15103 is oriented in such a way that beam 15106 is perpendicular to the straight diffraction contours of diffractive grating structure 15104. In this example, a single direction is scanned by the galvo mirror. It will be appreciated that the design techniques described with reference to Figure 150 are an example of procedures suitable for arriving at such diffractives, as would be understood.

Referring to Figure 152, an exemplary known straight line diffractive is shown in section. The desired paths of the rays originate from a point source 15201, diffract on the diffractive element 15202 shown in cross-section and composed of straight line diffractive contours 15203 parallel to each other and having a period a that may have different value along the direction of x-axis, and after the diffraction converge at a single image point 15204.

For a ray 15205 incident on the diffractive element 15202 at an angle qin and diffracted into ray 15206 at an angle qout, the diffraction equation defining the period a of the diffractive grating element at the point 15209, where ray 15206 is incident on the diffractive grating element is identical to the grating equation presented above.

For a different ray 15207 incident on the diffractive element 15202 at an angle qin' and diffracted into ray 15208 at an angle qout', the diffraction equation defining the period a' of the diffractive element at the point 15210 where ray 15207 is incident on the diffractive grating element is identical to the grating equation presented above, with the three primed quantities qin', qout' and a' replacing the unprimed quantities qin, qout and a.

The local center-to-center spacing a may be determined for each point along the x-direction, thus defining the diffractive grating element. For convenience of design and simulation, such dependence may be approximated by a polynomial.

Said diffractive element has the following property useful for the embodiments described herein. If a beam with certain divergence (for example, a collimated beam) is originated from point 15201 and directed at a certain angle to the surface of the diffractive element 15202, it will be directed to point 15204. If the size of the beam on the diffractive element 15202 is less than the area of the diffractive along axis x, the divergence of the diffracted beam will depend on its position on the diffractive element 15202 along axis x. Thus the divergence properties of the beam may be controlled by pointing it to different areas of the diffraction element and as long as it originates from point 15201, it will be directed to point 15204, where a subsequent directing mirror may be placed.

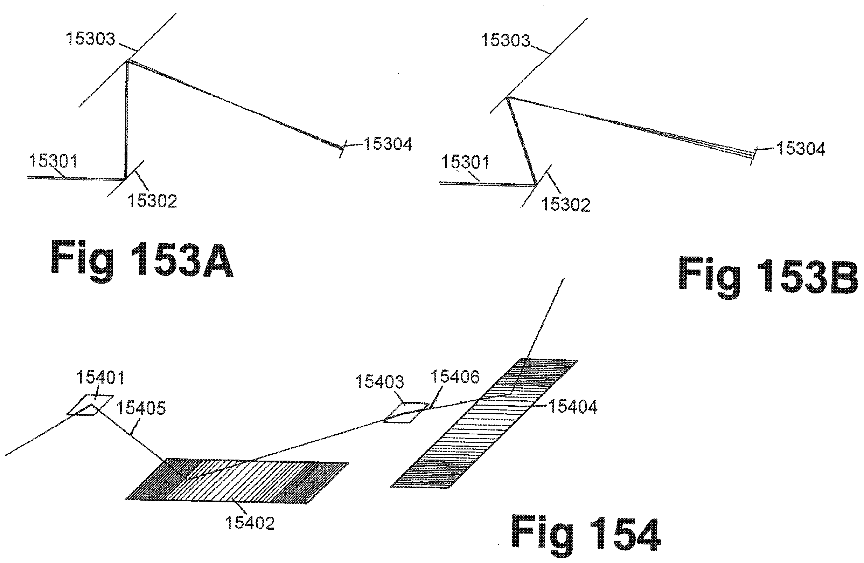

Turning to Figure 153, actual simulations of the diffractive approach described with respect to Figure 151 and Figure 152 are shown. The simulation was run using optical design software Code V version 9.8, by ORA of Pasadena California.

In both Figure 153A and Figure 153B, collimated input beam 15301 is incident on steering galvo mirror 15302 and then on diffractive element 15303. Diffractive element 15203 was designed in accordance with the above approach and accordingly directs any beam originating from the center of mirror 15302 to the center of mirror 15304. In Figure 153A, the steering galvo mirror 15302 comprises the angle of 45 degrees with respect to the direction of the input beam as measured from the direction perpendicular to the surface of the mirror. In Figure 153B, that angle is changed to 35 degrees. The divergence properties of the diffracted beam are different, as will be appreciated from the separation in the ray trace shown. In general, the incident beam may not be collimated. Also useful may be a beam that is both divergent and convergent after diffraction on the diffractive element 15303. An example way to achieve this is by inserting a negative power in front of mirror 15302.

Turning now to Figure 154, shown in projection is an exemplary design for a beam-shaping system in accordance with the teachings of the present invention. Control of the cross-section of the beam shape that prepares it so that after diffraction from the front optic it preferably has a substantially circular shape. Moreover, the diameter is preferably adequate to achieve a small, and preferably a diffraction-limited, spot on the retina.

The example design, in accordance with the non-holographic diffractive design techniques already described, is composed of two diffractive elements 15402 and 15404 and two steering galvo mirrors 15401 and 15403. As in the case of the diffractive elements for astigmatism/focus control as already described with reference to Figures 150-153, each of the two diffractive grating elements has a separate galvo mirror to adjust beam size in perpendicular dimensions by pointing the beam into a particular section of the corresponding diffractive grating element. Note that mirror 15401 is oriented in such a way that beam 15405 is perpendicular to straight diffraction contours of diffractive grating structure 15402. Similarly, mirror 15403 is oriented so beam 15406 is perpendicular to the diffraction contours of grating 15404.

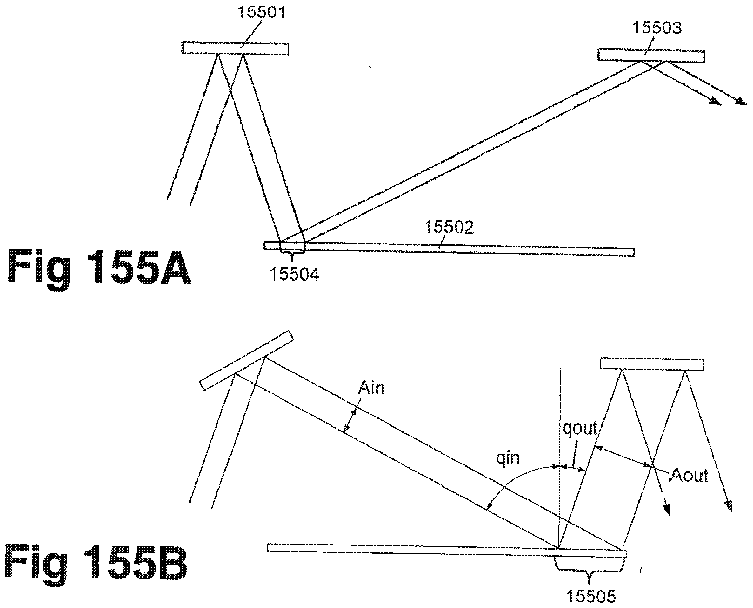

Turning finally to Figure 155, exemplary designs for the diffractive gratings of the beam-shaping system of Figure 154 are now described in accordance with the teachings of the invention. The diffractive grating element 15502 is divided into what will be called discrete "sections." Exemplary sections 15504 and 15505 are shown in Figures 155A and 155B, respectively. Each section has straight line parallel diffractive contours and these contours are shown perpendicular to the plane of the figure. Each section has a pitch calculated from the diffractive equation to direct the central ray of the input beam after it is reflected from the first galvo mirror 15501 into the center of the second galvo mirror 15503. Due to the difference in the angles of incidence and diffraction, the dimension of the beam in the plane perpendicular to the diffractive contour will change after diffracting on the segment. The difference in beam sizes may be calculated as

$$Aout / Ain = \cos (qin) / \cos (qout),$$

where Aout is the dimension of the diffracted beam, Ain is the dimension of the incident beam, qin is the incident angle, and qout is the exiting angle, as shown.

The size of the segment is preferably large enough to accommodate the size of the beam. The adjustment of the beam diameter is in discrete steps and effected by changes in the input angle made by galvo mirror 15501 so that the input beam is substantially fully incident on the corresponding segment. Figure 155A shows reduction in the beam dimensions after the diffraction while Figure 155B shows increase in the beam dimension.

It will be readily understood by those of skill in the art that the arrangements described generally here can be fabricated using volume holograms and that certain advantages and additional capabilities may result.

CONTROL SYSTEM

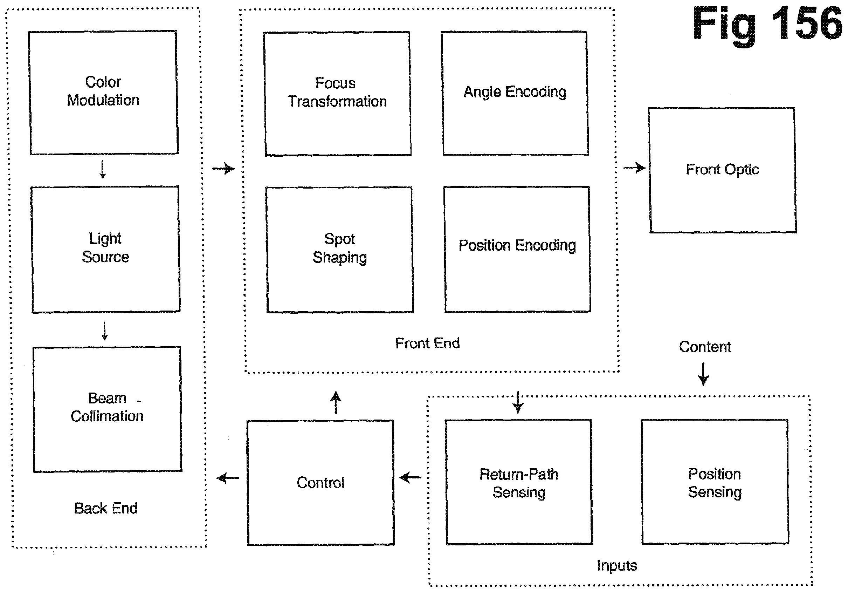

Turning now to Figure 156, a combination block, functional, schematic and flow, and optical path diagram of an overall exemplary embodiment in keeping with the spirit of the present invention is shown. The "Front Optic" receives light from the "Front End" combination that includes at least some of the four functions: "Focus Transformation," which optionally adapts to meet the focus needs of the viewer eye and/or the distance to the viewer eye from the front optic and optionally includes astigmatism correction; the "Angle Encoding," which through means such as angle, frequency, or polarization, influences the angle of the light emitted from the front optic towards the eye; "Spot Shaping," which influences the shape of the light incident on the front optic to a desired footprint; and "Position Encoding," which directs the light from the front end so that it arrives at the desired location on the front optic.

The light input to the front end originates from the "Back End." Three functions comprise the back end. The "Color Modulation" function, as is known from the display art, is preferably performed in the back end by powering the source. For instance LEDs are known to be emissive substantially linear in the current through them and are able to handle high bandwidth. The "Source" of light, such as from tunable or monochromatic sources, whether for instance lasers, high-radiance LEDs, edge emitting LEDs, surface emitting LEDs, or organic LEDs. The "Beam Collimation" function, preferably downstream from the source of light, is typically performed by conventional lenses or the like but may also include diffractive elements. In some examples, modulation can be downstream from the source, such as by active devices that absorb light or send it in a dead end direction. In some examples the output of the back end is three "beams" of collimated light that are collinear. In other examples, as mentioned, the three beams are not collinear and may optionally be non-parallel.

The "Inputs" section is comprised of three two functions. The first function is "Return-Path Sensing," which preferably receives light from a splitter located at about the interface between the back end and the front end. As mentioned, polarization optionally is used to allow scatter from the system itself to be discriminated from light reflected by the eye. Also, as mentioned, in some examples the sensor detects one or more aspects of the light it receives, such as the degree to which it is concentrated in a spot or spread out due to poor focus. The second function is "Position Sensing," which in some examples is informed by return-path sensing, is aimed at learning the geometry of what the viewer can see and where the front optic is positioned in that geometry. Examples for such sensing include cameras, motion sensors, communication with external devices, and the like, as mentioned elsewhere in more detail. An input to the inputs section, that is presumably not processed but passed through the inputs section, is the content to be displayed. In some examples, all or part of the content is generated locally in the device at some times.

The "Control" section takes its input from the input section. It controls the color modulation of the back end section. It obtains information from the sensing elements of the inputs section, optionally under experiments it controls. As a result of programming and calculation not shown for clarity, the control section also controls the angle and position encoding, along with the related spot shaping, depending on the eye position it has calculated and the focus shaping depending on the focus and astigmatism information it obtains from the input section.

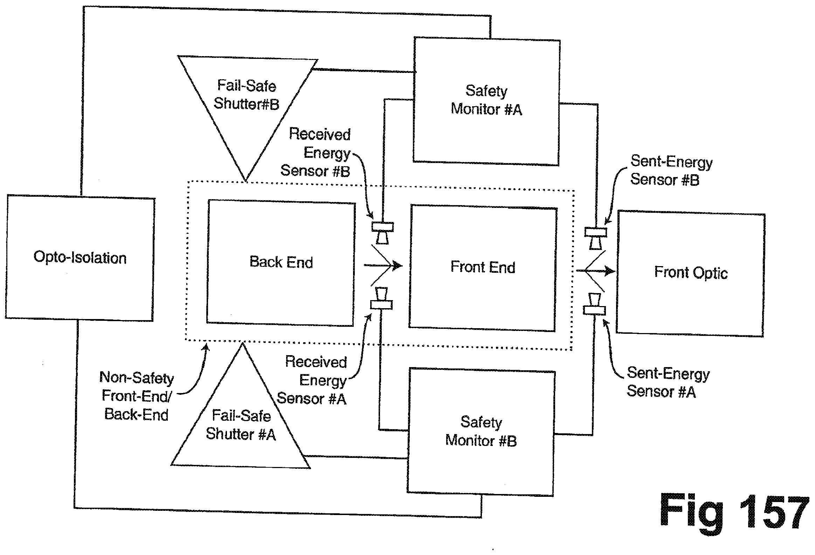

Turning now to Figure 157, a combination block, functional, schematic, flow, and optical path diagram of an exemplary safety system in keeping with the spirit of the present invention is shown. Two example substantially independent safety monitors, "Monitor #A" and "Monitor #B," are shown with connection through optional "Opto-Isolation." It will be appreciated that one, two or more such safety monitors may be desired depending on the application and other considerations. When there are more than one, then it is preferable that they are able to communicate and such communication is preferably isolated in some suitable manner so that at least for example the independence of failure modes is easier to verify.

A key aspect of a safety monitor system is that it is able to prevent light from damaging the eye of the viewer. To achieve this, such a system is comprised substantially of two functions, monitoring and shuttering. The "Fail-Safe Shutter" function is indicated as being applied to the "Non-Safety Front-End/Back-End" rectangle enclosing the "Back End" and "Front End" functions, already described. This is to depict that the failsafe structure preferably operates on one or both of these functions. Examples of failsafe shutters include, but without any limitation: MEMS mirrors that have a safe rest state and means to prevent their powering and being taken from the rest state; flip-flops or the like that hold power to the light sources unless they are reset; and LCD shutters that are interposed in the optical path that block the light and "trap" it when they are returned to their unpowered state.

A safety monitor includes among its inputs photo sensors of two general types. One type of such sensor, a "Sent Energy Sensor," is interposed between the front end and the front optic and receives light indicated by a beam splitter that is directed substantially at the front optic, thereby performing the more general function of measuring the light sent out by the system. A second type of such sensor, a "Returned Energy Sensor," is responsive to light returning through the light path that typically includes reflection from the retina, thereby performing the more general function of measuring light incident on the retina. An example is shown as interposed between the back and the front end and using a beam splitter configured so that it is responsive substantially to the light being returned.

The operation of an exemplary safety monitor will now be described. One or more conditions are preferably satisfied to prevent the monitor from pulling the enabling signal(s) from the fail-safe shutter. One such condition relates to the dynamic nature of relative sensor measurements. For example, the difference in the light sent and the light received should vary, due to the presence of blood vessels and the like, as a focused spot is scanned across the retina. The safety monitor computes, whether by analog or digital means, this difference from the sent energy sensor and the returned energy sensor and contains structure that allows it to make a determination as to whether there is sufficient variation to indicate that the spot is in fact being scanned. One example type of suitable structure is a filter, whether analog or digital, that passes energy at the expected frequency, and a threshold measuring structure, whether analog or digital, that assesses whether sufficient energy passes. Another example type of structure compares the difference waveform with stored information related to the reflectivity pattern of the particular eye, such as obtained from previous scans.

A second condition, satisfaction of which may keep the enabling signal(s) at the fail-safe shutter, relates to the level of energy being sent and/or the degree of focus of that energy. For instance, if the absolute level of energy as sensed by the sent energy sensor is below a threshold, or it is below a higher threshold related to a lack of focus measured by the returned energy sensor, then the signal remains enabled.

Two or more safety monitors preferably communicate to check each other's operation and to leverage each other's resources. As one example, if one safety monitor withdraws enabling for its fail-safe shutter, then it preferably communicates to the other safety monitor a request to do likewise. As another type of example, one monitor preferably at a random and unpredictable time, requests such withdrawal of support by another monitor and then checks that the request was honored and then informs the other monitor that it was only a test. In a further type of example, one monitor requests from the other a sample vector of values recently received by the other monitor from its sensors and then compares these to the sensor values it has received itself, withdrawing enablement if the differences exceed pre-established thresholds.

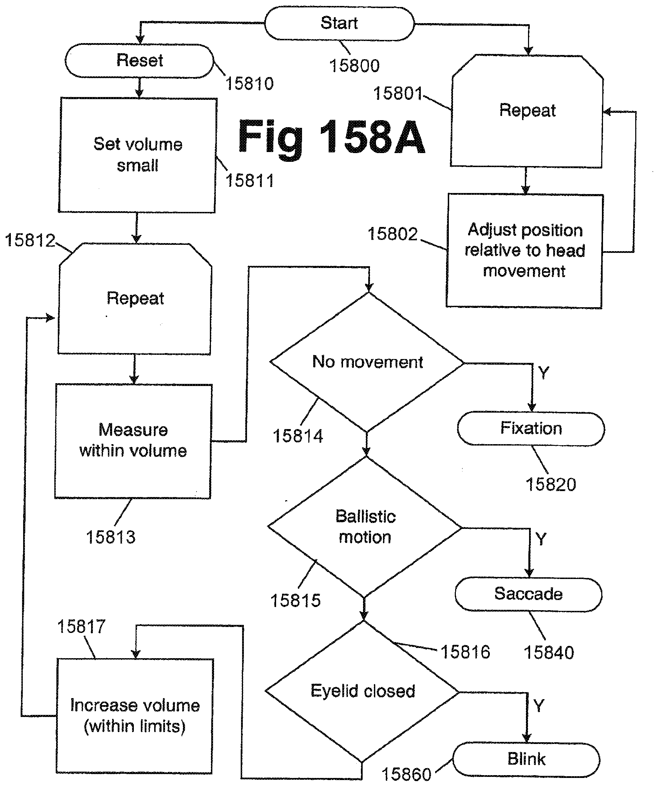

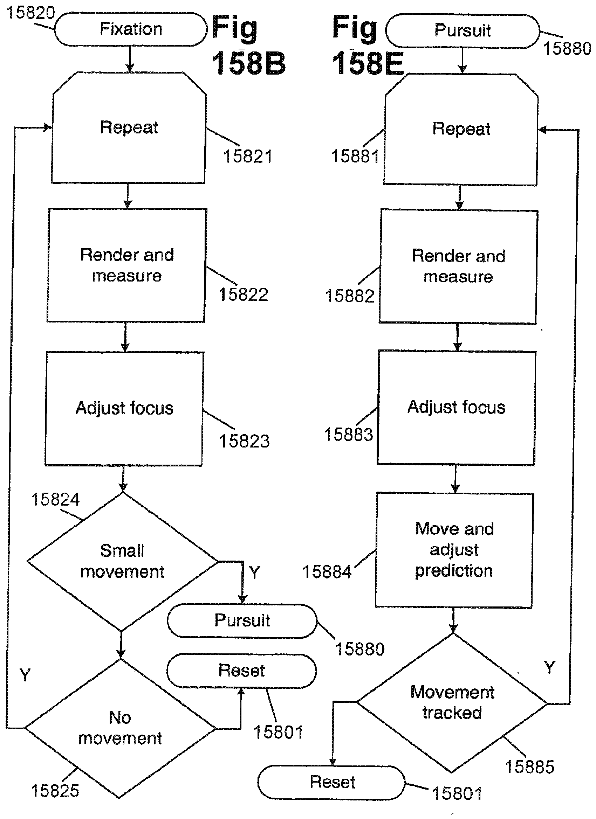

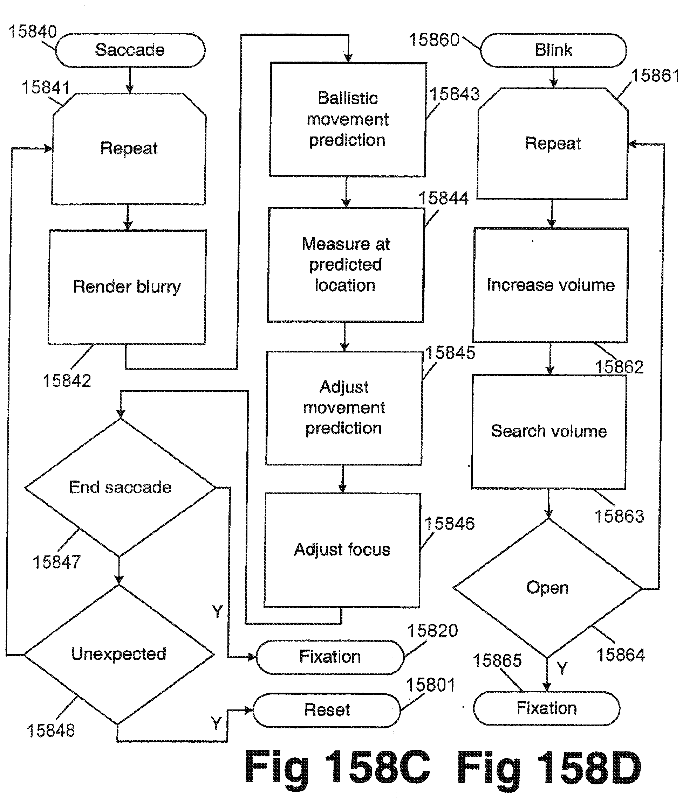

Turning now to Figure 158, a combination flow, block, functional, schematic, diagram of an overall system in keeping with the spirit of the present invention is shown. There are five parts, Figure 158A-E, the first of which is the initial part and the part that is returned to by the other parts when they recognize that they may no longer be appropriate. The initial state or entry point is shown as "Start" box 15800. Two parallel paths are shown originating from this point, to indicate that there are two autonomous so-called "processes" or concurrent interpretation paths in this example. One process is aimed at determining if there has been movement of the viewers head and reporting the relative amount of that movement. It comprises a repeat block 15810 and "adjust position relative to head movement" block 15811 that is repeated so long as the system continues to run from start 15800.

The so-called "main loop" is shown with entry point "Reset" 15810. An example initialization is the setting of the "volume" to be searched in to its small initial value. The position of the volume, not shown for clarity, is the last position where the eye was correctly tracked and the initial value is axial. Next repeat box 15812 makes an unconditional loop of the remaining parts, with three exit points shown to be described. First within the loop is the "Measure within volume" box 15813. This box attempts to locate the center of the viewer eye by searching within the volume. In this is preferably done by searching in order from the more likely locations to the less likely locations, as mentioned elsewhere. The location of the eye, the rotation of the eye, and optionally its focus are potential parameters of the search space. As will be understood, one example way to locate the eye is by identifying the pupil and measuring its location. So-called binary search or simple scan search, for example, may be more effective, depending on the characteristics of the mirrors.

After measurement 15813 three tests are performed to determine where and if control should be handed off. The first test shown in the arbitrary but hopefully logical ordering is the "No movement" test 15814. It tests for the more or less trivial case that the eye is in the same position as it was measured to be in the measurement preceding that of box 15813. In case it is, as indicated by the "Y" for yes, the "Fixation" section will be entered through entry point 15820. Similarly, the "Ballistic Motion" test 15815 is directed at detecting if they new position of the eye represents an apparently large-scale ballistic motion from the previously measured position. In case it is, the "Saccade" entry point 15840 is transferred to. And again, the previous two tests having failed, the "Eyelid closed" test 15816 is performed. If the sensors report that the eyelid is occluding view of the eye, then control is transferred to the "Blink" entry point 15860.

Having failed the tests 15814-15816, the volume to be searched is increased, as indicated by box 15817. This expansion of the volume is of course limited by the reach of the system. When the loop is again repeated, as indicated by box 15812 as already described, the space of the measurements of box 15813 is increased. It is believed that in this way the eye will eventually be located and the proper section transferred to.

Turning now to Figure 158B, the fixation section is described as reached through entry point 15820 already mentioned. The fixation section is a loop, as indicated by repeat block 15821. A step includes rendering the image on the viewer's pupil by raster scanning or the like and at the same time measuring the returned energy as shown in block 15822. Block 15823 uses the returned energy to adjust the focus, or scanning across high-contrast regions repeatedly can be used for this as explained. There are also two tests. If the position has moved only a small amount, then test 15824 is satisfied and control transfers to "Pursuit" entry point 15880. If not, then a test for substantially zero movement 15825 transfers to reset 15801 already described. Otherwise, the loop 15821 repeats.

Turning now to Figure 158C, the "Saccade" section is described as reached through entry point 15840 already mentioned. Again the section is a loop, this time headed by repeat block 15841. Shown next is rendering 15842 on the viewer's pupil of the input image, positioned so that the predicted location of the gaze point on the retina and in the image coincides. The rendering, however, is believed potentially "blurry" as very little detail is believed perceived by the viewer during saccades.

Next some predictions, measurements and adjustments are made. For example first is "Ballistic movement prediction" calculation 15843, which attempts to fit the measurements it has collected into a ballistic trajectory and to predict the end point of the trajectory. Historical data related to the particular viewer is preferably used to tune this model. Measurements searching for the orientation of the eye, using the last predicted location as a starting point, are made according to box 15844. The prediction is adjusted 15845 based on measurement 15844. In subsequent iterations, prediction and adjustment are preferably combined, not shown for clarity. Also, the focus is adjusted 15846 if measurements and/or predictions indicate this.

Two tests are shown as examples. If the prediction 15843 or 15845 or measurement 15844 determine that the eye has stopped moving, control is transferred by test 15847 to fixation entry point 15820. If the conclusion from the prediction efforts and measurements is not within parameters prescribed for a saccade, the process returns to the reset point 15801.

Referring to Figure 158D, the "Blink" section is described as reached through entry point 15860 already mentioned. Again the section is a loop, this time headed by repeat block 15841. The search volume is increased 15862 at each iteration. The volume is searched 15863. If the eye is determined to be "open," that is no blink in progress, then control is transferred to the fixation entry point 15865; otherwise, it remains in the loop.

Turning finally now to Figure 158E, the "Pursuit" section is described as reached through entry point 15840 already mentioned. It is again a loop and directed at the phenomena known as "smooth pursuit" during which the eye travels slowly, typically following an object that is moving. It will be appreciated that this is an example where information from the content can assist in determining the likely behavior of the eye, although such data are not shown for clarity.

The loop header block 15881 is shown explicitly, as with the other diagrams. The render and measure step 15882 is similar to that already described with reference to block 15822, as box 15883 adjusting focus is to box 15823. A movement to track the pursuit is indicated in box 15884 as well as an adjustment or determination of the amount to move. Then a test 15885 is made to determine whether the measured position from box 15882 matches up with the predicted position. If yes, iteration of the loop continues; if no, reset entry point 15801 is returned to.

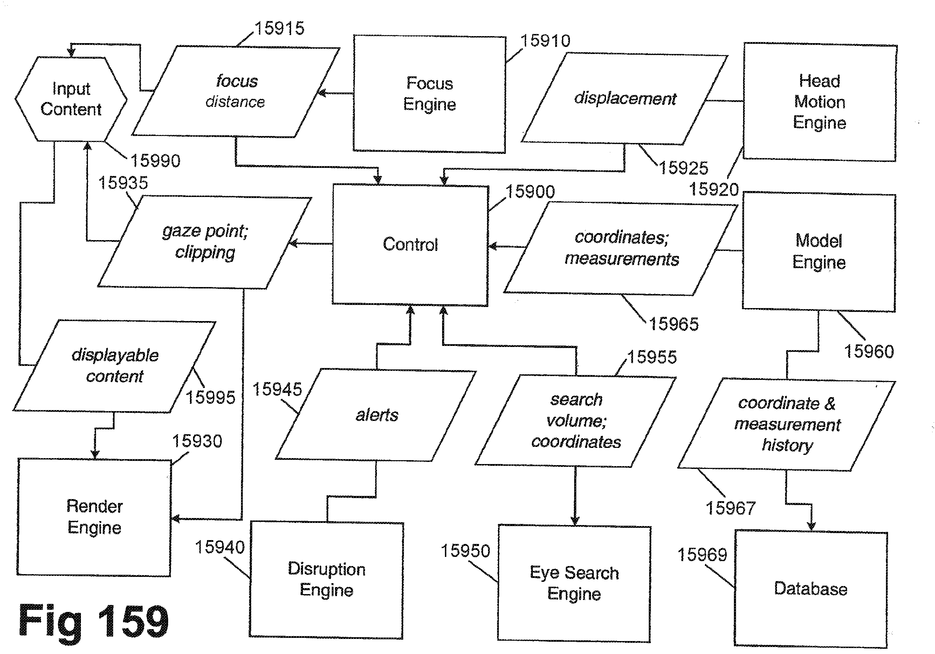

Turning now to Figure 159, a combination block, functional, schematic, flow, and process architecture diagram of an overall system in keeping with the spirit of the present invention is shown. In this exemplary embodiment, various aspects of the inventive systems are each represented as an "engine" or substantially autonomous or otherwise separated rectangular "process" block. Exemplary communication paths between the blocks are indicated by slant-boxes, with arrows showing the flow direction(s) and content labels indicating the type of data transferred. At the center of the system is the "Control" box 15900. It is shown taking input from some boxes, sending output to some boxes, and having bi-directional interaction with other boxes.

One input to control 15900 is "Focus Engine" 15910. Slant-box 15915 indicates a type of message, shown as "focus distance," that is sent from focus engine 15910 to control 15900. Implicit in this system description is that focus engine 15910 has an ability to make the measurements needed to determine changes in focus, and to alter the optical wavefront transformation to make the corresponding accommodation. One example use of this information at control 15900 is to calculate so-called "vergence" angles between the eyes, such as when the control 15900 for one eye is able to communicate with the control for the other eye of the same viewer, not shown for clarity. Another exemplary use of focus distance is in attempting to determine the landing point of a saccade. The focus distance is also shown being supplied, as a second output of slant-box 15915, to the "Input Content" source 15990, to be described in more detail below.

A second input to control 15900 is "Head Motion Engine" 15920. Slant-box 15925 indicates a type of message, shown as "displacement," that is sent from head motion engine 15920 to control 15900. Displacement indicates the difference between viewer head positions relative to some reference position, such as an initial position or incremental re-synchronization position. The human eye is believed to in effect correct for such displacement by eye movement, in an effort to keep the image on the retina substantially unchanged during head movement. The so-called "gaze point," the point the person is looking at in the content is believed preferably to remain unchanged. However, the so-called "clipping" of the image portion displayed in the field of view of the viewer, changes as the field of view is shifted. It is believed that a movement of a spectacle form factor relative to the viewer's head, is also detected by a motion, since it is unlikely that the head will move and the spectacles remain fixed.

An output of control 15900 that influences what is displayed, at least in the case when the viewer is looking continuously at a gaze point, is the "gaze point; clipping" output 15935. This is shown supplied to both input content 15990 and "Render Engine" 15930. It substantially indicates the point in the content image the user is looking at and where that point is within the clipped field of view. In some examples, included in the gaze point is the focus distance, as mentioned with reference to already described slant-box 15915. Accordingly, "displayable content" slant-box 15995 includes the content that render engine 15930 is to display, such that the parts outside the clipping are omitted, the level of detail is adequate for the distance from the gaze point, and the focus distance is optionally accommodated.

A third input to control 15900 is "Disruption Engine" 15940. Slant-box 15945 indicates a type of message, shown as "alerts," sent from disruption engine 15940 to control 15900. As already described with reference to Figure 157, an aspect of the function of safety engine 15940 is to determine if there has been an interruption in the projection of images on the retina. A related kind of disruption anticipated is movement of the pupil or change in the relative position of the system to the viewer head. Such changes are example alerts. Start of continuous viewing is also considered an example type of alert.

A first example engine for which control 15900 communicates in the example bi-directionally is "Eye Search Engine" 15950. This engine seeks to find the position of the center of the eye. In the example shown, slant-box 15955 indicates that the portion of the space, indicated as "volume," over which the search is to be constrained is supplied by control 15900 to eye search engine 15950. Examples of information characterizing volume include such things as a bounding box, rectangle, or other shape in a two- or three-dimensional coordinate system in the frame of reference of the front optic. Other examples include parameter ranges, such as focus and/or astigmatism ranges. Further examples include hints or clues, such as last know find or projected or likely finds or probability distributions on such finds. For instance, during a blink, if fixation is suspected of being maintained, there is very high probability of a particular location, however, a volume does grow in case of saccade. The result of a successful find of the eye is shown in slant-box 15955 as "coordinates," although additional information may be included. In some examples, information may include such things as pupil diameter, degree of eye occlusion, and so forth.

The second example engine for which control 15900 communicates in the example bi-directionally is "Model Engine" 15960. An aspect of the function of model engine 15960 is to provide analysis of data related to the position and disposition of elements in the system and related to the viewer, including basing predictions on data collected earlier. For instance, calculating the position of the eye axis and the distance to the eye and the gaze point and the clipping are examples of functions that can be performed by the model engine 15960. Output can, in some examples, include coordinates describing the axis of the eye and the focus distance. In other examples, outputs include probabilities based in some examples on the past behavior of the viewer, such as various speeds and ranges, positions of apparatus relative to the head, and so forth. The historical data base for such probabilities is shown as "Database" 15969. The data communicated between database 15969 and model engine 15960 is shown as the slant box "coordinate and measurement history" 15967.

## LASER-BASED SOURCING AND FRONT OPTIC

As one example, what may be called "zone reflector" schemes particularly well suited to so-called "peripheral" portions of the retina are disclosed in other sections of this document. Such schemes handle a fixed number of fixed eye positions each with a different set of mirrors and make adjustments for actual eye positions that lie between those fixed positions. For any particular such actual position the amount of adjustment to the nearest fixed is believed, however, to vary for differing locations on the eyeglass lens, due to asymmetry in the geometry.

As another example, so called "major reflector" schemes, believed well suited to so-called "macular and foveal" portions of the retina, in which reflectors used at particular instants are substantially those located around the line of sight, have been proposed in other sections of this document. Adjustment of the launch position, at least in increments, into alignment with the front-optic reflector(s) closest to the point of regard is preferable. Also, for such front-optic reflectors closest to the point of regard, such as are believed applicable for instance to the para-foveal or macular regions of the retina, there is a distance between launch locations and some variation due to geometry that depends on where on the eyeglass lens the reflectors are located.

Various exemplary inventive aspects are disclosed here to address the above and provide further objects, features and advantages as will be appreciated from the description and drawing figures.

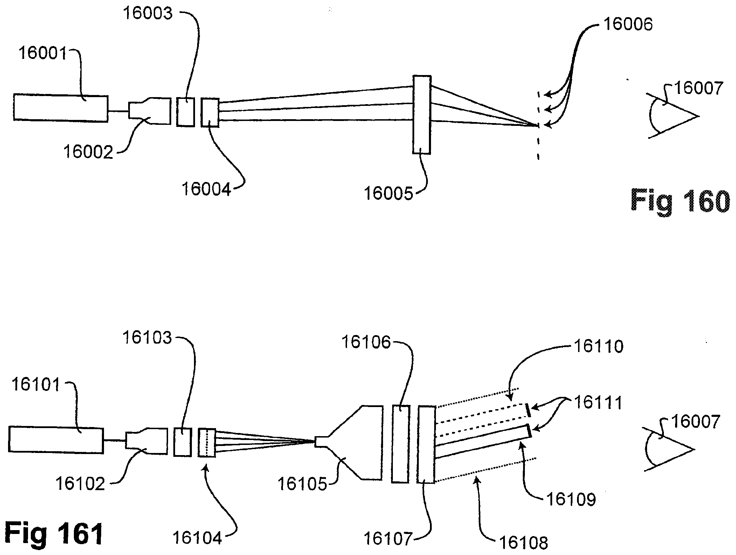

Turning now to Figure 160, an exemplary arrangement for sourcing light from varying positions to front-optic mirrors in a reflector zone system is shown in a combination optical schematic and block diagram in accordance with the teachings of the present invention. The "source" 16001 is preferably an emitter of light with high radiance, such as for example a laser or so-called vcsel.

The next element in the chain is the "beam expander" 16002, being well known and in some examples acting like a telescope in reverse, producing a substantially collimated beam output (not shown for clarity). In some examples such a beam expander optionally has a variable amount oval correction, such as using variable cylinder lenses or other variable lenses with asymmetry as are known constructed using electrowetting of immiscible fluids. Such oval correction may be desired to compensate for the effects related to obliquity of the eyeglass lens interface relative to the light directed at and reflected from particular reflectors in such front optics.

The next element in the example chain is a "spatial light modulator" 16003, as are known. The larger beam coming from the output of the beam expander 16002 and impinging on the spatial light modulator 16003 is accordingly divided into a number of smaller beam portions each potentially separately temporally modulated in an all or nothing or so-called "grey level" fashion, as is known.

Preferably after or in combination with the spatial light modulator 16003 is the "first active mirror structure" 16004. While this is shown in a transmissive configuration, a reflective configuration is more typical. Such schematics not being intended, as will be understood, to indicate which of such configurations apply to the components for generality and clarity in exposition. These mirror structures 16004 steer the portions of the expanded beam separately to mirror elements in the "second active mirror structure" 16005 as indicated by some exemplary principal rays. This second mirror structure 16005 in turn preferably directs the portions of the beam towards the front optic reflectors 16006, as shown. Subsequently, these portions of the beam are preferably reflected by the front-optic reflector structures 16006 and directed at least in part into the pupil of the eye 16007 not shown for clarity.

When multiple mirrors are used to reflect a single collimated beam footprint, as variously contemplated here, it is well known in the art, and famously for multi-mirror telescopes, that the mirrors are preferably arranged at distances that are at least close to a multiple of the wavelength of light involved. So-called mirror "piston" is preferably also controlled to adjust the height of the mirrors accordingly. Without suitable such measures a loss in resolution may be obtained.

In operation, the first active mirror structure selects elements of the second active mirror structure to determine the "origin" or "source location" of the beam portions. Then the second active mirror structures steer the light successively to the front optic mirrors, such as the so-called "minor" mirrors. The motion is preferably "point to point," "continuous scan," and/or "scan with pause," such as are known in the art and depend variously for instance on the amount of time, power, and mirror characteristics. An example scan pattern will be described. The light is shown launching from a range of locations, so as to provide the effect of entering the pupil with a range of angular content sufficient to provide connected images as has been described in other sections of this document. In a reflector zone configuration, the mirrors of a single zone are illuminated in order to provide the light that enters the pupil. As will be appreciated, the spacing of the fixed locations near the pupil of the eye may be such that only one enters the pupil at a time or there may in some example embodiments be multiple fixed locations that can enter a particular pupil location.

In another operational aspect, the location from which energy is launched may be desired to be varied depending on the geometry of the particular regions of the eyeglasses lens being covered in order to compensate for position adjustment so as to enter the pupil of the eye directly, as mentioned above. Since such changes may be desired to be made substantially during the scanning of minor mirrors, a novel variation may be employed: Additional mirrors in the second active mirror structure track along with the mirrors being used to source the light and they are brought into play, and light shifted to them from some of those being used to steer the light for other portions of the eyeglasses lens, by changing the modulation of the corresponding portions of the beam at the spatial light modulator. Accordingly, as will be appreciated, this is believed potentially to result in rapid changes in the effective launch location of the light during the scanning process and optionally even in a way that does not depend on special mirror movement but rather only spatial light modulator changes, which are believed in at least some technologies to be substantially faster.

Color is preferably provided, such as by multiple sources of primary or other colors composing desired color gamuts and/or the re-use of the optical chain for several color components in parallel or sequentially. Such color rendering techniques are not shown or described further for this or other embodiments for clarity as they would be understood.

Referring now to Figure 161, an exemplary arrangement for sourcing light from varying positions to front-optic mirrors in a point-of-regard system is shown in a combination optical schematic and block diagram in accordance with the teachings of the present invention. Those aspects of this figure that are substantially similar to those already described with reference to Figure 160, as will be appreciated, are here abridged or omitted for clarity. For instance, the source 16101, first beam expander 16102 and first spatial light modulator 16103 are substantially the same as the source 16001, beam expander 16002 and spatial light modulator 16003, respectively, as already described with reference to Figure 160 above.

The "pre-combining mirror structure" 16104, in some exemplary embodiments, is substantially a single active mirror matrix and in other examples, as indicated by the vertical dotted line, may include multiple reflections for each of plural portions of the light transmitted. In a preferred configuration, a multi-pixel "paintbrush" is in effect formed from a substantially linear arrangement of beam origin points where all the beams are aimed substantially at the center of the input of the "second beam expander" 16105 to be described. One example structure to deliver such light would be a single row of mirrors, optionally dynamic mirrors that may be used for other purposes at other times. However, a single substantially round source may be more economically fabricated, and the spatial light modulators may be more readily fabricated in structures with more square aspect ratios. Accordingly, a multiple reflector arrangement preferably provides origin points along a line from modulator locations arranged in multiple rows. To accomplish this, a first reflector takes a beam portion to a second reflector, the second reflectors being arranged along a line. In some examples the first reflectors are dynamic mirrors and can be re-purposed for other configurations.

The "second beam expander" 16105 expands the input to produce an output beam of substantial width that

EP 2 486 450 B1

contains rays with angular components related to the angular content of the input. It is believed, consistent with the so-called optical invariant, that the angles of rays in the output will be substantially smaller than on input. The output beam impinges on the "second spatial light modulator" 16106 and the results impinge on the "pre-launch mirror array" 16107 as indicated. In the example configuration it is believed that the second spatial light modulator pixels each modulate multiple image pixels and so are used more as a way to gate light to particular pre-launch mirror locations.

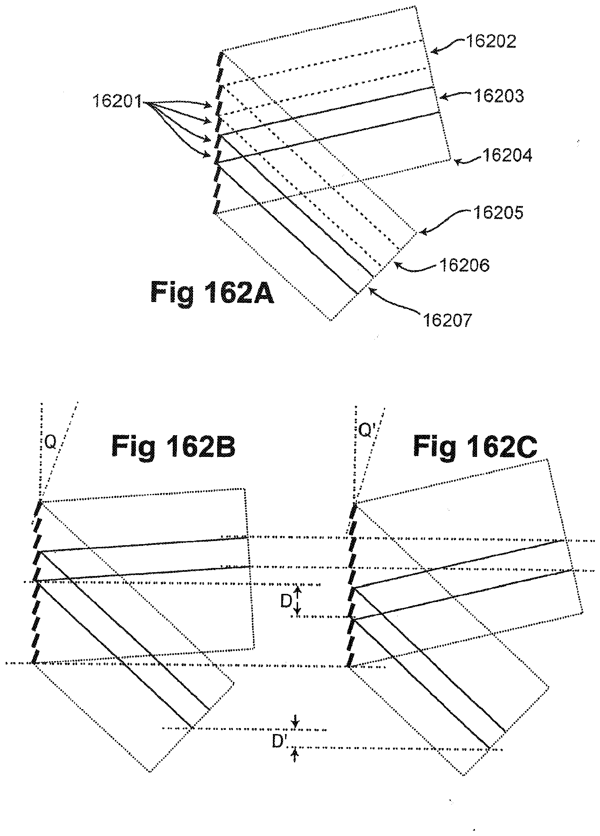

The example use of the structures shown is indicated by example beams shown between the pre-launch mirror array and the example front optic mirrors, for clarity. The example shows all the pre-launch mirrors having substantially the same angle and resulting in the "potential beam envelope towards eye" 16108 shown as a beam with dotted boundary lines. The potential envelope is limited or gated by the second spatial light modulator to limit the output to what will be called "beamlets" that are in effect portions of or sub-beams of the overall beam envelope. Such gating is aimed at reducing the amount of light that spill onto other mirrors and structures, although other techniques to reduce undesirable aspects of such light may be employed and the need for this gating function removed. Both an example "first beamlet towards eye" 16110 and a "second beamlet towards eye" 16109 are shown, each impinging on a respective "front optic mirrors" 16111 shown. The geometry of such beam steering is also shown further in Figure 162 to be described.

Turning now to Figure 162, exemplary beam steering configurations are shown in a combination optical schematic ray trace diagram in accordance with the teachings of the present invention. An example arrangement comprising two example beamlets is shown in Figure 162A and two different mirror angle examples are compared in figures 162B and 162C. This arrangement was already shown and described with reference to Figure 161.

Referring now to Figure 162A, the "mirror array" 16201 is shown reflecting beams of light. The beams are indicated by boundary lines. The "source beam envelope" 16205 is shown as a dotted line and including end caps for clarity in the diagram, as will be appreciated. Each mirror in an example mirror array section is shown, although the number of mirrors may be significantly larger than the few shown for clarity in the diagram. The "first beamlet from source" 16206 (shown as solid lines) and the "second beamlet from source" 16207 (shown as dashed lines) are shown arriving at the same angle and as part of the source beam envelope 16205. This sourcing angle is not changed in the examples described for clarity. After impinging on the mirrors of the mirror array 16201, the "beam envelope towards eye" 16204 emerges. Included in the beam envelope towards eye 16204 are the "first beamlet towards front optic" 16202 and the "second beamlet towards front optic" 16203 as shown.

Referring to Figure 162B and 162C, two unequal mirror angles Q and Q' are shown, respectively. While the input angles are unchanged, as mentioned earlier, the position of the single example beamlet within the input beam envelope is raised by D' measured along the vertical shown. This can be seen, through the dotted construction lines provided for clarity, to result in a change in vertical height at the envelope cap distance of D.

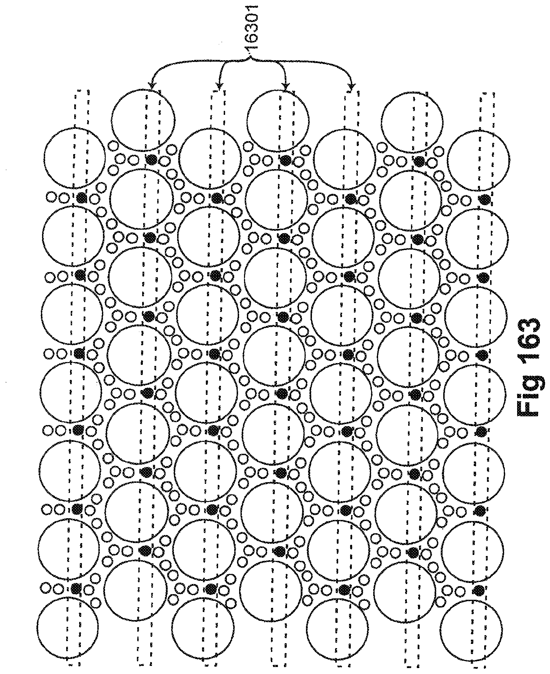

Turning now to Figure 163, exemplary minor scanning of front optic mirror structure is shown in a combination plan and schematic view in accordance with the teachings of the present invention. The layout already is here depicted here with a particular scan pattern example for a zone. The "scan lines for example minor zone" 16301 are shown as solid horizontal bars that cover the minor mirrors of that zone. Of course scan rows can be arranged in various directions and patterns, not described for clarity and without limitation.

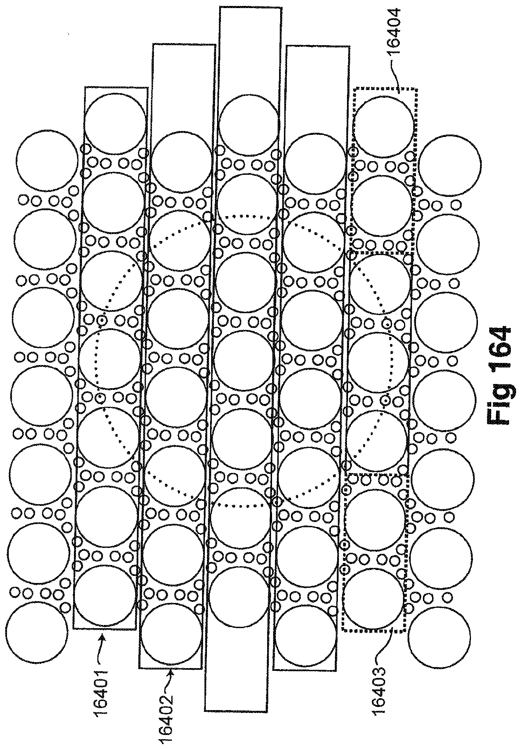

Turning now to Figure 164, exemplary major scanning of front optic mirror structure is shown in a combination plan and schematic view in accordance with the teachings of the present invention. Beginning with an initial horizontal "first scan row" 16401 and followed by a "second scan row" 16402 all the way to a fifth scan row are shown covering the concentric dotted circles and mirror ring labels already described with reference to Figure 163. The scanning pattern is shown with an example "initial position range" 16403 , shown outlined in dashed lines and shaded deeper along with a similarly illustrated "final position range" 16404. Although the initial and final positions suggest an example "width" of the beam from the second beam expander described with reference to Figure 161, they may not actually be realized as fixed mirror positions in case resonant modes of mirror are used or other dynamic scanning method. It will be appreciated, however, that the starting and final positions are shown as chosen so that even the mirrors on the edge of the concentric circles are able to receive the full range of delivery angles, which is preferred and may be an unnecessary requirement shown for clarity.

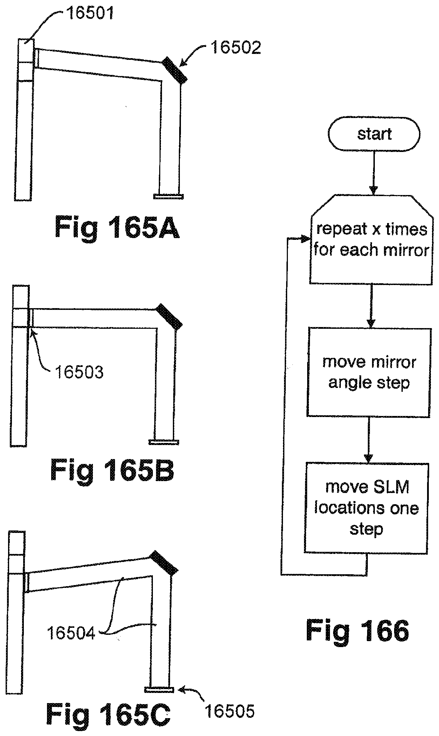

Turning now to Figure 165, exemplary tilt pan system is shown in a combination optical schematic, block, and section diagrams are shown in accordance with the teachings of the present invention. Initial, middle, and later views are provided in Figures 165A, 165B, and 65C, respectively. The "active mirror" 16502, could for instance be a part of the "second active mirror structure" of Figure 160 or of the "pre-launch mirror array" of Figure 161. The "spatial light modulator" 16501, or SLM for short, could for instance be the "SLM" of Figure 160 or the "second SLM" of Figure 161.

The source region 16503 on the SLM 16501 is the portion of the SLM 16501 that in effect tracks the "target regions" 16505 as the active mirror 16502 is rotated. In some examples, the SLM 16501 is performing a gating function and lets only the light for the "beam" 16504 through. In other examples it provides images by modulating individual pixels. In the former case, the pixels are formed by an upstream modulator, such as the "first SLM" of Figure 161, and those pixels preferably "track" or put differently are spatially shifted to follow or pan along in synchronization with movement of the active mirror 16502. In the latter case, the pixels generated by the SLM 16501 are moved along its surface so that they remain in substantially the same alignment with the beam over the range of angles introduced by the active mirror. Thus, as will be seen the "target region" 16505 receives substantially the same pixels over the range of the scan, from Figure 165A, through Figure 165B, to that of Figure 165C. Operation of the figure will be further described with reference to Figure 166.

Turning now to Figure 166, operation of an exemplary tilt pan system is shown in a combination block and flowchart diagram in accordance with the teachings of the present invention. The chart shows a single instance of the operation for a single mirror and target region. More generally, multiple instances may occur in parallel and or sequentially and/or spatially separated, as will be understood.

The loop or block of operations is repeated some number of times in the example. Each time the mirror angle is moved. Indicated is a stepwise movement of the mirror. However, in many embodiments the mirror inertia makes the steps into a continuous movement. The SLM, typically, moves in discrete steps, although continuous motion may be possible in some technologies. The movement of the two elements is coordinated, such as being controlled from synchronized algorithms, table look-ups, or feedback loops.

## FULL DISPLAY - AN EXAMPLE

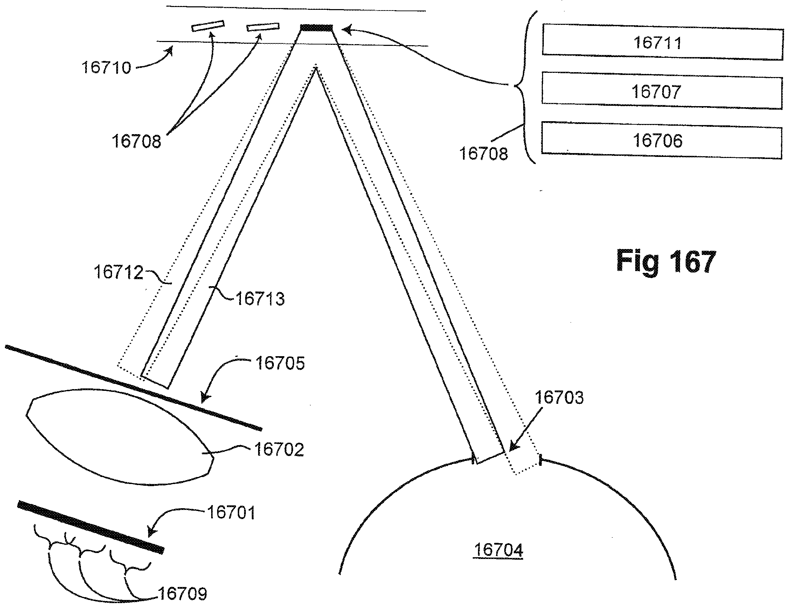

A description of an exemplary aspect is now provided but without any limitation with reference to Figure 167. The display includes a pixel source 16701 and optical elements 16702 that provide light with the needed angular content to multiple reflective system elements. Time-division multiplexing by displaying multiple images within each frame time interval is accomplished by switching on reflective system elements at the appropriate times to selectively reflect into the pupil 16703 of the eye 16704. In some examples a LCD shutter is formed between a first fixed polarizer 16705 mounted near the projection system and a separately switchable liquid crystal layer 16706 located adjacent to a second fixed polarizing layer 16707. By varying the polarizing effect of the liquid crystal as is known integrated LCD shutters, the light from the source is either allowed to reach and return from the mirror or it is substantially absorbed. Light from the environment is attenuated by the filter it is incident on but substantially not subject to the shutter effect as sourced light. In one example the adjacent reflector system elements 16708 provide beams 16712, 16713 that are smaller than the pupil but substantially parallel when they are at their corresponding extreme positions entering the pupil, thereby providing for the pixels that originate at points at the interface of the two elements. Other pixel origins are included beams at angles ranging between the extremes.

The pixel source can be any type of display means, such as OLED, transmissive SLM or reflective SLM illuminated, for example, by LED, VCSEL or laser, shown only in section schematically as a narrow rectangle. Various pixel areas 16709 are shown comprising various subsets of the pixels on the pixel source. At a single example instant in time, a single pixel area may be illuminated. Its position on the pixel source determines the angles that correspond to each of its pixels in the beams projected towards the front optic 16710, as will be described, and by varying the placement of the pixel area the angular content of the projected light is varied so that it meets the requirements of the beam to be reflected by the reflector system element into the pupil. The area on the pixel source of some beams may be disjoint and other may overlap, as illustrated by example instances.

Light leaving the pixel source is preferably substantially passes through an optical system shown as a single optical element, a lens in the example. Whatever the optical system its function is to bring the light from each pixel into a substantially parallel beam directed at least toward the relevant reflector system elements. In particular it will be appreciated that the optical element shown provides light corresponding to the each pixel from the pixel source to plural reflector systems at the same time. However, the switching on of a single mirror or a limited number of mirrors is anticipated to control from which reflector light reaches the pupil of the eye.

After leaving the optical element light is shown passing through a polarizing filter. Of course the filter could be on either side of or included in the optical system, affixed to the pixel source, and/or laminated onto the reflector system. In the example of a very well known type of LCD shutter, the liquid crystal is laminated between two fixed linear polarizers, each oriented the same way as the lines on the corresponding surfaces in contact with the liquid crystal. Application of a voltage perpendicular to the layers untwists the liquid crystal and blocks the light. Many other arrangements are known, including where electrodes are provided at the ends of the layer, and accordingly the electrodes are not shown for clarity.

Embedding the reflector system elements 16708 preferably into the "lens" or "front optic" 16710 of the spectacle is anticipated. In some examples such arrangements are fabricated by steps included forming two separate front and rear halves of the spectacle lens, coating the inner surface of at least one of them and combining them into a single unit such as by application of optical cement or the like. Whatever driving technology may be applied and corresponding conductive paths and optionally active elements are preferably included in the embedded layers. In some examples the switching is controlled and powered by autonomous active elements and the switching is detected by optical feedback sensors located on the return path, such as after a beam splitter located just after the pixels, not shown for clarity. In other examples the pixel source and the switching are controlled and powered by the same system. For instance, conductive paths can be established from the front optic to the frame and to the projection controller. In other examples only two conductive paths are provided, such as one from each surface of the front optic, so as to facilitate interconnection. One or more active controller elements would be located within the front optic and known techniques for providing power and signal over the same pair can be employed as would be understood.

Various patterns of reflector system elements are anticipated. Some examples include more than one size, as indicated. The small size preferably provides low resolution images to the peripheral portions of the retina. More than one collection or "zone" of such small reflectors 16711 provided and each aimed so as to correspond to a particular eye position. It is believed that in some configurations the small reflectors 16711 of a zone can be activated at the same time. The larger reflectors 16711 are preferably oriented to associate the angles corresponding to the eye rotated to look directly at it and the center pixels of the display. For a particular eye rotation, the nearby larger reflectors 16711 are preferably also used. However, the angular content provided them when they are selected is preferably such that the resulting beam lands in the pupil.

In operation, different portions of the image to be projected onto the retina are provided substantially separately to different reflector system elements, in some examples at substantially different time slices within the frame. Frames are preferably every 60 to 120 per second. The "tiling" of the images on the retina is preferably arranged so that a seamless foveated image results, as disclosed in other sections of this document. When light intended for a first mirror that impinged on a second mirror would not enter the pupil and vice versa, the system may overlap in time the projection from the two mirrors. Similarly for more than two mirrors.

The example shown is in terms of very standard types of LCD shutters. However, many types of shutters are known and they could readily be employed as would be understood.

Moreover, switchable mirrors are known. For example, there are those based on so-called "Bragg" effect, such as have been disclosed by Hikmet and Kemperman in an article entitled "Switchable mirrors of chiral liquid crystal gels," that appeared in Liquid Crystals, Volume 26, Number 11, 1 November 1999 , pp. 1645-1653 along with a variety of related articles referencing and referenced by this article in the literature, including those based on so-called blue phase, all of which are incorporated by reference in their entirety. Other examples are based on other effects, such as those disclosed in US patents 5,251,048, 6,359,673, 5,875,012, 5,847,798, and 6,034,752.

When a switchable mirror is employed, that can be changed between transparent and reflective, it is believed that an advantage is that less light is blocked since polarizing shutters block half the light as a result of the fixed polarizer that incoming light is incident on initially. Furthermore, when switchable mirrors are employed, more than one mirror may overlap or be layered in the front optic. This is believed to allow higher resolution images with smaller pupils.

As a still further advantage of switchable mirrors, the angular variation or some of the range of variation of the source means is optionally accomplished by the selection of differently oriented mirrors, such as those in substantially the same angular position on the front optic.

Another exemplary embodiment of what may be called a "switchable mirror" is a so-called "electrically switchable hologram." These are known in the art, commercially manufactured, and disclosed for example in US Patent 6,677,086, titled "Switchable volume hologram materials and devices" by Sutehrland, et al., issued January 13, 2004, and all the patents that reference it. Such switchable holograms in some example embodiments implement holographic optical elements that perform the function of a mirror, in some instances using what is known as a Bragg mirror structure.

The overlapping patterns shown in illustrate example ways that all points can be covered by at least one mirror, diffractive, hologram and/or other redirector struction in a three layer construction. In one aspect it is believed that such structures allow beams of certain sizes to be in effect re-directed by in effect a single planar structure, for any center point of the beam impinging on the structure. Said differently, it is believed that, for beams of certain diameters and angles, at least one of the three mirror layers will contain a mirror that allows the whole beam to be re-directed.

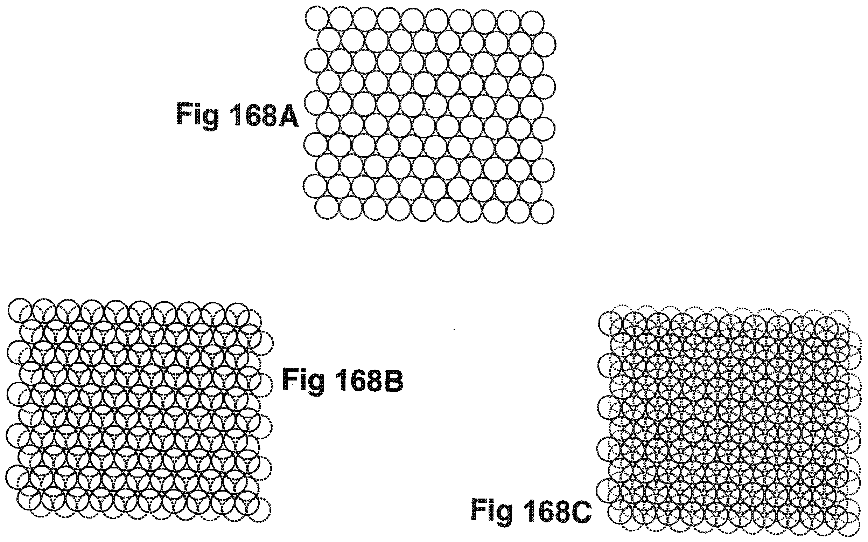

Referring specifically to Figure 168A-C, three example views are provided of so that the exemplary structure of three substantially round redirectors overlapping can be more readily seen, as will be appreciated. Figure 168A shows only of the three layers separately. Figure 168B then shows two of the layers composed, the additional one in dotted lines. And finally, Figure 168C illustrates the composition of the three layers, the additional one in dashed lines.

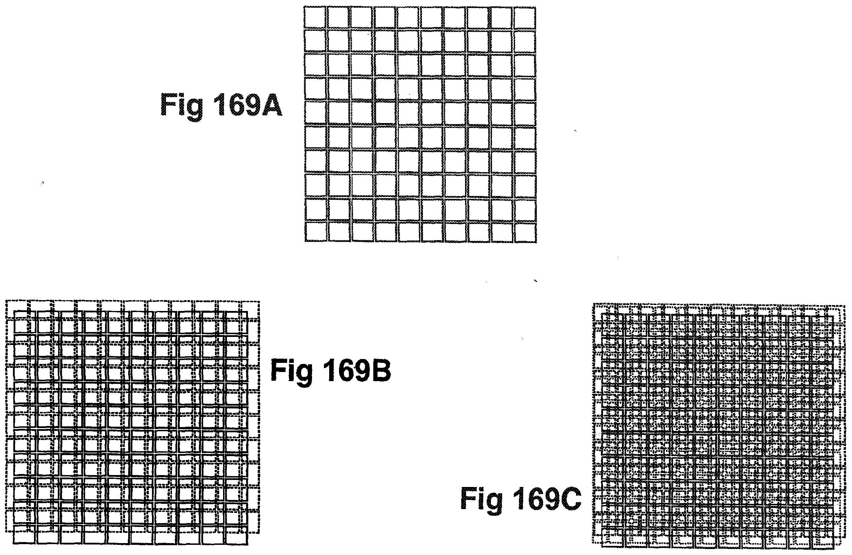

Referring now specifically to Figure 169A-C, three example views are provided so that the exemplary structure of three substantially rectangular redirectors overlapping can be more readily seen, as will be appreciated. Again Figure 169A shows only of the three layers separately; Figure 169B then shows two of the layers composed, the additional one in dotted lines; and finally, Figure 169C illustrates the composition of the three layers, the additional one in dashed lines.

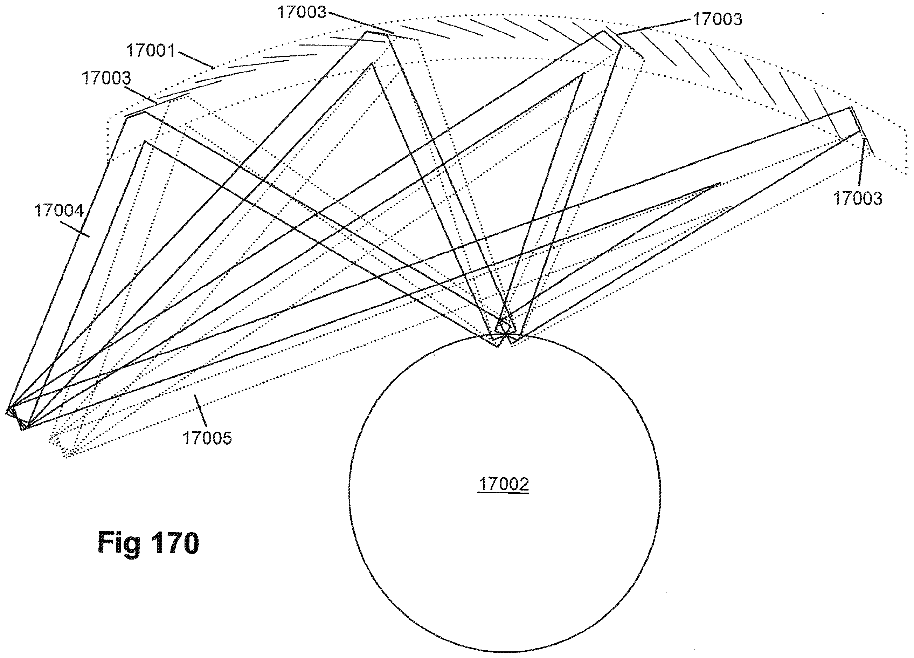

Turning finally to Figure 170, exemplary redirector arrangements are described. When the structure preferably a part of the proximal optic 17001 that re-directs the incident light toward the eye 17002, in some examples oriented in a substantial plane physically related to its angle or in other examples formed as a volume hologram and occupying another physical substantial plane such as a continuous surface shared by multiple such redirectors, is wider than the beam width being used at least at a particular time, then it may be advantageous to "walk" the beam across the redirector 17003 while limiting the motion of the center of the beam relative to the eye pupil, such as holding it fixed on a desired portion of the eye pupil. An example for clarity shows some exemplary beams for the latter case, where beams are kept at a substantially fixed center point on the pupil.

More particularly, the beams 17004 drawn in solid lines impinge on one portion of the redirector structure, while those drawn in dotted lines 17005 impinge on another portion, resulting in an angular variation between the beams entering the eye 17002 and the potential rendering of different pixels. A preferred embodiment realizes a range of discrete positions for the beam center impinging on the redirecting structure in order to create a corresponding set of pixels on the retina of the eye 17002. In other examples some positions on the redirecting structure have beams of multiple launch angles impinging on them, resulting in multiple beam center points on the plane of the eye pupil. Such arrangements in some examples comprise discrete steps with multiple angles on the redirector and/or discrete steps in the plane of the eye pupil with multiple differing positions on the redirector and/or unique points on the redirector and on the eye pupil plane per beam.

The projection structure for sourcing these beams is, as will readily be appreciated and understood by those of ordinary skill in the optical arts, substantially similar to that disclosed elsewhere here for maintaining the center of the beam at a fixed location on the redirector structure. Said differently, the beam is projected as if the distance to the redirector structure is the distance to the pupil of the eye and the beam center is fixed there. In other example embodiments a redirector structure acts as an aperture for a wider beam incident on it whose angle is varied, resulting in a wider beam impinging on the eye and in some instances such beams may be partly occluded by the iris and sclera of the eye.

DIRECTED VIEWING WAVEGUIDE SYSTEMS

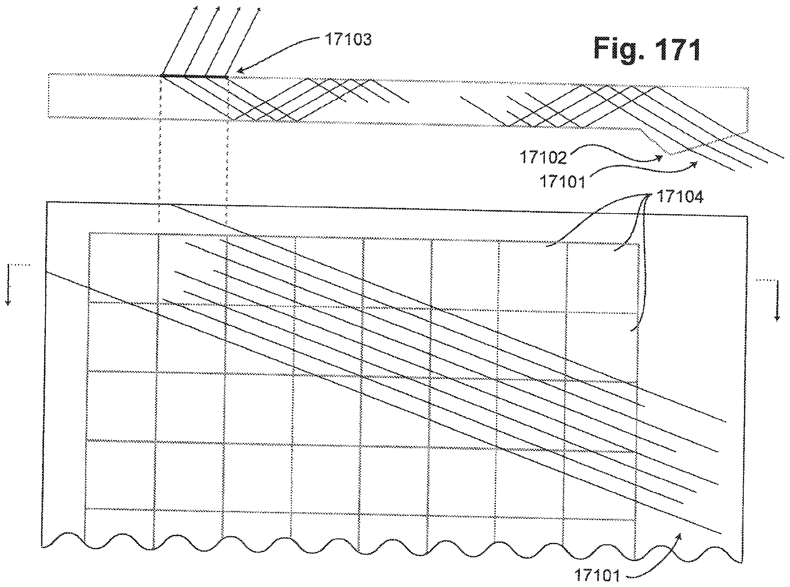

Turning to Figure 171, a detailed section and plan view of an exemplary waveguide including exemplary light rays is shown in accordance with the teachings of the invention. An example waveguide plate is depicted (below) for clarity as substantially rectangular from an areal viewing position and (above) in a section perpendicular to the surface of the waveguide as indicated by cutting lines. In the example, input light 17101 is brought into the waveguide through an entry region 17102 by refraction resulting in angles suitable for total internal reflection. Other example structures for bringing light into the substrate at suitable angles may, for instance, include edge illumination or use of gratings or volume holograms. The particular example exit from total internal reflection in the waveguide is at the exit region 17103 shown. Various macro and diffractive structures are known as suitable to cause exit, such as Fresnel prisms, gratings and holograms. However, for clarity and concreteness in the exemplary embodiment illustrated a volume hologram is used. The hologram region also "selects" which rays to allow out and "directs" those rays according to the desired angles generally with two degrees of freedom.

Referring to the plan view (below), an example of an arrangement of exit regions 17104, in the form of a rectangular tiling, is used for clarity. The second region from the left in the top row is believed selected in the example by a combination of a limited number of regions receiving light and angular content of the light. As will be appreciated, the input light 17101 is shown traveling from lower right to upper left as a collection of example rays that appear as straight lines forming a stripe in the view directly from above. An illumination source, or whatever projection system, directs light in the appropriate direction; but, it also is preferably able to determine the spectral content and angle (modulo bounce reversal) relative to the normal to the plate.

Certain combinations of the angle and frequency result in light leaving the exit region, such as a result of diffractive and/or volume holographic structures, as will be understood. One or more other regions, different from the selected region, may send some portion of the light out of the waveguide. However, such "stray" light combinations are preferably unable to substantially diminish the viewing experience, owing to the resulting light not entering the pupil of the eye or the light have diminished power. Accordingly, the "acceptance angle" of the exit regions along the stripe footprint of the illumination should differ enough that the range of angles and frequencies sourced for a particular region are capable of substantially uniquely selecting that region and not losing noticeable power to other regions along the stripe. In particular, for a "fixed steering" embodiment, where a single invariant eye position is anticipated, the angular content of the rays sourced along a stripe comprise the various pixels that are to be sent to the eye from the particular region that accepts those angles. "Variable steering" embodiments will be described later.

It will be appreciated that multiple pixels are preferably included in each exit region. One exemplary way to accomplish this, in keeping with the spirit of the invention, is to include angular content for each pixel in the "beam" of input light and to provide that the exit region mechanism accepts and preserves at least some variation in angle. Forming such a beam is generally well known in the art, such as in projection systems using a so-called spatial light modulator or so-called "push-broom" scan systems through a lens.

Differences in the "number of bounces" that the various rays make while traveling through the plate on the way to the exit region could, it is believed, adversely affect the potential of the beam to be "diffraction limited." If the beam of rays for a particular example pixel were to enter the substrate as a single wavefront, and all rays make the same number of reflections before exiting, then the wavefront is believed to remain substantially intact. But if, for instance, half the rays make a different number of bounces than the other half, then it is believed that in effect two wavefronts that may not in general be in phase are combined, creating less than optimal image quality. It is further believed that the number of different bounces increases as the plate becomes thin relative to the beam width, but thin plates may be desirable for a host of reasons. Nevertheless, the degradation in potential image quality resulting from a desirably thin plate is anticipated to be acceptable in some settings, such as where it is not the limiting factor.

There may be many arrangements for sourcing the light into the plate, such as one or more projectors or scanning beams into lenses, as will be understood. A limited bandwidth may be required by the exit region technology, such as sub-nanometer in the case of a volume hologram. The launch of the light into the substrate in some embodiments is controlled by a steerable mirror with two degrees of freedom. Thus, the angle component parallel to the surface of the substrate is believed to direct the stripe at the desired exit region and the angle component normal to the substrate determines the angle of the beams reflected from the surface. With the example of a volume holographic exit region, if the particular acceptance angle for a particular frequency of light from the mirror is matched, then the light is directed through the exit region to the viewer's eye. If the mirror is positioned to illuminate a stripe that covers another exit region and all or part of the light impinges on the first exit region, it may not be coupled out from the first region but remain internally reflected because it does not fall within the acceptance angle of the first region at the particular frequency.

Some embodiments use fixed steering, as has been described so far, and others use variable steering, as mentioned earlier. One example of variable steering uses a plurality of colors of light, one color for each of three or more what are commonly called "primary" colors, defining a color gamut. For instance, in an RGB based system, the red may vary by a number of nanometers and still be perceived as a red, as is well known. But the different frequencies will cause different angular behavior of some exit region mechanisms. So by varying the frequency, the exit angle is varied. In some examples this is based on so-called "multiplexing" or "stacking" of holograms, in other examples it is based on the optically dispersive character of the structure.

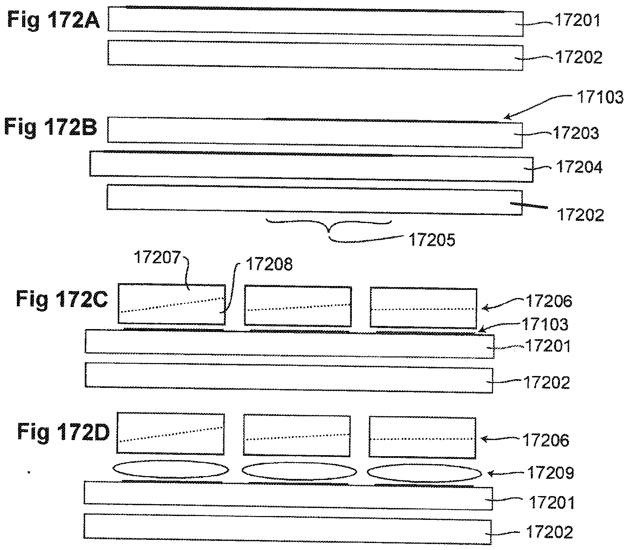

Turning now to Figure 172, detailed sections of exemplary waveguides and related structures are shown in accordance with the teachings of the invention. The embodiment of Figure 172A depicts an exemplary waveguide 17201 in section, such as that already described in detail with reference to Figure 171, overlaid on a substantially conventional display comprising an array 17202 of pixels. In other examples not shown for clarity the stacking order of the devices is interchanged or one device is in part or fully included in the layer(s) of the other device. For instance, a transmissive display may be interposed between viewer and waveguide or emissive display elements included within the waveguide. In other exemplary embodiments, the display pixel array 17202 is substantially transmissive, at least in some states, and allows the viewer to see the setting through the combined structure as well as what is rendered by one or both of the display means. Figures 172B-D also show an optional lower display pixel layer for concreteness, although all the other arrangements for such a display described here are anticipated as being applicable to them as well.

Each of the two layers 17201, 17202 shown in Figure 172A is operated substantially separately in some exemplary embodiments, giving a conventional display at some viewing distances and preferably other display characteristics as disclosed here at closer viewing distances. In some exemplary embodiments, means such as buttons or user interface provisions not shown for clarity are provided enabling the user to select between the two displays. In other exemplary embodiments, in at least some modes, sensor systems as will be described are associated with the device and preferably select between the two displays. In novel further anticipated embodiments, both devices are operated at the same time, for instance, superimposing images. All these options are anticipated as being applicable to Figures 172B-D as well.

It will be appreciated that the beams exiting from the waveguide are capable of providing substantially higher resolution than the pixels of the conventional display at least when viewed at a distance that cannot readily be brought into focus by the viewer. Especially in a fixed steering system, as already mentioned, the central or so-called foveal part of the viewer's instantaneous field of view may be provided by the waveguide system. The remaining, non-foveal portion of the instantaneous field of view for the particular "look angle" orientation of the eye relative to the waveguide is then provided by the pixel array layer. Such a foveated display has numerous advantages, as will be appreciated, including the reduced amount of data that need be sent to it and the reduced number of pixels that need be rendered for a given frame. In some foveal systems the aim is substantial indistinguishably from non-foveated systems. However, it is believed that a sharper drop in resolution between foveal and extra-foveal than would naturally occur may be tolerated by at least some users and even ultimately substantially ignored by them.

Referring specifically now to Figure 172B, an arrangement is shown allowing the interpupillary distance of the viewer to be matched, such as in a fixed steering system, without a break in the waveguides. The upper and lower waveguides 17203, 17204 are arranged to be substantially moveable laterally relative to each other in such a way as to allow for adjustment to match the IPD of the viewer. Nevertheless, the layers can remain within a neat mounting arrangement, such as a protective frame. The field of view of the two eyes of the viewer overlap 17205 as is well known and so the waveguides source light to their respective eye from substantially the same regions. The conventional pixel display 17202 and transmissive modes can be used all as already explained with reference to Figure 171A.

Referring now to Figure 172C, an embodiment similar to that already described with reference to Figure 172A is described that includes a prism 17206 or the like per exit region. Each exit region is shown as comprised of a separate volume hologram for clarity. The prisms 17206 are shown as comprised of two materials 17207, 17208 of different refractive index combined to form a substantially rectangular structure. However, the interface between the two materials is moveable, as is well known for instance with so-called electro-wetting prisms. See for example: "Electrowetting Micro-prisms and Micro-mirrors," by Hou, Smith and Heikenfeld, in Journal of Lasers and Electro-Optics Society, LEOS 2007, 20th Annual Meeting of the IEEE, pp. 457-458. When the prisms have horizontal interfaces, they become substantially invisible and the whole device can be used for viewing the pixel array and/or transmissively.

When the interfaces are angled, a prism effect is created that steers the beam towards the eye at an angle that can be controlled with one or two degrees of freedom. When the light is substantially monochromatic, naturally there are no chromatic aberrations. When primary colors are used, as explained earlier, for each there is again no such aberration, though each is diffracted differently. When the waveguide exit means is a volume hologram, for example, then each constituent color would preferably have a different exit angle adjusted so that they can all substantially rely on the same physical positioning of the interface between the two materials. As the viewer's eye moves relative to the waveguide the angles of the prisms can be adjusted to compensate and keep the beams entering the eye pupil. The beams can be used for both foveal and non-foveal portions of the image.

Referring finally now to Figure 172D, the difference with the embodiment of Figure 172C is the layer of lenses 17209. With the addition of these, the effective focus distance of the image can be adjusted statically or varied to match the accommodation needs of the user or preferably the focus distance that the user is expecting, as measured by focus on the user retina and/or so-called "vergence" between the central axis of the viewer's eyes. Variable-focus lenses are known, such as those based on electro-wetting manufactured by Varioptic of Lyon, France. In some other examples, a single electro-wetting structure provides both focus and prism, such as by Campell in US Patent Publication 2006/0106426 and by Kroupenkine et al in US Patent 6,545,815. The lenses 17209 in some embodiments are made substantially "invisible" when not used, such as by adjusting them to remove curvature. Moreover, a lens layer may also be used without the prism layer. Other orderings or combinations of the layers are anticipated.

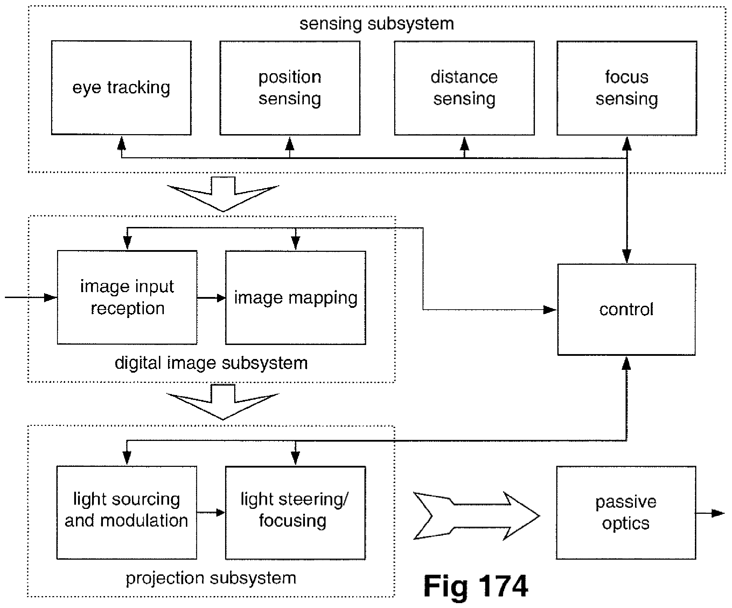

An inventive aspect that is believed applicable to the embodiments already described with reference to Figures 172A-D comprises at least instantaneously two regions: one region is the so-called "foveal" region, of relatively high resolution, and the second region is the so-called peripheral or "extra-foveal" region, of relatively lower resolution. In some novel embodiments, a foveal field of view is supplied light substantially by the beams of the waveguide, as already described, and the extra-foveal field of view is supplied light substantially from a portion of the pixel array already described. In some embodiments without steering for the beams emerging from the substrate, such an arrangement is believed to have at least the advantage that different look angles of the viewer's eye can be handled by beams having relatively small so-called "eye box," and the peripheral portions can be handled by pixels of the display array having substantially larger "eye box." In operation, eye tracking to be described with reference to Figure 174 determines the so-called "point of regard" or "look angle" or orientation of the optical axis of the eye and then the appropriate foveal field of view portion of the image is rendered via the substrate structure and the peripheral portion via a set of array locations substantially apart form the foveal portion.

In some exemplary embodiments, prism and/or focus and/or angular limitation is introduced to some pixels of the pixel array for the purpose of providing the extra-foveal portion of at least some images. These pixels are preferably distinct from, but may be sourced by the same light as, other pixels that may occupy nearby spatial position, such as for the pixel matrix display mode proper. Accordingly, when the device is providing a foveated display function, the extra-foveal portion is supplied by pixel elements with particular angular orientation or limiting structures and/or that have focus power applied. Such techniques are well known for so-called "autostereoscopic" flat panel displays, which typically include lenticular or so-called "parallax barrier" masking or may be configured in a transmissive mode to similar effect. When light is to be sourced to two eyes, separate beam patterns are in general provided by the substrate structure to each eye, as already mentioned such as with reference to Figure 172B, and similarly different pixels at substantially the same overlap location on the pixel array are optionally provided to different eyes.

In some embodiments, some locations are dedicated to such directed pixels and other to substantially undirected substantially "Lambertian" or "isotropic" pixels providing a standard pixel array display function.

In another example use of the lens layer shown in Figure 172D, curvature can be placed on the wavefronts from the pixel array to provide focus for the extra-foveal portion of a foveated display.

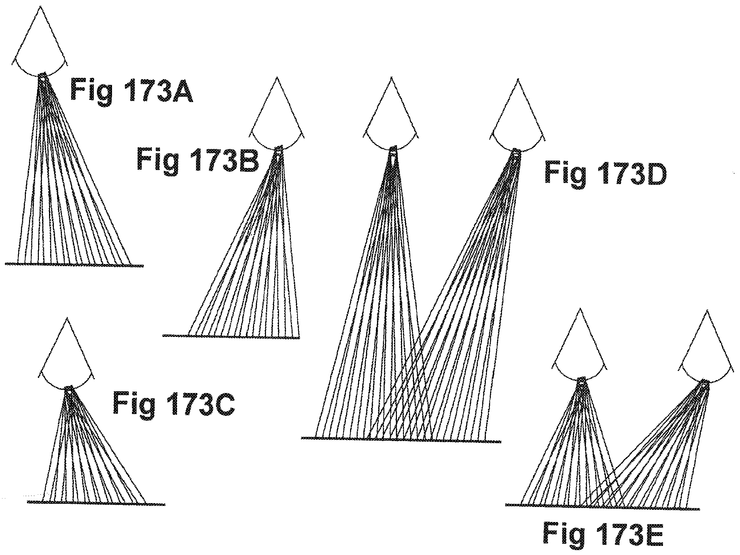

Turning now to Figure 173, exemplary sections of beams from a surface are shown in accordance with the teachings of the invention.

Figure 173A shows an eye of the viewer receiving plural beams aimed substantially so as to enter the pupil and the beams being launched from a surface such as the waveguide already described with reference to Figures 171-172. In some examples the embodiment of Figure 171 is that of the already described fixed steering systems.

Referring to Figure 173B, a variable steering embodiment, as mentioned, is shown where a different eye position is reached by varying the launch angles of the beams from the waveguide.

Referring to Figure 173C, a further example is shown where the beam angle is varied to reach an eye that is substantially closer to the waveguide.

Referring to Figure 173D, both eyes of the viewer are used, and the overlapping area of exit regions, whether on the same waveguide or on overlaid waveguides as already described with reference to Figure 172B, can be seen as well.

In Figure 173E, another autostereoscopic example instance is shown, where the angle, the distance of the eyes from the substrate, and the vergence all differ from those of Figure 173D.

Turning now to Figure 174, a combination block, flow and schematic diagram is presented of an exemplary overall system in accordance with the teachings of the invention. The content to be viewed is shown digitized and input to the digital image subsystem, which processes it and supplies it to the projection subsystem that supplies it to the passive optics and on to the eye(s) of the viewer. The sensing subsystem optionally monitors various aspects of the viewer's eyes as well as the positioning of the waveguide and supplies output to the digital imaging subsystem that it can use in adjusting the image output. An overall "control" system also communicates with the component parts of each subsystem coordinating their operation and potentially channeling information between them.

Four types of sensor system are shown comprising the sensor subsystem. Eye tracking determines the position/movement of the axis of one or both eyes relative to the waveguide. Some eye tracking technologies also determine pupil opening and detect blinks. Position sensing technologies aim to determine the position of the substrate. They are for example useful in detecting undesirable vibrations or movements that can be corrected for in the digital image subsystem and/or projection subsystem. They also provide information about orientation of the substrate with respect to the environment, facilitating maintaining an illusion of the substrate as a transmissive or combining aperture by orienting the displayed images accordingly. Distance sensing means are directed at determining the distance from substrate to eye and provide input to the decision of which "mode" of display and/or the beam angle for variable steering systems. Also included preferably is sensing of the relative orientation of the eye with respect to the substrate. Focus sensing, in some examples, acts as an autofocus mechanism based on the image formed on the retina of the eye. Not shown for clarity, the return optical path is separated from the projection sourcing by a beam splitter and used in one of the known autofocus techniques preferably adaptively in order to adjust the amount of curvature put on the wavefront projected into the eye and/or to determine the amount of focus being created by the eye and/or to determine whether the eye is positioned correctly so as to allow viewing of the projected images.

The digital image subsystem is shown in the example proceeding in two exemplary phases for clarity. First the input from whatever source is received, such as including radio and/or optical reception, format agility, buffering, format conversion, color conversion, feature extraction, frame-rate re-synthesis, whatever digital signal processing and so forth. Then images are mapped to take into account the idiosyncratic characteristics of the present display device, including but not limited to overlap of pixel groups from exit regions, power level differences in different parts of the display, interlace methods, and so forth.

The projection subsystem takes primary input from the digital image subsystem to produce light that is sent into passive optics on the way to the eye. It may be considered divided into two phases again for clarity, although in some embodiments they may be mixed. The first section creates the light and modulates it, such as with lasers that are modulated to encode an image temporally for raster scanning. The second section takes the potentially modulated light and steers and/or focuses it, such as with a variable focus lenses aimed at matching the accommodation of the viewer, one or more scanning "galvo" mirrors, and variable prism elements, all as already mentioned.

## HOLOGRAPHIC COMBINER PRODUCTION SYSTEMS

Exposing a volume holographic material so that it can be used as a combiner in the systems disclosed in other sections of this document can be accomplished advantageously in accordance with varying production speeds and levels of tooling.

Generally, a reflection hologram, as is known in the art, is exposed by launching light at it from one side of the medium that impinges on the same portion of the medium as light launched at it from the other side. The holograms to be produced for the present purposes involve multiple regions on a medium layer, which regions may or may not overlap and are exposed by different substantially collimated beams. Somewhat similar structures were proposed for switching optical signals between computers in "Computer-generated holograms fabricated on photopolymer for optical interconnect applications," M. Oren, in SPIE Vol. 1389, International Conference on Advances in Interconnection and Packaging (1990). While Oren used polymer holographic material, other well known examples include dichromated gelatin, which is developed after exposure.

In some examples a hologram is exposed in a manner that may be referred to as "beam by beam." This is believed to produce less cross-talk although it may be slower than similar methods that expose more than one beam at a time. In examples where multiple beams are exposed at the same time, non-overlapping and/or substantially spaced regions may be exposed in order to reduce undesirable stray-light phenomena such as cross-talk. Masking means, such as opaque shutters preferably with light absorption coatings or surfaces, are preferably positioned close to the medium to reduce stray light. Higher-speed systems may use diffractive or Holographic Optical Elements (or "HOEs") that in effect act as so-called transmissive "fan-out" devices and provide multiple beams at once. An exposure system related to that disclosed here for beam by beam exposure can, in some examples, be used to produce a transmissive fan-out HOE that is then in turn used for high-speed production of the ultimately desired reflection holograms.

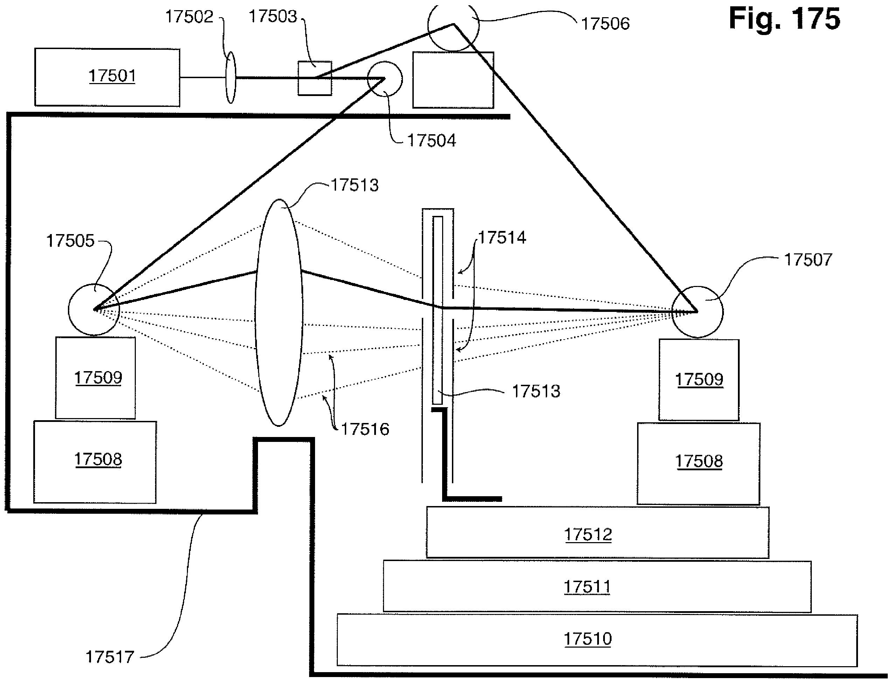

Turning now to Figure 175, a detailed description of a combination schematic and section view of a beam-to-beam exposure system in accordance with the teachings of the present invention will now be described in detail. A single laser 17501 source output is first conditioned 17502 and its beam expanded 17502 to produce input to the beam splitter 17503 shown, all of which is well known in the holographic art. One of the two beams emerging from the beam splitter 17503 is directed, via the optional fixed mirror 17504 as an example feed path, at the leftmost steerable mirror 17505; while the other beam from the beam splitter 17503 is directed, via the example steerable feed mirror 17506, such as a well-known relatively-small-range-of-motion motorized gimbal mirror, e.g. Thor Labs model KS I-Z7, at the rightmost steerable mirror 17507. As will readily be appreciated, should the translation stages to be described be configured to alter the position of the left steerable mirror relative to the source, a steerable feed mirror would typically be employed there.

The left and right steerable mirrors 17505, 17507 preferably have a substantially larger range of angular motion than that of the steerable feed mirror 17506, such as in the range of 30 degrees to 120 degrees, and can be realized using a variety of available components. For example, both the lower "tip" stage 17508 and upper "tilt" stage 17509 can be comprised of motorized goniometers, such as those sold by Newport as models BGS 50 and BGS 80, respectively. The lower stage can be a motorized rotational stage, such as the Newport model UR 75BCC with the upper stage a motorized goniometer such as the Newport model BGS 50; or both stages can be rotation stages oriented at 90 degrees relative to each other, such as built-in to the Aerotech model AOM300 motorized optical mount.

Compared to "active" steering, such as using piezo-electric or electrostatic forces that are maintained dynamically on relatively low-mass mirrors, the gear-driven stage examples given above are believed to offer substantially higher stability. Moreover, servo-motor drives are believed among other advantages to result in less vibration than stepping motor drives.

The beams launched from the left steerable mirror 17505 are shown impinging on an optical subsystem, such as comprised of lenses, one or more HOE's, performing what is known in the optical art as an "a focal relay" function. Such relays are known in the art and described, for instance, in a 1a version by Yonekubo in US Patent 4,353,624, titled "Afocal relay lens system issued," and issued October 12, 1982. Several example potential collimated beams are shown, at various exemplary angles, to further illustrate for clarity how the pupil relay 17515 can be used for supplying different beam angles 17516. It sends preferably substantially collimated beams directed to it from the left steerable mirror center point to what will be called a "convergence point" located to the right of the holographic material, such that the exiting beams are substantially collimated and aimed at that convergence point. In the exemplary beam to beam approach, a beam launched from the right steerable mirror preferably impinges on the holographic material on substantially the same region as that impinged on by the beam from the left. The optional stray-light-blocking mask 17514, which is preferably translatable and in some examples with two degrees of freedom, is preferably substantially near the holographic material and is preferably absorptive of at least the light being used to make the exposure, comprises an aperture or the like to be described further and which allows the desired light to pass through it.

To expose what have been called "foveal mirrors," the convergence point of the pupil relay is set at what would be the center of the eyeball. To expose what have been called "peripheral mirrors" in the copending applications referenced above, however, it is believed desirable to set the convergence point at a center point of the eye pupil for a corresponding eye rotation angle, as described in further detail in the other sections of this document. One example way to achieve the various locations of the convergence point is believed to be to move the holographic material and right steerable mirror center relative to the assembly comprising the left steerable mirror and the pupil relay optics, as will be described in detail. Another example way, not shown for clarity, may be to change the relative position between the left steerable mirror and the pupil relay; a further example way, also not shown for clarity, may be to change the point on the left steerable mirror where the feed beam impinges, such as by launching it from a steerable feed mirror as was described already for the right steerable mirror.

The exemplary approach to changing the relative position indicated is to move the "right side assembly", comprising the holographic material, mask, and right steerable mirror, with three degrees of freedom. Means for achieving this motion are shown as a stack of linear translation stages, such as are well known in the opto-mechanics art, one 17510 for X, one 17511 for Y, and one 17512 for Z. It will also be appreciated that if the peripheral and foveal mirror beam launch locations differ as occurs in some examples in the othe sections of this document, corresponding relative movement between the holographic material and the right steerable mirror will be indicated, such as for example by suitable additional linear translation stage(s) below one of the holographic material or the tip-tilt stages, or by different launch points on the right steerable mirror, not shown for clarity but as will readily be understood.

In some examples it may be desired to control the shape of the footprint of the beam impinging on the holographic material 17513. For instance, different region shapes on the holographic material may be desired. One example way to accomplish this is by providing the corresponding shapes in the various masking apertures. Other example ways are disclosed in other sections of this document. More than one beam expansion may be desired for efficiency and an example way to achieve this would be kinematic mounts allowing beam expanders to be swapped in and out. Multiple laser light wavelengths are anticipated and not shown for clarity. However, kinematic mounts for different lasers or various beam combiner structures are well known in the art. Similarly, a kinematic mount for the holographic material and/or its carrier would allow it to be positioned in more than one jig like that shown, each with a different beam width, color, angle, and/or regions to expose.

Generally in holography it is desired to reduce the vibrations that may contribute to changes in alignment between the elements during exposure and a preferably damped and substantially rigid structure isolated from the environment is used as a base for the components used during exposure. Here, such a table structure 17517 is shown schematically as supporting the stages of the right steerable mirror, the pupil relay, the tip-tilt stages of the left steerable mirror, the two feed mirror assemblies, the beam splitter, the conditioning optics, and the laser source. The holographic medium is shown supported by the linear stages of the right steerable mirror. The stray-light mask, however, preferably floats and may if convenient not be supported by the holographic table.

Generally in motorized optical systems and automated manufacturing systems even more generally various driver electronics and related control and interface systems and connections are used. For the present purposes, suppliers of the stages and gimbals typically offer such electronics suitable for connection to computers, such as the Newport ESP 30 I, all as will be understood.

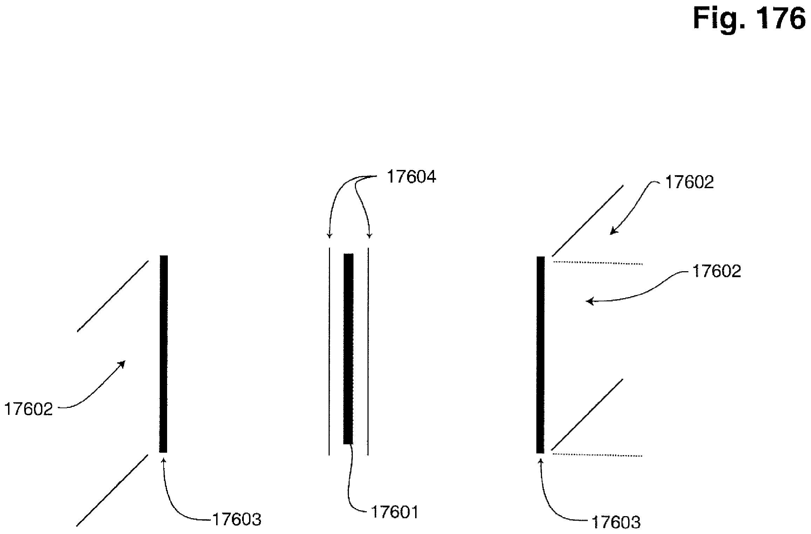

Turning to Figure 176, a detailed description of a combination schematic and section view of a production exposure system in accordance with the teachings of the present invention will now be described in detail. When many substantially similar volume holograms are to be produced, techniques known as "copying" are often employed. According to an aspect of the present invention, a novel high-speed production scheme is described that may be an alternative to known copying techniques. The beams directed at the holographic material 17601 from both sides are created by use of respective diffractive structures, taken here to be transmission HOE's 17603, illuminated by broad collimated beams, as shown and will be understood. When such an HOE 17603 is illuminated by an appropriate beam of light 17602, that beam is "fanned out" into a set of beams and these are the beams that substantially would have been produced by a configuration as described with reference to Figure 175 had it instead been used.

In some examples more than one collimated beam may be supplied to a particular fan-out HOE, allowing selection among the beams to be directed at the holographic material being exposed owing to the well known technique of "multiplexing" in volume holograms. One advantage of such selection is that it allows different stray-light masks 17604 or mask positions, as shown, to be applied for different non-overlapping sets of regions. In some examples the masks may be moved, such as by x-y stages as already described with reference to Figure 175. Some other example ways to move masks comprise rotating mask discs about a center or translating a substantially flexible mask strip using feed-out and take-up reels. Stacks comprising plural mask layers are anticipated such that light passes through the stack where apertures in each mask layer of the stack overlap.

Various combinations of the techniques of Figures 175-176 are anticipated. For example, the techniques of one figure can in some examples be used to expose the foveal mirrors and the other the peripheral mirrors. As another non-limiting example, a fan-out HOE can be combined with some mirror-steered beams. Still another example comprises kinematic mounts allowing various components of the various configurations to be swapped in and out, such as the holographic material, the HOE's, the laser sources, beam conditioning, the masks, and so forth.

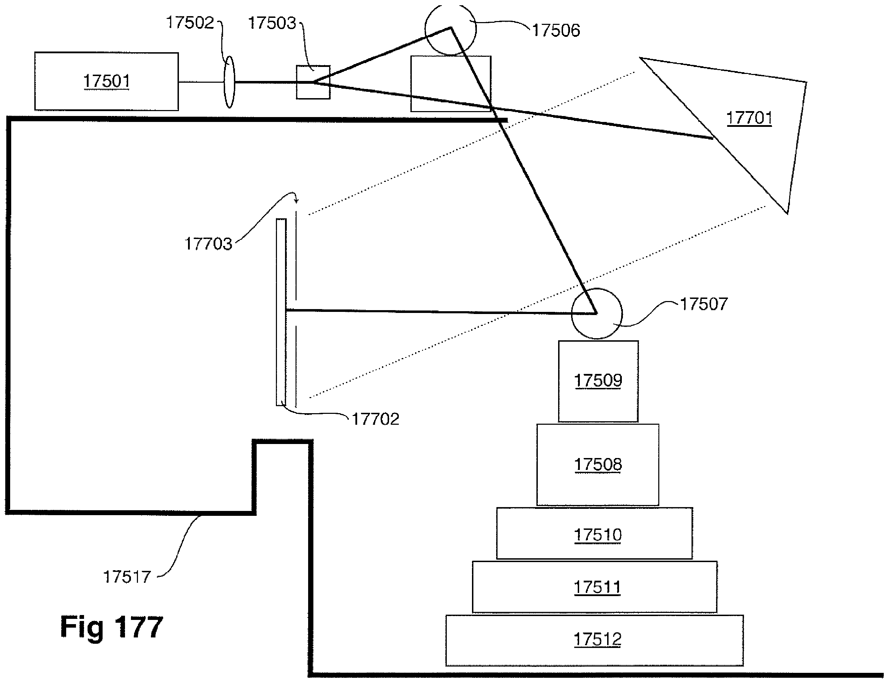

Turning finally to Figure 177, a detailed description of a combination schematic and section view of a system for exposing a transmission HOE wherein the transmission HOE is in turn suitable for use in a production exposure system, in accordance with the teachings of the present invention, will now be described in detail. The transmission holograms used as HOE's in the production exposure system just described with reference to Figure 176 can be produced, for example, in accordance with the system of the present figure. A reference beam, produced by a reference beam generator 17701 as is well known in the holographic art, is shown illuminating holographic material 17702. From the same side of the material, additionally beam by beam illumination is provided from a beam split off of the same source and in a manner similar to that already described in detail with reference to Figure 175. In particular, the steerable feed mirror directs a beam to the steerable mirror, which is positioned angularly by the tip and tilt stages and in three-space by the X, Y and Z stages of the stack shown. The optional mask 17703 preferably translates on the right side of the holographic material and optionally fixed absorptive coatings or structures are positioned relative to the left side of the holographic material.

Variations are anticipated comprising multiple laser sources operated at substantially the same time and impinging on separate regions of the holographic material. Multiple paths originating from the same laser are anticipated that impinge on the same or overlapping regions. Examples include multiple feeds in the arrangement of Figure 175 and multiple illumination directions in the arrangement of Figure 176. Other example variations anticipated comprise selective structures in the various masks already described, such as spectral, polarizing, dichroic, light-control and other filtering to limit the light that may enter according to its characteristics comprising frequency, polarization, and angular content.

PROXIMAL OPTIC CURVATURE CORRECTION SYSTEM

Redirecting image light from a proximal optic in novel eyeglasses systems disclosed in other sections of this document can result in undesired aberrations. Compensation for or what will be called "correction" of such aberrations is believed advantageously incorporated in the systems for projecting light to the proximal optic. Also, such systems can advantageously provide a desired amount of focus whether or not the proximal optic is curved. The present section is accordingly directed at systems for supplying light to a proximal optic that can reduce aberrations and/or adjust focus.

Generally, in systems that launch substantially collimated beams of light towards a curved proximal optic, such as where curvature is present in prescription eyeglasses and sunglasses adapted in some ways to include a curved what has been called a "redirecting layer," and where beams arrive at that proximal optic at oblique angles, the resulting wavefront is believed in some cases to suffer aberrations. Such aberrations may result in spot sizes on the retina of the eye that are larger than could be resolved if the wavefront leaving the proximal optic towards the eye were substantially planar. The redirector layer in some exemplary proximal optics is comprised of a set of separately selectable regions each called a redirector.

It is believed that the proximal optic can be constructed, such as described in other sections of this document, in such a way that what may be called here the "central" beam for each redirector is free from aberrations. In some embodiments, however, it may be desired to be able to adjust the base level of aberration present in such a central beam. As the angle of a beam incident on a redirector diverges from that of the central beam, it is believed that aberrations begin to appear and intensify. In particular, it is believed, resulting from simulations using the well-known optical design software Code V, that the aberrations primarily include focus and astigmatism. Whatever the aberrations, a system that provides corresponding correction, whether ideal or deliberately imperfect for reasons of economy and efficiency, for the beams launched at the front optic is desired.

Two exemplary types of redirectors in previously disclosed systems have been called "foveal" and "peripheral." The foveal have been described as larger in order to provide wider beams that resolve smaller spots on the retina and are typically brought into play when the eye is looking in their direction. The peripheral have been described in some examples as smaller and used in effect to provide a wider field of view for those portions beyond the direction in which the eye is looking. The present section attempts to provide novel corrector systems suitable for various types of redirector and discloses examples as will be appreciated for clarity in the context of each of foveal and peripheral redirectors. However, the particular types of redirectors used as examples in describing the correctors here should not be taken to imply any limitation neither on the types of redirectors that may be used in systems nor on the suitability of certain example corrector systems for particular types of redirectors.

For foveal redirectors, in some example systems, light is sourced toward the proximal optic through a single sequential optical path; in other systems, plural paths are employed. For example, in some systems what may be called a "steer-out" steerable mirror launches light at a common "scan mirror" and the light reflected from that scan mirror enters a magnifying afocal relay, is optionally "fanned out," and then launched towards the proximal optic. In other examples, a number of steer-out mirrors each launch light toward the common resonant mirror and the resulting light is reflected so as to enter the relay. The number of steer-out mirrors used may thus range from one up to, for instance, the number of foveal redirectors that would be employed during a so-called "frame" time period.

For peripheral redirectors, in some example systems, light is sourced to each of plural steerable sweep mirrors and the sweep mirrors are arranged as an array. In some examples there is a single path supplying light to each sweep mirror and in other examples plural light supply paths are employed. In the case of plural supply paths, some examples use different paths to provide for coverage of substantially different portions of the proximal optic and some preferably separate examples use separate paths to separately control the light supplied different sweep mirrors.

The number of paths to supply light to a corrector relate to different ways to modulate light so that the color and/or intensity of light at each portion of the image on the retina can be controlled. Various modulation techniques are anticipated, generally. For instance, one example will be called "time division multiplexing," in which a common modulated source signal is divided relatively rapidly between plural elements. This is believed to include among its advantages that the underlying source modulation can be divided between multiple subsystems instead of using a separate source for each subsystem, particularly when the underlying modulation rate such as of the source is able to handle multiple subsystems. Another example, which may be called "time splitting," divides the source modulation between plural subsystems relatively slowly, so that for instance the mechanical motion of those subsystems have time to come to rest while not receiving light. Yet another example is what may be called "multiple sources," in which each subsystem has its own modulated source. A still further example, which may be called "multiple modulators," has a common source for plural subsystems, each subsystem in effect supplying the modulation. Various underlying modulation schemes are known, such as those that vary the intensity of the light and those that vary the duration light of a fixed intensity. The combination of these techniques to include plural fixed intensity levels that are selected for varying amounts of time is also anticipated. An example of such an approach is what will be called "exponential multiplexing," where different levels are produced by a source and plural selectors each select from among those levels in order to produce the integrated amounts of energy for their output. A variant on exponential multiplexing, "exponential cutover," uses a substantially continuous and preferably rapidly increasing ramp with asynchronous cut over selection of a no signal.

For clarity and simplicity in exposition, the different spectral components, such as so-called red, green and blue, which may be used to compose a color gamut are considered separately generated and optionally independently modulated by a source and supplied along a common sequence of optical elements. The non-mirror elements are accordingly preferably able to perform their functions on each wavelength, such as with so-called multiplexed volume holograms. When so-called dispersive optical structures are used, such as gratings or the like, however, separate regions may be provided for each wavelength.

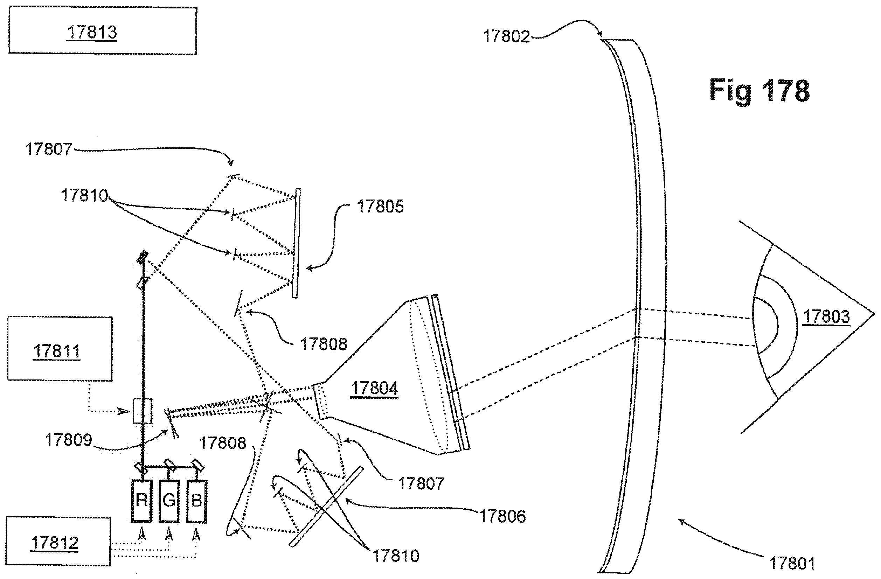

Turning first to Figure 178, a combination schematic, block diagram, plan and section view of an exemplary foveal portion with corrector of a part of an eyeglass system is shown in accordance with the teachings of the present invention. The proximal optic 17801 is shown in section as a curved substrate, such as an eyeglasses lens comprising a holographic coating 17802 or layer shown on its inner surface as an example, which as mentioned comprises various redirector regions that change the angle of light and send it towards the eye 17803. A magnifying "afocal relay" 17804 is shown transforming the input beams to wider beams with reduced angle, as will be understood by those of ordinary skill in the optical art. Two exemplary "corrector" subsystems 17805, 17806 are shown, and will be referred to as upper 17805 and lower 17806 according to their positions on the diagram page. As already mentioned, one or more than two such subsystems are also anticipated.

The light is sourced in this preferred exemplary embodiment by separate red, green and blue lasers, modulated by controller 17812, and their beams are preferably combined for simplicity in description as mentioned, such as using so-called beam splitters as an example illustrated for concreteness but without limitation. What will be called the "steer-in" mirrors 17807 direct the beams to the start of the corrector and the "steer-out" mirrors 17808 direct the beams resulting from the correctors to the desired position on the "scan mirror" 17809 shown. Of course additional mirrors, active or passive, may be interposed at these interfaces to the corrector subsystem, possibly with advantage; but the present description has omitted such for clarity. The beams leaving the steer-out mirrors 17808 impinge on the scan mirror 17809, after which they enter the afocal relay 17804, as already mentioned, impinge on the redirector layer and ultimately enter the eye 17803. The steer-out mirrors 17808 may accordingly be regarded as performing a portion of the scanning function or at least as cooperating with it. Similarly, the steer-in mirrors 17807 may be regarded as performing a part of the modulation scheme, such as by performing a time-splitter function, providing light to its respective subsystem during those portions of the frame time during which the underlying modulation corresponds to its subsystem and providing light during other times to a light-trap not shown. Other example modulation schemes, such multiple sources, multiple modulators, or time-division multiplexing may be separately applied (not shown for clarity) to each steer-in mirror 17807.

The corrector subsystems, upper 17805 and lower 17806 in the example shown, comprise an optical element structure upon which the beam is directed to impinge one or more times. In some examples this structure comprises an aspheric surface, but can also for example be implemented as a grating or holographically. In the illustration, the beam impinges on the corrector structure three times. This example is believed suitable for correcting focus and astigmatism, using the three degrees of freedom independently and non-overlapping portions of the diffractive.

The steerable mirrors in some examples include two degrees of freedom, such as tip and tilt, and are believed capable of producing the effect of two mirrors each with one degree of freedom. Also, some amount of tilt is believed compensated for by the larger size of the mirrors, as shown.

The corrector is formed so as to provide light impinging on it to the next mirror in sequence, the "intermediate" mirrors 17810 as shown for the first two times the beam impinges on the corrector and the steer-out mirror for the final time. In some examples regions on the corrector are "discrete" and separately addressed and in other examples, they are preferably continuous.

When the corrector is implemented as an aspheric surface, it is not dispersive and different colors can be handled along a common path. Providing for multiple colors with a holographic structure, as mentioned as an example, multiple colors can still be using a common beam, such as by the technique known as "multiplexing" and/or that known as "stacking" in the volume hologram art. In other examples, the diffractives are divided into, for example red, green and blue, dispersive bands so that each band handles its own wavelength. For the steer-in and steer-out mirror locations, the separate beams are combined. One example way to accomplish this combining of beams, not shown for clarity, is by means of diffractives that in effect change the angle of the colors, either separating them angularly or bringing them back together angularly to a common beam. In other examples, separate beams are supplied from the respective sources, they impinge on their separate tracks of the diffractive but preferably use the common mirrors (on splayed planes all intersecting the mirrors), and are finally combined by a diffractive incorporated into the steer-out mirror or a passive element included in the sequence. Many other examples are anticipated, such as completely separate systems per wavelength, combining some wavelengths and separating others, or separating and re-combining into a single beam more than once along a sequence.

The optional variable focus controller 17811 and variable focus mechanism, such as an electrowetting lenses made by Varioptic of France, provide a relatively slowly-varying focus; the corrector mechanism is believed capable of adding a variable part to that. However, the combination may be advantageous in providing a "DC offset" to reduce the amount of rapidly varying focus and/or to provide different focus in case the corrector subsystem does not include focus.

A CPU and/or controller subsystem 17813 controls the various steerable mirrors and modulation synchronously, as well as various sensors (not shown for clarity) preferably including eye tracking, as will readily be understood, all as further described in the other sections of this document.

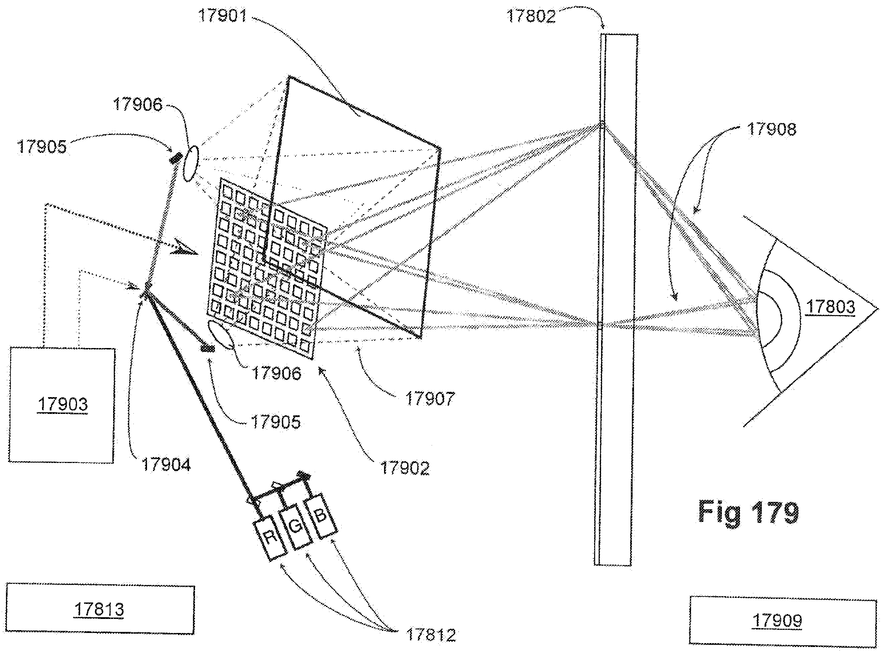

Turning to Figure 179, a combination schematic, block diagram, plan and section view of an exemplary peripheral portion with corrector of a part of an eyeglass system in accordance with the teachings of the present invention is shown. Two exemplary "corrector" subsystems are shown and will be referred to as upper and lower, again according to their position on the diagram page. Two subsystems are shown as an example for clarity, but one or more than two such subsystems are again also anticipated.

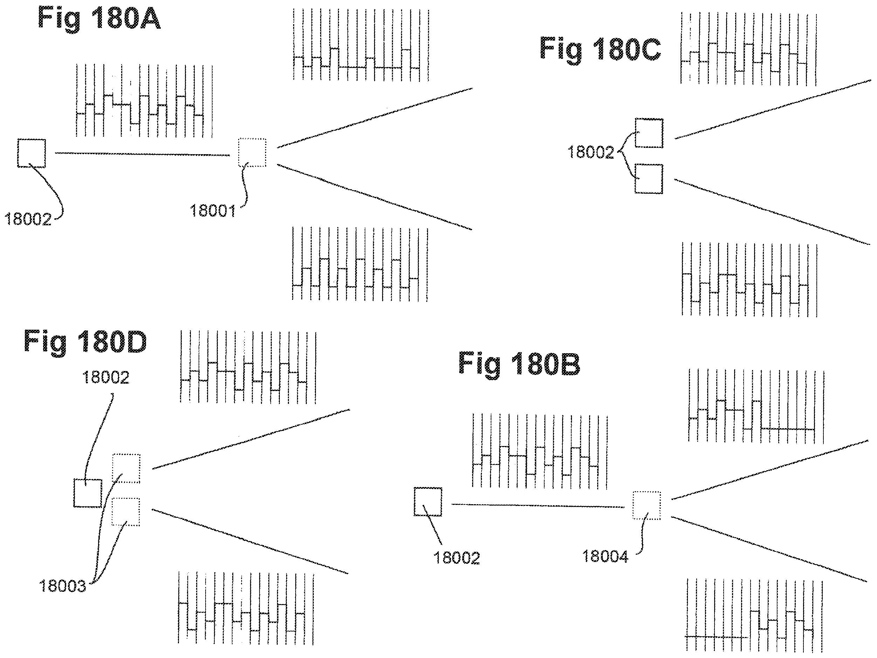

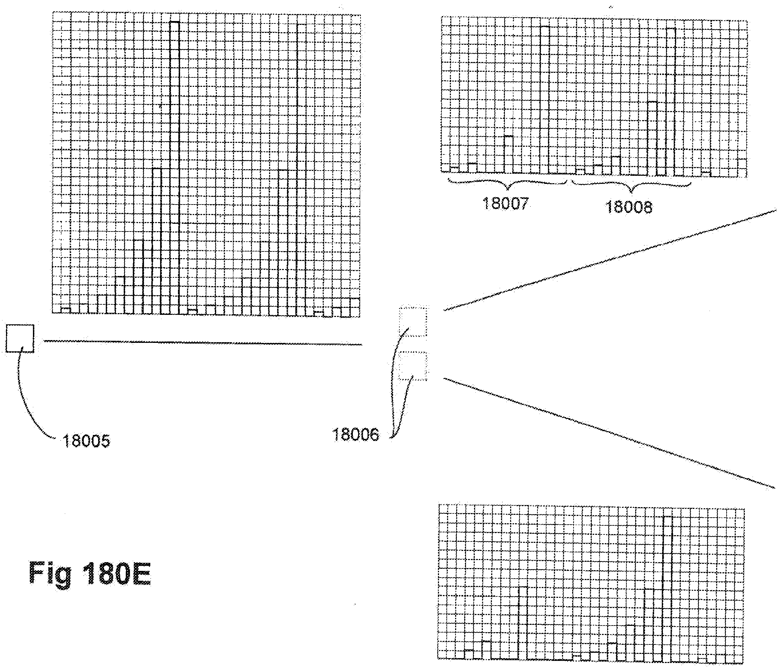

A system for projecting beams of light at the proximal optic is shown, comprising a preferably holographic diffractive structure referred to as a "multiplexed reflector" 17901 that is positioned between the proximal optic and an array of tip-tilt "sweep" mirrors 17902. Each sweep mirror, under control of the corresponding "steerable mirror controller" 17903, launches beams, preferably through the multiplexed reflector 17901, towards redirectors on the proximal optic. The multiplexed reflector 17901 is illuminated, as will be described further, and preferably by means of so-called "Bragg mirrors" results in light impinging on each of the sweep mirrors 17902. In the example, the modulation is controlled by the sweep mirror motions themselves, such as using the exponential multiplexing or exponential cutover techniques already mentioned and to be described in more detail with reference to Figures 180E-F, respectively. Additionally, a time-splitter modulation, also mentioned and to be described in more detail with reference to Figure 180B, is shown provided by the steerable "distribution" mirror 17904, which underlies the modulation controlled by the sweep mirrors in some examples as will be explained further later.

The multiplexed reflector 17901 in effect directs light impinging on it from the combination of fixed mirrors 17905 and lenses 17906 to the sweep mirrors 17902. In some examples, the light is received as a diverging wavefront and returned substantially collimated. The light from the multiplexed reflector 17901 may illuminate the whole surface of the sweep mirrors 17902 uniformly, such as with a substantially high fill-factor and one type of mirror, or preferably only those sweep mirrors 17902 intended to be used. When the hologram is illuminated from multiple lenses (as shown as an example with the upper and lower fixed mirrors), each of the plural directions of illumination preferably allows the sweep mirrors 17902 to cover a different angular region that may be called a "sweep region" 17907 of the proximal optic (two in the example shown). Each such angularly-determined sweep region is believed to have a different average correction for each particular angle of beam 17908 that will impinge on its redirectors. Accordingly, the collimating hologram preferably provides such different average correction to each corresponding sweep mirror, as each sweep mirror in a preferred embodiment corresponds to a particular one of the angles for all the redirectors (at least of a sweep region).

Preferred modulation, as mentioned, is exponential multiplexing or exponential cutover. Each sweep mirror accordingly supplies light to a target redirector during what will be called a corresponding time span. Sweep mirrors may allocate among redirectors and use trap locations alternately or only occasionally in exponential cutover schemes. A nearby redirector for an eye rotation that would mean that the beam does not enter the pupil of the eye can serve as a trap, as will be understood.

The distribution of rods on the retina is believed to vary substantially as the distance from the foveal region and the pixel size and density it is believed may also vary to produce acceptable or even indistinguishable perception. Accordingly, not all sweep mirrors may be used for each redirector. In fact, the so-called "fill factor" of the sweep mirrors may allow for more mirrors than are used for anyone redirector, thereby increasing the speed with which pixels can be sourced. In another speed enhancement, the number of colors sourced for the peripheral portion of an image may be less than that for the foveal portion. Furthermore, addressing pixels in various orders within and across redirectors is anticipated to produce speed-up without substantially degraded perception, such as is well known to occur for example with so-called "interlacing" scan or "flicker rate" in motion picture film projection.

Other example modulation is anticipated. For instance, each fixed-mirror-and-lens-combination in some examples has an independent light source, such as with time division, multiple sources, or multiple modulators. In such arrangements each sweep mirror optionally launches beams at multiple redirectors from the same angular position at the same time. In other examples, each sweep mirror is provided its own independent modulation, such as with time division, multiple sources, or multiple modulators. One way to realize separate control per sweep mirror is by separate beams directed at different portions of the holographic reflector. In some of these various examples sweep mirrors may be illuminated by more than one beam and instead of each resulting beam being aimed at a different redirector, only one beam is aimed at a redirector at a time. Not shown for clarity are sensors and beam splitters used to measure returned energy for purposes including eye-tracking 17909, as mentioned and disclosed elsewhere. In some examples the return-path is tapped into between the fixed mirrors and the multiplexed reflector; in other examples, the tap is upstream from the fixed mirrors and even upstream from the distribution mirror.

Turning finally to Figure 180A-E, a combination schematic, block diagram, and waveform diagram is shown in accordance with the teachings of the present invention. Four different example ways are shown to supply light to multiple elements.

Referring now to Figure 180A, an exemplary "time division multiplexing" system 18001 is shown, as will readily be appreciated by those of skill in the art. The odd numbered levels of the source 18002 are sent to the upper output and the even numbered levels to the lower. Various shutter or switch arrangements, such as opto-acoustic, are known in the optical art.

Referring to Figure 180B, an exemplary "time splitter" system 18004 is shown, as has been illustrated with reference to Figures 178-179. For one portion of the time of a frame the one output receives modulated signal and during the other portion the other output receives signal.

Referring to Figure 180C, an exemplary "multiple sources" system is shown. For instance, in the case of solid-state laser sources, more than one such source is used and its inherent modulation capability is exploited so as to provide separately modulated outputs.

Referring to Figure 180D, an exemplary "multiple modulator" system is shown. As an example, a single unmodulated source of light is input to plural modulators 18003, such as opto-acoustic modulators, and the output of each is a separately modulated output.

Turning to Figure 180E, an exemplary "exponential multiplexing" system is shown. A source 18005 of light is modulated into different levels at different times and plural selectors 18006 each select from the available levels to compose individual aggregated levels. In the example shown, the levels are related as powers of two, 1, 2, 4, 8, 16, 32, and 64. The upper selector is, in the example, shown selecting 1, 2, 8, and 32 in the first output 18007 time span and 1, 2, 4, 16, 32 in the second 18008. The lower selector is shown making independent selections for the time spans. When multiple wavelengths are used to create a color gamut, in some examples, each is sourced during its own time division or selectors capable of selecting or blocking colors are used.

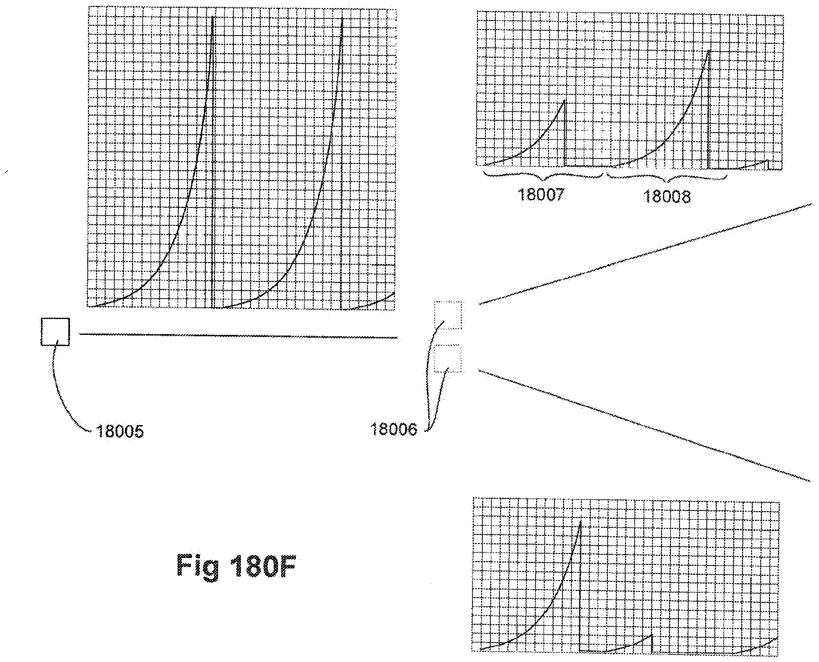

Turning to Figure 180F, an exemplary "exponential cutover" system is shown. A source of light is modulated into a ramp or super-linear ramp and plural selectors each select from the available levels to compose individual aggregated levels. In the example shown, the ramp is ascending and intended to follow the curve of the powers already described with reference to Figure 180E. The amount of light power provided thus depends on the amount of time before the cutover to the no power configuration of the corresponding selector. The upper selector is, in the example, shown cutting over to no input at a first point in time for the first output time span at a relatively later point in time for the second time span. The lower selector is shown making independent selections for the time spans. When multiple wavelengths are used to create a color gamut, in some examples, each is sourced during its own time division or selectors capable of selecting or blocking colors are used.

These systems have been shown as examples only and all manner of equivalents, variations and extensions are anticipated. For instance, the multiplexed reflector and the fan-out optics can be combined, merging the foveal and peripheral. If the fill-factor of the sweep mirror array is acceptably low, then it may reside in a plane between the large end of the afocal relay and the fan-out optic. As yet another example, different frequencies and resulting gamuts can be used for the peripheral and foveal projection.

PROJECTION SYSTEMS BASED ON STEERABLE MIRRORS AND PROXIMAL OPTIC STRUCTURES

Projecting image light to or into a proximal optic in novel display systems such as including eyeglasses and planar waveguides are disclosed in other sections of this document, as well as US Provisional 61142347, titled "Directed viewing waveguide systems," filed January 3, 2009, including further particularly US Provisional 61169708, titled "Holographic Combiner Production Systems," filed April 15, 2009, and also including PCT application(s) titled "Proximal Image Projection Systems," filed April 6, 2009, all of which are incorporated by reference in their entirety. In some such examples relatively large mirrors, mirrors with dynamic piston wavelength adjustment, and/or lens systems after steerable mirrors are used. Accomplishing such projection primarily with beam-sized tip-tilt mirrors and without lenses downstream from those mirrors is believed advantageous, such as in terms of size, weight, cost, and speed. The present section is accordingly directed at such systems for supplying light to a proximal optic and for proximal optic structures cooperating therewith.

Generally, systems that launch substantially collimated beams of light from regions on the "proximal optic" element closest to the user's eye towards the eye, whether that optical element is configured reflectively or as a waveguide, can be described as providing a corresponding collection of pixels onto the retina. With fixed structures comprising a proximal optic, light is typically projected at varying angles towards a region on the proximal optic surface so that the light beams redirected by the proximal optic toward the pupil of the eye will vary in angle, as will be understood by those of ordinary skill in the art. A first example type of mechanism for varying the angle of projected light varies the location from which the light is projected toward the proximal optic. A second example type of such mechanism varies the angle of projection from a single scan mirror location. The present inventive proximal optic structure and projection systems combine these two types in a novel way with the unexpected result that desired projection of pixels can be accomplished directly with beam-sized tip-tilt mirrors.

First consideration will here be directed at the relatively high number of densely-packed angles that are believed preferable for supplying images to the central or foveal portion of the eye. In accordance with the first exemplary type of mechanism, varying the scan mirror location, multiple scan mirror "launch" locations are preferably used. Each such launch location may be supplied separately modulated light in some examples, such as for instance from by a steerable "distribution" mirror. Switching between mirror launch locations, however, is believed to produce too large a variation in angle for adjacent pixels at least for the central portion of the eye, especially without potentially costly measures to allow the angular difference to be small. Accordingly, the second exemplary type of mechanism, varying the location of incidence on the surface of the proximal optic, is preferably employed in order to provide ranges of angles substantially continuously spanning between the angles obtained by the first type of mechanism.

The present invention in some examples also includes novel overlapping redirecting structures as part of the proximal optic, such as in a layer of an eyeglasses lens or the user-facing surface of a planar waveguide. Such structures are believed to allow in effect a wider range of scan angles to produce continuously redirected beams. In particular, it is believed preferable that the range of angles that can be achieved by the second exemplary type of technique mentioned above should be able to match or exceed the corresponding changes that are produced by the first exemplary such technique alone. The combination of techniques, accordingly, is believed to allow the wide range of discrete angle changes afforded by mechanism of the first type while covering the intermediate angular ranges through the second type. This combination of the two exemplary types of mechanism within a region is accordingly believed capable of providing substantially the full range of angles desired for a region. Such regions preferably supply at least substantially adjacent or overlapping ranges of angles, and are thereby believed to provide overall complete coverage.

One exemplary novel way that redirector structures for the foveal portion can be arranged provides generally that beams of a particular maximum footprint profile can substantially be centered at any location within a region of center points of such footprints, such that the corresponding redirecting structure encompasses substantially each entire beam footprint. Thus it is believed for instance that for beams of a certain diameters, at least one of the mirror, diffractive, hologram and/or other redirector structure accordingly contains a sub-structure that allows substantially the whole beam to be re-directed.

Directing consideration secondarily now at projecting images towards the so-called "peripheral" portion of the eye, the difference between adjacent angles, or the "granularity" of discrete angles that are believed perceived, is substantially larger. It is generally believed in the art, for example, that deviating about ten degrees from the optical axis of the eye can result in a decrease of more than an order of magnitude in angular resolution of the eye. Accordingly, projection systems adapted to such a peripheral domain are believed at least potentially advantageous. Also, it may be desirable to offer a wider angular range for peripheral vision than central vision, as this corresponds to the capabilities of the eye generally and can provide the perception of heightened immersion. It will further be appreciated generally that peripheral systems that can benefit from shared structure with the foveal systems may also be advantageous in terms of cost, size, and so forth.

The range of angles from a particular region on the proximal optic towards the eye pupil will vary substantially for the peripheral view for different eye rotations, particularly as a wide range of such rotations is provided for as is generally regarded as advantageous. Varying the launch angles at a single fixed structure is believed to require, due to the possibility of so-called "stray light" entering the pupil, a substantially large range of angles and potentially require large or otherwise cumbersome launch systems. Accordingly, inventive multiple structures are generally preferably provided by the proximal optic so that a substantially wide range of angles towards the eye can be provided by selecting among such structures. Since the so-called "spot size" on the retina for these peripheral portions may be relatively large without being readily perceived as such, as mentioned, relatively smaller redirecting structures are believed adequate.

In generally preferred embodiments, steerable mirrors providing larger beams to larger redirecting structures for the foveal portion of images are re-used to provide smaller beams to the redirecting structures for the peripheral portions. It is believed that directing smaller diameter beams toward portions of these mirrors can, when the mirrors are oriented or scanned appropriately, provide the smaller beams to the desired redirector structures selectively. Moreover, directing these beams to different portions of the steerable mirrors in some examples provides different peripheral pixels.

In another aspect, there is generally benefit for systems projecting substantially collimated beams into the pupil of the eye when such systems can sense the location of the eye pupil. Some non-limiting examples include: power can be reduced, light reflected off the eye can be reduced and, the requirements on the "exit pupil" of the system can be reduced. Eye tracking technology is well known and comprises its own field of art. Re-using parts of the projection mechanism for the purposes of eye tracking is anticipated as advantageous. Generally, when light can be steered into the pupil of the eye, a difference in the returned light can be measured to detect whether the light did enter the pupil of the eye, as will be understood by those of skill in the art.

In still another aspect, reducing the number of independently modulated light beams used may be advantageous. In some novel approaches generally, multiple steering options for the same pixel provide flexibility and/or efficiency in the scheduling of rendering of those pixels. In other combinable novel approaches generally, more than one scan mirror is fed the same signal in such a way that portions of the signal delivered into the eye pupil by one scan mirror are occluded by the iris and/or sclera of the eye when delivered by another scan mirror.

In yet another aspect, steerable mirrors mounted on flexures, as known in the art, have desirable performance speeds when in one or more resonant modes. Systems for driving plural mirrors in substantially the same resonance are believed generally advantageous in terms of the amount and complexity of the driver circuitry.

In a further aspect, the perception of color gamuts can be achieved through providing a limited number of wavelengths or hues, such as three or four narrow bands in some examples. Less gamut or independent frequencies are believed needed as the angular distance from the optical axis increases. Substantially similar perceived color gamuts can be provided by multiple sets of wavelengths, as is known in the art. In some examples so-called Bragg mirrors are able to be selected based on the angle of incident light. This allows for a single set of colors to provide the desired gamut, but in some examples may for instance be at the expense of compactness. By using multiple sets of colors, each providing substantially the same gamut, generally the variation in angles can be reduced.

In yet a further aspect, protrusions from the sidearm or temple of a pair of eyeglasses may pose user-feared danger of injury to the eye, not unlike any structure located in proximity to the eye. In order to improve the feeling of safety in some such systems, novel collapsible or foldable or frangible or dislodgeable structures are anticipated. In particular, the projection systems of some embodiments may generally be arranged advantageously in such a manner.

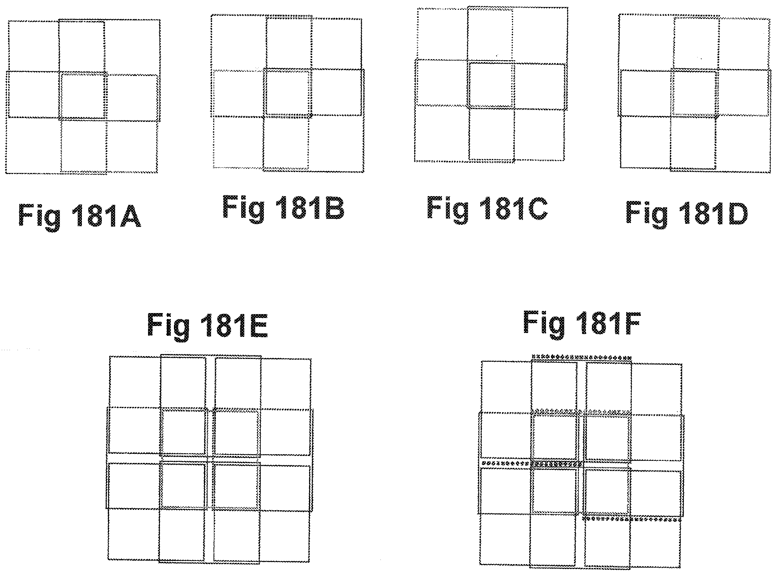

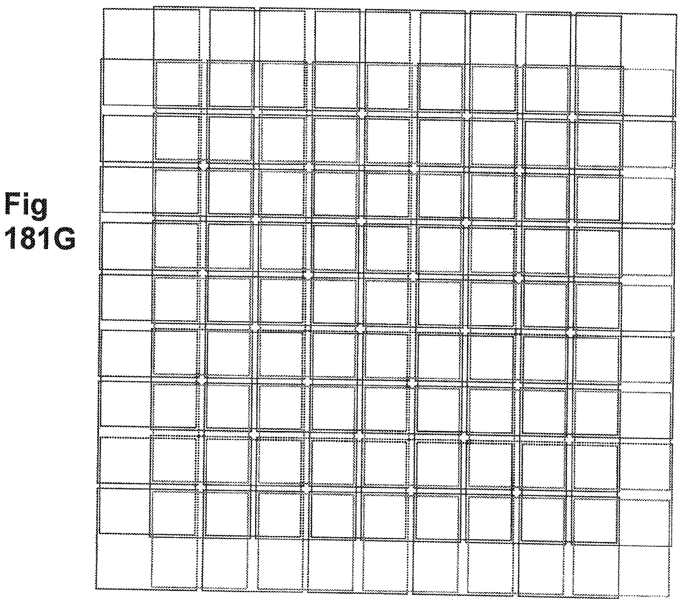

Turning first to Figure 181, a combination schematic, block diagram, and plan view of exemplary superimposed redirector structures is shown in accordance with the teachings of the present invention. The individual redirectors are shown in separate color outlines: red, green, blue, and brown. Each redirector in the example is shown as a square for clarity in exposition and without any implied limitation. Similarly, structures with less or more "layers" are anticipated and the particular choice of four layers is again for clarity and without any limitation.

In a preferred embodiment, the structures are comprised of one or more separate layers of holograms and/or multiplexed in one or more layers, as will be understood readily by those of skill in the holographic art. Examples of holographic media include dichromated gelatin and various polymers, as are well-known in the holographic art. Other diffractive structures, such as surface holograms, may be used in settings where the effect on transmitted light can be tolerated.

The first four figures, Figures 181A-D, show a substantially similar sub-structure in each of four rotations. One way to readily understand the overall combined exemplary structure, shown in Figure 181G, is as a repeating pattern in which one of these four substructures applies to each elementary square of the overall structure. Furthermore, all four types of substructure appear in any two-by two square of elementary squares, such as the example such two-by-two square shown as Figures 181E-F. For instance, in particular, Figure 181A shows the red layer square in the lower right or southwest comer of the substructure and in the following figures shows it respectively rotated clockwise into the northwest, northeast and southeast comers. The order of the layers, however, does vary in the example structure: red, green, brown, blue in the clockwise direction (Figures 181A and 181C); red, blue, brown, green (Figures 181B and 181D).

Turning now to Figure 181F, a larger portion of the pattern already described with reference to Figures 181A-D is shown so that the overall exemplary pattern may be more fully appreciated.

Turning back again to Figure 181G, exemplary peripheral redirector structures are shown in colors corresponding particular layers. The correlation between such peripheral redirectors and the foveal redirector "layers" is, for instance, with respect to angular or spectral selectivity and not necessarily physical proximity, as will be understood. Each redirector disc of the same position within a color preferably (and for clarity) corresponds in the example to a particular location on the sphere of rotation of the center of the eye pupil and produces a corresponding angular change in incident beams. Thus, the range of eye rotations is in effect divided into twenty zones, in the example for concreteness and clarity, and each disc corresponds to one of the zones. When the rotational position of the eye is in one of the zones, all the peripheral redirectors corresponding to that zone in the repeating pattern across the proximal optic are preferably used to supply pixels for the peripheral portion of the image. What will be called "redundancy" of such peripheral redirectors, one being able to perform substantially the function of another when appropriate different launch locations are used, may be advantageous as already mentioned generally. In some examples, as will be appreciated, peripheral redirector discs may be included in portions of the angular space that would be covered by foveal redirectors used for at least some corresponding angles of the eye and those peripheral redirector discs would preferably be unused in such instances.

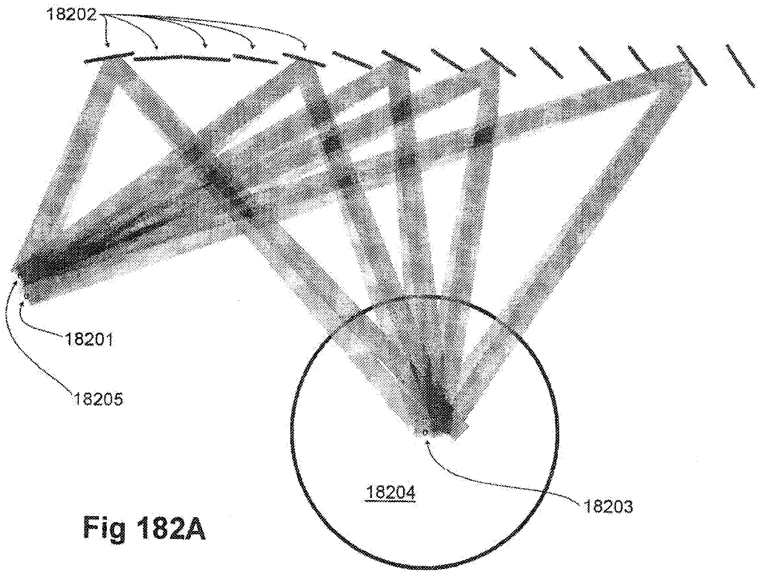

Turning now to Figures 182A-B, a combination schematic and section view of an exemplary projection and proximal optic system use is shown in accordance with the teachings of the present invention. Figure 182A shows an example first type of mechanism, as already mentioned in general, for varying the angle of projected light from a proximal optic to the eye: one that varies the location from which the light is projected toward the proximal optic. The examples of this figure do not show the waveguide case for clarity, as will readily be understood from the present description. In particular, first and second respective projection locations are shown, each with exemplary beams of light launched from them. The light beams are launched at angles so that they impinge on substantially the central portion of each of an exemplary linearly arrayed collection of redirector structures for concreteness and clarity in exposition but without limitation. These exemplary redirectors are oriented for clarity in the section shown substantially so that they redirect light beams launched from the first projection location so that the resulting light beams are directed towards the center of rotation of the eye of the user.

Accordingly the beams launched from the lower location 18201 in the diagram are shown impinging substantially on the center of corresponding example redirectors 18202 and being redirected towards the center of rotation 18203 of the eye 18204. Similarly the beams launched from the second location 18205 upper in the diagram are shown impinging substantially on the center of corresponding example redirectors and being redirected towards the eye generally but at angles that differ from the angles of the corresponding beams launched from the first projection location.

It will be appreciated that in the example geometry shown for concreteness and clarity that the divergence is about two to four degrees for illustrative purposes. The positions and relative orientation of the projection locations is believed to play a role in the range of such angles. Nothing shown here, such as also the particular example of a flat proximal optic as contrasted with a curved or waveguide optic, the size of the redirectors or the spacing between them, is intended to limit to specific angles or geometry but is rather as will be appreciated for concreteness and clarity in exposition. Moreover, these approximate middle locations of the redirectors shown are only intended to provide an indication of the effectiveness of the location difference in producing angular difference.

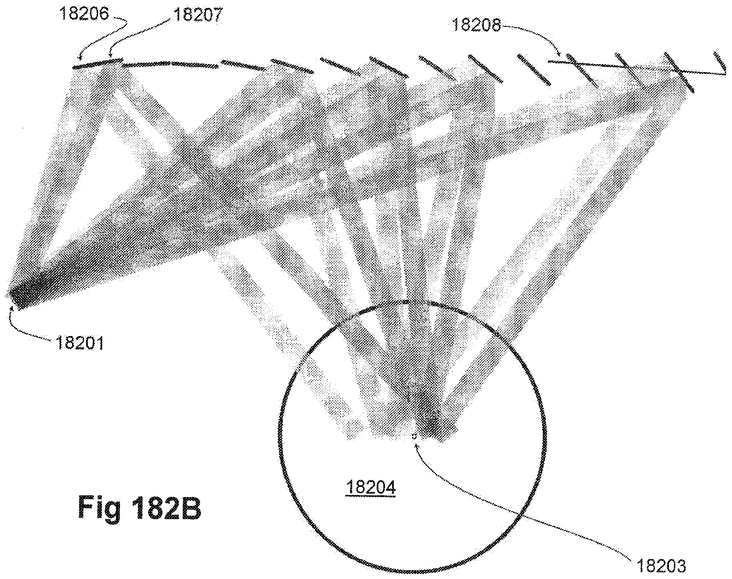

Turning to Figure 182B, shown is a second example type of mechanism, as already mentioned in general, for varying the angle of projected light from a proximal optic to the eye: one that varies the location on the proximal optic to which the light beams are projected toward. In particular, first 18206 and second 18207 what will be called "extremal" beam locations are shown. The first extremal location is all the way over on the left side of the redirector in the figure and the second is all the way over on the right of the redirector. The variation in the resulting angle can be seen to be very roughly similar to that already illustrated with respect to Figure 182A, suggesting that slightly larger redirector structures or closer packed mirror locations would, for example, be desirable in order to obtain the exemplary condition already mentioned generally that: the variation in angle achievable by the second type of mechanism is preferably able to at least meet the variation in angle by the first.

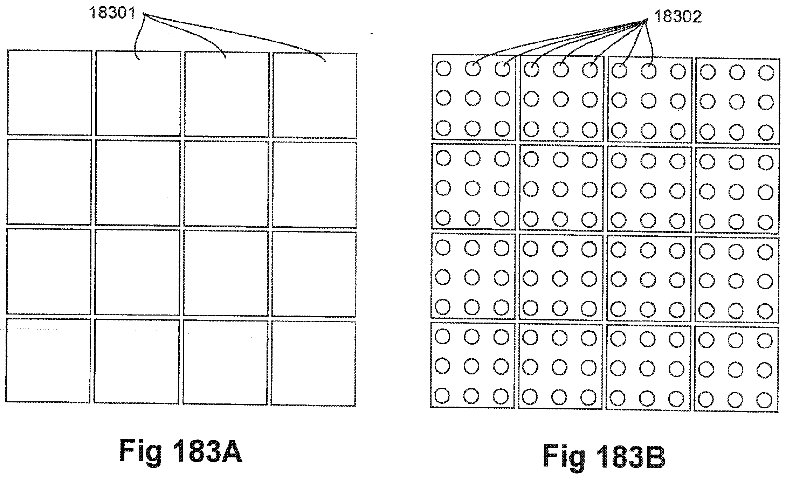

The range of angles achieved by each redirector in this figure is believed to fall short of the amount that would allow covering the entire range of angles towards the eye without gap. However, this may be overcome for instance by including more launch locations, such as in a two-dimensional array as will be described next in more detail with reference to Figure 183. Also, the "multiple overlap limit" 18208 of center point of impinging beams shown to avoid collision with other redirectors of the same layer shows a design issue that can be avoided by limiting the field of view, by treating the last redirectors differently, by using a curved proximal optic, or by other techniques.

Turning to Figures 183A-B, a combination schematic, block diagram, and plan view of an exemplary steerable mirror array and peripheral illumination thereof is shown in accordance with the teachings of the present invention. Figure 182A shows an example four by four array of square steerable mirrors 18301, although the number of mirrors in an array, their shape, and their relative spacing may vary. For instance, smaller or larger arrays, round/oval mirrors, non-uniform spacing, and overlapped position of mirrors by a variety of beam-splitters/lenses or other devices are all anticipated in some examples. The size of the mirrors, however, preferably is adequate to allow the beam that should enter the eye to provide the desired spot size or perceived resolution. The mirrors shown are preferably used in at least one resonant mode, such as for example a horizontal scan resonance with vertical steering, as is known for so-called "raster scan" mirrors individually. It is well known in the optical art that such tip-tilt mirror functions can also be performed for example by two mirrors each with one degree of freedom, or better by three such mirrors or two such mirrors and a lens.

Referring to Figure 183B, the mirrors of Figure 183A are shown with plural example circular beams 18302 impinging on each of them. Each such beam footprint in an example is in the same pixel position in a sub-array of pixels and the sub-array is repeated to comprise the complete array; each sub-array of pixels in turn corresponds in the example to at least one peripheral redirector associated with a particular (at least) one of the foveal redirectors, as shown and described already with reference to Figure 181G. It is believed that launching a beam from each of the array of locations at the same peripheral redirector means that the resulting beams into the eye are each from a different angle and thus correspond to a different pixel of the sub-array of pixels. The subarrays of pixels corresponding to the different foveal redirectors then tile together in the example to create a complete peripheral image pixel array. The resolution of the peripheral image, as has been mentioned, is substantially lower than that of the foveal image and it is believed that the number of pixels shown in the example corresponds to a suitable number in an example system.

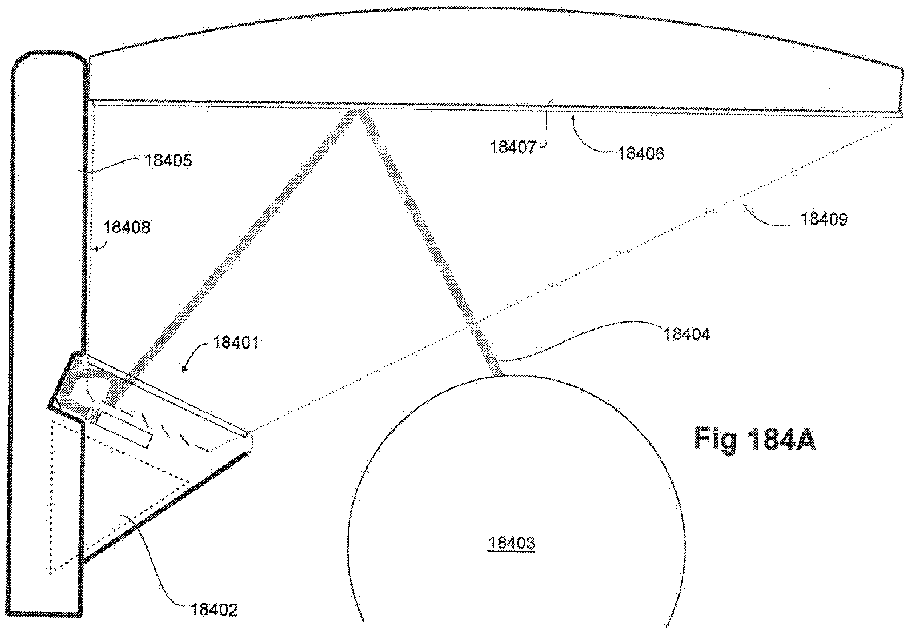

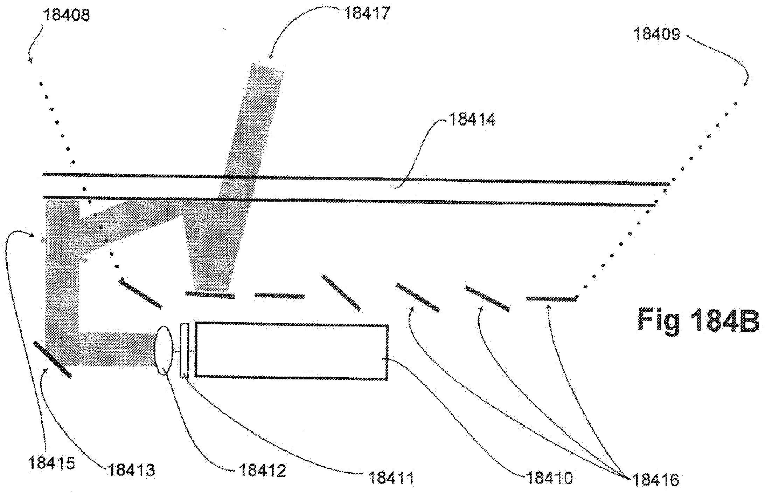

Turning to Figures 184A-B, a combination schematic and section view of an exemplary eyeglasses projection system and use in accordance with the teachings of the present invention is shown. While this example layout and configuration as eyeglasses is provided for concreteness and clarity, as will be appreciated, nothing here should be taken to limit the use of the inventive concepts disclosed here to eyeglasses or to the particular example layout and configuration shown; moreover, whatever waveguide configurations are not shown for clarity but will be understood from the description by those of skill in the art. Figure 184A shows an exemplary overall system for just one eye and including the eyeglasses frame and lens; while Figure 184B provides an enlarged view the projection system portion.

Referring to Figure 184A, the eyeglasses lens is shown with example curvature/power and comprising a "volume holographic layer." Such a layer, while shown as an actual layer on the proximal surface of the lens for clarity, will be understood here to mean any combination of so-called Bragg mirror or other diffractive mirror structure in, within, regularly, or irregularly combined with whatever substantially rigid structure of the eyeglasses lens in whatever way.

The projection optical system 18401 is shown angularly affixed to the side arm 18405 of the eyeglasses frame and in the example slightly inset, for concreteness and clarity. The projection optical system 18401 is backed by a "deformable space" 18402 that provides a space for the projection system to substantially fold into (using hinge structure not shown for clarity) or otherwise compress so as 18401 to move closer to the side arm and away from the user eye 18403 in case of forces being exerted that may otherwise cause it to exert forces on the user. In some examples, however, the deformable space 18402 shown may be used to include electronics or other system components. The projector can also be seen to be directing an example substantially collimated beam 18404 towards the holographic layer 18406 on the lens 18407, which redirects it towards the eye 18403 of the user and preferably into the pupil of the eye 18403 so that it can be focused onto the retina. Tethered or wireless communication and/or power supply and/or light supply and/or processing and/or control and/or other electronic circuits are not shown for clarity but will be understood. The resulting extent of the angular range is indicated by dotted lines 18408 and 18409.

Turning to Figure 184B, the projection optical system of Figure 184A is shown oriented horizontally, enlarged, and with details called out, as will be appreciated. Specifically, a laser source 18410 such as a solid-state semiconductor laser with substantially narrow bandwidth is shown as would be understood by those of skill in the art. Also, exemplary so-called "beam conditioning" 18411 such as for correcting astigmatism of such lasers and a beam collimating lens 18412 (indicated schematically by an oval), both as would be understood by those of skill in the laser art, are shown acting sequentially on the unconditioned laser output. Next in the sequence of exemplary optical elements is shown a fixed mirror acting as a so-called "fold mirror" 18413 to direct the beam upwards so that it impinges on the "volume hologram Bragg mirror structure and exit window" 18414 of the projection optical system. In some examples a mirror coating on this structure reflects the beam 18417 back downward towards the steerable "distribution" mirror 18415; in other examples, Bragg mirror structure sends the beam towards the distribution mirror. Although the beam appears in the particular section shown to pass through the distribution mirror on the way up, the beam is preferably angled in the vertical plane normal to the drawing surface so as to clear the distribution mirror, as will be understood.

The holographic window and the distribution mirror cooperate in order to be able to direct the example beam shown to various steerable launch mirrors 18416, such as those already described with reference to Figure 182. Suitable Bragg mirrors within the exit window structure selected by the steerable distribution mirror preferably direct the resulting beams towards corresponding selected steerable launch mirrors 18416. The resulting extent of the angular range is indicated by dotted lines 18408 and 18409.

Various multiplicities and other extensions to the example structure shown are anticipated. For instance, more than one laser source, such as one for each of several colors comprising a color gamut, as already mentioned, may be combined in a single laser source or combined by various faceted or beam-splitter structures as are known. Also, separate distribution mirrors and optionally sources for the smaller peripheral beams are anticipated but not shown for clarity. The various angles of light impinging on the launch mirrors can in some examples increase the effective optical angular range of a launch mirror without increasing its physical angular range. Moreover, multiple sets of colors making up substantially the same gamut and/or multiple independently modulatable sources of the same frequency are anticipated. Also, light modulators separate from the laser sources themselves are anticipated, such as positioned after a beam splitter divides the output of a laser source. Also, while the launch mirrors are shown in section on a plane, other arrangements are anticipated, such as a tiered structure. A mechanical substrate below the launch mirrors that supports them and that also provides rigid alignment and mounting for the lasers and other optical elements below is anticipated but not shown for clarity. A still further variant uses a so-called "fan-out" optical element to provide in effect copies of the light sent out from the exit window to multiple angular ranges; the limited eye pupil aperture selects one set of incident beams.

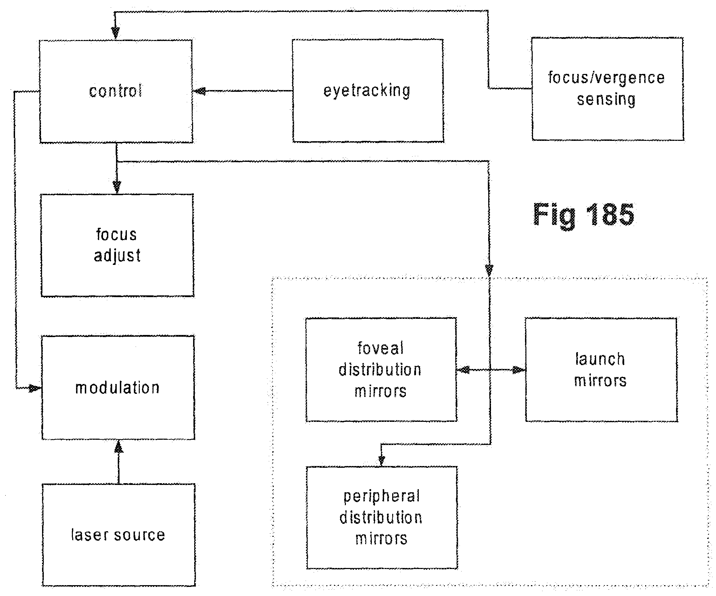

Turning to Figure 185, a combination block diagram and schematic of an exemplary eyeglasses system in accordance with the teachings of the present invention is shown. The control section takes input from the eye tracking section, as already mentioned, and optionally from the "focus/vergence" sensing section also as indicated. Thus, the control section preferably has real-time information on the position of the eye and optionally, but preferably, on the distance to which the user eyes are accommodated or are attempting to accommodate.

One output of the control section is to control automatic focus adjustment. Examples of such adjustment include variable focus lenses such as those sold by Varioptic of France. Modulation is controlled preferably directly at the laser source in known manner such as by supply of power to it. Other known examples include so-called "optical modulators," more than one of which may share a common laser source, such as those based on non-linear response of materials to electric currents, as are well known in the optical art. Other approaches to modulation include slower switching, such as by selectively distributing or trapping light by steerable mirrors to be described and/or by shutters such as LCD shutters more than one of which receiving portions of the same source light, as would be understood.

Steerable mirrors in the preferred embodiments described are shown as a subsystem. They comprise distribution mirrors and launch mirrors, as already explained. In some examples distribution mirrors for foveal beams are larger and those for peripheral beams are smaller; in other examples, the same mirrors can be used for both functions and the input beam size varied. The launch mirrors are preferably arrayed in multiple locations to provide multiple angle ranges as may be desired. In some examples, angular selectivity of the redirectors is used so that which redirector is operational is determined by the location of the launch array; in other examples frequency selectivity is used, as mentioned, so that which color of light determines which redirector is selected. Also, angular selectivity of the foveal redirectors may be used in some embodiments so that light is launched at plural redirectors from the same launch surface (such as a diffractive) and only light from one of the redirectors that the light impinges on supplies light that enters the pupil of the eye.

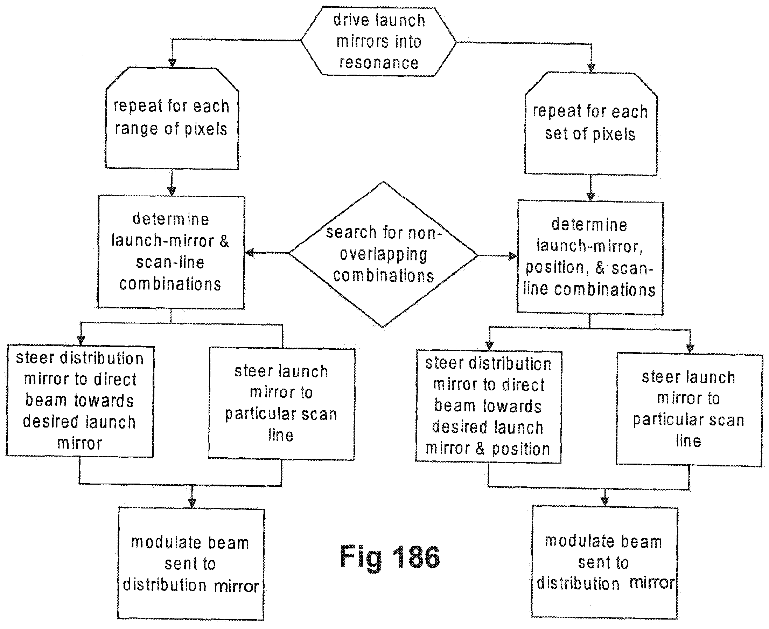

Turning finally now to Figure 186, a combination flowchart of an exemplary system in accordance with the teachings of the present invention is shown. The first step puts the launch mirrors in resonance, if such a mode is used. Then, for each of the peripheral and the foveal projection systems, a series of steps are repeated in rapid succession in order to provide the perception of images by the user. These repeated steps are preferably repeated above the so-called "flicker" rate or otherwise interlace, multiply flashed, or otherwise divided among time sub-frames. It is believed that for the foveal portion, a rate of about thirty to forty times per second is generally accepted as adequate and that for the peripheral portion a rate substantially twice as high is generally called for. A novel approach to improving perception of image continuity is to substantially-randomly change the order in which preferably-small elements of the image are projected. For instance, scan lines or portions of scan lines can be selected substantially at random or pseudorandomly or otherwise in an order that creates the impression of unpredictable or unstructured or finely divided sequencing.

The foveal and peripheral parts of the chart are shown separately, for clarity. However, a "search for non-overlapping combinations" decision process is included bridging them. This is intended to indicate that some scan lines may be able to include one or more foveal and one or more peripheral portions and that it is preferred to identify these and combine the projection of them, so as to potentially reduce for instance the number of modulations required and the amount of time required per refresh.

Referring to the foveal part, shown on the left, the process is repeated for each portion of a scan line that includes foveal pixels. Combining of portions into common scan lines is preferably performed for the foveal portion as well; accordingly, multiple instances of the steering of launch and distribution mirrors shown below this box are provided that re-unite in a common scanning and modulation. In some examples, where slower switching is provided, such as in order to conserve the number of independent modulations available, cut-over is accomplished within a scan line so as to combine a portion on one scan line using one foveal launch mirror with another portion of the same scan line using a separate scan mirror, while maintaining a single modulation input to both. Preferably separately and at substantially overlapping times, a distribution mirror is steered to bring light to the desired scan mirror and the non-scan axis of that scan mirror is adjusted to bring the scan line into the desired raster position. Then, when the line is scanned, the beam sent via the distribution mirror to the launch mirror is modulated.

Referring to the peripheral portion, shown on the right, the combinations searched for include, beyond those already described for the foveal portion, the consideration of potentially plural positions that the peripheral distribution mirrors cause light to impinge on the launch mirrors, as described with reference to Figure 182B. Much of the rest of the flow shown is the same as for the foveal portion already described, except that the location on the launch mirror is included in steering of the distribution mirror.

ADJUSTABLE PROXIMAL OPTIC SUPPORT

In systems where an element is to be positioned substantially in front of at least one eye of a wearer and the position of the element relative to the eye is desired to be oriented substantially with respect to the at least one eye, systems known in the art are cumbersome, unattractive, and costly, particularly when the wearer is to make the adjustments. There is accordingly a need for articles of manufacture that allow freedom of motion of the wearer, that rest on the tops of the ears or sides of the head like eyeglasses, and yet have adjustability adequate to position the proximal optic as may be desired.

In some example systems, such as those described in other sections of this document, the assembly of a proximal optic, with rigidly attached projectors in some embodiments, is to be positioned substantially so as to aim at the center of rotation of the eye and to be a pre-determined distance from that point. Other configurations are anticipated, such as ones allowing relative movement between the projectors and proximal optics to compensate for changes in the relative position of the eye center point and proximal optic, but are not described further for clarity.

Generally, the examples considered here include mechanical configuration means resting on the ears and nose-bridge and providing three degrees of freedom for the proximal optic relative to an eye, including provision for variation in so-called "interpupillary distance". In some embodiments a substantially ordinary "eyeglasses frame" is adapted to cooperate with add-ons, such that the desired three degrees of freedom are provided between the proximal optic and the frame. In some other example embodiments the frame itself includes adjustments that include the desired degrees of freedom for the proximal optic substantially fixedly mounted to the frame. In some further also non-limiting examples the two aforementioned exemplary approaches are combined, with the frame being partly configurable and additional means providing configurability relative to the frame.

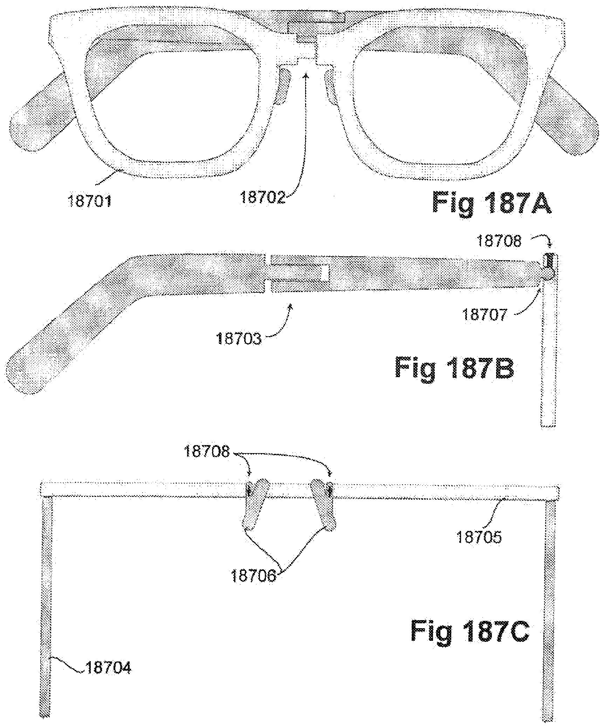

Turning now to Figures 187A-C, a detailed exemplary embodiment of an adjustable eyeglasses frame in accordance with the teachings of the present invention will now be described. Three views are as will be appreciated provided for clarity. Figure 187A shows the front face 18701 of the frame and folded side arms. Figure 187B a side view of a temple side arm 18704 in section including the front face 18705 of the frame. Figure 187C is a view from the bottom with the face oriented at the top of the figure and exposing the nose guide fasteners.

The telescoping side-arm mechanism 18703, such as are known in the eyeglasses art, is shown in a schematic example for clarity, though ways to achieve this are known, including by bendable members. In the present embodiment, the distance from the eye center is adjustable by this device. Telescoping adjustment 18702 is also shown on the bridge so as to allow variability of the distance between the eyes, as is also believed known in some at least historical examples. The balance between the two temple lengths provides one degree of freedom, so-called "yaw" or left/right rotation around the vertical. The so-called "nose pads" 18706 are shown adjustable with two degrees of freedom: along the slot and in rotation around the tightening pin 18708, as will be understood. These pads thus can be adjusted to the angle of the nose and still allow for the distance from the face to be adjusted forward and backward in cooperation with the side-arm length. Adjustability of the so-called "pitch" of the plane of the front face of the frame, around a line parallel with the line connecting the eye centers, is provided by the temple ball joints 18707 as shown. The ball joint also accommodating the angle of the side of the head, so-called "toe in/toe out," as well as differences in the height of the ears, so-called "roll."

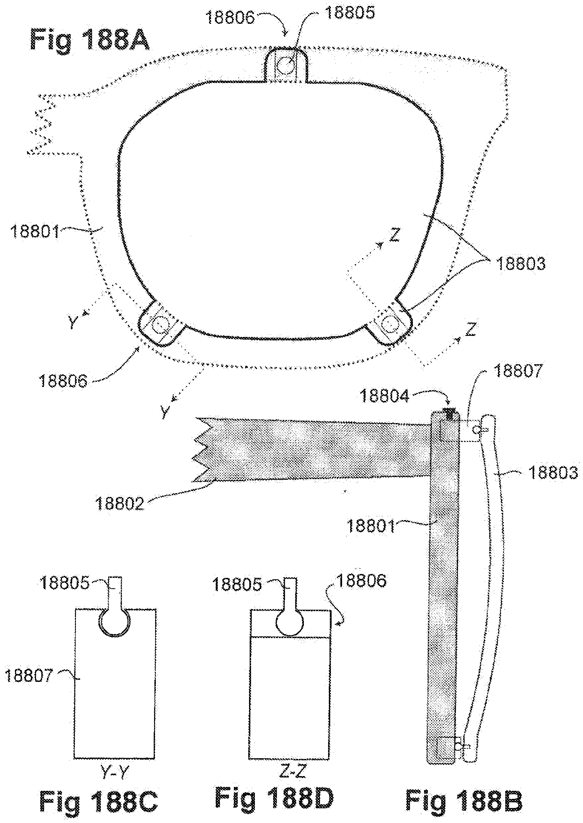

Turning to Figure 188A-D, a detailed exemplary embodiment of an eyeglasses frame with proximal optic position adjustment in accordance with the teachings of the present invention will now be described. Four views are as will be appreciated provided for clarity: Figure 188A shows an example eye 18801 of the front face of the frame; Figure 188B is a side view of a temple side arm 18802 of the front face of the frame in section; and Figures 188C-D detail orthogonal sectional views (called out in Figure 188A) of the exemplary mounting post, with mounting post insert 18807. In this embodiment, the frame may be configured to the head of the wearer in whatever way and the proximal optic 18803 is then adjusted relative to the frame. Two degrees of freedom are provided by the tip-tilt or yaw-pitch adjustability of the front optic relative to the frame, as set by the relative extension length of the three posts. Optional locking pin 18804, such as for instance a screw or pin, holds this position; with posts that are held by threading into the frame, not shown for clarity, or by press-fit, for instance, locking may not be provided. The post lengths also contribute to determining the distance from the eye center.

Two sections are, as will be appreciated, provided to detail the slidable location of the enlarged end of the mounting stud that in the example is affixed to or formed as part of the proximal optic. The axis of each of these is shown in Figure 188A as pointing toward the center of the diagram, as will be understood as related to the known kinematic mount technique comprising three "grooves." Thus, the enlarged end 18805 of the mounting post is preferably able to slide along a line within the guiding "way" formed in the post.

Other example configurations will readily be understood by those of skill in the mechanical mounting arts. For instance, the enlarged end stud in some examples is axially moveable relative to the proximal optic, such as by a screw thread in which case the post may or may not be moveable with respect to the frame. The post or the stud may, as will be understood, be formed as a single part with the corresponding element to which they are mounted when no relative motion between the two is called for, such as when provision is made for the relative movement of the other of the two. Other examples include a reversed configuration where the mounting post structure is included in or attached relative to the proximal optic and the stud to the frame. One example configuration in particular includes the ways 18806 formed integral with the proximal optic and the studs adjustably threaded into the frame.

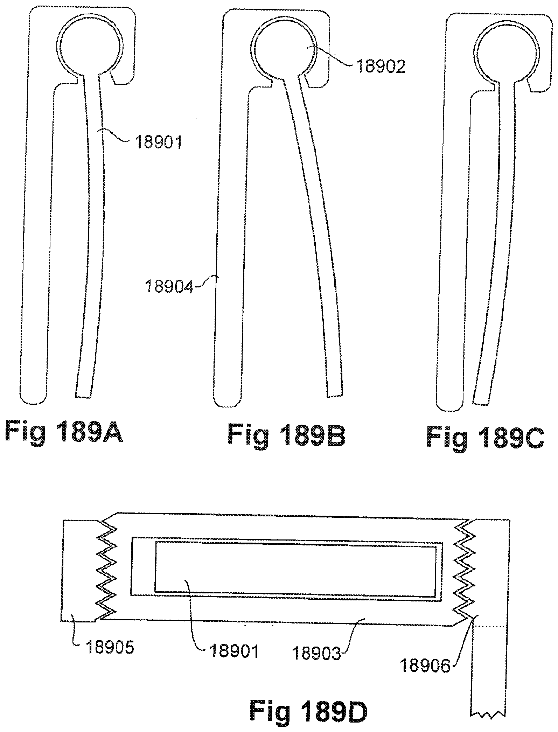

Turning to Figures 189A-D, a detailed exemplary embodiment of a visor-style proximal-optic adjustment in accordance with the teachings of the present invention will now be described. Four views are as will be appreciated provided for clarity: Figure 189A shows a section of the frame front 18904 and proximal optic visor configured substantially straight down; Figure 189B-C are similar to Figure 189A but with the visor tipped outward and inward, respectively; and ID is a detailed section through the horizontal including the pivot rod portion of the proximal optic and a portion of the sidearm. The proximal optic 18901 will be seen to move with two degrees of freedom: pitch or tilt by rotation of the pivot rod 18902 within the cylindrical structure, formed in the portion of the glasses frame; and translation side-to-side within the front face 18903 as indicated in Figure 189D.

A third degree of freedom, providing for adjustability of the distance to the eye, as may be desired in some embodiments, is shown in the example as provided by adjustability of frame structure itself. The "eye" of the frame is shown positionable between the bridge 18905 and the sidearm 18906 in multiple positions, as illustrated by the mating grooves. Thus, the frame front in the example is configurable to allow each eye to move forward or backward. In some non-limiting other examples the whole frame face is configured to so move, such as by adjustability of the hinge point of attachment on the sidearm, as will readily be understood but not shown for clarity, which preferably would be accompanied by an adjustable depth of nose bridge.

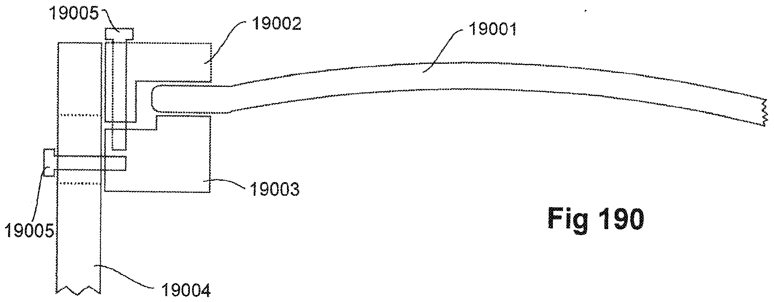

Turning finally now to Figure 190, a detailed exemplary embodiment of a proximal-optic clamp in accordance with the teachings of the present invention will now be described. The clamp holds the proximal optic 19001 between the outer 19002 and inner 19003 clamping members as shown and will be understood due to urging of the members substantially towards each other such as by the screw fastener 19005 shown only as an example. The clamping action itself is believed to offer two degrees of freedom: translation in two orthogonal directions in the plane between the members. The third degree of freedom is offered by the forward/backward adjustment of the position of the clamping jaw assembly relative to the frame 19004, as indicated by the example of a fastener and slot. A flexure or a conformable/deformable member not shown for clarity may provide additional stability against vibration of the proximal optic. When more than one clamp is used for a particular proximal optic, it is believed preferable that only one clamp actually fully restrains against translation of the proximal optic and the others only position it backwards/forwards with moderate force, so as not to over constrain or stress the optic.

PROJECTION OF IMAGES INTO THE EYE USING PROXIMAL REDIRECTORS

Generally, beams are launched from a launch mirror towards a redirector, which then directs the beam substantially into the pupil of the eye. The angles of substantially collimated beams entering the eye determine pixels on the retina, as will be understood, and a continuous area of such pixels on the retina is believed desirable to create the perception of continuous images. In some examples redirectors are mirror or diffractive structures including for example volume holograms; in other examples, where the launch locations are on the opposite side of the redirectors from the eye, redirectors are transmissive diffractives such as gratings or volume holograms; and in still other examples, where light is launched through a waveguide, redirectors are diffractives such as gratings or volume holograms that allow the light to leave the total internal reflection regime and be directed towards the eye. Light is provided to the launch mirror(s) by whatever means and it may include some fixed or variable curvature and there may be bulk optics between the launch mirror and the redirectors and the bulk optics and mirrors and redirectors may change the curvature of beam wavefronts and/or clip beams. For example, so-called "relay" optics may also be used to enlarge or reduce beam width after launch. Beam shape changes due to obliquity and anamorphism are also optionally taken into account in the design of the optical elements.

Launch location for a particular beam preferably comprises a single steerable mirror surface. In some examples, a launch mirror comprises substantially more than a beam width of surface area; the beam may be launched from different locations on the launch mirror as well as at varying angles. In further examples, launch mirrors comprise substantially a single beam width; the launch angle is potentially varied over a range of angles by beam steering, but the launch location remains substantially fixed. Plural launch mirrors of beam width may each provide a portion of the angular range for a director. Plural launch mirrors of larger than beam width are also anticipated, allowing both a choice of launch mirror and "walking" of location at which the beams impinge on the launch mirrors. In related examples, more than one "layer" of launch mirrors is provided so that the mirrors can in effect be overlaid in space (as seen for example from the redirectors), such as for instance by the device of one or more beam splitters or lenses. In still further examples, enough layers of mirrors larger than beam width are arranged so that in effect there is a beam width mirror area for any effective launch location; the layers of mirrors overlap to the extent that each potential beam launch location is served by a beamsized portion of a at least one mirror. Such full-coverage overlapping arrangements can for instance create the effect of a single large steerable mirror but with reduced physical mass of individual mirrors, allowing for more rapid mirror movements.

Redirectors each preferably comprise a single structure that redirects substantially each entire beam wavefront. In some examples, redirectors are substantially beam width; the angular variation of beams directed at the pupil results from the range of angles of the beams impinging on the individual redirectors. In other examples, redirectors substantially have an area greater than the footprint of the impinging beams and allow for so-called "walk" on the redirect or; the angle and location of the beam passing through the pupil of the eye is varied when the location of the beam impinging on the redirector is varied. In further examples, more than one "layer" of redirectors is provided so that the redirectors are in effect overlaid in space (as seen for example from the launch locations and/or the eye), such as for instance by the device of so-called "multiplexing" in the construction of volume holograms. This is believed to for example to reduce the needed size of launch mirror structures. In still yet further examples, enough layers are arranged such that in effect there is a redirector for substantially any location on the proximal optic (as seen for example from the launch locations and/or the eye); the layers of redirectors overlap to the extent that each location is served by a beam-foot print-sized portion of at least one redirector. Such complete overlap arrangements can for instance reduce the area of the eye pupil used.

A single example system may use varying combinations of the techniques already described for differing locations on a proximal optic. On a single proximal optic, some redirectors may be beam width, while other redirectors may be walkable, while still other redirectors may be walkable and use the combined approach. Also, more than one projection location may serve a single proximal optic, each such location with its own redirectors. It will also be appreciated that the source beams impinging on the launch mirror may themselves be provided from more than one or varying locations, resulting in a greater angular range for the launch mirror.

In some examples more central vision is served by separate redirectors from those that serve more peripheral vision. For differing rotations of the eye, for example, different but generally overlapping portions of the same collection of larger redirectors are used for the appropriate portion of the visual field. However, separate collections of redirectors may be dedicated to each range of rotational positions of the eye. In a special case of the above launch mirror and redirector systems believed particularly suitable for the peripheral portions of vision, both the launch mirrors and the redirectors are beam width. Accordingly, each combination of launch mirror and redirector in such systems corresponds to a particular pixel.

Detailed descriptions sufficient for those of ordinary skill in the art to make and use the inventive concepts will now be provided.

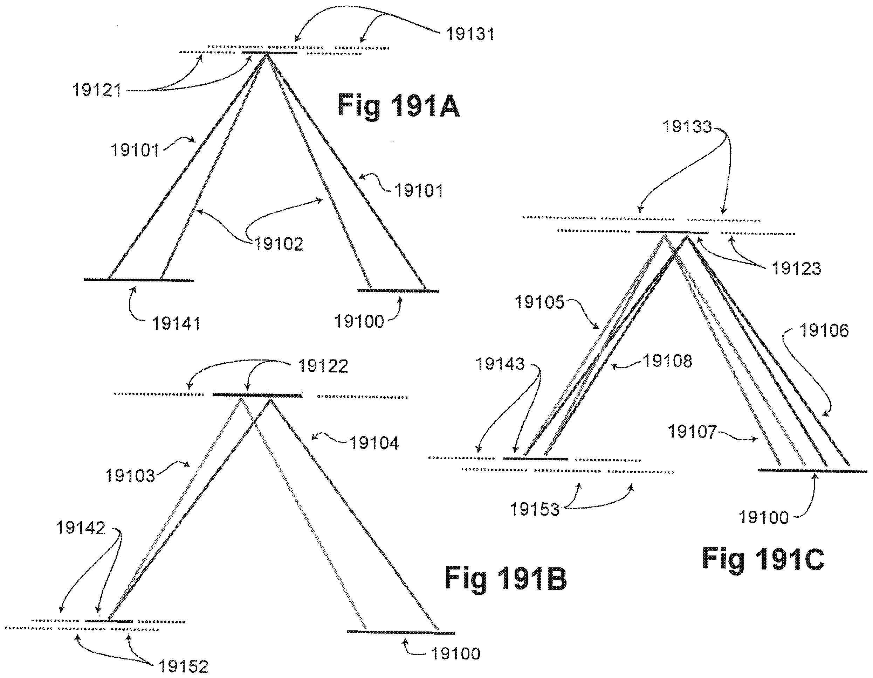

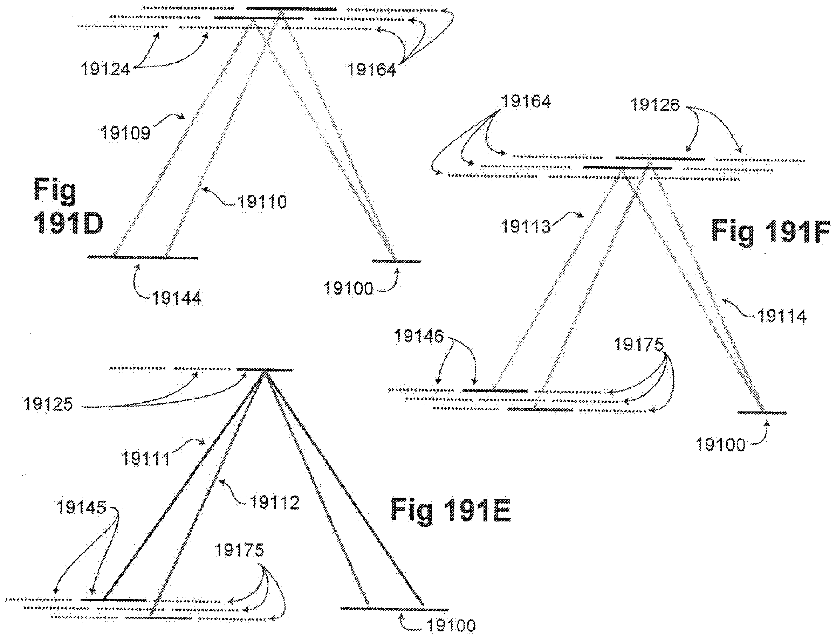

Turning to Figure 191, launch mirror and redirector structures are shown in section according to the teachings of the present invention. The figure comprises two-dimensional sections for clarity, but is intended to relate more generally to a three-dimensional version as will be understood. The arrangements shown are where the launch location and eye are on the same side of the redirector structure for clarity, but would be readily understood to apply equally to cases where the launch locations are on the opposite side of the redirectors from the eye and/or where the redirectors are associated with a waveguide through which light directed from the launch structures. The figures also for clarity each consider a single type of launch and redirector structure and without combining types of such structures and without distinguishing central from peripheral functions and without multiple launch location areas. The so-called "chief or "principal" rays of the some example beams are shown and the so-called "marginal" rays are omitted for clarity.

Referring specifically now to Figure 191A, illustrated is the case where redirectors 19121 are substantially beam width but launch mirrors 19141 are substantially larger than beam width, i.e. "walkable." One redirector is shown operating in the example, but a series of such redirectors is shown in dotted lines adjacent to it. One optional layer of redirectors 19131 is shown dotted for clarity to indicate that there may be one or more such additional layers. Two example beams are shown. The first beam 19101 is launched from a location on the walkable launch mirror that is to the left of the location from which the second beam 19102 is launched. The two beams are shown impinging on the same redirector at substantially the same location. The resulting angles towards the eye are shown as diverging by the same angle as the difference in launch angles. In such systems, as will be seen, walking the launch beam on the launch mirror provides variation in angle resulting in variation in angles entering the pupil 19100 of the eye.

Figure 191B illustrates the case where launch mirrors 19142 are substantially beam width but redirectors 19122 are substantially larger than beam width, i.e. walkable. One redirector is shown operating in the example, but a series of such redirectors is shown in dotted lines adjacent to it. Similarly, one beam-width launch mirror is shown operating, but a series of such mirrors is shown in the same layer in dotted lines. One optional layer of launch mirrors 19152 is shown dotted for clarity to indicate that there may be one or more such planes. Two example beams are shown, each in operation launched from the same operational launch mirror. The third beam 19103 is launched from substantially the same location on the beam width launch mirror as the fourth beam 19104. The two beams are shown impinging on the same operational redirector at different locations. In such systems walking the beam on the redirector by varying the angle of the launch mirror results in variation in angle entering the pupil of the eye. Since the beams leave the redirector at different locations and are diverging, they enter the pupil of the eye at locations including distance amounts from the angular divergence and the difference in locations on the redirector.

Figure 191C illustrates the case where both launch mirrors 19143 and redirectors 19123 are walkable. One redirector is shown operating in the example, but a series of such redirectors is shown in dotted lines adjacent to it; similarly, one launch mirror is shown operating, but a series of such mirrors is shown in the same layer in dotted lines. Optional multiple layers of redirectors 19133 and launch mirrors 19153 are shown dotted, as have already been described with reference respectively to Figures 191A-B. In operation, the fifth 19105 and sixth 19106 example beams are shown launched from substantially the same location on the walkable launch mirror at different angles and thus impinging on the example operational redirector at differing locations and entering the eye pupil at different angles from different locations, much as already described with reference to Figure 191B; similarly, the seventh 19107 and eighth 19108 beams are launched from a single location and impinge on the redirector at different locations and enter the eye in a similar manner but offset to the right. The locations where the beams impinge on the redirector from the two launch mirror locations are combined for clarity, as indicated in the example shown.

Figure 191D shows a configuration with an arrangement of redirector layers 19124 that allows beams with substantially any launch position and angle within range to be redirected by a single redirector. In some non-limiting examples the selection of redirector comprises: angular selectivity of volume hologram multiplexed or layered structure; spectral selectivity of such volume hologram structures; or "spatial multiplexing" where more than one reflective structure is provided, but light from one is angled to make it into the pupil of the eye and the light from the others does not. Such redirector selection techniques are also applicable to the multiple layers already described with reference to Figures 191A and 191C. A walkable launch mirror 19144 is shown in the example. In operation, the ninth beam 19109 will be seen to be redirected by a redirector in the middle of the three example layers 19164 ZZZZZ shown, whereas the tenth beam 19110 launched to the right of the ninth can be seen to be redirected by the operational redirector on the top layer. The redirectors not used in the example operation described are shown in dotted lines, as with Figures 191A and 191C.

The example shows the two beams entering the pupil at substantially the same point; this is believed an advantage of such a configuration, as mentioned more generally earlier, obtaining less or no clipping with a smaller eye pupil or more selectivity of which portion of the eye pupil is used in the case that certain portions are known to have better optical characteristics.

Figure 191E shows a configuration with an arrangement of launch mirror layers 19145 that allows beams to be launched with substantially any launch position and angle, within range. In the example the redirectors 19125 are shown as beam width and of a single layer, although in some examples they may not be either as already described with reference to Figures 191B-C. It is believed, however, that if there are locations as seen from the center of the eye pupil where no beam-width portion of a redirector is located, then a beam cannot be provided that enters the pupil without clipping for that angle. In operation two launch mirrors shown as solid are used in the example, one on the upper layer that reflects the eleventh beam 19111 towards the center of the redirector and one on the lower layer that reflects the twelfth beam 19112 toward the center of the same redirector in the example. The beams are then indicated as impinging on the operational redirector shown solid and being directed towards the eye pupil. It is believed that this configuration of layers 19175 offers a large "effective" launch mirror; that is, beams can be launched from any location over an area covered by the layers of launch mirrors. Since the mirrors are substantially smaller than the single large mirror such as described already with reference to Figure 191A, they are believed as already mentioned more generally to be able to be of lower mass and operate more rapidly. Accordingly, it is believed that the reduced launch mirror extent offered by multiple redirectors is not very attractive in this configuration (not shown for clarity) and that the reduced pupil size is better achieved through the configuration of Figure 191F to be described.

Figure 191F shows a configuration with an arrangement of launch mirror layers 19146 like that already described with reference to Figure 191E and an arrangement of redirectors 19126 as already described with reference to Figure 191D. In operation, the thirteenth beam 19113 is shown being launched by a mirror on the top layer and sent to the eye pupil by a redirector in the middle layer. The fourteenth beam 19114 similarly is shown launched from the bottom layer and redirected from the top layer. Both beams enter the pupil of the eye at substantially the same point. It is believed that the result is relatively faster steering of the launch mirrors of Figure 191E combined with the narrow pupil of Figure 191D.

SOFT-LAUNCH-LOCATION AND TRANSMISSIVE PROXIMAL OPTIC PROJECTION SYSTEMS

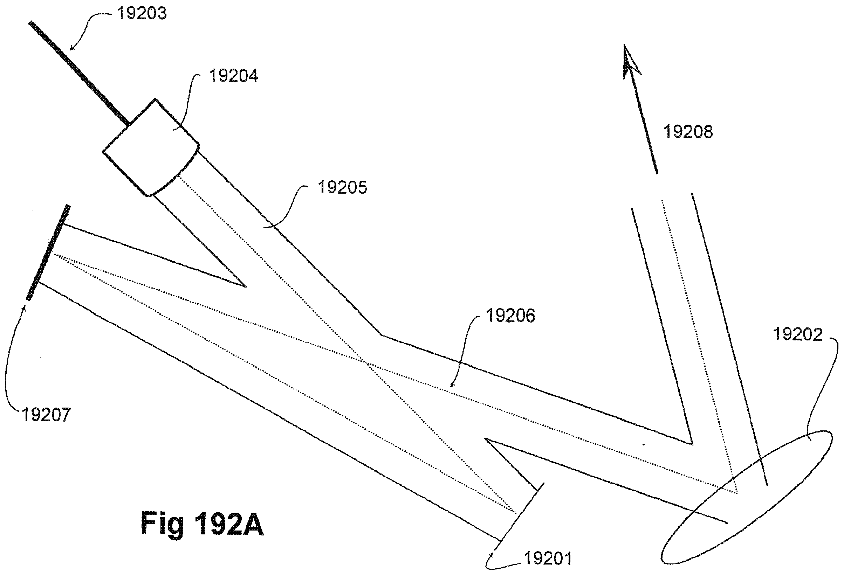

Turning now to Figure 192A, a single-feed steerable reflector 19201 and launch-steerable reflector 19202 are shown in combined schematic and section in accordance with the teachings of the invention. A light source is shown as an "optionally-conditioned color-modulated" beam 19203. Examples are solid state laser diodes, such as those offered by OSRAM of Munich Germany, so-called VCSEL's, and other examples known now or that may become known in the art. In some examples each color is modulated separately, as will be understood. In some examples the beams are pre-conditioned to correct the beam shape and/or anamorphism or other sometimes undesirable characteristics, as known in the art. A conditioning element is accordingly shown as a collimator 19204, such as a lens, diffractive element, or other imaging structure known or to be developed.

Examples of such collimator structure include: C0262M by Egismos of Burnaby, Canada; 300-0444-00 micro laser diode collimator by Photonic Products of Hertfordshire, England; those disclosed for instance in U.S. Patent No. 5,572,367 by Jung filed November 5, 1996; and other examples known now or that may become known in the art. Optional post-collimation conditioning is not shown for clarity.

The extent of the substantially collimated beam is shown in this figure by solid lines 19205 and the central ray by a dotted line 19206. The "feed steerable reflector" 19201 steerably varies the angle of the beam, as will be understood. Examples include: micro-mirrors such as those by Eco Scan of Tokyo, Japan; those by Mirrorcle Technologies of Albany, California; MEMS micro-mirrors by Lemoptix of Ecublens, Switzerland; spatial-light-modulator based steering and/or other beam steering technologies known now or that may become known in the art.

In the present example the fixed feed reflector 19207 serves as an optional fold mirror, but is included for clarity and for consistency with other figures as will be appreciated. The beam reflected from the feed mirror is shown impinging on the "launch steerable reflector" 19202, which is a steerable structure and may for instance be a steerable mirror or a pair of such mirrors arranged as is known so that each provides substantially a separate degree of angular freedom. As will be described in further detail later, flexibility in positioning the beam on the launch reflector provides for variation in effective launch location. In the example illustrated, the beam footprint on the steerable launch reflector is substantially smaller than the launch surface, although clipping of the beam by the launch reflector is anticipated in some examples and not shown for clarity. The resulting reflected beam is launched towards the redirectors 19208, as indicated. The launch steerable reflector preferably provides coverage of the redirectors, such as by resonating in one degree of freedom as in so-called "scan" systems, or by whatever variation in angle pattern, and accordingly in effect scans the beam onto the redirectors of the proximal optic.

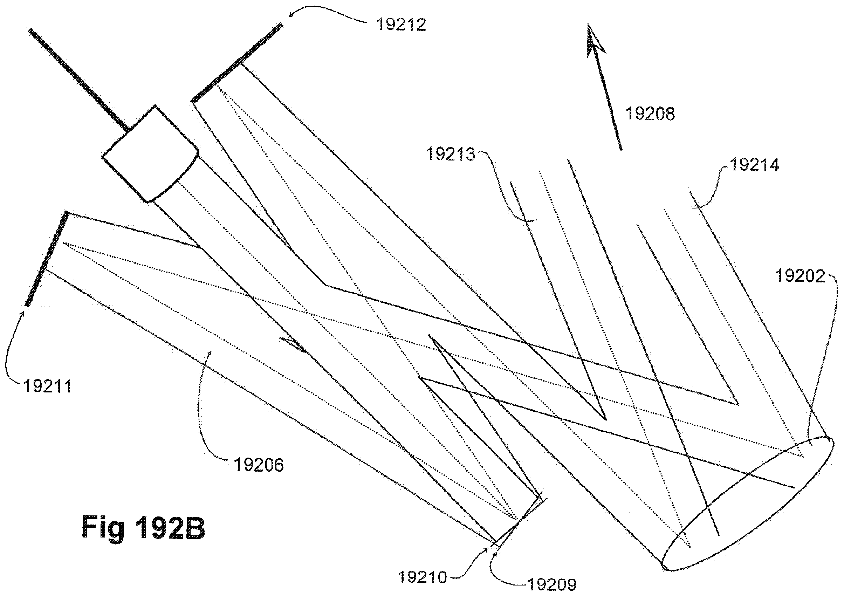

Turning to Figure 192B, a multi-feed steerable reflector and launch-steerable reflector are shown in combined schematic and section in accordance with the teachings of the invention. The "feed steerable reflector", already introduced in Figure 192A, is shown in two example angular positions 19209 and 19210, each at a separate time using the graphic example of a moveable mirror type steerable reflector for clarity as in other figures. In a first such angular position the beam is directed at the first feed reflector 19211. In a second such angular position, it is directed at a second feed reflector 19212. Also illustrated is the potential diversity of where the beam 19213, 19214 impinges on the feed reflectors and where, accordingly, on the launch steerable reflector. As already described for one beam, the position on the launch steerable reflector can be varied by so-called "tip and/or tilt" angle variation of the feed steerable reflector. With more than one feed reflector, two being illustrated for clarity, an exemplary advantage is that a larger angular range is believed supplied by the combination.

It is anticipated that the pattern of positions on the launch steerable reflector may advantageously be varied related to the rotational position of the eye. One effect of different patterns is that different arrangements or aspect ratios of coverage can be provided depending on differing characteristics of the particular region of redirectors that comes into play for a particular eye rotational position, as will be understood. For instance, the coverage of pixel locations (whether fixed or varied) can be adjusted for, such as according to a pre-determined table lookup or the like, for instance depending on the effective aspect ratio of the redirectors in the corresponding region. Also, in some exemplary systems, it is believed that by rotation of the pattern of beam landing locations on the launch steerable reflector, the number of scan lines a particular beam is used in can be reduced to under half. This it is believed can increase the utilization of light modulation channels and reduce the number of sources for a particular image quality.

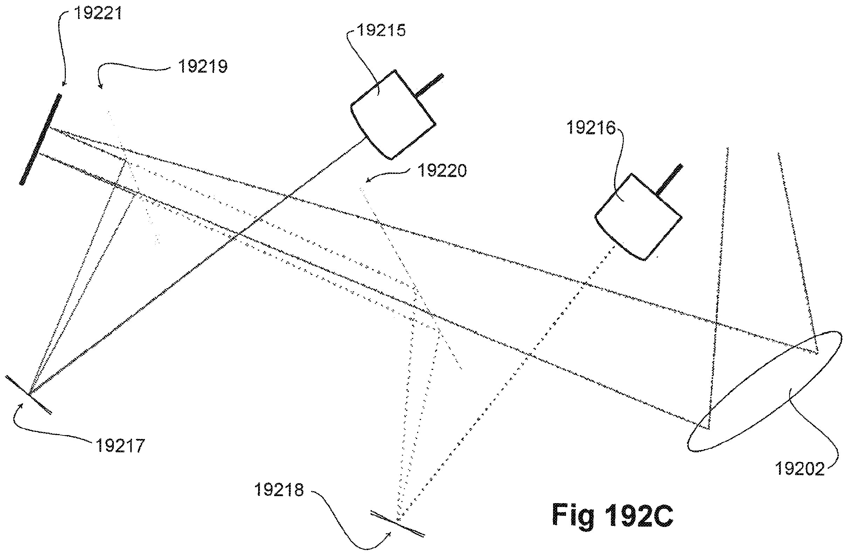

As can be seen clearly in the example of the present figure, and also that of Figures 192A and 192C, as will be appreciated, substantially any number of sources can controllably be brought to dynamically located and potentially overlapping footprints on, and launch angles from, the launch steerable reflector-thereby providing what will be called "soft launch locations."

Turning to Figure 192C, a combined multi-source and multi-steerable reflector and launch-steerable reflector is shown in combined schematic and section in accordance with the teachings of the invention. A first collimator 19215 indicates a first source of light as already explained with reference to Figures 192A-B. Similarly, a second collimator 19216 indicates a second such source. The first source directs light (shown as solid-line depicting the central ray) so that it impinges on a first feed steerable reflector 19217 and the second source directs light (shown as dotted-line central ray) so that it impinges on a second feed steerable reflector 19218. The first feed steerable reflector as an example is shown directing the resulting beam to impinge on two different example points on the feed reflector 19221. The second feed steerable reflector is also shown similarly directing the beam towards the same two example points. The choice of shared example points is without limitation and for clarity in exposition, as will be appreciated. The first beam splitter 19219 and second beam splitter 19220 are interposed as shown to allow the light from the two steerable reflectors to be substantially parallel and result in substantially the same output beam positions and angles impinging on the launch steerable reflector as shown. Beam splitters are a known means of combining beams, such splitters commonly fabricated from dichroic or metal coatings, but the splitter function may be accomplished by any beam combining technology currently known or that may become known.

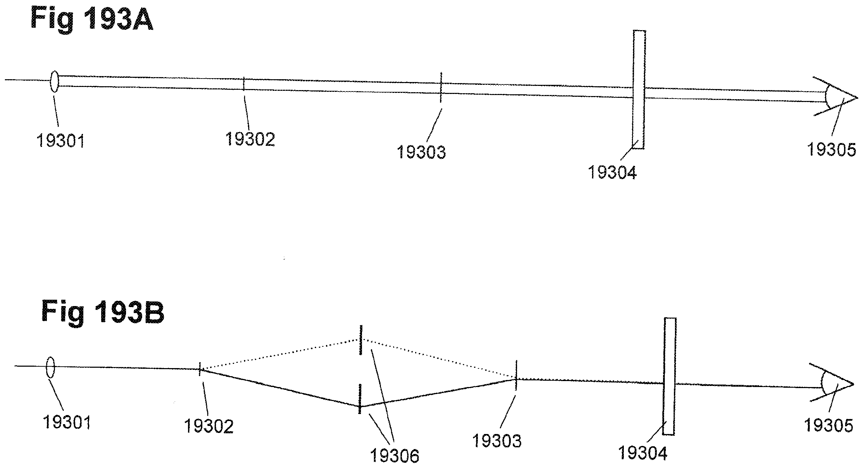

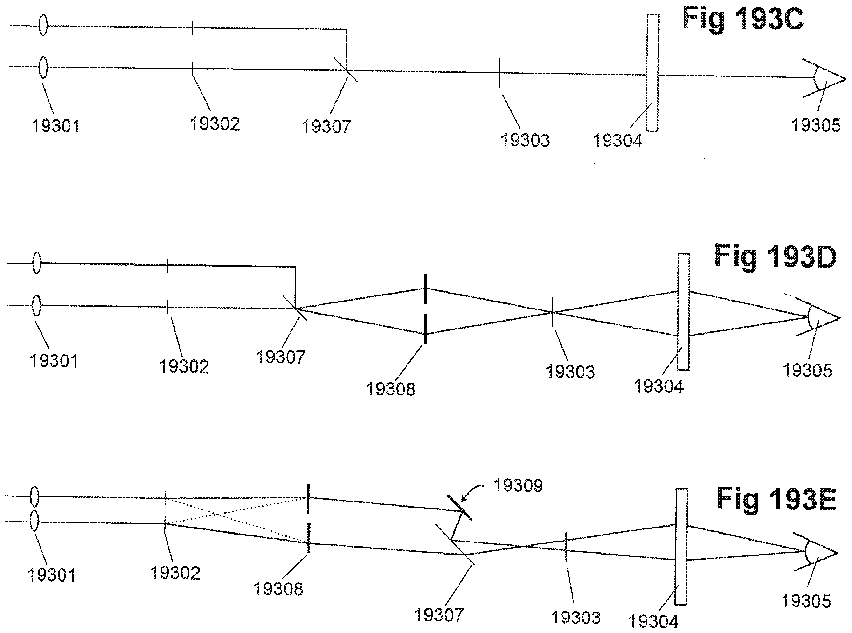

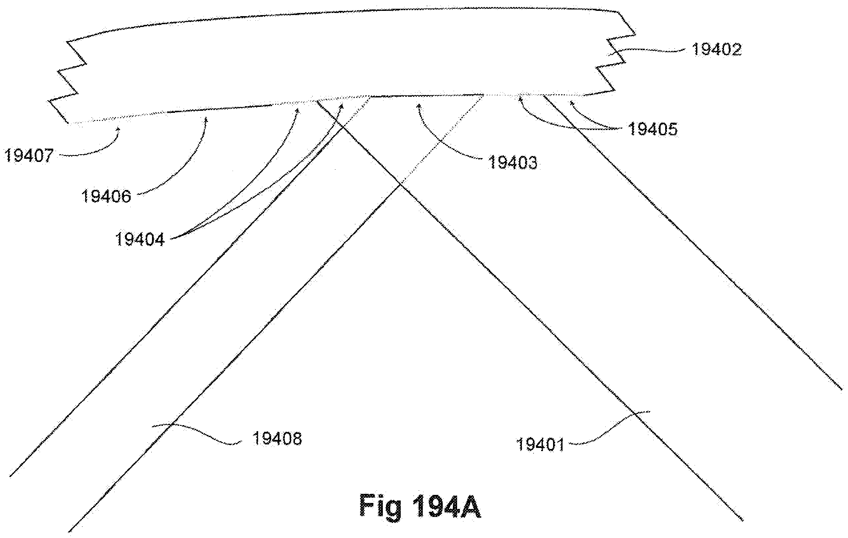

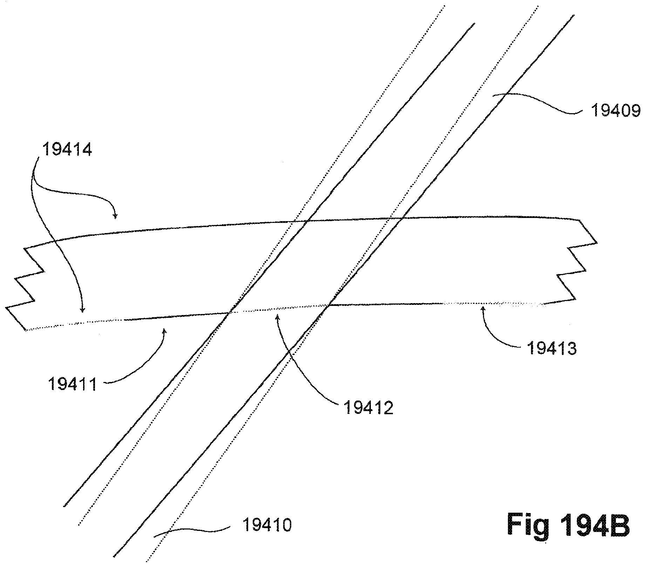

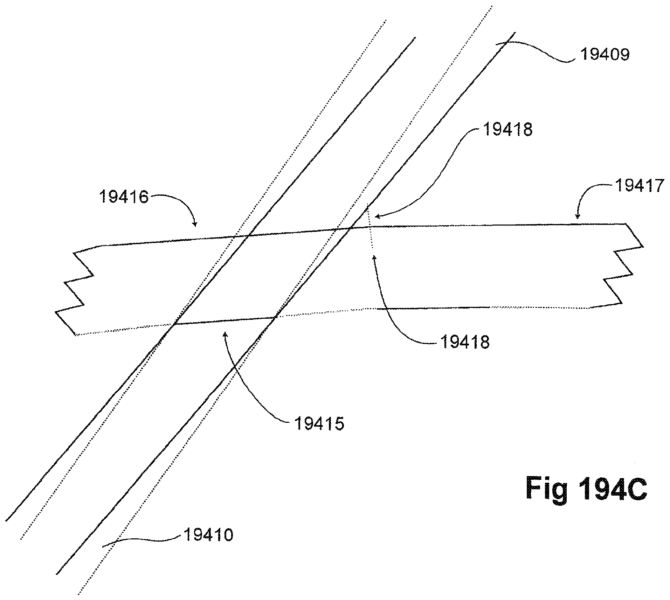

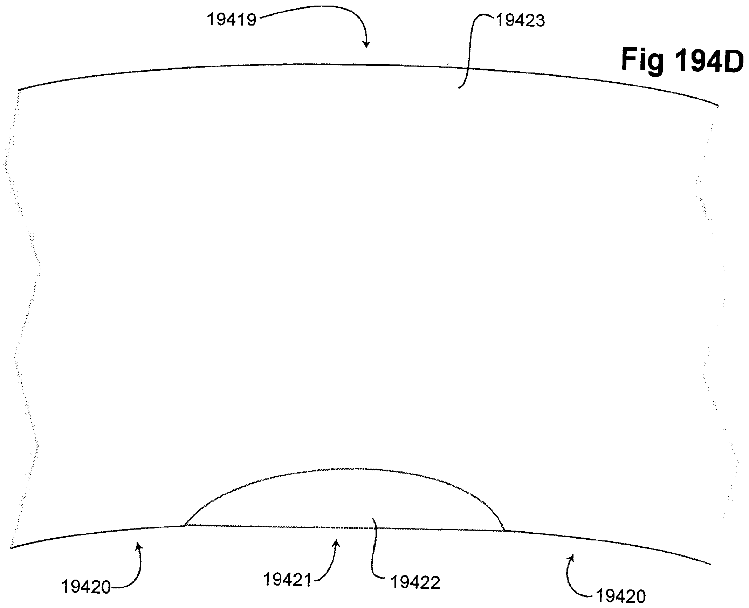

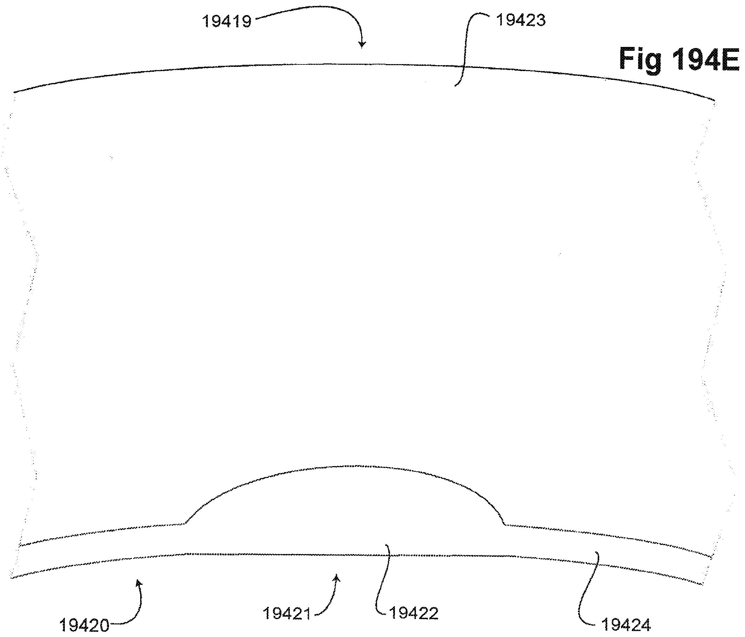

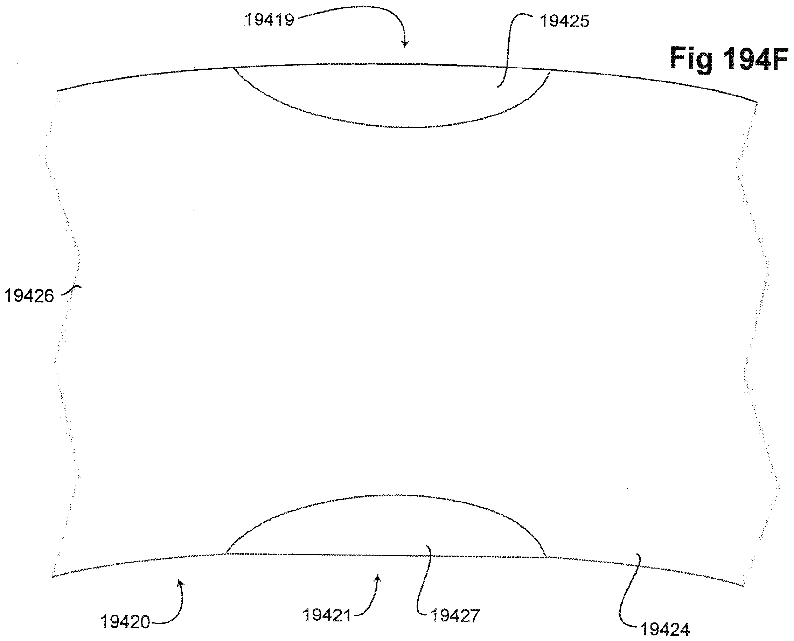

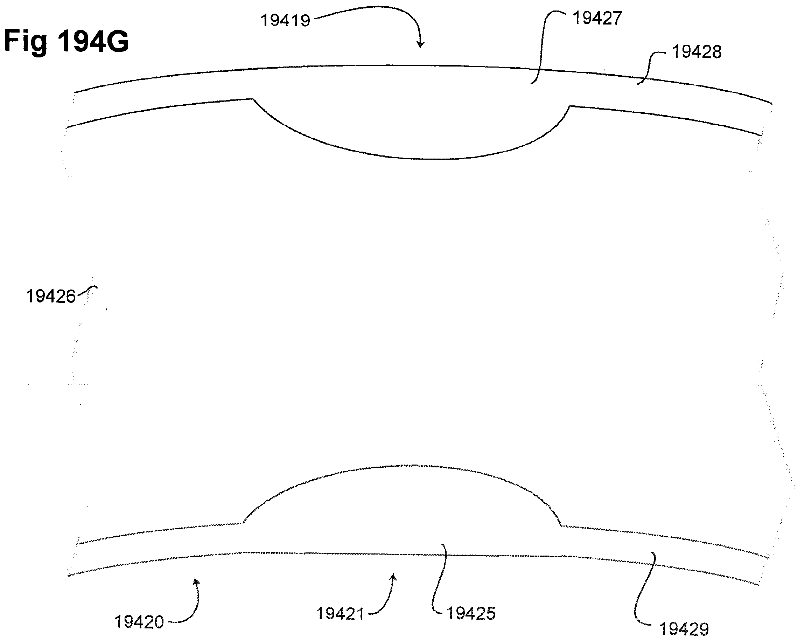

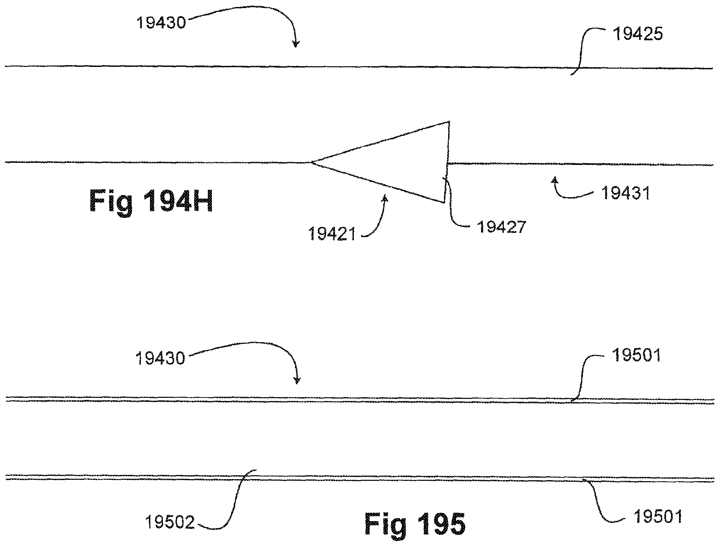

Turning now to Figures 193A-E, exemplary source, feed, launch, and proximal optic redirector structures are shown in combined schematic and section in accordance with the teachings of the invention. More specifically, Figure 193A includes elements from Figure 192A in a simplified and more extensive example in part to introduce the diagrammatic notation and conventions used here. A relatively narrow beam is shown input to the collimator 19301 and the resulting beam is depicted by its marginal rays, though the central ray will be used in the remainder of Figure 193. The beam can be seen impinging on the pre-feed steering function 19302, as already described, then on the launch steering function 19303, also as already described. Each of these would, as already explained, be reflective and potentially vary the output angle of the resulting beam. However, in the schematics of the present Figure 193, these are for clarity shown as transmissive and without angle change, as would be understood. Similarly, the proximal optic 19304, which contains redirectors, as will be further described in detail with reference to Figure 194, is shown transmitting the beam into the eye 19305 of the user.

Referring to Figure 193B, exemplary multi-feed reflectors are shown in combined schematic and section in accordance with the teachings of the invention. The beam from the collimator 19301 (shown as central ray, as mentioned) is shown at two example times: a first time (illustrated as a solid line) and a second time (illustrated as a dotted line). The two example times, in a way similar to the example already described with reference to Figure 192B, include the beam reflecting from different feed reflectors 19306 and impinging on different locations and at different angles upon the launch steering function 19303 before being acted on by different portions of the proximal optic 19304 and entering the eye 19305.

Turning to Figure 193C, exemplary multi-source multi-pre-feed steering is shown in combined schematic and section in accordance with the teachings of the invention. The example is similar to that already described with reference to Figure 192. Two example beams, one from each of the collimators 19301, are shown each independently steerable by the respective pre-feed steering 19302 shown. Then the beams are combined, by an example device shown as a beam combiner 19307 for clarity, into substantially co-linear beams. These may, depending on the pre-feed steering, impinge on different locations and at different angles upon the launch steering device before being acted on by different portions of the proximal optic and entering the eye. Beams enter the eye separately and at different angles as a result, each different angle corresponding to a potential "pixel" imaged onto the retina of the eye and perceived by the wearer.

Referring to Figure 193D, exemplary multi-source multi-pre-feed steering 19302 and multi-feed with splitter pre-feed 19308 is shown in combined schematic and section in accordance with the teachings of the invention. This illustrates an example of how the multi-feed of Figure 193B can be combined with the multi-source of Figure 193E. The beam-splitter function, however implemented, is shown combining the beam locations and orientations as already described. However, the angle of the beams remains variably controlled so as to allow different feed reflectors to be addressed at different times, as indicated by different light paths.

Referring to Figure 193E, exemplary multi-source multi-pre-feed steering and multi-feed with splitter post-feed is shown in combined schematic and section in accordance with the teachings of the invention. A difference between this preferred example and that already described with reference to Figure 193D is that the splitter function takes place downstream from the feed reflectors. The ability of each pre-feed to steer to each feed is indicated by example alternate paths being shown dotted line. Figure 193E includes an optional folding mirror 19309.

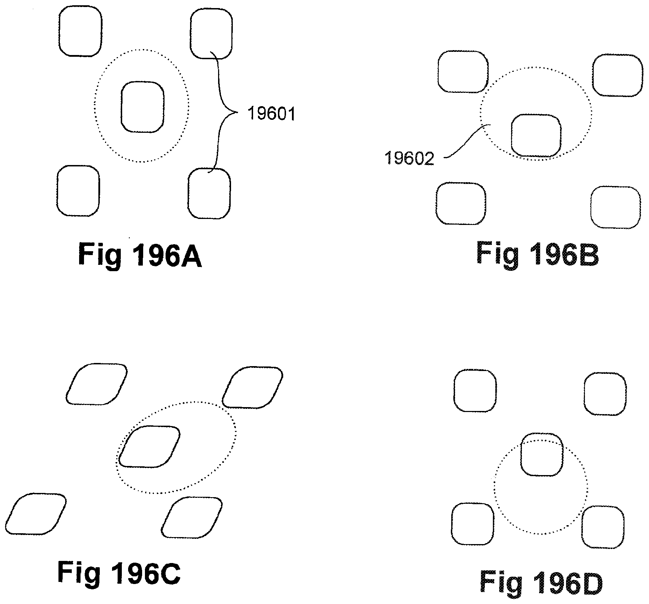

Turning now to Figure 194A, an exemplary proximal optic and redirector structure is shown with projected beams in combined schematic and section in accordance with the teachings of the invention. A projected beam 19401, such as resulting from systems like those already described with reference to Figures 192-3, is shown directed at a first redirector structure comprising a portion of a proximal optic substrate 19402. The footprint of the impinging beam is shown as substantially more extensive than the example first redirector 19403. Accordingly, portions of the beam are believed to impinge on the first redirector 19403 and other portions on other areas, called generically referred to without limitation as "gutters" here. The term "gutter" is used here to mean any substantially non-reflective zone, achieved by whatever technology known to be developed. The gutter on the left side of the redirector is denoted as the first gutter 19404 and that on its right as the second gutter 19405. The exemplary repeating pattern of gutters and redirectors is illustrated by the second redirector 19406 and third gutter 19407. Beam 19408 continues to the eye. As will be understood, a two-dimensional view of the redirectors would show each surrounded by gutter, as will also be explained with reference to Figure 196.

When the beam width is maintained small enough and/or the angle is constrained in proximity to the center of the exemplary targeted redirector, light does not "spill over" onto the adjacent redirectors and cause stray light that may, depending on redirector spacing and other factors such as pupil diameter and the number of projectors, for instance each having a different angular orientation, enter the eye. The opposite surface of the proximal optic substrate, shown as the upper of the two, would in some examples be facing away from the wearer's eyes and in some examples allows light from the environment to enter the wearer's eyes so as to afford the wearer at least some perception of the environment, as will also be described further with reference to Figures 194B-G.

Turning to Figure 194B, a first exemplary transmissive proximal optic and substantially non-transmissive redirector structure is shown with external beams in schematic and section, in accordance with the teachings of the invention. In this embodiment the redirectors 19411 are substantially non-transmissive, such as comprising metalized mirror coatings, dichroic coatings or whatever reflective techniques presently known in the art or to be conceived in future. The gutters 19412 and 19413, however, are substantially at least partly transmissive and allow the beams from the outside world to enter the eye, as will readily be appreciated from the figure. Shown are example beams from the environment whose extent is limited to the gutters. A first (solid line) 19409 and second example 19410 (dotted line) beam indicate what is believed to be the extent of the angular range of full width beams that can enter an example pupil size and position. Curvature is shown as an example way to achieve a so-called "plano" (that is zero optical power) or whatever desired ophthalmic corrective effect, such as by curves 19414 cooperating with the refractive index of the substrate and any coatings or index gradients as are well known in the eyeglasses and safety glasses arts.

Turning to Figure 194C, a second exemplary transmissive proximal optic and substantially transmissive redirector structure are shown with external beams in schematic and section, in accordance with the teachings of the invention. In this embodiment the redirectors 19415 are preferably partially reflective and partially transmissive structures, in some examples partially silvered mirrors, dichroic structures, or whatever partially-reflective technology is known or may become known. The gutter structures are in this example preferably non-transmissive, such as substantially black absorptive material or reflective or, for instance, capable of creating total internal reflection within the proximal optic material. Shown are beams from the environment whose extent is limited to the partially transmissive redirectors. Two example beams are shown, a first 19409 in solid lines and a second 19410 in dotted lines, to illustrate the range of angles that may be capable of entering the pupil of the eye.

The outer surface, as already described with reference to Figure 192A, includes shape and/or structures that provide the desired piano or ophthalmic corrective properties of the light as seen by the wearer in cooperation with the substrate index, any gradients, and the inner shape and/or coatings. For instance, it is believed that substantially planar structures as redirectors (which is only one example as will be understood) and cooperating pair wise parallel planar external surfaces on the proximal optic can provide piano or safety glasses. The seams 19418 or whatever area between the planar surfaces 19416 and 19417 are arranged in the example so that they do not overlap the range of angles of beams already described that enter the eye (at least for some orientations of the eye), as shown. A variant of this embodiment uses curved surfaces on the exterior and/or index gradients to create desired ophthalmic corrective effect.

Turning to Figure 194D, an exemplary separate-compensation transmissive proximal optic is shown in schematic and section, in accordance with the teachings of the invention. The enlarged and exaggerated section shown at least somewhat perpendicular to the surface of the proximal optic comprises a curved outer surface 19419, curved portions of the inner surface 19420, and substantially flat portions 19421 of the inner surface that are taken as redirectors. The inset lower-index portion 19422, shown shaped as a convex lens in contact with the relatively higher-index portion 19423, will be said to "compensate" for the planar surface of the corresponding redirector and all substantially collimated beams entering through the outer surface to emerge from the inner surface as collimated beams. If the combined effect of the outer curvature and inner curvature with the index of proximate optic proper is a non-zero power, such as for ophthalmic lenses, the net effect in the redirector region can optionally be configured to be substantially the same as will be understood. In some examples the inset lens has a concave instead of convex surface and the index difference is accordingly interchanged. Other examples, as would readily be understood, for instance use graded density and/or diffractives to change the wavefront shape instead of or in combination with the inset lens. It will be appreciated that the so-called "Abbe" numbers of the materials are similar enough to avoid perceptible so-called "chromatic" aberrations.

It is believed that there is a so-called "telescope" effect that creates some difference in magnification between the gutter and the redirector regions. It is believed that depending on the extent of curvature of the inner and outer surfaces, this may result in a substantially noticeable degradation in the resolution provided or the degradation may be acceptable. This effect is further considered with reference to the embodiment of Figure 194F.

One example way to fabricate such structures is to form the separate components separately using molding and/or machining operations and adhere them together using suitable adhesive and/or coating systems, as are known. In another example, the insets can be molded in attached molds and then the main portion component molded into place. Other example ways to fabricate the present embodiment will also be described with reference to Figure 194E.

Turning to Figure 194E, an exemplary joined-compensation transmissive proximal optic is shown in schematic and section, in accordance with the teachings of the invention. A difference between this embodiment and that already described with reference to Figure 194D is the inclusion of the connecting portion 19424 shown that joins the lower index portions into a substantially single structure. This approach is believed substantially similar from an optical perspective, particularly as the connecting portion is thin. In fabrication, however, the two elements can be formed separately and joined together, such as by adhesive, liquid/gel and clamping, snap structures, or welding together such as during molding or separately including by so-called ultrasonic or laser welding or by whatever means that may be known in the art for joining transparent elements or that may become known. In some such examples the connecting element is not removed from the mold for the lower portion until the two elements are joined, which is believed to allow the connecting portions to be thinner. In either the example of Figure 194D or the present example a post assembly machining, such as so-called diamond turning, may be used to add or finish features especially on the bottom portion.

Turning to Figure 194F, an exemplary double separate-compensation transmissive proximal optic is shown in schematic and section, in accordance with the teachings of the invention. This design is an example aimed at reducing or eliminating the telescope effect described with reference to Figure 194D. It is believed that this may allow greater overall curvature of the proximal optic with less or no perceivable telescope effect related degradation perceived by the wearer. Three different indexes are used in the example construction for illustrative purposes. The outer facing inset is formed from material with the lower index 19425 of the three. The main body of the proximal optic is formed from a material of intermediate index 19426 and the inner inset from the higher index material 19427. Like a so-called "zero-power relay," the effect is believed to be that a collimated beam passes through the combination substantially retaining both its collimation and beam width, as will be understood. The fabrication of this structure is similar to that already described with reference to Figure 194D.

Turning to Figure 194G, an exemplary double joined-compensation transmissive proximal optic is shown in schematic and section, in accordance with the teachings of the invention. This embodiment in one aspect is to that of Figure 194F as the embodiment of Figure 194E is to that of Figure 194D, as will be readily understood. In addition to the structure of Figure 194F, upper inner 19429 and outer 19428 connecting portions, similar to those already described with reference to Figure 194E are shown. An advantage is believed to be in fabrication, as the inset elements are attached together. All the techniques described with reference to Figure 194E are believed adaptable to each of the two sides of the present embodiment.

As will be readily understood, various inverse curves and corresponding index difference changes are anticipated and not shown for clarity with reference to Figures 194A-G.

Turning to Figure 194H, an exemplary planar-compensation transmissive proximal optic is shown in schematic and section, in accordance with the teachings of the invention. In some embodiments a substantially planar proximal optic is envisioned and/or redirectors that are substantially not tangent to the inner surface. In the case of a substantially planar proximal optic as shown, or for instance one where the ophthalmic corrective power is by means of a so-called "plano-convex" lens with the inner surface flat, it is believed that prism correction, as illustrated, can improve vision through the system. In the example shown, the outer surface is planar and the proximal optic itself proper is from a higher index preferably transparent material. The inner surface has embedded a substantially flat redirector angled differently than the surface comprised of a substantially wedge-shaped element of lower index.

Turning to Figure 195, an exemplary multi-layer proximal optic 19502 is shown in schematic and section, in accordance with the teachings of the invention. The proximal optic preferably has coatings/films/layers 19501 on its outer surface 19430. Similarly it has coatings/films/layers or the like on its inner surface 19431. One example type of layer is a so-called "light control" that acts in effect like miniature Venetian blinds and prevents light from entering at oblique angles. Such structures are known formed microscopically, such as by 3M, and also from nano-scale materials/structures, such as by Nikon. Whatever technology whether known or to be developed that allows light substantially in the direction of the eye to enter and preferably absorbs or scatters or TIR's other light is preferably be an outside layer. The effect is that the outside world can be seen, but that light projected onto the redirectors and/or gutter areas that travels out in front of the wearer, and which could be perceived by the wearer in reflection or such as by others observing the wearer, is attenuated. In another example, a volume hologram or whatever technology may be known or to be developed that forms a layer on the inner surface and absorbs, changes the angle of, scatters, or causes to enter a TIR regime within the proximal optic is anticipated. As one example, Bragg filters for known wavelengths such as formed from volume holograms are believed capable of coupling the light into the proximal optic at a TIR angle. Angle-sensitive nano materials are another example layer that can attenuate the light impinging on the gutters from the projector with less effect on the light transmitted through the proximal optic from the outside environment.

Turning finally now to Figure 196, exemplary redirector structures are shown with illustrative projected beams in schematic and section, in accordance with the teachings of the invention. The pattern and shape of redirectors 19601, in a preferred example, are rounded-corner polygons in a rectilinear arrangement resembling staggered bricks. Another example is a hexagonal packing of substantially circular redirectors. All manner of variations in such shapes and their arrangement, whether regular or not, will be readily understood. The four examples, Figure 196A through Figure 196D, represent various example degrees and orientations of obliquity as well as example footprint 19602 positions of an exemplary incident projected beam.

Referring now to Figure 196A, the five redirectors are shown in the "brick" or "honeycomb" type of pattern as an example, with the beam footprint oval substantially centered on the middle redirector. Whatever beam footprint shape including rectangular may be used, circular or oval being shown here for clarity. The vertically elongated form of the redirectors and their spacing is intended to suggest vertical obliquity in the example. Referring to Figure 196B, horizontal obliquity is shown and the beam footprint still covers the center redirector and does not spill over or impinge on the other redirectors, something that could in some settings and instances as mentioned produce undesirable stray light into the pupil of the eye. Referring to Figure 196C, the obliquity is combined horizontal and vertical, again with spill over. Figure 196D, shows a beam footprint without substantial obliquity but that drops down and experiences some clipping, which would preferably be compensated for by increased energy, but again without stray light from other redirectors.

## EYEGLASS APPLIANCE PLATFORM

The present invention also relates to a personal multimedia electronic device, and more particularly to a head-worn device such as an eyeglass frame having a plurality of interactive electrical/optical components. In one embodiment, a personal multimedia electronic device includes an eyeglass frame with electrical/optical components mounted in the eyeglass frame. The electrical/optical components mounted in the eyeglass frame can include input devices such as touch sensors and microphones, which enable the user to input instructions or content to the device. The electrical/optical components can also include output devices such as audio speakers and image projectors, which enable the eyeglass device to display content or provide information to the wearer. The electrical/optical components can also include environmental sensors, such as cameras or other monitors or sensors, and communications devices such as a wireless antenna for transmitting or receiving content (e.g., using Bluetooth) and/or power. Additionally, the electrical/optical components include a computer processor and memory device, which store content and programming instructions. In use, the user inputs instructions to the eyeglass device, such as by touching a touch sensor mounted on the side arm of the eyeglass frame or speaking a command, and the eyeglass device responds with the requested information or content, such as displaying incoming email on the image projector, displaying a map and providing driving instructions via the speaker, taking a photograph with a camera, and/or many other applications.

This integrated, electronic eyeglass device consolidates many different functionalities into one compact, efficient, and easy to use device. The eyeglass device can be constructed according to different user preferences, so that it includes the electrical/optical components that are necessary for the user's desired applications. Different components such as cameras, projectors, speakers, microphones, temperature sensors, Bluetooth connections, GPS receivers, heart rate monitors, radios, music players, batteries, and other components can be selected as desired to provide applications such as videos, music, email, texting, maps, web browsing, health monitoring, weather updates, phone calls, and others. All of these components and applications can be controlled by the user through touch sensors, audio commands, and other sensors through which the wearer gives instructions to the eyeglass device. The inventor has discovered that this integrated, multi-media head-worn device can be created with advanced optical projections, compact electrical/optical components, and a control system controlling these components.

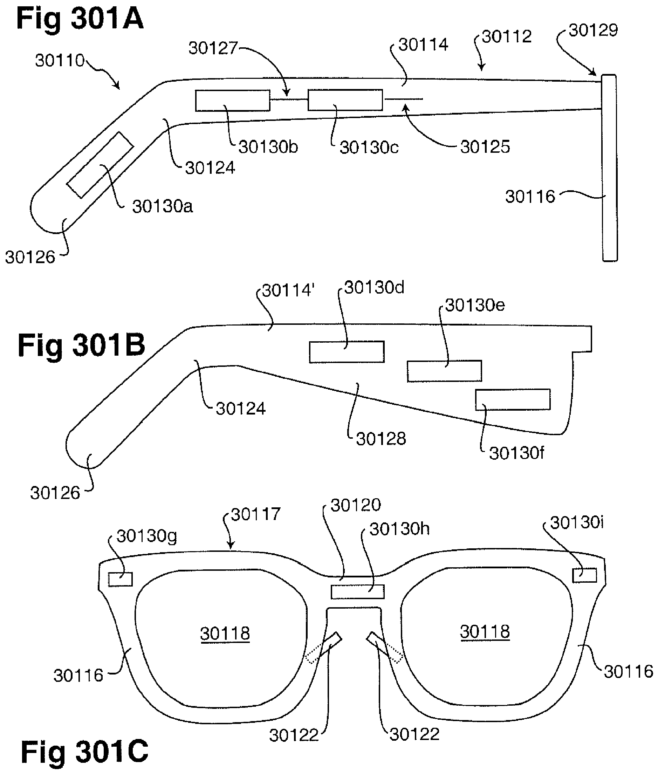

An embodiment of the invention is shown in Figures 301A-C. Figure 301A shows a head-worn electronic device 30110 including an eyeglass frame 30112. The eyeglass frame 30112 includes first and second temples or side arms 30114 (only one of which is visible in the side view of Figure 301A) and first and second optic frames 30116 (only one of which is visible in the side view of Figure 301A). The optic frame 30116 may be referred to in the industry as the "eye" of the eyeglass frame. The side arms 30114 are connected to the optic frame 30116 by a hinge 30129. Each optic frame 30116 supports an optic 30118 (see Figure 301C), which may be a lens or glass or mirror or other type of reflective or refractive element. The frame 30112 also includes a nose bridge 30120 which connects the two optic frames 30116, and two nose pads 30122 that are mounted on the optic frames and that rest on either side of the wearer's nose. The two optic frames 30116 and nose bridge 30120 make up the front face 30117 of the frame 30112. Each side arm 30114 includes an elbow 30124 where the arm curves or bends to form an ear hook 30126 which rests behind the wearer's ear.

As shown in Figures 301A-301C, the eyeglass frame 30112 includes various electrical and/or optical components 30130a, 30130b, 30130c, etc. supported by the frame 30112 and powered by electricity and/or light. The components 30130 can be MEMS (microelectromechanical systems). In Figure 301A, the electrical/optical components 30130 are supported by the side arm 30114. The electrical/optical components 30130 may be mounted within the side arm 30114, under the top-most layer of the side arm, such as under a top plastic cover layer. Alternatively or in addition, the components 30130 may be mounted to the side arm 30114 by adhesive, or by printing the electrical/optical components onto a substrate on the side arm 30114, or by any other suitable method. The components 30130 can be spaced out along the side arm 30114 as necessary depending on their size and function. In Figure 301B, electrical/optical components 30130 are shown supported on the wing 30128 of the side arm 30114', and they may be located as necessary according to their size and function. In Figure 301C, the electrical/optical components 30130 are supported by the two optic frames 30116 and the nose bridge 30120. The necessary conductors 30127 such as wires or circuit board traces are integrated into the frame 30112 to connect and power the various electrical/optical components 30130 at their various locations on the frame. An antenna 30125 can also be connected to one or more components 30130.

The components of the frame 30112 can take on various sizes and shapes. For example, an alternate side arm 30114', shown in Figure 301B, includes a wing 30128 that extends down below the hinge 30129 and increases the area of the side arm 30114'. The larger side arm 30114' can support more electrical/optical components 30130 and/or can allow the components 30130 to be spaced apart. In other embodiments the side arm 30114 and/or optic frame 30116 may have other shapes and sizes, including different diameters, thicknesses, lengths, and curvatures.

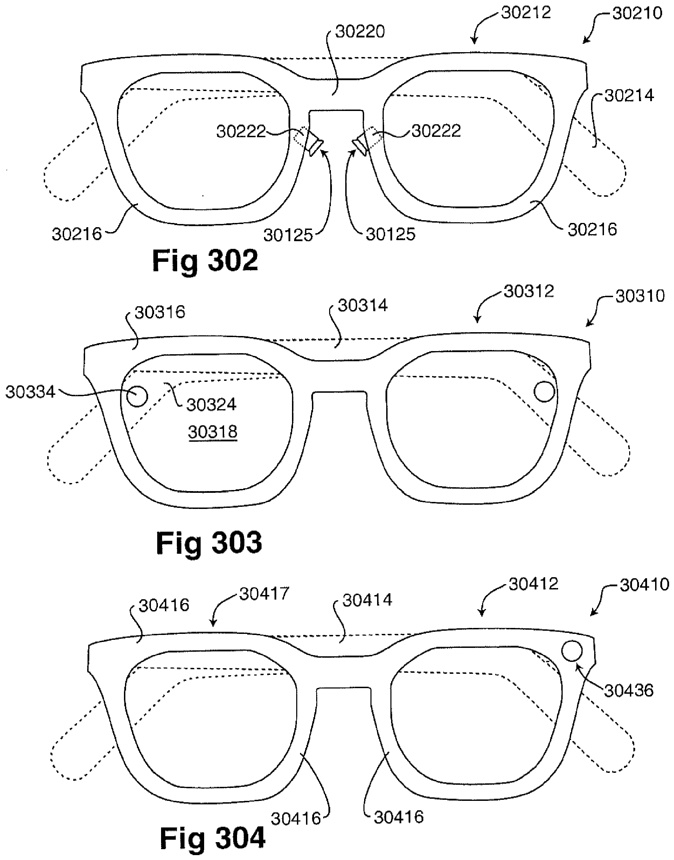

Particular locations on the eyeglass frame 30112 have been discovered to be especially advantageous for certain electrical/optical components. A few examples will be discussed. In Figure 302, an embodiment is shown in which an eyeglass frame 30212 includes electrical/optical components 30232 mounted on the nose pads 30222 of the eyeglass frame 30212. In one embodiment, the electrical/optical components 30232 mounted on the nose pads 30222 are bone conduction devices that transmit audio signals to the wearer by vibration transmitted directly to the wearer's skull. Bone conduction devices transmit sound to the wearer's inner ear through the bones of the skull. The bone conduction device includes an electromechanical transducer that converts an electrical signal into mechanical vibration, which is conducted to the ear through the skull. In addition to transmitting sound through vibration to the user, the bone conduction device can also record the user's voice by receiving the vibrations that travel through the wearer's skull from the wearer's voice.

Thus, in one embodiment, the electrical/optical components 30232 include bone conduction transducers that transmit and receive vibrations to transmit and receive sound to and from the wearer. These bone conduction devices may be mounted anywhere on the frame 30212 that contacts the wearer's skull, or anywhere that they can transmit vibrations through another element (such as a pad or plate) to the user's skull. In the embodiment of Figure 302, the devices are mounted on the nose pads 30222 and directly contact the bone at the base of the wearer's nose. The inventor has discovered that this location works well for transmitting sound to the wearer as well as receiving the vibrations from the wearer's voice. Bone conduction devices operate most effectively when they contact the user with some pressure, so that the vibrations can be transmitted to and from the skull. The nose pads provide some pressure against the bone conduction devices, pressing them against the user's nose, due to the weight of the eyeglass devices sitting on the nose pads. At this location, the bone conduction devices can transmit sound to the user and can pick up the user's voice, without picking up as much background noise as a standard microphone, since the user's voice is coming directly through the skull.

The eyeglass frame 30212 can transmit sounds such as alerts, directions, or music to the wearer through the electrical/optical components 30232 and can also receive instructions and commands from the user through the same electrical/optical components 30232. In other embodiments, the electrical/optical components 30232 mounted on the nose pads 30222 may be devices other than bone conduction devices. For example, in one embodiment these components 30232 are standard microphones, used to pick up the user's voice as it is spoken through the air, rather than through the skull. Two components 30232 are shown in Figure 302, such as for stereo sound, but in other embodiments only one is provided.

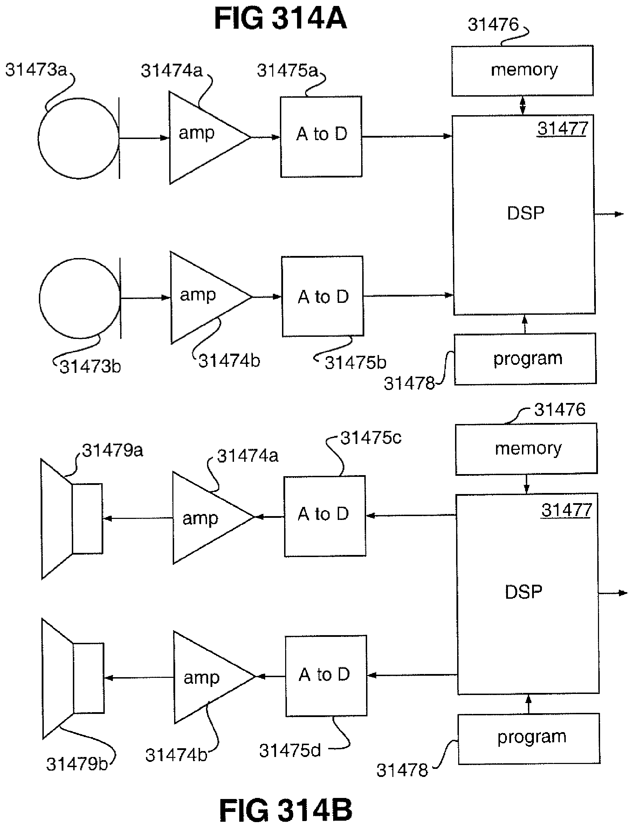

Turning to Figure 314A, an embodiment of a dual transducer input system is shown in block diagram. Figure 314A shows two input devices 31473a, 31473b. In one embodiment, device 31473a is a bone conduction sensor that detects sound transmitted through the user's skull, and device 31473b is a microphone that detects sound transmitted through the air. The bone conduction sensor 31473a can detect the user's voice, which will transmit through the skull, and the microphone 31473b can detect other types of noises that do not transmit well through the skull, such as background noises or other noises made by the user (claps, whistles, hisses, clicks, etc). Each of these devices passes the signal through an amplifier 31474a, 31474b, as necessary, and then to an analog-to-digital converter 31475a, 31475b. This converter converts the analog signal from the devices 31473 into a digital signal, and then passes it to a digital signal processor ("DSP") 31477. The DSP processes the signal according to program 31478, and optionally stores the signal in a memory device 31476.

The DSP can perform various types of digital signal processing according to the particular devices, signals, programming and selected parameters being used. For example, when device 31473a is a bone conduction sensor, the sensor 31473a detects the wearer's voice as it is transmitted through the wearer's skull. However, the user's voice may sound different if it is transmitted through air versus through the skull. For example, a voice may have a different frequency response as heard through the skull than would be picked up by a microphone through the air. Thus, in one embodiment, the DSP adjusts the signal to accommodate for this difference. For example, the DSP may adjust the frequency response of the voice, so that the voice will sound as if it had been detected through the air, even though it was actually detected through the skull. The DSP can also combine signals from multiple devices into one output audio stream. For example, the DSP can combine the user's voice as picked up by the bone conduction sensor 31473a with sounds from the environment picked up by the microphone 31473b. The DSP combines these audio signals to produce a combined audio signal.

In another embodiment, the DSP combines different aspects of speech from the microphone 31473b and from the bone conduction sensor 31473a. For example, at different times during a conversation, one of these sensors may pick up better quality sound than the other, or may pick up different components of sound. The DSP merges the two signals, using each one to compensate for the other, and blending them together to enhance the audio signal. As an example, the DSP may blend in some outside or background noise behind the user's voice. In one embodiment, the user can adjust the amount of background noise, turning it up or down.

In another embodiment, the DSP creates a model of the user's speech, built from data collected from the user's voice. The DSP can then process the signals from the two sensors 31473a, 31473b to create an output signal based on the model of the user's speech. As one example of such processing, sounds from the environment can be distinguished as to whether they are from the user's speech or not, and then those from the speech can be used in the process of enhancing the speech. As explained with respect to Figure 314B, a related process can take place in reverse, to provide sounds to the user.

Figure 314B shows a dual transducer output system, for providing output to the wearer. The DSP 31477 creates a digital signal, such an audio or video signal, based on instructions from the program 31478 and/or content stored in memory 31476. The DSP 31477 may create the signal and store it in the memory 31476. The DSP may divide the signal into two signals, one for sending to output device 31479a and another for sending to output device 31479b. For example, device 31479a can be a bone conduction transducer, and device 31479b can be an audio speaker. In such a case, the DSP divides the audio signal into a first component that is transmitted through the skull by the bone conduction transducer 31479a, and a second component that is transmitted through the air by the speaker 31479b. The signals pass through digital-to-analog converters 31475c, 31475d, and then optionally through amplifiers 31474a, 31474b, and finally to the output devices 31479a, 31479b. The two signals may be related to each other, such that when they are both transmitted by the output devices 1479a, 1479b, the user hears a combined audio signal.

In still another embodiment, where multiple bone conduction transducers are used, such as output device 1479a and input device 1473a, one device may in effect listen to the other, and they may be connected to the same or cooperating DSP's. In other words, the sound sent into the skull by one transducer is picked up by another transducer. The DSP 1477 can then adjust the sound, such as intensity or frequency response, so that it is transmitted with improved and more consistent results. In some examples users can adjust the frequency response characteristics for various types of listening.

In another example embodiment, the sound picked up from the environment can be what may be called "cancelled" and/or "masked" in effect for the user by being sent in by bone conduction. For instance, low-frequency sounds may be matched by opposite pressure waves, or the levels of background sound played through the bone conduction may be adjusted responsive to the environmental sounds.

In another embodiment of the invention, shown in Figure 303, an eyeglass frame 30312 includes an electrical/optical component 30334 located at about the elbow 30324 of one or both side arms 30314. This electrical/optical component 30334 may be, for example, an audio output transducer, such as a speaker, which creates an audio output. The location of the electrical/optical component 30334 near the elbow 30324 of the side arm 30314 positions the electrical/optical component 30334 near the wearer's ear, so that the audio output can be heard by the wearer at a low volume. The electrical/optical component 30334 could also be a bone conduction device, as described previously, that contacts the wearer's head just behind the ear and transmits vibrations to the wearer's inner ear through the skull. In Figure 303, the electrical/optical component 30334 is shown on the inside surface of the side arm 30314, the surface that faces the wearer when the eyeglass frame 30312 is worn. In another embodiment, an electrical/optical component can be supported on the outside surface of the side arm, facing away from the user, such as, for example, the electrical/optical components 30130 shown in Figure 301A.

In another embodiment of the invention, shown in Figure 304, an eyeglass frame 30412 includes an electrical/optical component 30436 located on one or both optic frames 30416 on the front face 30417. For example, the component 30436 may be a camera or other image sensor located at the top outer corner of the optic frame 30416. At this location, the camera can face forward from the wearer and record video or take photographs of the scene in front of the wearer's field of view. Alternatively, the component 30436 could face rearward to take video or photographs of the scene behind the wearer. Although only one electrical/optical component 30436 is shown in Figure 304, on one of the two optic frames 30416, another component may be located on the other optic frame 30416 as well. Other possible examples for the electrical/optical component 30436 are described more fully below.

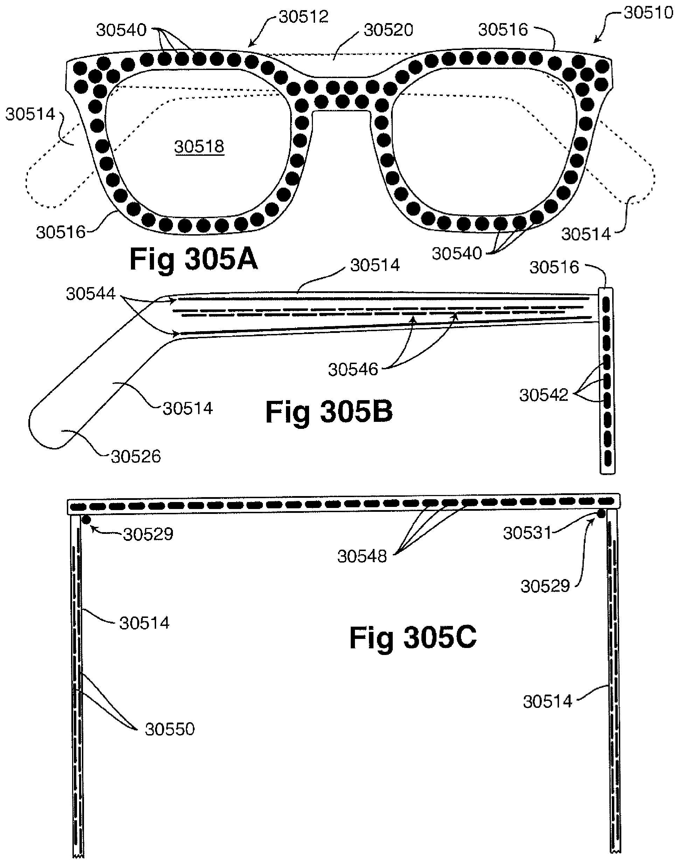

Another embodiment of the invention is shown in Figures 305A-305C. As shown in Figure 305A, an eyeglass frame 30512 includes electrical/optical components 30540 spaced around the front of the two optic frames 30516. In this embodiment, the electrical/optical components 30540 may be sensors that obtain input from the user. For example, they may be touch sensors that send a signal to a computer processor or other device on the eyeglass device 30510 each time the user touches one of the sensors, or they can be pressure sensitive sensors, static electricity sensors, strain gages, or many other types of sensors or components as described more fully below. The sensors 30540 can be spaced apart along each optic frame 30516, encircling the optic 30518, and along the nose bridge 30520. The input from all of the sensors 30540 can be correlated by the computer processor to sense movement of the user's fingers along the frame 30516. For example, a user could move a finger along one of the optic frames 30516 in a circle, around the optic 30518, and the computer processor can sense this movement as the user moves from one sensor 30540 the next adjacent sensor 30540. Different patterns of tactile input can be recognized by the computer processor as different commands from the user. For example, tactile contact along the sensors 30540 in a counter-clockwise direction around one of the optic frames 30516 can indicate to the computer processor to provide a particular response, such as to have a camera (for example, component 30436 in Figure 304) zoom in or focus, and tactile contact in the clockwise direction can indicate to the computer processor to provide a different response, such as to zoom out or refocus. The user may touch a sensor 30540 on the bridge 30520 to turn the camera on or off. These are just a few examples of the interaction between the user and the electrical/optical components through the touch sensors.

Figure 305B shows a side view of the eyeglass frame 30512, showing electrical/optical components 30542 located along the side of the optic frame 30516. These electrical/optical components 30542 may also be touch sensors that send signals to the computer when they sense contact from the user. In addition to or in place of touch sensors, these components 30542 could include cameras, speakers, microphones, or other electrical devices, depending on how the particular eyeglass device 30510 is arranged and what capabilities it is intended to have.

Figure 305B shows that these components 30542 can be placed in many locations along the eyeglass frame 30512, including the side of the optic frame 30516, and along the side arm 30514. The electrical/optical components supported on the side arm 30514 can include slider sensors 30544 as well as touch sensors 30546. Touch sensors 30546 are shown as two alternating or staggered rows of discrete sensor strips. When the user touches the side arm 30514, the touch sensors 30546 staggered along the length of the side arm 30514 can identify where along the side arm the user has made contact. The sensor 30546 that the user touches sends a signal to the on-board computer, and the location of the sensor can indicate a particular command, such as turning on a camera or uploading a photograph. As another example, the user can move a finger along the length of the side arm 30514, along slider sensors 30544 or touch sensors 30546, to indicate a different type of command, such as to increase or decrease the volume of a speaker. The particular layout and location of electrical/optical components 30544, 30546 along the length of the side arm 30514 can be varied as desired.

Figure 305C is a top view of the eyeglass frame 30512, showing that additional electronic components 30548, 30550 can be located along the top of the optic frames 30516 and side arms 30514, respectively. Additionally, as indicated in Figure 305C, each side arm 30514 is connected to the respective optic frame 30516 by a hinge 30529. The hinge 30529 includes a pin 30531 about which the side arm 30514 rotates with respect to the optic frame 30516, to move the frame 30512 between open and folded positions. Various options for the hinge w ill be discussed in more detail below.

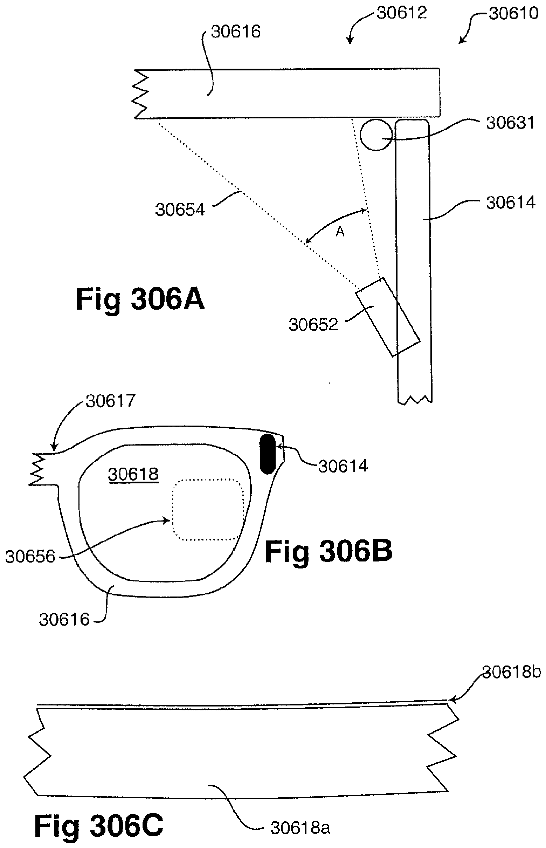

Another embodiment of the invention is shown in Figures 306A-306C. The eyeglass frame 30612 includes a

EP 2 486 450 B1

projector 30652 mounted on the side arm 30614 and aimed toward the optic 30618 housed in the optic frame 30616. The projector 30652 transmits light 30654 through an angle A, and the light is reflected from the optic 30618 back to the wearer's eye. In this way the projector 30652 can project images that are viewable by the wearer. An embodiment of a projector system, including projector 30652, light 30654, and the reflection of this light by the optic 30618 to focus in the user's eye is described in more detail elsewhere in this application. In the projector system, the optic 30618 may be referred to as a "proximal optic", and it may be incorporated into the optic of a pair of glasses such as the eyeglass device 30110, 30210, 30310, etc disclosed in this application.

As shown in Figure 6B, when the projector 30652 is operating, the wearer sees an image 30656 in the wearer's field of view. The image 30656 appears to be projected in front of the wearer's eye, through the optic 30618. The projected image 30656 in Figure 306B is located toward the right side of the wearer's field of view, but this can vary in other embodiments. The projector 30652 can be designed to project the image 30656 at any desired place within the user's field of view. For some applications, it may be desirable to have an image 30656 directly in front of the wearer, but for many applications, it may be more desirable to project the image in the periphery of the user's vision. The size of the image 30656 can also be controlled by the projector.

The light from the projector 30652 is reflected, refracted, or otherwise redirected from the optic 30618 (such as a lens) into the eye of the wearer to cause an image to impinge on the retina; similarly, light reflected from the retina, including that projected, as well as light reflected from other portions of the eye can be captured for use as feedback on the position of the wearer's eye(s). Figure 306C is a cross-section of the example lens 30618a indicating that it includes a coating surface 30618b, such as preferably on the inner surface. The coating preferably interacts with the projected light to send it into the pupil of the eye and/or return light from the eye to the camera. Coatings are known that reflect substantially limited portions of the visible spectra, such as so-called "dichroic" coatings. These coatings have the advantage that they limit the egress of light from the glasses and can, particularly with narrow "band-pass" design, interfere little with vision by the wearer through the glasses.

The eyeglass frame 30612 can have more than one projector, such as one projector on each side arm 30614 acting through optics on both sides of the front face 30617. The projector(s) 30652 can create a virtual reality experience for the wearer, by displaying images in the wearer's field of view. In combination with the other electrical/optical components on the eyeglass device, such as audio transducers, the eyeglass device can provide a virtual reality experience with images and sound. The virtual reality application can even combine elements from the user's surroundings with virtual elements.

Optionally, the projector 30652 can include a camera or image sensor as well, to capture light that is reflected from the wearer's eye. This reflected light is used for eye tracking, in order for the device to detect when the user's eye moves, when the pupil dilates, or when the user opens or closes an eye or blinks. In one example type of an eye tracking system, the camera captures images of the eye and particularly the puil, iris, sclera, and eyelid. In order to determine the rotational position of the eye, images of these features of the eye are matched with templates recorded based on earlier images captured. In one example, a training phase has the user provide smooth scrolling of the eye to display the entire surface. Then, subsequent snippets of the eye can be matched to determine the part of the eye they match and thus the rotational position of the eye.

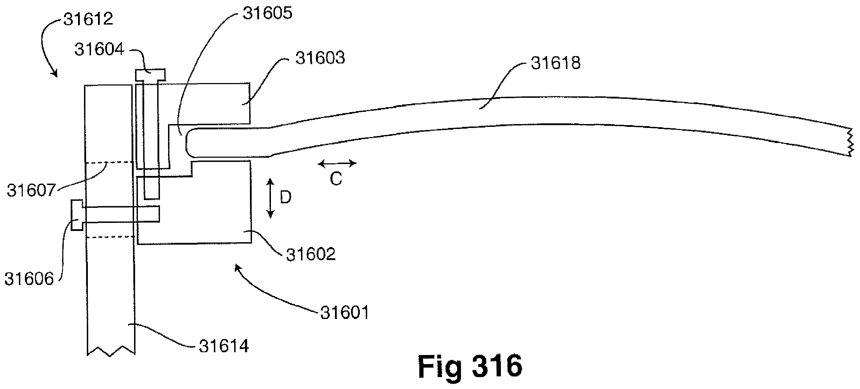

In the embodiment(s) including a projector 30652, it may be helpful for the user to be able to adjust the location and orientation of the optic 30618 with respect to the frame 30612, in order to more properly direct the light from the projector 30652 into the user's eye. Exemplary embodiments of an adjustable eyeglass frame are described further below, with respect to Figures 316-318.

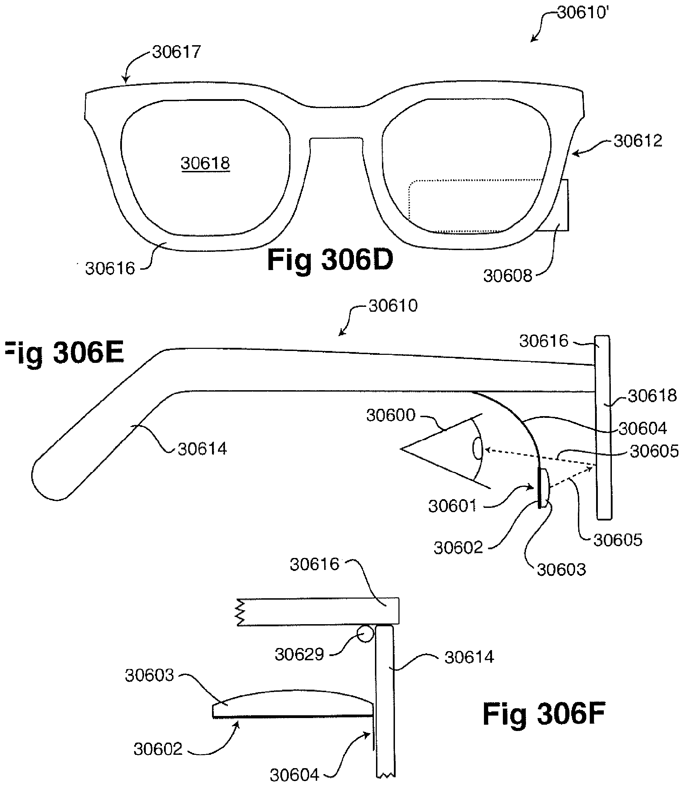

Another embodiment of the invention is shown in Figures 306D-306F. In this embodiment, an eyeglass device 30610' includes a peripheral visual display system 30601. This visual display system is located at a periphery of the user's eye and displays images such as image 30608 (Figure 306D) in the periphery of the user's vision. In one embodiment, the image 30608 is a low-resolution textual image, such as a text message, a temperature reading, a heart rate reading, a clock, or a news headline. The image is displayed by an illuminator 30602 and a lens 30603, which are mounted to the eyeglass frame 30612 and suspended away from the center of the user's field of view. The image 30608 may be quite small, to avoid interfering with the user's view. In one embodiment, the lens has a size of about 2 cm2. In one embodiment, the lens 30603 and illuminator 30602 are suspended from the side arm 30614 by a bridge 30604, which extends down from the side arm 30614.

The illuminator 30602 displays an image such as a text message. Light 30605 from the illuminator 30602 passes through the lens 30603 and toward the main optic 30618. The light from the illuminator is transmitted by the lens 30603, to send it toward the optic 30618. The lens 30603 compensates for the curve of the optic 30618 and the wearer's eyesight. In one embodiment, the lens 30603 is removable, such as by being snapped into or out of place. A kit with various lenses can be provided, and the user can select the lens that is appropriate for the user.

The light 30605 is then reflected by the optic 30618 and directed toward the user's eye 30600, as shown in Figure 306E. In one embodiment, the optic 30618 or a portion of the optic 30618 does not have an anti-reflective coating, so that the light 30605 can be reflected as shown in Figure 306E. In some embodiments, the optic includes dichroic or other structures that reflect a narrow band of frequencies, or narrow bands in the case of multi-color displays, in order to provide higher reflectivity for the wearer and/or block the image from view by onlookers. Modifications to the reflective characteristics of the inside of the optic 30618 can be accomplished by coatings, lenses, stickers, self-adhesive or adhered membranes, or other mechanisms.

The system 30601 optionally corrects for the curvature of images reflected in the optic 30618, and optionally accommodates for the wearer's eyesight. The optic 30618, the lens 30603, and the location of the display system 30601 a re arranged such that the light 30605 passes from the illuminator 30602 into the user's eye. The result is an image such as image 30608 in the periphery of the user's vision. The image system 30601 can be turned on or off so that this image is not always present.

The illuminator 30602 can consist of a plurality of LED, OLED, electroluminescent elements, a combination of reflective or emmissive elements (such as "interferometric modulation" technology), or other light-generating or light-directing elements. The elements can be closely grouped dots that are selectively illuminated to spell out a message. The elements may have non-uniform spacing between them. Optionally the elements are provided in multiple colors, or they could be all one color, such as all red lights. In one embodiment, the lights are transparent so that the user can see the environment behind the image 30608. The user can adjust the brightness of the light-generating elements and the image 30608. In one embodiment, the eyeglass system automatically adjusts the brightness of the elements based on an ambient light sensor, which detects how much light is in the surrounding environment.

Although not shown for clarity in Figure 306F, there is optionally a space between the illuminator 30602 and lens 30603, such as a small gap of air, for the light from the illuminator to pass through before reaching the lens 30603. Also, while the illuminator 30602 is shown in the figures as a flat surface, it can be curved.

The bridge 30604 can be any suitable connecting member to mount the display system 30601 to the frame 30612. A metal or plastic piece can connect the lens 30603 and illuminating elements 30602 to the side arm 30614, or to the front face 30617. The material can be the same material used for the frame 30612. In one embodiment the bridge 30604 is rigid, to keep the display system 30601 properly aligned. In one embodiment, the bridge 30604 includes a damping element such as a damping spring to insulate the display system 30601 from vibrations from the frame 30612. In another embodiment, the bridge 30604 is a bendable member with shape memory, so that it retains its shape when bent into a particular configuration. In this way, the user can bend the bridge to move the display system 30601 out of the user's vision, to the side for example, near the side arm 30614, and then can bend the bridge again to bring the display system 30601 back into use. The bridge 30604 can be provided as a retrofit member, such that the system 30601 can be added to existing eyeglass frames as an accessory device. Mechanical means for attaching the system 30601 to the eyeglasses, such as by attaching the bridge 30604 to the side arm, can be provided, including snaps, clips, clamps, wires, brackets, adhesive, etc. The system 30601 can be electrically and/or optically coupled to the eyeglass device to which it is attached.

In one embodiment, the display system 30601 sits between the user's temple and the side arm 30614. The side arm 30614 can bend or bulge out away from the user's head, if needed, to accommodate the display system 30601. In another embodiment, the display system 30601 sits below the user's eye. In another embodiment, the lens 30603 is positioned behind the front surface of the user's eye.

There are many potential combinations of electrical/optical components, in different locations on the eyeglass frame, which interact together to provide many applications for the wearer. The following sections describe exemplary categories of electrical/optical components that can be used on the eyeglass device, including "infrastructure" components (computer processor, storage, power supply, communication, etc), "input" devices (touch sensors, cameras, microphones, environmental sensors), and "output" devices (image projectors, speakers, vibrators, etc). The various types of sensors described below are intended to be exemplary and non-limiting examples. The embodiments described are not intended to be limited to any particular sensing or other technology.

The "input" devices include electrical/optical components that take input such as information, instructions, or commands from the wearer, or from the environment. These devices can include audio input devices, such as audio transducers, microphones, and bone conduction devices, which detect audio sounds made by the user. These devices can detect voice commands as well as other sounds such as clapping, clicking, snapping, and other sounds that the user makes. The sound can be detected after it travels through the air to the audio device, or after it travels through the user's skull (in the case of bone conduction devices). The audio input devices can also detect sounds from the environment around the user, such as for recording video and audio together, or simply for transmitting background sounds in the user's environment.

Another type of input device detects eye movement of the wearer. An eye tracker can detect movement of the user's eye from left to right and up and down, and can detect blinks and pupil dilation. The eye tracker can also detect a lack of movement, when the user's eye is fixed, and can detect the duration of a fixed gaze (dwell time). The eye tracker can be a camera positioned on the eyeglass frame that detects reflections from the user's eye in order to detect movement and blinks. When the eyeglass frame includes an eye tracker, the user can give commands to the device simply by blinking, closing an eye, and/or looking in a particular direction. Any of these inputs can also be given in combination with other inputs, such as touching a sensor, or speaking a command.

Another category of input devices includes tactile, touch, proximity, pressure, and temperature sensors. These sensors all detect some type of physical interaction between the user and the sensors. Touch sensors detect physical contact between the sensor and the user, such as when the user places a finger on the sensor. The touch sensor can be a capacitive sensor, which works by detecting an increase in capacitance when the user touches the sensor, due to the user's body capacitance. The touch sensor could alternatively be a resistance sensor, which turns on when a user touches the sensor and thereby connects two spaced electrodes. Either way, the touch sensor detects physical contact from the user and sends out a signal when such contact is made. Touch sensors can be arranged on the eyeglass frame to detect a single touch by the user, or multiple finger touches at the same time, spaced apart, or rapid double-touches from the user. The sensors can detect rates of touch, patterns of touch, order of touches, force of touch, timing, speed, contact area, and other parameters that can be used in various combinations to allow the user to provide input and instructions. These touch sensors are commercially available on the market, such as from Cypress Semiconductor Corporation (San Jose, California) and Amtel Corporation (San Jose, California). Example capacitive sensors are the Analog Devices AD7142, and the Quantum QT118H.

Pressure sensors are another type of tactile sensor that detect not only the contact from the user, but the pressure applied by the user. The sensors generate a signal as a function of the pressure applied by the user. The pressure could be directed downwardly, directly onto the sensor, or it could be a sideways, shear pressure as the user slides a finger across a sensor.

Another type of tactile sensor is proximity sensors, which can detect the presence of a nearby object (such as the user's hand) without any physical contact. Proximity sensors emit, for example, an electrostatic or electromagnetic field and sense changes in that field as an object approaches. Proximity sensors can be used in the eyeglass device at any convenient location, and the user can bring a hand or finger near the sensor to give a command to the eyeglass device. As with touch sensors, proximity sensors are commercially available on the market.

Temperatures sensors can also be mounted on the eyeglass frame to take input from the user, such as by detecting the warmth from the user's finger when the sensor is pressed. A flexure sensor, such as a strain gage, can also take input by the user by detecting when the user presses on the eyeglass frame, causing the frame to bend.

Another input device is a motion or position sensor such as an accelerometer, gyroscope, magnetometer, or other inertial sensors. An example is the Analog Devices ADIS16405 high precision tri-axis gyroscope, accelerometer, and magnetometer, available from Analog Devices, Inc. (Norwood, MA). The sensor(s) can be mounted on the eyeglass frame. The motion or position sensor can detect movements of the user's head while the user is wearing the glasses, such as if the user nods or shakes his or her head, tilts his or her head to the side, or moves his or her head to the right, left, up, or down. These movements can all be detected as inputs to the eyeglass device. These movements can also be used as inputs for certain settings on the eyeglass device. For example, an image projected from the eyeglass device can be fixed with respect to the ground, so that it does not move when the user moves his or her head, or it can be fixed with respect to the user's head, so that it moves with the user's head and remains at the same angle and position in the user's field of view, even as the user moves his or her head.

The eyeglass device can also include standard switches, knobs, and buttons to obtain user input, such as a volume knob, up and down buttons, or other similar mechanical devices that the user can manipulate to change settings or give instructions. For example a switch on the side arm can put the eyeglass device into sleep mode, to save battery life, or can turn a ringer on or off, or can switch to vibrate mode, or can turn the entire device off.

Another type of input devices is environmental sensors that detect information about the user's environment. These can include temperature sensors mounted on the eyeglass frame to detect the surrounding ambient temperature, which could be displayed to the user. Another sensor could detect humidity, pressure, ambient light, sound, or any other desired environmental parameter. An echo sensor can provide information through ultrasonic ranging. Other sensors can detect information about the wearer, such as information about the wearer's health status. These sensors can be temperature sensors that detect the wearer's temperature, or heart rate monitors that detect the wearer's heart beat, or pedometers that detect the user's steps, or a blood pressure monitor, or a blood sugar monitor, or other monitors and sensors. In one embodiment, these body monitors transmit information wirelessly to the eyeglass device. Finally, another type of environmental sensor could be location sensor such as a GPS (global positioning system) receiver that receives GPS signals in order to determine the wearer's location, or a compass.

Finally, input devices also include cameras of various forms, which can be mounted as desired on the eyeglass frame. For example, an optical camera can be positioned on the front of the optic frame to face forward and take images or videos of the user's field of view. A camera could also be faced to the side or back of the user, to take images outside the user's field of view. The camera can be a standard optical camera or an infrared, ultra-violet, or night vision camera. The camera can take input from the user's environment, as well as from the user, for example if the user places a hand in front of the camera to give a command (such as to turn the camera off), or raises a hand (such as to increase volume or brightness). Other gestures by the user in front of the camera could be recognized as other commands.

The next category of electrical/optical components that can be included in various embodiments of the eyeglass device are output devices. Output devices deliver information to the wearer, such as text, video, audio, or tactile information. For example, one type of output device is an image projector, which projects images into the wearer's eye(s). These images can be still or video images, including email, text messages, maps, photographs, video clips, and many other types of content.

Another type of output device is audio transducers such as speakers or bone conduction devices, which transmit audio to the wearer. With the ability to transmit audio to the wearer, the eyeglass device can include applications that allow the wearer to make phone calls, listen to music, listen to news broadcasts, and hear alerts or directions.

Another type of output device is tactile transducers, such as a vibrator. As an example, the eyeglass device with this type of transducer can vibrate to alert the user of an incoming phone call or text message. Another type of output device is a temperature transducer. A temperature transducer can provide a silent alert to the user by becoming hot or cold.

The next category of electrical/optical components includes infrastructure components. These infrastructure components may include computer processors, microprocessors, and memory devices, which enable the eyeglass device to run software programming and store information on the device. The memory device can be a small hard drive, a flash drive, an insertable memory card, or volatile memory such as random access memory (RAM). These devices are commercially available, such as from Intel Corporation (Santa Clara, California). The computer system can include any specialized digital hardware, such as gate arrays, custom digital circuits, video drivers, digital signal processing structures, and so forth. A control system is typically provided as a set of programming instructions stored on the computer processor or memory device, in order to control and coordinate all of the different electrical/optical components on the eyeglass device.

Infrastructure devices can also include a power source, such as on-board batteries and a power switch. If the batteries are re-chargeable, the eyeglass device can also include the necessary connector(s) for re-charging, such as a USB port for docking to a computer for recharging and/or exchanging content, or a cable that connects the device to a standard wall outlet for recharging. Exemplary re-charging components are described in more detail below.

The infrastructure devices can also include communications devices such as antennas, Bluetooth transceivers, WiFi transceivers, and transceivers and associated hardware that can communicate via various cellular phone networks, ultra-wideband, irDA, TCP/IP, USB, FireWire, HDMI, DVI, and/or other communication schemes. The eyeglass can also include other hardware such as ports that allow communications or connections with other devices, such as USB ports, memory card slots, other wired communication ports, and/or a port for connecting headphones.

Additionally, the eyeglass device can include security devices such as a physical or electronic lock that protects the device from use by non-authorized users, or tamper-evident or tamper-responding mechanisms. Other security features can include a typed or spoken password, voice recognition, and even biometric security features such as fingerprints or retina scanning, to prevent unauthorized use of the device. If an incorrect password is entered or a biometric scan is failed, the device can send out alerts such as an audio alarm and an email alert to the user.

The eyeglass device can also include self-monitoring components, to measure its own status and provide alerts to the user. These can include strain gages that sense flexure of the eyeglass frame, and sensors to detect the power level of the batteries. The device can also have other accessory devices such as an internal clock.

Additionally, the "infrastructure" components can also include interfaces between components, which enable parts of the device to be added or removed, such as detachable accessory parts. The device can include various interfaces for attaching these removable parts and providing power and signals to and from the removable part. Various interfaces are known in the art, including electrical, galvanic, optical, infrared, and other connection schemes.

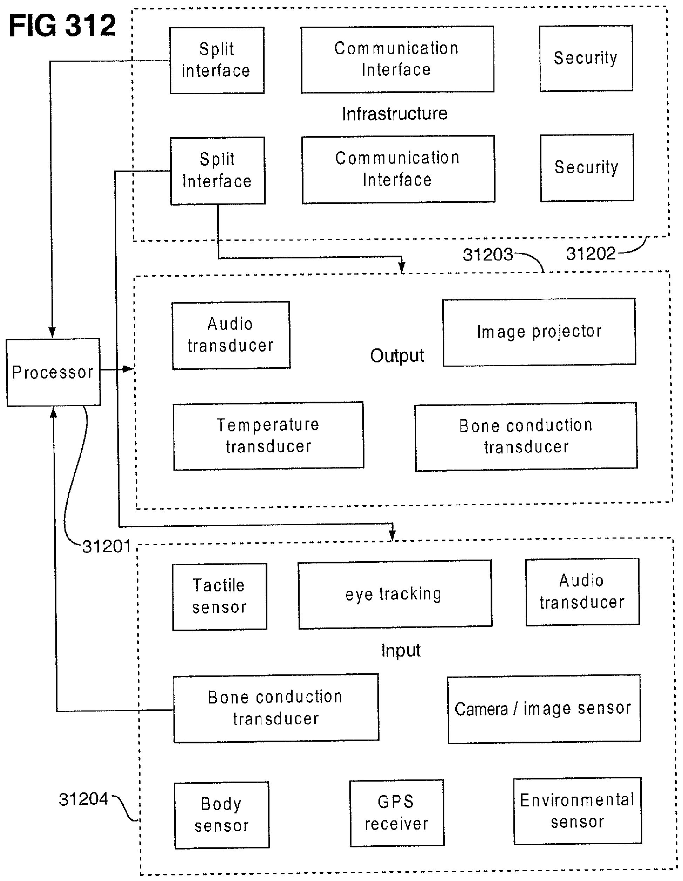

Figure 312 is a block diagram showing exemplary infrastructure, output, and input devices. A processor 31201 communicates back and forth with infrastructure devices 31202. The processor 31201 sends information to output devices 31203, and receives information from input device 31204. All of the devices are connected to a power source 31205, which can supply electrical or optical power to the various devices.

The system may also utilize protected program memory, as shown in Figure 312. The firmware and/or software controlling the systems on each integrated device preferably contains cryptographic algorithms that are used to verify signatures on code updates and/or changes and preferably to decrypt same using keying matter that is securely stored and used. The use of cryptographic algorithms and encrypted programs can make it difficult for malicious software or users to interfere with operation of the system.

These various electrical/optical components can be mixed and matched to create a particular eyeglass device with the desired capabilities for the wearer. For example, an eyeglass device with an audio speaker, microphone, touch sensors, image projector, wifi connection, on-board processor, memory, and batteries can be used to browse the Internet, and download and send email messages. The computer can make a sound, such as a chime sound, when the user receives a new email, and the user can state a command, such as the word "read," to instruct the device to display the new email message. The image projector can then display the new email message. The user can then respond to the email by typing a new message via the touch sensors, and then can state "send" or some other command to send the email. This is just one example, and there are many possible combinations of input, output, and content. The wearer can customize his or her eyeglass device to take commands in a particular way (voice, tactile, eye tracking, etc) and to provide alerts and information in a particular way (displaying an icon, making a chime sound, vibrating, etc). The particular content that is provided can be customized as well, ranging from email, text messages, and web browsing to music, videos, photographs, maps, directions, and environmental information.

As another example, the user can slide a finger along the sensors 30544 or 30546 on the side of the side arm 30514 to increase or decrease the volume of music or audio playback. The user can circle a finger around the sensors 30540 on the front of the optic frame 30516 to focus a camera, darken or lighten an image, zoom in on a map, or adjust a volume level. The user can type on the sensors 30546 or 30542 (see Figure 305B), tapping individual sensors or even tapping sensors together in chords, to type an email or select a song or provide other instructions. The user can grasp the side arm between thumb and finger to have the sensors on the side of the side arm act as a keyboard. One sensor at a certain position can even act as a shift key for the user to press, to have additional inputs. Given these dynamic controls, the image projector can display the control options to the user so that he or she knows which sensors correspond to which inputs. The user can slide a finger along the side of the side arm to scroll up or down a webpage that is displayed by the image projector. The image projector can display an email icon when a new email arrives, and the user can look at this icon and blink in order to have the email opened and displayed. The user can press a button and state the word "weather", and the image projector will display current weather information from the on-board environmental sensors and/or from the Internet. The user can make a clicking sound to select an icon or bring up a home page.

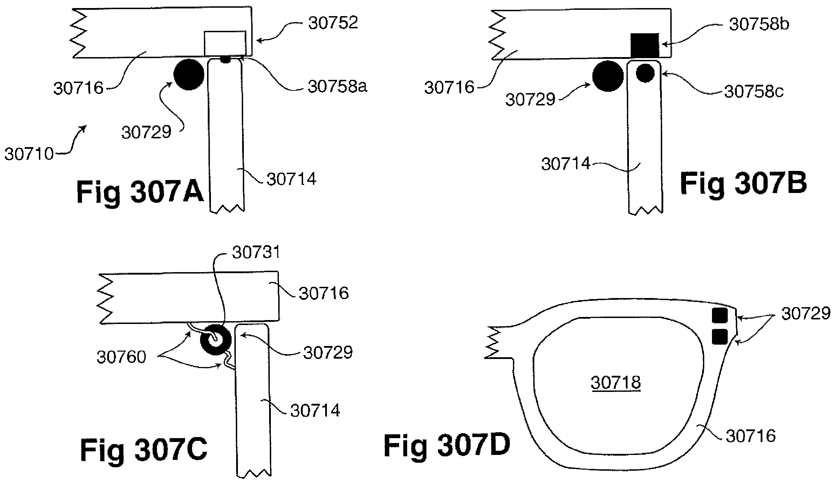

Exemplary features of the eyeglass device will now be described. In the embodiment of Figure 307A, the eyeglass frame 30712 includes a hinge 30729 that connects the side arm 30714 and optic frame 30716. In this embodiment, a power switch 30758 is mounted on the optic frame 30716 to interact with the side arm 30714. When the side arm 30714 is rotated about the hinge 30729 into the open position (shown in Figure 307A), the side arm 30714 depresses a button 30758a extending from the switch 30758. When the button is depressed, power is supplied to the electrical/optical components on the eyeglass frame 30712. When the wearer is finished using the eyeglass device, he or she removes the eyeglass frame 30712 and rotates the side arm 30714 about the hinge 30729 into a folded position, for storage. The side arm 30714 moves away from the switch 30758, releasing the button 30758a. When the button is released, power is disconnected from the electrical/optical components. The button can be spring-loaded to return to the released position, disconnecting power, when the eyeglass frame is folded. Switches of this type are commercially available, such as the DH Series switches manufactured by Cherry / ZF Electronics Corporation (Pleasant Prairie, WI) or the D2SW-P01H manufactured by Omron Corporation (Japan).

In one embodiment, a single switch such as switch 30758 is provided at one hinge 30729. In another embodiment, two switches 30758 are provided, one at each hinge 30729, and power is connected to the device only when both side arms 30714 are rotated into the unfolded, open orientation.

Figure 307A is one example of a power switch, and the switch could take other forms. For example, in Figure 307B, the power switch 30758' is a reed switch, which includes switch 30758b and magnet 30758c. When the side arm 30714 is unfolded, the magnet 30758c is near the switch 30758b. The magnet closes the switch, which then provides power to the eyeglass frame. When the side arm 30714 is folded, the magnet 30758c rotates away from the switch 30758b, and the switch is opened and power disconnected. In other embodiments, the power switch for the eyeglass frame is not associated with the hinge, but is located on a different area of the eyeglass frame. The power switch can be a mechanical switch manipulated by the user, or an electronic switch or sensor. Electronic switches typically require some backup power even when the device is off, much like a sleep mode, in order for them to operate.

Figure 307C shows how power and signals can be transferred between the side arm 30714 and optic frame 30716. In the embodiment shown, the hinge 30729 includes a hollow pin 30731 about which the side arm 30714 rotates. One or more wires or cables 30760 pass from the optic frame 30716, through the center of this hollow pin 30731, to the side arm 30714. In this way, power and signals can travel between the side arm 30714 and optic frame 30716 even when they are separated by the hinge 30729. The cables can be electrical cables and/or fiber optic cables for transmitting light. In other embodiments, other mechanisms for transferring power and signals through the hinge can be used, such as slip ring, which keeps the side arm 30714 in communication with the optic frame 30716 even as the side arm 30714 rotates about the hinge. Further exemplary embodiments of a hinge arrangement are described below.

Figure 307D shows an embodiment in which the hinge 30729 is formed with two separate hinge parts. The hinge from the side arm 30714 fits between these two separate parts to complete the hinge. At certain angular positions, the hinge allows power or signals to pass through the hinge, and at other angular positions the hinge interrupts the power or signals. The two hinge components on the optic frame 30716 are insulated from each other, with the power or signal passing through the cooperating hinge on the side arm 30714. In one embodiment, the hinge 30729 acts as a slip ring, transferring power or signals, without acting as a switch. In other embodiments, the hinge acts as a switch, and in other embodiments, it provides both functions.

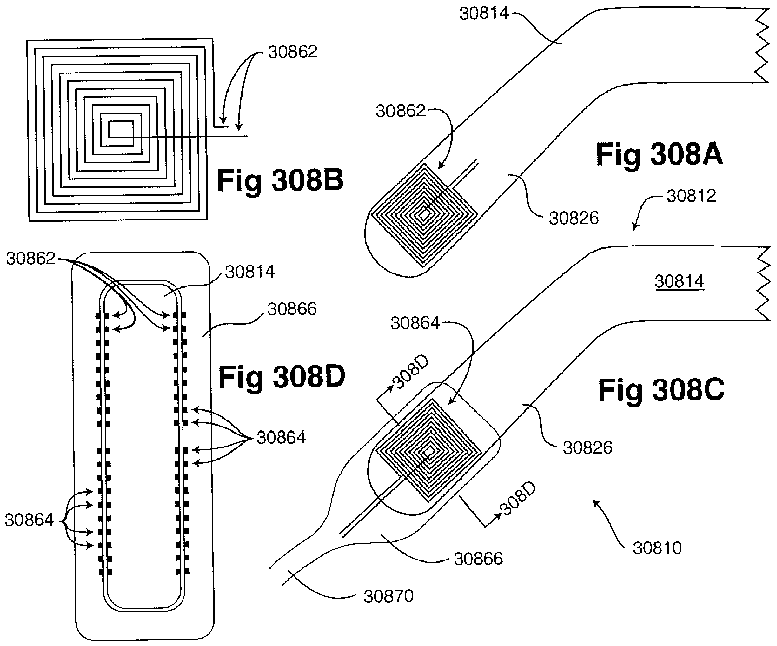

Figures 308A-F show embodiments of the invention in which an eyeglass device 30810 communicates power and/or signals through one or more coils disposed on the eyeglass frame 30812. Alternatively, the eyeglass device communicates power and/or signals through capacitive surfaces on the eyeglass frame 30812. For example, as shown in Figure 308A, the side arm 30814 includes a coil structure 30862 located at the end of the side arm, at the end of the ear hook 30826. An enlarged view of this coil 30862 is shown in Figure 308B. This coil 30862 interacts with a separate coil in a charging device, such as coil 30864 in boot 30866, as shown in Figure 308C. The boot 30866 fits over the end of the ear hook 30826, positioning its own coil 30864 in close proximity with the first coil 30862 on the side arm 30814. A cross-sectional view is shown in Figure 308D, to show the proximity of the two coils 30862, 30864. In the embodiment shown, the side arm 30814 includes a coil 30862 on each side surface of the side arm, and the boot 30866 also has two coils 30864 on each inside surface of the boot. The boot 30866 may be made of an elastic material, so that it stretches over the ear hook 30826 and remains in place due to the elasticity of the boot 30866 itself. Friction between the boot 30866 and ear hook 30826 can also hold the boot in place, or the boot can be retained by other means such as snaps, hooks, magnets, loops, etc.

When the coils 30862, 30864 face each other in close proximity, as shown in Figure 308D, the eyeglass device 30812 can be charged through inductive charging. The coil 30864 in the boot 30866 is connected to a power supply, such as an alternating current electrical power outlet. The electrical current flowing through the coil 30864 creates an alternating electromagnetic field. The coil 30862 in the eyeglass side arm 30814 converts this electromagnetic field back into electrical current to charge the batteries on-board the eyeglass frame 30812. By placing the two coils 30862, 30864 in close proximity, this charging can take place without any direction contact between the two coils. Information signals can also be passed from the boot 30866 to the eyeglass frame 30812 by modulating the current and the electromagnetic field or other means known in the art.

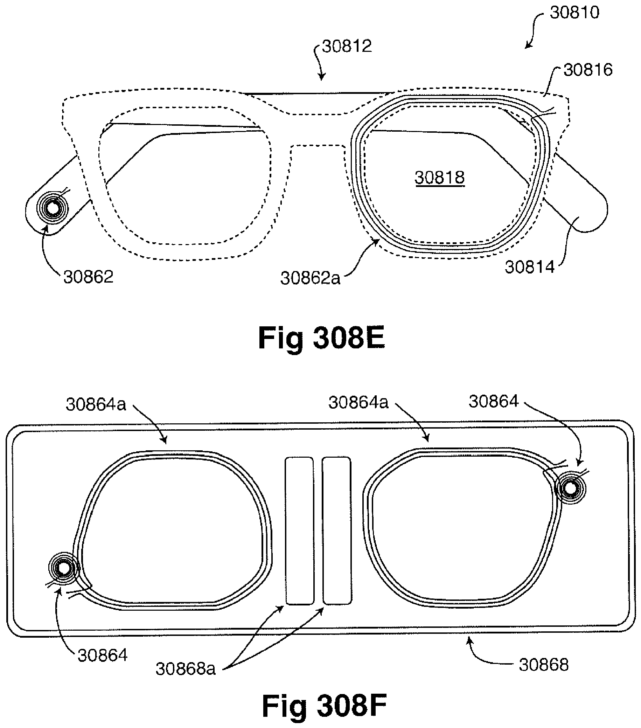

The location of the coil 30862 on the eyeglass frame 30812 is not limited to the end of the side arm 30812. As shown in Figure 308E, another coil 30862a can be provided on one or both optic frames 30816, encircling the optic 30818. This optic coil 30862a interacts with a corresponding coil 30846a which can be located, for example, in a storage case 30868 (see Figure 308F). When the eyeglass device 30812 is not in use, or when it needs to be charged, it is placed in the case 30868 with the optic coil 30862a on the eyeglass frame facing the coil 30864a in the case 30868. The case 30868 has its own power connectors 30868a that provide power to the case, such as by connecting it to a wall outlet and/or information infrastructure or device, and the eyeglass device can be charged by inductive charging through the coils 30864a, 30862a.

In the embodiment shown in Figure 308F, the case 30868 has optic coils 30864a on both sides of the case, so that the charging can take place regardless of which way the eyeglass frame 30812 is placed in the case. Alternatively, only one coil 30864a can be included in the case 30868, and the user will simply need to place the eyeglass frame 30812 in the proper orientation so that the coils 30862a, 30864a face each other. In another alternate embodiment, coils 30862a can be provided around both optic frames 30816, although only one is shown in Figure 308E.

In the embodiment shown in Figure 308F, the case 30868 also includes smaller coils 30864 that interact with the coil 30862 at the end of the side arm 30814. Thus, the coil 30864 can be provided in the charging case 30868 or in a boot 30866 that fits over the side arm 30814. Four coils 30864, 30864a are shown in the case 30868 in Figure 308F, in order to allow for the eyeglass device to couple with the coils regardless of the orientation of the eyeglass frame in the case 30868 (upside down, facing forward, flipped left-for-right). Any orientation of the frame in the case allows coupling. However, in other embodiments, less than four coils are provided in the case 30868. Four, three, two, or even just one coil may be provided, in which case the eyeglass frame 30812 will couple with the coil when stored in the appropriate orientation in the case 30868.

The coils 30862, 30864 can pass power and communication signals to the eyeglass frame through inductive charging, as just described. As another example, the eyeglass device can communicate by capacitive charging, by placing capacitive surfaces in proximity and/or in contact with each other. Also, the eyeglass frame 30812 can include a connection for direct coupling with a charging device. The eyeglass frame can have a male or female connector that connects with a corresponding male or female connector on a charging device, to provide electrical current through direct wired contact.

In addition to charging the eyeglass device 30810, the case 30868 can transfer signals to the eyeglass device 30810, such as updating clocks and calendars, or uploading or downloading content. The case 30868 can act as a base station, and the eyeglass frame 30810 can be placed in the base for docking synchronization and data transfer.

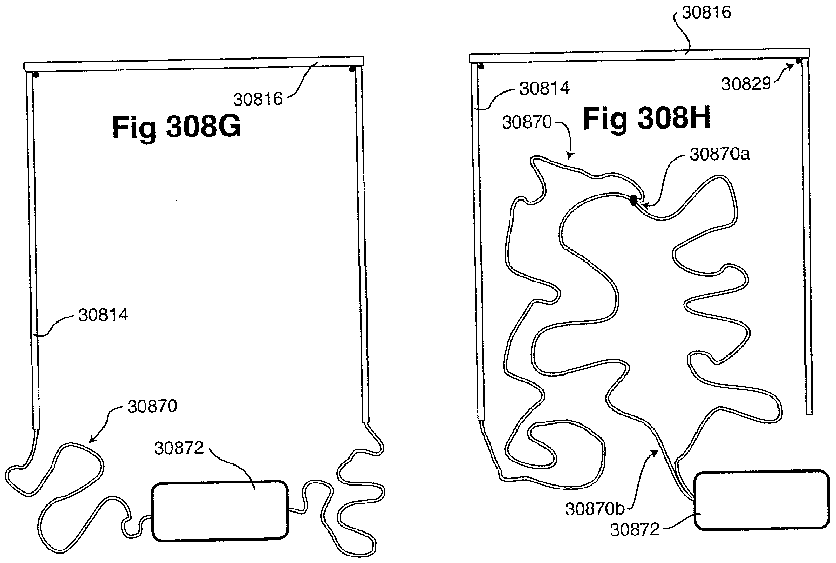

In one embodiment, the boot 30866 is formed as the end of a lanyard or cord 30870 that connects to the other side arm 30814, forming a loop with the eyeglass frame 30812, as shown for example in Figures 308G-H. In the embodiment of Figure 308G, the lanyard 30870 connects the two side arms 30814, and also connects to a package 30872. The package 30872 can include, for example, electrical/optical components that interact with the eyeglass frame 30812 but are not mounted on the eyeglass frame. For example, the package 30872 can include batteries that recharge the batteries on-board the eyeglass frame 30812. When batteries onboard the frame 30812 need recharging, or when the eyeglass device 30810 needs to be powered, the lanyard 30870 can be connected, to transmit power from the batteries in the package 30872 to the frame 30812. The lanyard 30870 can transmit this power through inductive charging or direct contact, as described above. The lanyard itself may include power cables, electrical wires, and/or fiber optic cables for transmitting power and signals between the package and the eyeglass frame. The lanyard can even act as an antenna itself.

In other embodiments, the package 30872 can include other electrical/optical components, such as accessory devices that the user can connect when desired. For example, the package 30872 can include an MP3 player or radio transceiver that the user connects via the lanyard 30870 in order to listen to music, and then disconnects and stores for later use. The package 30872 could include a GPS receiver that the user can use when desired, and then stores when not in use. The package can include a light source for use with an image projector, such as projector 30652. The package can include a computer processor, hard drive, memory, and other computer hardware. The package can include audio microphones to augment sound capture, and/or additional touch panel surfaces for user input. The user can touch the package 30872 and receive feedback from the eyeglass device 30810.

In another embodiment, the package 30872 includes electrical/optical components that communicate wirelessly with the eyeglass frame 30812, such as by radio frequency, optical, audio, or other means. In this embodiment, the lanyard 30870 may mechanically connect to the side arms 30814 without any inductive coils or any direct electrical connection, as the communication between the package 30872 and the frame 30812 is done wirelessly. In this case, the package 30872 could even be separate from the eyeglass frame 30812 entirely, perhaps carried on the user's belt or wristwatch, or in a backpack or purse, or even as a skin patch.

Figure 308H shows another embodiment in which the lanyard 30870 attaches to only one side arm 30814, and a connector 30870a forms the lanyard into a loop or necklace 30870b that the user can wear or loop around another item as is convenient. The package 30872 is carried on the loop 30870b. In one embodiment, the package 30872 is decorative, and provides an anchor for the lanyard 30870.

The lanyard 30870 can attach to the eyeglasses with a boot, such as boot 30866, that slides over and surrounds the end of the side arm 30814. Alternatively, the lanyard can attach with simple rubber clips that slide over the end of the side arm, or with magnet, or other mechanical hooks. In another embodiment, the lanyard is permanently connected to the side arm 30814, rather than being removable.

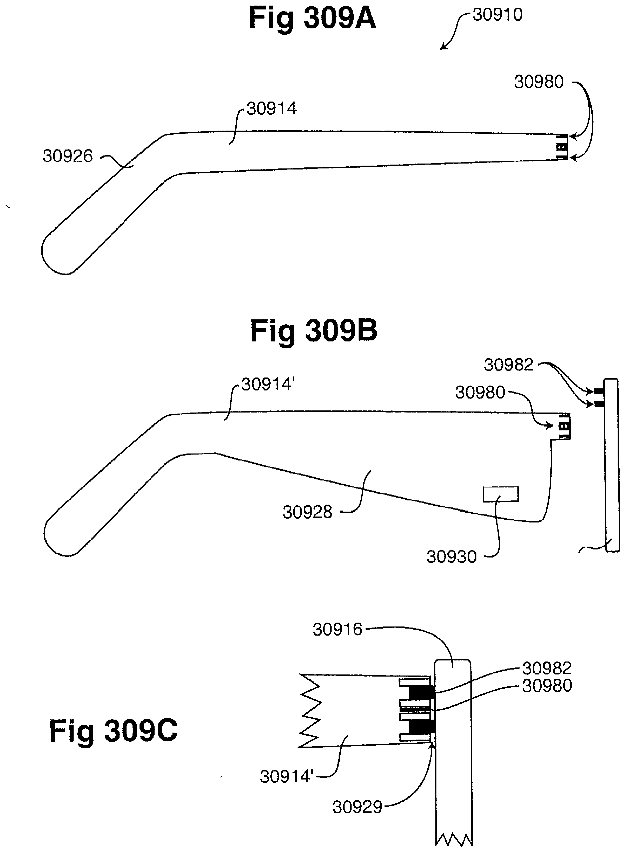

The eyeglass device of the present invention can be formed as interchangeable components that can be swapped or switched out as desired. For example, in the embodiment of Figures 309A-309C, the side arm 30914 can be detached from the hinge 30929, and a replacement side arm 30914' with one or more different electrical/optical components 30930 can be attached. This feature enables the user to switch out side arms to provide different capabilities, as desired. For example, the electrical/optical components 30930 on the replacement side arm 30914' can provide capabilities that the user needs only in certain situations, such as a night-vision camera, or a GPS receiver, or other electrical devices with their own unique capabilities. The user can select between a set of various different replacement side arms, depending on which electrical/optical components and capabilities the user needs for a given situation. In one embodiment, a replacement side arm may not have any electrical/optical components, or may have the same functionality as another side arm, but it provides a different style or color or decorative function.

As shown in Figures 309A-309B, clips 30980 on the side arms 30914, 30914' connect to projections 30982 on the optic frame 30916 to form the hinge 30929. An enlarged view of this connection is shown in Figure 309C. The projections 30982 fit between the clips 30980 and can rotate between them, allowing the side arm 30914, 30914' to rotate between folded and extended positions. The hinge 30929 can pass power and signals between the side arm 30914 and optic frame 30916 through the connections between the clips 30980 and projections 30982. The clips 30980 are spaced apart from each other with an insolating material, to prevent a short circuit between the electrical paths provided on the clips. The projections 30982 are similarly spaced. When the clips and projections are snapped together, they form electrical paths between them so that power and signals can be transmitted through the hinge. The clips and projections may also be referred to as hinge knuckles, which mate together to form the rotating hinge. The clips and projections can be snapped together by mating a ball into a curved cavity between each clip and projection (not shown for clarity), with the outer projections deflecting out and then snapping back into place to receive the clips in between.

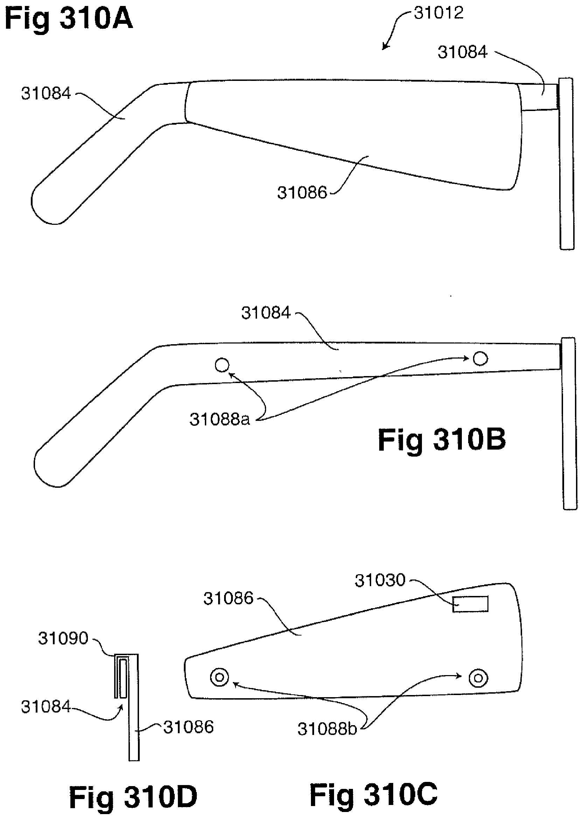

In another embodiment, an eyeglass device 31012 is formed by providing a separate attachment unit 31086 that is fastened to a pair of traditional eyeglasses 31084, as shown in Figures 310A-D. In this embodiment, a standard pair of eyeglasses can be retrofitted to provide new capabilities, without having to replace the user's existing eyeglasses. The separate attachment unit 31086 can be attached to the eyeglasses 31084 by fasteners 31088, such as magnets, clips, snaps, clamps, or corresponding male and female fasteners 31088a, 31088b, or by hooking the attachment unit over the eyeglass arm with a hook 31090 (see Figure 310D). The attachment unit 31086 is shown flipped top over bottom in Figure 310C, to reveal the fasteners 31088b that mate with the fasteners 31088a on the side arm of the eyeglasses 31084. The attachment unit 31086 can also be attached to an electronic eyeglass device, for example, device 30810 (rather than a traditional pair of glasses 31084) to provide additional utilities to the electronic eyeglass device. In this case, the attachment unit 31086 may also couple to exchange power and signal with the electronic eyeglass device 30810.

The separate attachment unit 31086 includes electrical/optical components 31030 as described before, such as touch sensors, audio transducers, image projectors, cameras, wireless antennas, and any of the other components described above, which enable the user to have the desired mobile capabilities, without replacing the user's existing eyeglasses 31084. Attachment units 31086 can be attached to one or both side arms and/or optic frames of the existing eyeglasses 31084, or attached via a lanyard.

The various electrical/optical components described above, including the input, output, and infrastructure components such as computer processors, cameras, induction coils, tactile sensors (touch, proximity, force, etc), audio transducers, and others, can be mounted in any suitable way on the eyeglass frame. The components can be housed within a portion of the frame, such as mounted within the side arm. They can be mounted just under a top surface of the frame, such as mounted on the optic frame just under a cover or top layer. They can be covered, laminated, or over-molded with other materials. The electrical/optical components can be printed, etched, or wound onto a substrate that is mounted on the frame, such as the coil 30862 being printed on a portion of the side arm 30814. The components can be attached to the outer, exposed surface of the frame, such as an image projector or a camera being mounted on the side arm or optic frame, by adhesives, magnets, mechanical fasteners, welding, and other attachment means. Additional components can be connected via a lanyard or can interact with the eyeglass frame via wireless communication.

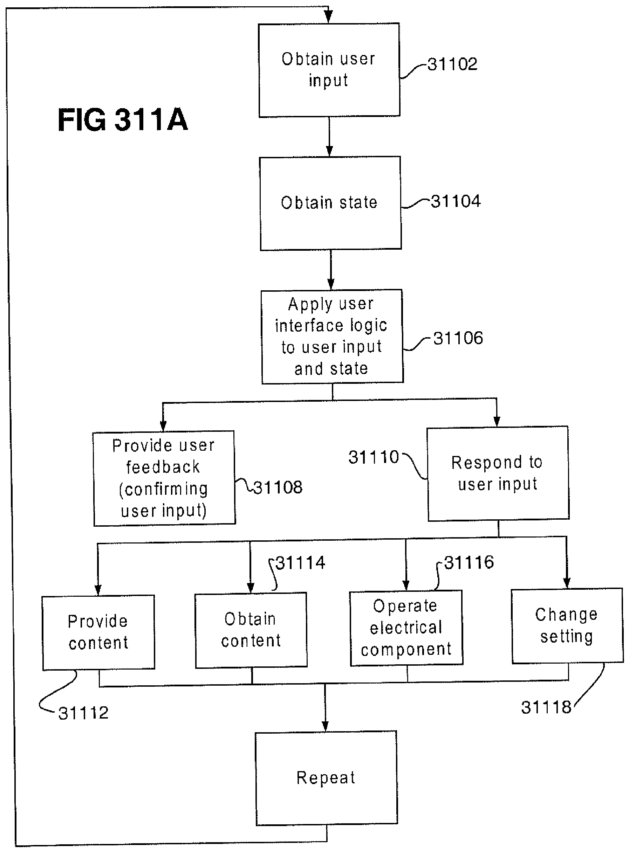

The various electrical/optical components on the eyeglass device are controlled by a control system that is run by an on-board computer processor. The control system is executed by a set of programming instructions stored on the computer, downloaded, or accessed via an attached device. The control system manages the electrical/optical components, processes the inputs, and provides the requested outputs. A flowchart for this control system is shown in Figure 311A. The control system obtains user input 31102. As explained above, this input can take various forms, such as the user speaking a command, touching a sensor, adjusting a knob, blinking, or many other possible inputs. The control system also obtains and stores the state of the eyeglass device 31104. This means that the control system stores the state of all of the various electrical/optical components and programming, such as whether the camera is recording, or whether the image projector is displaying an email, or whether the web browser is downloading a file.

Next, the control system applies the user interface logic to the user input and the state 31106. The user interface logic is a set of programming instructions stored in memory on the eyeglass device. The user interface logic includes logic, or instructions, for changing the state of the various components in response to input from the user. The user interface logic provides instructions for determining a state of the eyeglass device and determining the desired output in response to the user input and the state. The state can include the state of the output device, the state of the input device, and the state of the processor, that is, the state of the programs running on the processor and the state of the user interface.

In step 31106, the control system applies the set of programming instructions to the inputs it has been given. For example, the state may be that the MP3 player is playing a song, and the input may be that the user slid a finger from back to front along a slider sensor. Given the state of playing the song, and the input on the slider sensor, the user interface logic may instruct the control system that this means the user wants to increase the volume of the audio. The user interface logic is the instructions that translate the inputs (component states and user inputs) into outputs (adjusting settings, providing content, changing a component status).

Next, the control system optionally provides user feedback to confirm the user input 31108. This can be as simple as playing a click sound when the user touches a sensor, so that the user knows that the input was received. Depending on the state and the sensor, a different confirmation might be provided. The confirmations can be, for example, sounds (clicks, chimes, etc) or visual images (an icon displaying or flashing) or even a tactile response such as a brief vibration, to let the user know that the input was received (that the button was successfully pushed or the sensor tapped). As the user is adjusting a setting, a visual display can show the adjustment (such as a visual display of a volume level, as the user slides it up or down). The user interface logic determines whether and how to provide this feedback, based on the component states and user inputs.

The control system also responds to the user input 31110. Based on the input and the state, and applying the user interface logic, the control system determines what response to give to the user. As a few examples, this can include providing content 31112 (such as playing a song, displaying a photograph, downloading email), obtaining content 31114 (obtaining a signal from the GPS receiver, initiating a phone call, etc), operating an electrical/optical component 31116 (turning on a camera, activating an environmental sensor, etc), or changing a setting 31118 (increasing volume, or brightness, or changing a ringtone). The control system repeats these steps as necessary as it receives additional user input.

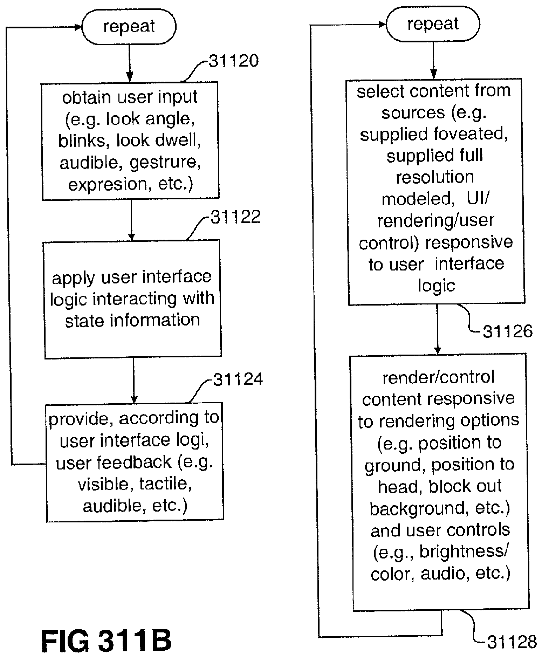

Another flowchart is shown in Figure 311B, to show the separate processes for providing feedback to the user (on the left) and rendering content for the user (on the right). As shown on the flowchart on the left, the system obtains user input in step 31120 (such as input from the eye tracker - look angle, blinks, look dwell - or other audible or visual inputs such as gestures, expression, words, etc) and applies the user interface logic interacting with state information in step 31122. According to the user interface logic and the current state of the components, the system then provides user feedback (such as visible, audio, and tactile feedback confirming the input) in step 31124. These steps are repeated with additional user input.

On the right side of Figure 311B, the flowchart shows the steps for rendering content according for providing to the user. The system selects content from the available sources, responsive to the user interface logic, in step 31126. The user interface logic directs the system to select the appropriate content based on the inputs that have been provided to the user interface logic -- the state of the components, and the input from the user. Then, in step 31128, the system renders and controls the content based on the rendering options and user controls. These include brightness settings (for visual content), relative position settings (for visual content, such as whether the image is fixed with respect to the user's head, or to the ground), audio settings, etc. The system applies these options and settings to deliver the selected content to the user in the appropriate format.

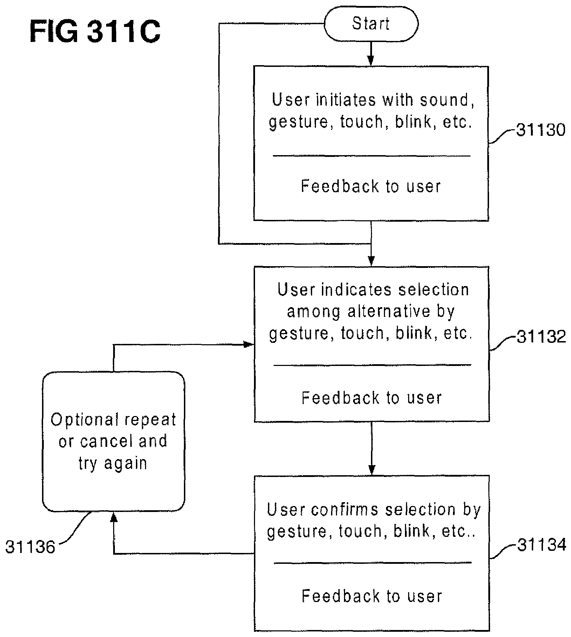

Another exemplary control flowchart is shown in Figure 311C. This flowchart shows the steps that take place when a user wants to adjust a setting, such as a volume level. In this example, in step 31130, the user optionally initiates the process by providing an input to the eyeglass device (such as gesture, touch, blink, audio commands, etc). For example, the user may decide to change the volume of audio that the device is outputting, so the user touches a sensor or speaks a command or tilts his or her head or does another of various options to instruct the device that the user wants to change the volume. The system may provide feedback to the user, such as an audible click or a visible flash, to confirm the input. Alternatively, the eyeglass device may automatically prompt the user to input a volume selection, without the user initiating. For example, the first time the user accesses an on-board MP3 player, the eyeglass device may prompt the user to input a default volume setting.

In step 31132, the user indicates a selection, such as increasing or decreasing volume, by any of various input options (gesture, touch, etc). Again, the system may provide feedback to the user, such as making a clicking sound each time the user adjusts the volume up or down, or displaying a graph of the volume. In step 31134, the user confirms the selection by making another input, such as blinking to indicate that the volume has been adjusted as desired. Again, the system may provide feedback to confirm this input. Optionally, in step 31136, the user may decide to re-adjust the volume (or whatever other input is being given), or to cancel the user's selection and start over. For example, the user may decide he or she made a mistake in the adjustment, and may go back to step 31132 to re-adjust the volume. In each of these steps, the output from the device (the feedback to the user, and the adjustment of the setting) is determined by the user interface logic, which takes the component state (such as current volume level) and the user input (such as pressing a button) and applies the stored programming instructions to determine the output (a click to confirm the pressed button, and an increase in the volume). Volume adjustment is only one example, and this process can be used for adjustment of other controls and settings, or other user inputs.

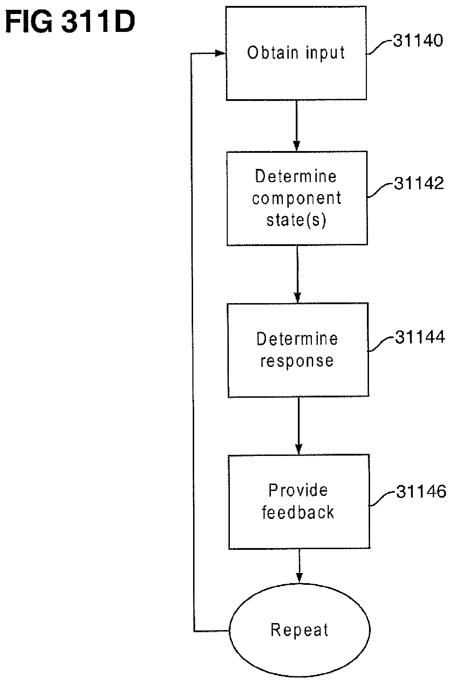

Another embodiment of an exemplary control system is shown in Figure 311D. In this embodiment, the control system obtains input in step 31140, such as from the user or from environmental sensors, other sensors, monitors, and/or communications devices. The system then determines component states in step 31142, including which programs or components are running and their status. The system then determines a response in step 31144, based on its programming instructions. The system then provides feedback in step 31146, which can include feedback that confirms the input (a visible icon or audible click, for example), as well as feedback that responds to the input (providing content to the user, turning on or off a device, increasing the volume, for example). The system optionally repeats, with more user input at step 31140.

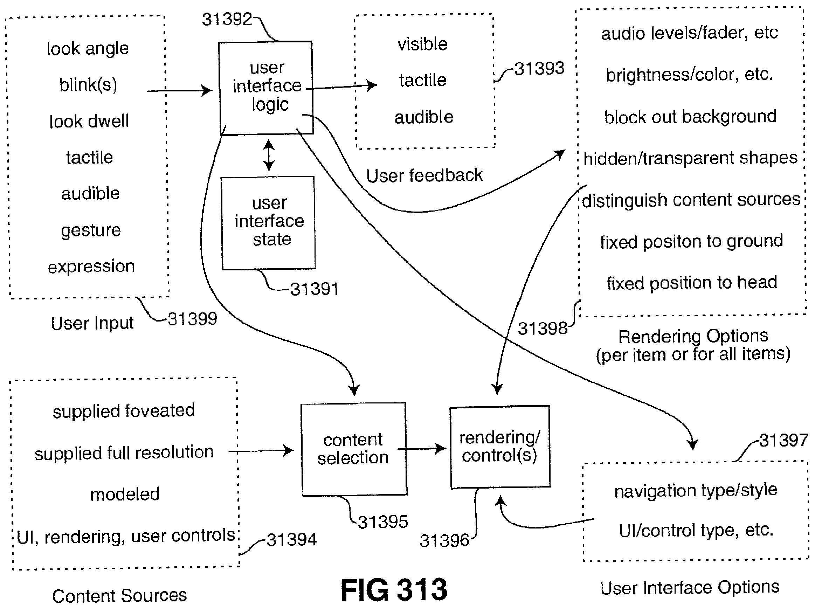

Figure 313 shows a functional block diagram of a control system according to an embodiment of the invention. The user interface logic 31392 interacts with the user interface state 31391. The user interface logic also receives input from the user input source in box 31399. The user input sources can include look angle, blink(s), look dwell, tactile inputs (touch, proximity, pressure, area, etc), audible inputs, gesture (raising a hand in front of a camera, shaking the head, etc) and expression. Optionally, when the user generates an input, the user interface logic directs the system to provide user feedback to confirm the input, in box 31393, such as by visible, tactile, or audio feedback.

The user interface logic 31392 also directs the system to select content in box 31395, from content sources 31394 (including supplied foveated images, supplied full resolution images, modeled images, user inputs, rendering, and user controls). The content selection 31395 gives direction to the rendering control(s) 31396, which take input from rendering options 31398 and user interface options 31397.

Rendering options 31398 include settings and options that can be applied to a particular input source or a content stream from a source, or the settings can be applied to all of the sources or streams. These options and settings affect how the content is seen, heard, or felt. For example, these rendering options include audio levels/faders (controls for an audio device), brightness/color (controls for an image such as a photograph or video), an option to block out the background (for example, hiding the natural background environment, such as by an LCD shutter, either partly or fully, and in particular parts of the user's field of view or across the entire field of view), an option to have hidden or transparent shapes (for example, to control the transparency of images that are projected, so that they can be seen behind overlapping images or can hide one another), an option to distinguish content sources (for example, allowing the user to blink to identify a content source such as to distinguish a projected image from reality), an option to fix a position with respect to the ground (for example, so that a projected image does not move when the user's head moves) or to fix a position with respect to the head (so that a projected image moves with the user's head, staying at the same angle to the head).

User interface options 31397 are options that affect the user's interaction with the glasses. The user can modify these options from default settings or previous settings. An example is navigation type/style, which can include colors, graphics, sound, styles, and other options related to the way the user interface allows the user to find and select content and to configure itself. Another example is user input control types, including settings such as click rates, or enabling touch or clapping, and other low-level settings affecting the way the user interacts with the user interface.

As shown in Figure 313, the rendering controls 31396 take input from the rendering options 31398, the user interface options 31397, and the content selection 31395 in order to control and provide the requested content to the user in the desired format. The rendering options 31398 and user interface options 31397 communicate back and forth with the user interface logic 31392. The content selection 31395 takes input from the user interface logic 31392 and the content sources 31394.

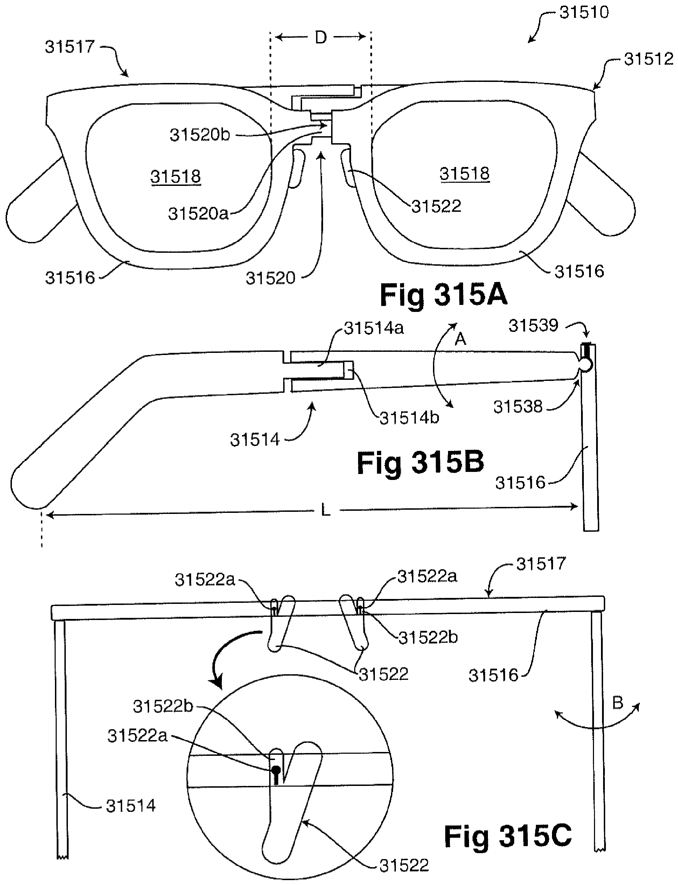

In another embodiment of the invention as shown in Figures 315A-C, an eyeglass device 31510 includes an eyeglass frame 31512 that is adjustable with respect to the user's head. Various optional adjustment mechanisms can be provided to adjust the frame 31512 based on the size and position of the user's head, eyes, nose, and ears. For example, in Figure 315A, the eyeglass frame 31512 includes a telescoping nose bridge 31520. The telescoping nose includes an arm 31520a that is slidably received into a hollow cavity 31520b. The arm 31520a can be slid into and out of the cavity 31520b in order to adjust the length of the nose bridge 31520. This adjustment will change the distance D between the two optic frames 31516, which can be useful to accommodate the width of the user's nose and the distance between the user's eyes. This adjustment enables the wearer to adjust based on his or her inter-pupilary distance ("IPD"), the distance between the pupils of the user's eyes. Depending on the type of optic 31518, it can be important for the IPD to be adjusted correctly so that the light reflected, refracted, or otherwise redirected by the optic 31518 will be correctly directed into the user's eyes.

As shown in Figure 315B, the eyeglass frame 31512 optionally includes a telescoping side arm 31514. The telescoping side arm 31514 includes a sliding arm 31514a that slides in and out of a slot 31514b in the side arm, to adjust the length L of the side arm 31514. In one embodiment, both side arms 31514 include this telescoping mechanism, and the side arms can be adjusted independently. This adjustment is useful to accommodate the distance between the user's ears and nose. In another embodiment, the side arm 31514 is adjustable by bending components of the side arm 31514, rather than by sliding or telescoping.

Additionally, as shown in Figure 315B, the eyeglass frame 31512 optionally includes a ball joint 31538 connecting the side arm 31514 to the optic frame 31516. This ball joint 31538 allows the side arm 31514 to rotate with respect to the optic frame 31516. The side arm 31514 can rotate in two planes. First, it can rotate up and down (in the direction of arrow A) with respect to the optic frame 31516, to adjust for the height of the wearer's ears. This adjusts the pitch of the optic frame 31516 up or down with respect to the side arms 31514. Second, the side arm 31514 can rotate side to side (in the direction of arrow B, shown in Figure 315C), to adjust for the width and angle of the user's head. The side arms 31514 can be rotated as desired about the ball joint 31538, and then secured in place by tightening a pin 31539. The pin 31539 is tightened against the ball joint 31538 to prevent further rotation about the ball joint 31538. The pin 31539 can be unscrewed to allow movement about the ball joint 31538 in order to re-adjust the side arm 31514.

As shown in Figure 315C, the frame 31512 can optionally include adjustable nose pads 31522. The nose pads can be adjusted in two ways. First, the angle of the nose pads with respect to the optic frames 31516 can be adjusted by rotating the nose pads about pin 31522a. This adjustment can accommodate the angle of the user's nose. Second, the nose pads 31522 can be moved toward and away from the optic frame 31516, to adjust the distance of the optic frame 31516 from the user's face. The pins 31522a can be moved along slots 31522b in order to move the nose pads 31522 toward or away from the optic frame 31516. An enlarged view of the pin 31522a and slot 31522b is shown in the inset to Figure 315C. The adjustment of the nose pads 31522 can cooperate with the telescoping side arm 31514 to adjust the distance of the optics 31518 from the user's face.

Figures 316A shows a portion of eyeglass frame 31612 which allows the optic 31618 to be adjusted with respect to the frame 31612. In this embodiment, the eyeglass frame 31612 includes a clamp 31601 that connects the optic 31618 to the side arm 31614. The clamp 31601 includes an inner clamping member 31602 and an outer clamping member 31603. These two clamping members can be moved toward each other to clamp the optic 31618 between them, by tightening the tightening screw 31604. Tightening this screw 31604 will bring the two clamping members 31602, 31603 closer together, fixing the optic 31618 in place between them, and loosening the screw 31604 will move the clamping members apart, so that the optic 31618 is released.

When the optic 31618 is released, it can be moved up and down or side to side within the slot 31605 between the two clamping members. That is, the optic 31618 can be adjusted side to side in the direction of arrow C, and can be moved up and down (perpendicular to the plane of the paper). The slot 31605 allows this movement in two planes. When the optic is in the desired position, the screw 31604 is tightened to fix it in place. This adjustment allows the optic 31618 to be raised up or down with respect to the frame 31612, to accommodate the height of the user's eyes, as well as side to side, to accommodate the user's IPD. Although only one clamp 31601 and one optic 31618 are shown in Figure 316, both optics on the eyeglass frame can be mounted with a clamp to allow for this adjustment.

The optic 31618 can also be adjusted along the side arm 31614 to adjust the distance between the optic 31618 and the user's face. This is accomplished by moving the second tightening screw 31606 within slot 31607. This slot 31607 allows the optic 31618 to be toward and away from the user's face, in the direction of arrow D.

The adjustments along slots 31605 and 31607 allow the optic 31618 to be adjusted in three dimensions (x - direction C, y - perpendicular to the page, and z - direction D), to position the optic 31618 in the desired location for the individual user. This type of adjustment is useful when the optic 31618 is designed to have a particular point behind the optic that needs to be at the center of rotation of the user's eye. As described in more detail herein, certain optics have a point a certain distance behind the optic that should be located at the center of rotation of the user's eye, in order for the optic and its associated image systems to function appropriately. The location of this point will depend on the particular optic being used. The clamp 31601 just described enables the optic 31618 to be adjusted to move this point to the center of rotation of the user's eye, based on the unique characteristics of the individual user. In this embodiment, the eyeglasses need not be specifically manufactured and dimensioned for a particular user, based on that user's facial features; instead, the eyeglasses can be adjusted for each individual user.

Adjustment for the individual user, to place the point behind the optic on the center of rotation of the eye (when such an optic is used), can be accomplished with the x, y, and z adjustments provided by the clamp 31601. In one embodiment, the second screw fastener 31606 clamps the optic 31618 with only moderate force, so as not to overconstrain or stress the optic.

Optionally, the clamp 31601 includes a flexible or deformable material (not shown for clarity), to protect the clamped optic 31618 from vibrations from the frame 31612.

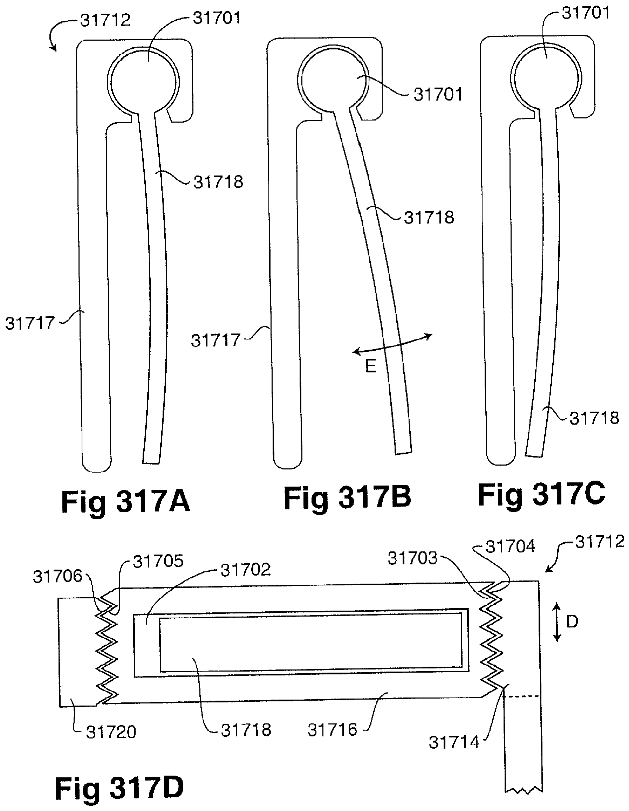

Another embodiment of an adjustable eyeglass frame 31712 is shown in Figures 317A-D. As shown in the side views of Figures 317A-C, the frame 31712 includes a front face 31717 and an adjustable optic 31718. The optic 31718 pivots about a rod 31701 at the top of the front face 31717. This rod 31701 enables the optic 31718 to rotate forward and backward with respect to the front face 31717, toward and away from the user's face, in the direction of arrow E. In Figure 317B, the optic 31718 has been rotated outward, away from the user's face, and in Figure 317C it has been rotated inwardly, toward the user's face. This adjustment changes the pitch of the optic 31718, the angle of the optic with respect to the user's face. While a rod 31701 is shown, other types of mounts or joints such as a ball joint or pins can be used to rotatably mount the optic 31718 to the frame 31712.

The optic 31718 can also be adjusted in the "x" direction, in the direction of arrow C, as shown in Figure 17D. This adjustment is accomplished by sliding the optic 31718 within the slot 31702. This adjustment can be made to accommodate the user's IPD.

Finally, also shown in Figure 317D, the optic 31718 can be adjusted in the "z" direction, in the direction of arrow D, toward and away from the user's face. This adjustment is accomplished by the mating edges 31703, 31704 on the optic frame 31716 and the side arm 31714, respectively, and the mating edges 31705, 31706 on the optic frame 31716 and nose bridge 31720, respectively. In the embodiment shown, these edges 31703-31706 are formed as teeth or triangular edges that mate together in alternating recesses. In other embodiments these edges can be other types of mating surfaces, such as dovetails or mating groove components. The entire optic frame 31716 can be slid out, vertically, from the side arm 31714 and nose bridge 31720, then moved in the direction of arrow D, and then slid back into place between the side arm 31714 and nose bridge 31720. This allows the distance between the optic 31718 and the user's face to be adjusted, in the "z" direction. This type of mating groove or mating teeth connection can also be used at other locations on the frame 31712 to provide for adjustability.

Thus, the adjustable frame 31712 shown in Figures 317A-D can be adjusted in pitch (as shown in Figures 317A-C), "x" direction (arrow C), and "z" direction (arrow D).

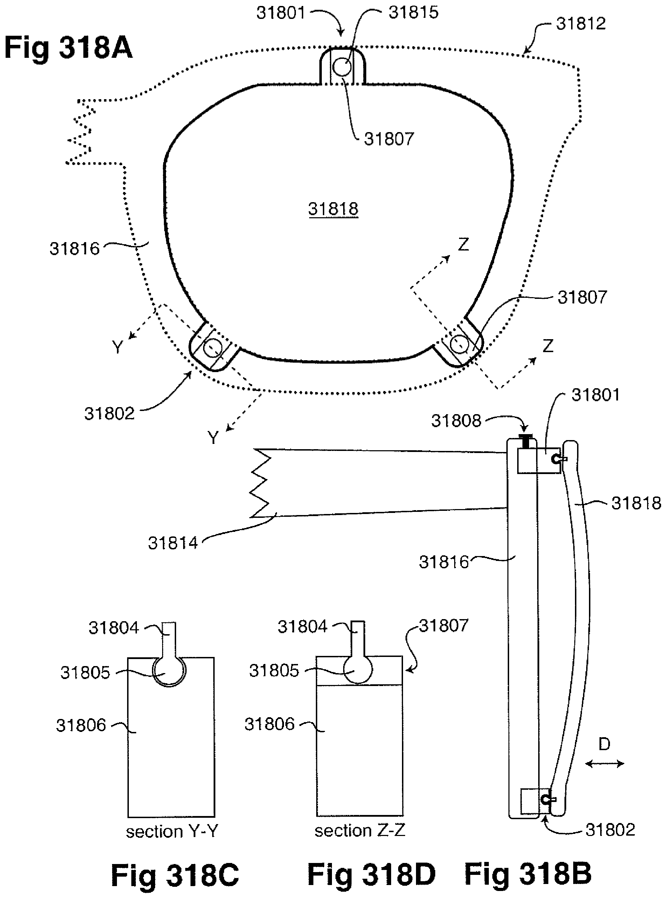

Another embodiment of an adjustable frame is shown in Figures 318A-D. As shown in Figure 318A, an eyeglass frame 31812 includes three adjustable mounts 31801, 31802, 31803. The optic 31818 is attached to the optic frame 31816 by these three mounts 31801, 31802, 31803. Each mount 31801, 31802, 31803 includes a stud 31806 that supports a post 31804 with an enlarged end 31805. The post 31804 connects to the optic 31818, as shown in Figure 318B. The enlarged end 31805 of the post 31804 is slidable within a slot 31807 at the top of the stud 31806.

The three mounts 1801, 1802, 1803 allow the tilt of the optic 1818 to be tilted in two planes. The stud 31806 of each mount can be screwed into or out of the optic frame 31816 to adjust the distance that it extends out from the frame 31816. By adjusting the relative distances of the three studs, the tilt of the optic 31818 can be adjusted. As shown in Figure 318B, the stud of mount 31801 has been extended out from the frame 31816 farther than mount 31802. By unscrewing the stud 31806 of mount 31801, the stud 31806 moves out away from the frame 31816, as shown in Figure 318B. The stud of mount 31802 can be screwed into the frame, to move the stud closer to the frame 31816. This effectively tilts the optic 31818 to point more downwardly. The three mounts 31801, 31802, 31803 can be adjusted individually to tilt the optic 31818 up or down, or side to side. The mounts enable adjustment of pitch (the optic 31818 tilting up and down with respect to the frame 31816) and yaw (the optic tilting side to side with respect to the frame).

The three mounts also enable the optic 31818 to be moved closer or farther to the frame 31816, by moving all three studs into or out of the frame This enables adjustment of the distance between the optic 31818 and the user's face - adjustment in the "z" direction, in the direction of arrow D.

When the mounts are individually adjusted, the enlarged end 31805 of the post 31804 will slide within the slot 31807 to adjust as necessary in order to avoid bending or flexing the optic 31818. Cross-sectional views of the enlarged end 31805 are shown in Figure 318C, taken across the slot 31807, and Figure 318D, taken along the slot 31807. The slots allow the optic to adjust so that it does not become overconstrained by the mounts.

Optionally, the frame 31812 includes a locking pin 31808 that can be tightened against one of the mounts, such as mount 31801, to lock the optic 31818 into place after the mounts have been adjusted as desired. By tightening the locking pin 31808, the stud 31806 of mount 31801 can no longer be adjusted until the locking pin is released.

In other embodiments, the post 31804 may be movable with respect to the optic 31818, in which case the stud 31806 may or may not be movable with respect to the frame 31816. The stud and post can be reversed, with the stud moving within a slot on the optic, and the post being connected to the frame. In another embodiment, two of the mounts are adjustable, but the third mount is fixed, in which case the post and stud may be made as one piece and may be integrally formed with the frame.

The optic 31818 can be adjusted in pitch, yaw, and the "z" direction. As described earlier, the adjustment mechanism of the frame 31712 (shown in Figures 317A-D) can be adjusted in pitch, "x", and "z" directions. The adjustment mechanism of frame 31612 (shown in Figure 316) can be adjusted in "x", "y", and "z" directions. Each of these embodiments allows the respective optic to be adjusted in order to place a particular point behind the optic on a particular point with respect to the user's eye, such as on the center of rotation of the user's eye. In order to move this point to a position on the eye, the optic is adjusted in the "z" direction (toward and away from the user's face, direction D), and in either the "x" direction (horizontal translation, side to side, direction C) or yaw, and in either the "y" direction (vertical translation, up and down) or pitch. In other embodiments, other mechanisms for making these adjustments can be used, such as ball joints, screw fasteners, slots, telescoping members, bendable members, mating grooves, and other connectors that allow adjustment in various degrees of freedom, in order to adjust the optic with respect to the frame, to accommodate each individual user.

Although the present invention has been described and illustrated in respect to exemplary embodiments, it is to be understood that it is not to be so limited, since changes and modifications may be made therein which are within the full intended scope of this invention as hereinafter claimed. For example, many different combinations of electrical/optical components can be provided on an eyeglass frame to create many different applications, and the examples described herein are not meant to be limiting.

The terms and expressions which have been employed in the foregoing specification are used therein as terms of description and not of limitation, and there is no intention, in the use of such terms and expressions, to exclude equivalents of the features shown and described or portions thereof, it being recognized that the scope of the invention is defined and limited only by the claims that follow.

The description of the invention and its applications as set forth herein is illustrative and is not intended to limit the scope of the invention. Variations and modifications of the embodiments disclosed herein are possible, and practical alternatives to and equivalents of the various elements of the embodiments would be understood to those of ordinary skill in the art upon study of this patent document.

## Claims

1. A near-to-eye display system (110) to be mounted on the head of a user for forming an image as an illuminated region on a retina of at least one eye of the user, comprising: a source of modulated light (120); a proximal optic (116) positionable adjacent an eye of the user to receive the modulated light; the proximal optic (116) having a plurality of optically redirecting regions; the optically redirecting regions configured to direct a plurality of beams of the modulated light into a pupil (41) of the eye of the user (4) to form a contiguous illuminated portion of the retina (42) of the eye of the user (4); a first group of the optically redirecting regions configured to receive modulated light from the source and redirect beams of the modulated light into the pupil (41) of the eye of the user for illumination of a first portion of the retina (42); a second group of the optically redirecting regions configured to receive modulated light from the source and redirect beams of the modulated light into the pupil (41) of the eye of the user for illumination of a second portion of the retina (42);
   wherein the source of modulated light (120) is selectable between the first group of the optically redirecting regions to illuminate a foveal portion of the retina (42) and the second group of the optically redirecting regions to illuminate a peripheral portion of the retina (42);
   wherein the proximal optic (116) is at least partially transparent and configured to allow the eye of the user (4) to see through to the environment beyond; and
   wherein at least some of the optically redirecting regions are redirectors that are optically discrete from one another, and an adjacent pair of redirectors simultaneously illuminated by a beam of the modulated light, when mounted on the head of the user at most one redirector in the pair directs a respective portion of the beam into the pupil (41) of the eye of the user, and the other redirector of the pair directs a respective portion of the beam angularly away from the pupil (41) of the eye of the user.

2. The display system of claim 1, wherein the second group of optically redirecting regions is divided into a plurality of sets of optically redirecting regions; the optically redirecting regions of a first of the sets are aimed to direct light to a first location of the eye pupil (41) corresponding to a first rotational position of the eye; and the optically redirecting regions of a second of the sets are aimed to direct light to a second location of the eye pupil (41) corresponding to a second rotational position of the eye; the first rotational position of the eye being different than the second rotational position of the eye.

3. The display system of claim 1, wherein the optically redirecting regions of the first and second groups are configured such that the light beams directed into the pupil by the second group of optically redirecting regions are narrower at the pupil (41) location than are the light beams directed into the pupil (41) by the first group of optically redirecting regions.

4. The display of claim 1, wherein the optically redirecting regions are configured to provide light paths sufficient collectively to illuminate, for each position of the pupil (41), a portion of the retina (42) corresponding to at least a 65 degree field of view.

5. The display system of claim 1, wherein the display system comprises circuitry for detecting the position of the pupil (41) of the eye; and the source of modulated light (120) is configured to select, in response to a detected position of the pupil (41) of the eye, the light paths along which modulated light is directed toward the optically redirecting regions.

6. The display system of claim 1, wherein the proximal optic (11 includes a curved surface that provides ophthalmic correction for the eye.

7. The display system of claim 1, wherein the display system comprises control circuitry for altering the image formed on the retina (42) in response to light captured by the proximal optic (116) from the environment.

8. The display system of claim 1, wherein the optically redirecting regions of the proximal optic are configured to provide a plurality of light paths along which modulated light is redirected to the retina (42) of the user's eye; and the display system comprises circuitry for detecting light reflected back along such light paths by the user's eye.

9. The display system of claim 8, wherein: the control system further comprises control circuitry for determining the condition of focus of the user's eye using the detected light.

10. The display system of claim 1, wherein: at least one optically redirecting region in the plurality comprises a surface diffractive structure.

11. Use of a proximal optic positionable adjacent an eye of a user in a near-to-eye display system Z comprising a source of modulate light and to be mounted on the head of the user for forming an image as an illuminated region on a retina of the eye of the user, the proximal optic comprising: an optical structure positionable adjacent the eye of the user and in a preselected configuration relative to a source of modulated light for reception of modulated light from the source; and a plurality of optically redirecting regions; the optically redirecting regions configured to direct a plurality of beams of the modulated light into a pupil of the eye of the user to form a contiguous illuminated portion of the retina of the eye of the user; a first of the optically redirecting regions configured to receive the modulated light and redirect beams thereof into the pupil of the eye of the user for illumination of a first portion of the retina; a second of the optically redirecting regions configured to receive modulated light and redirect beams thereof into the pupil of the eye of the user for illumination of a second portion of the retina;
wherein the source of modulated light is selectable between a first group of optically redirecting regions to illuminate a central portion of the retina and the second group of optically redirecting regions to illuminate a peripheral portion of the retina;
wherein the display system comprises circuitry for detecting the position of the pupil of the eye of the user; and the source of modulated light is configured to select, in response to a detected position of the pupil of the eye of the user, the light paths along which modulated light is directed toward the optically redirecting regions;
wherein the proximal optic is at least partially transparent and configured to allow the eye of the user (4) to see through to the environment beyond;
wherein at least one optically redirecting region in the plurality comprises a diffractive structure; and
wherein at least some of the optically redirecting regions are redirectors that are optically discrete from one another, and for an adjacent pair of redirectors simultaneously illuminated by a beam of the modulated light, when mounted on the head of the user at most one redirector in the pair directs a respective portion of the beam into the pupil of the eye of the user, and the other redirector of the pair directs a respective portion of the beam angularly away from the pupil of the eye of the user.

12. A method for displaying images by forming an illuminated region on a retina of at least one eye of a user, comprising: providing a source of modulated light; providing a proximal optic to be mounted on the head of the user and positioned adjacent an eye of the user to receive the modulated light, the proximal optic having a plurality of optically redirecting regions; directing a plurality of beams of the modulated light into a pupil of the eye of the user to form a contiguous illuminated portion of the retina of the eye of the user, comprising: directing modulated light from the source onto a first group of the optically redirecting regions to create beams of the modulated light directed into the pupil of the eye of the user for illumination of a first portion of the retina; and directing modulated light from the source onto a second group of the optically redirecting regions to create beams of the modulated light directed into the pupil of the eye of the user for illumination of a second portion of the retina;
wherein the source of modulated light is selectable between a first group of optically redirecting regions to illuminate a central portion of the retina and the second group of optically redirecting regions to illuminate a peripheral portion of the retina;
detecting the position of the pupil of the eye of the user;
selecting, by the source of modulated light, the light paths along which modulated light is directed toward the optically redirecting regions, in response to a detected position of the pupil of the eye of the user;
wherein the proximal optic is at least partially transparent and configured to allow the eye of the user (4) to see through to the environment beyond;
wherein at least one optically redirecting region in the plurality comprises a diffractive structure; and
wherein at least some of the optically redirecting regions are redirectors that are optically discrete from one another, and for an adjacent pair of redirectors simultaneously illuminated by a beam of the modulated light, when mounted on the head of the user at most one redirector in the pair directs a respective portion of the beam into the pupil of the eye of the user, and the other redirector of the pair directs a respective portion of the beam angularly away from the pupil of the eye of the user.

**Patentansprüche**

1. Augennahes Anzeigesystem (110) zum Anbringen am Kopf eines Benutzers, um ein Bild als beleuchtete Region auf der Netzhaut mindestens eines Auges des Benutzers zu erzeugen, das Folgendes umfasst: eine Quelle von moduliertem Licht (120); eine proximale Optik (116), die neben einem Auge des Benutzers positionierbar ist, um das modulierte Licht zu empfangen; wobei die proximale Optik (116) mehrere optisch umlenkende Regionen aufweist; wobei die optisch umlenkenden Regionen zum Lenken mehrerer Strahlen des modulierten Lichts in eine Pupille (41) des Auges des Benutzers (4) konfiguriert sind, um einen angrenzenden beleuchteten Teil der Netzhaut (42) des Auges des Benutzers (4) zu bilden; wobei eine erste Gruppe der optisch umlenkenden Regionen zum Empfangen von moduliertem Licht von der Quelle und zum Umlenken von Strahlen des modulierten Lichts in die Pupille (41) des Auges des Benutzers zum Beleuchten eines ersten Teils der Netzhaut (42) konfiguriert ist; wobei eine zweite Gruppe der optisch umlenkenden Regionen zum Empfangen von moduliertem Licht von der Quelle und zum Umlenken von Strahlen des modulierten Lichts in die Pupille (41) des Auges des Benutzers zum Beleuchten eines zweiten Teils der Netzhaut (42) konfiguriert ist;
wobei die Quelle von moduliertem Licht (120) zwischen der ersten Gruppe der optisch umlenkenden Regionen zum Beleuchten eines fovealen Teils der Netzhaut (42) und der zweiten Gruppe der optisch umlenkenden Regionen zum Beleuchten eines peripheren Teils der Netzhaut (42) wählbar ist;
wobei die proximale Optik (116) zumindest teilweise transparent und so konfiguriert ist, dass das Auge des Benutzers (4) bis zur Umgebung dahinter sehen kann; und
wobei mindestens einige der optisch umlenkenden Regionen Umlenker sind, die optisch voneinander getrennt sind, und für ein benachbartes Paar von Umlenkern, die gleichzeitig von einem Strahl des modulierten Lichts beleuchtet werden, wenn sie am Kopf des Benutzers angebracht sind, höchstens ein Umlenker des Paars einen jeweiligen Teil des Strahls in die Pupille (41) des Auges des Benutzers lenkt und der andere Umlenker des Paars einen jeweiligen Teil des Strahls in einem Winkel von der Pupille (41) des Auges des Benutzers weg lenkt.

2. Anzeigesystem nach Anspruch 1, wobei die zweite Gruppe von optisch umlenkenden Regionen in mehrere Sätze von optisch umlenkenden Regionen unterteilt ist; die optisch umlenkenden Regionen eines ersten der Sätze darauf abzielen, Licht auf eine erste Stelle der Pupille (41) des Auges zu lenken, der einer ersten Drehposition des Auges entspricht; und die optisch umlenkenden Regionen eines zweiten der Sätze darauf abzielen, Licht auf eine zweite Stelle der Augenpupille (41) zu lenken, die einer zweiten Drehposition des Auges entspricht; wobei sich die erste Drehposition des Auges von der zweiten Drehposition des Auges unterscheidet.

3. Anzeigesystem nach Anspruch 1, wobei die optisch umlenkenden Regionen der ersten und zweiten Gruppe so konfiguriert sind, dass die durch die zweite Gruppe von optisch umlenkenden Regionen in die Pupille gelenkten Lichtstrahlen am Ort der Pupille (41) schmaler sind als die durch die erste Gruppe von optisch umlenkenden Regionen in die Pupille (41) gelenkten Lichtstrahlen.

4. Anzeige nach Anspruch 1, wobei die optisch umlenkenden Regionen so konfiguriert sind, dass sie Lichtwege bereitstellen, die gemeinsam ausreichen, um für jede Position der Pupille (41) einen Teil der Netzhaut (42) zu beleuchten, der einem Sichtfeld von mindestens 65 Grad entspricht.

5. Anzeigesystem nach Anspruch 1, wobei das Anzeigesystem eine Schaltung zum Erfassen der Position der Pupille (41) des Auges umfasst; und die Quelle von moduliertem Licht (120) zum Auswählen, als Reaktion auf eine erfasste Position der Pupille (41) des Auges, der Lichtwege konfiguriert ist, entlang derer moduliertes Licht auf die optisch umlenkenden Regionen gelenkt wird.

6. Anzeigesystem nach Anspruch 1, wobei die proximale Optik (11) eine gekrümmte Oberfläche aufweist, die eine ophthalmische Korrektur für das Auge bereitstellt.

7. Anzeigesystem nach Anspruch 1, wobei das Anzeigesystem eine Steuerschaltung zum Ändern des auf der Netzhaut (42) gebildeten Bildes als Reaktion auf das von der proximalen Optik (116) aus der Umgebung eingefangene Licht umfasst.

8. Anzeigesystem nach Anspruch 1, wobei die optisch umlenkenden Regionen der proximalen Optik so konfiguriert sind, dass sie mehrere Lichtwege bereitstellen, entlang derer moduliertes Licht auf die Netzhaut (42) des Auges des Benutzers umgelenkt wird; und das Anzeigesystem eine Schaltung zum Erfassen von Licht umfasst, das vom Auge des Benutzers entlang solcher Lichtwege zurückreflektiert wird.

9. Anzeigesystem nach Anspruch 8, wobei: das Steuersystem ferner eine Steuerschaltung zum Bestimmen des Fokussierungszustands des Auges des Benutzers anhand des erfassten Lichts umfasst.

10. Anzeigesystem nach Anspruch 1, wobei: mindestens eine optisch umlenkende Region in der Mehrzahl eine diffraktive Oberflächenstruktur aufweist.

11. Verwendung einer proximalen Optik, die neben einem Auge eines Benutzers in einem augennahen Anzeigesystem positionierbar ist, das eine Quelle von moduliertem Licht umfasst und am Kopf des Benutzers anzubringen ist, um ein Bild als beleuchtete Region auf einer Netzhaut des Auges des Benutzers zu bilden, wobei die proximale Optik Folgendes umfasst: eine optische Struktur, die neben dem Auge des Benutzers und in einer vorgewählten Konfiguration relativ zu einer Quelle von moduliertem Licht positionierbar ist, um moduliertes Licht von der Quelle zu empfangen; und mehrere optisch umlenkende Regionen; wobei die optisch umlenkenden Regionen zum Lenken mehrerer Strahlen des modulierten Lichts in eine Pupille des Auges des Benutzers konfiguriert sind, um einen angrenzenden beleuchteten Teil der Netzhaut des Auges des Benutzers zu bilden; wobei eine erste der optisch umlenkenden Regionen zum Empfangen des modulierten Lichts und zum Umlenken von Strahlen davon in die Pupille des Auges des Benutzers zum Beleuchten eines ersten Teils der Netzhaut konfiguriert ist; wobei eine zweite der optisch umlenkenden Regionen zum Empfangen von moduliertem Licht und zum Umlenken von Strahlen davon in die Pupille des Auges des Benutzers zum Beleuchten eines zweiten Teils der Netzhaut konfiguriert ist;
wobei die Quelle von moduliertem Licht zwischen einer ersten Gruppe von optisch umlenkenden Regionen zum Beleuchten eines zentralen Teils der Netzhaut und der zweiten Gruppe von optisch umlenkenden Regionen zum Beleuchten eines peripheren Teils der Netzhaut wählbar ist;
wobei das Anzeigesystem eine Schaltung zum Erfassen der Position der Pupille des Auges des Benutzers umfasst; und die Quelle von moduliertem Licht so konfiguriert ist, dass sie als Reaktion auf eine erfasste Position der Pupille des Auges des Benutzers die Lichtwege auswählt, entlang derer moduliertes Licht auf die optisch umlenkenden Regionen gelenkt wird;
wobei die proximale Optik zumindest teilweise transparent und so konfiguriert ist, dass das Auge des Benutzers (4) bis zur Umgebung dahinter sehen kann;
wobei mindestens eine optisch umlenkende Region in der Mehrzahl eine diffraktive Struktur aufweist; und
wobei mindestens einige der optisch umlenkenden Regionen Umlenker sind, die optisch voneinander getrennt sind, und für ein benachbartes Paar von Umlenkern, die gleichzeitig durch einen Strahl des modulierten Lichts beleuchtet werden, wenn sie am Kopf des Benutzers angebracht sind, höchstens ein Umlenker des Paars einen jeweiligen Teil des Strahls in die Pupille des Auges des Benutzers lenkt und der andere Umlenker des Paars einen jeweiligen Teil des Strahls in einem Winkel von der Pupille des Auges des Benutzers weg lenkt.

12. Verfahren zum Anzeigen von Bildern durch Bilden einer beleuchteten Region auf der Netzhaut mindestens eines Auges eines Benutzers, das Folgendes beinhaltet: Bereitstellen einer Quelle von moduliertem Licht; Bereitstellen einer proximalen Optik zum Anbringen am Kopf des Benutzers und neben einem Auge des Benutzers positioniert, um das modulierte Licht zu empfangen, wobei die proximale Optik mehrere optisch umlenkende Regionen aufweist; Lenken mehrerer Strahlen des modulierten Lichts in eine Pupille des Auges des Benutzers, um einen angrenzenden beleuchteten Teil der Netzhaut des Auges des Benutzers zu bilden, das Folgendes beinhaltet: Lenken von moduliertem Licht von der Quelle auf eine erste Gruppe der optisch umlenkenden Regionen, um Strahlen des modulierten Lichts zu erzeugen, die in die Pupille des Auges des Benutzers zum Beleuchten eines ersten Teils der Netzhaut gelenkt werden; und Lenken von moduliertem Licht von der Quelle auf eine zweite Gruppe der optisch umlenkenden Regionen, um Strahlen des in die Pupille des Auges des Benutzers gelenkten modulierten Lichts zum Beleuchten eines zweiten Teils der Netzhaut zu erzeugen;
wobei die Quelle von moduliertem Licht zwischen einer ersten Gruppe von optisch umlenkenden Regionen zum Beleuchten eines zentralen Teils der Netzhaut und der zweiten Gruppe von optisch umlenkenden Regionen zum Beleuchten eines peripheren Teils der Netzhaut wählbar ist;
Erfassen der Position der Pupille des Auges des Benutzers;
Auswählen, durch die Quelle von moduliertem Licht, der Lichtwege, entlang derer moduliertes Licht auf die optisch umlenkenden Regionen gelenkt wird, als Reaktion auf eine erfasste Position der Pupille des Auges des Benutzers;
wobei die proximale Optik zumindest teilweise transparent und so konfiguriert ist, dass das Auge des Benutzers (4) bis zur Umgebung dahinter sehen kann;
wobei mindestens eine optisch umlenkende Region in der Mehrzahl eine diffraktive Struktur aufweist; und
wobei mindestens einige der optisch umlenkenden Regionen Umlenker sind, die optisch voneinander getrennt sind, und für ein benachbartes Paar von Umlenkern, die gleichzeitig durch einen Strahl des modulierten Lichts beleuchtet werden, wenn sie am Kopf des Benutzers angebracht sind, höchstens ein Umlenker des Paars einen jeweiligen Teil des Strahls in die Pupille des Auges des Benutzers lenkt und der andere Umlenker des Paars einen jeweiligen Teil des Strahls in einem Winkel von der Pupille des Auges des Benutzers weg lenkt.

## Revendications

1. Système d'affichage proche de l'œil (110) à monter sur la tête d'un utilisateur pour former une image comme une région éclairée sur une rétine d'au moins un œil de l'utilisateur, comprenant : une source de lumière modulée (120), un élément optique proximal (116) pouvant être positionné adjacent à un œil de l'utilisateur pour recevoir la lumière modulée ; l'élément optique proximal (116) ayant une pluralité de régions optiquement redirectrices ; les régions optiquement redirectrices étant configurées pour diriger une pluralité de faisceaux de la lumière modulée dans une pupille (41) de l'œil de l'utilisateur (4) pour former une partie éclairée contiguë de la rétine (42) de l'œil de l'utilisateur (4) ; un premier groupe des régions optiquement redirectrices étant configuré pour recevoir la lumière modulée de la source et pour rediriger les faisceaux de la lumière modulée dans la pupille (41) de l'œil de l'utilisateur pour éclairer une première partie de la rétine (42) ; un deuxième groupe des régions optiquement redirectrices étant configuré pour recevoir la lumière modulée de la source et pour rediriger les faisceaux de la lumière modulée dans la pupille (41) de l'œil de l'utilisateur pour éclairer une deuxième partie de la rétine (42) ;
dans lequel la source de lumière modulée (120) est sélectionnable entre le premier groupe des régions optiquement redirectrices pour éclairer une partie fovéale de la rétine (42) et le deuxième groupe des régions optiquement redirectrices pour éclairer une partie périphérique de la rétine (42) ;
dans lequel l'élément optique proximal (116) est au moins partiellement transparent et configuré pour permettre à l'œil de l'utilisateur (4) de voir à travers vers l'environnement au-delà ; et
dans lequel au moins certaines des régions optiquement redirectrices sont des dispositifs de redirection qui sont optiquement discrets les uns des autres, et une paire adjacente de dispositifs de redirection étant éclairée simultanément par un faisceau de la lumière modulée, lorsque montée sur la tête de l'utilisateur au plus un dispositif de redirection dans la paire dirige une partie respective du faisceau dans la pupille (41) de l'œil de l'utilisateur, et l'autre dispositif de redirection de la paire dirige une partie respective du faisceau de manière angulaire à l'écart de la pupille (41) de l'œil de l'utilisateur.

2. Système d'affichage selon la revendication 1, dans lequel le deuxième groupe de régions optiquement redirectrices est divisé en une pluralité d'ensembles de régions optiquement redirectrices ; les régions optiquement redirectrices d'un premier des ensembles sont orientées pour diriger la lumière vers un premier emplacement de la pupille (41) de l'œil correspondant à une première position rotationnelle de l'œil ; et les régions optiquement redirectrices d'un deuxième groupe des ensembles sont orientées pour diriger la lumière vers un deuxième emplacement de la pupille (41) de l'œil correspondant à une deuxième position rotationnelle de l'œil ; la première position rotationnelle de l'œil étant différente de la deuxième position rotationnelle de l'œil.

3.  Système d'affichage selon la revendication 1, dans lequel les régions optiquement redirectrices du premier et du deuxième groupe sont configurées de telle sorte que les faisceaux de lumière dirigés dans la pupille par le deuxième groupe de régions optiquement redirectrices sont plus étroits à l'emplacement de la pupille (41) que ne le sont les faisceaux de lumière dirigés dans la pupille (41) par le premier groupe de régions optiquement redirectrices.

4.  Affichage selon la revendication 1, dans lequel les régions optiquement redirectrices sont configurées pour fournir des trajets de lumière collectivement suffisants pour éclairer, pour chaque position de la pupille (41), une partie de la rétine (42) correspondant à au moins un champ visuel de 65 degrés.

5.  Système d'affichage selon la revendication 1, où le système d'affichage comprend des circuits pour détecter la position de la pupille (41) de l'œil ; et la source de lumière modulée (120) est configurée pour sélectionner, en réponse à une position détectée de la pupille (41) de l'œil, les trajets de lumière le long desquels la lumière modulée est dirigée vers les régions optiquement redirectrices.

6.  Système d'affichage selon la revendication 1, dans lequel l'élément optique proximal (116) comprend une surface courbée qui fournit une correction ophtalmique de l'œil.

7.  Système d'affichage selon la revendication 1, où le système d'affichage comprend des circuits de commande pour modifier l'image formée sur la rétine (42) en réponse à la lumière captée par l'élément optique proximal (116) de l'environnement.

8.  Système d'affichage selon la revendication 1, dans lequel les régions optiquement redirectrices de l'élément optique proximal sont configurées pour fournir une pluralité de trajets de lumière le long desquels la lumière modulée est redirigée à la rétine (42) de l'œil de l'utilisateur ; et le système d'affichage comprend des circuits pour détecter la lumière renvoyée le long de tels trajets de lumière par l'œil de l'utilisateur.

9.  Système d'affichage selon la revendication 8, dans lequel : le système de commande comprend en outre des circuits de commande pour déterminer la condition de focalisation de l'œil de l'utilisateur en utilisant la lumière détectée.

10. Système d'affichage selon la revendication 1, dans lequel : au moins une région optiquement redirectrice parmi la pluralité comprend une structure de diffraction de surface.

11. Utilisation d'un élément optique proximal pouvant être positionné adjacent à un œil d'un utilisateur dans un système d'affichage proche de l'œil, comprenant une source de lumière modulée et à monter sur la tête de l'utilisateur pour former une image comme une région éclairée sur une rétine de l'œil de l'utilisateur, l'élément optique proximal comprenant : une structure optique pouvant être positionnée adjacente à l'œil de l'utilisateur et dans une configuration présélectionnée par rapport à une source de lumière modulée pour réception de la lumière modulée de la source ; et une pluralité de régions optiquement redirectrices ; les régions optiquement redirectrices étant configurées pour diriger une pluralité de faisceaux de la lumière modulée dans une pupille de l'œil de l'utilisateur pour former une partie éclairée contiguë de la rétine de l'œil de l'utilisateur ; une première des régions optiquement redirectrices étant configurée pour recevoir la lumière modulée et rediriger des faisceaux de celle-ci dans la pupille de l'œil de l'utilisateur pour éclairer une première partie de la rétine ; une deuxième des régions optiquement redirectrices étant configurée pour recevoir la lumière modulée et rediriger des faisceaux de celle-ci dans la pupille de l'œil de l'utilisateur pour éclairer une deuxième partie de la rétine ; dans laquelle la source de lumière modulée est sélectionnable entre un premier groupe de régions optiquement redirectrices pour éclairer une partie centrale de la rétine et le deuxième groupe de régions optiquement redirectrices pour éclairer une région périphérique de la rétine ; dans laquelle le système d'affichage comprend des circuits pour détecter la position de la pupille de l'œil de l'utilisateur ; et la source de lumière modulée est configurée pour sélectionner, en réponse à une position détectée de la pupille de l'œil de l'utilisateur, les trajets de lumière le long desquels la lumière modulée est dirigées vers les régions optiquement redirectrices ;

dans laquelle l'élément optique proximal est au moins partiellement transparent et configuré pour permettre à l'œil de l'utilisateur (4) de voir à travers vers l'environnement au-delà ;

dans laquelle au moins une région optiquement redirectrice parmi la pluralité comprend une structure de diffraction ; et

dans laquelle au moins certaines des régions optiquement redirectrices sont des dispositifs de redirection qui sont optiquement discrets les uns des autres, et pour une paire adjacente de dispositifs de redirection étant éclairée simultanément par un faisceau de la lumière modulée, lorsque montée sur la tête de l'utilisateur au plus un dispositif de redirection dans la paire dirige une partie respective du faisceau dans la pupille de l'œil de l'utilisateur, et l'autre dispositif de redirection de la paire dirige une partie respective du faisceau de manière angulaire à l'écart de la pupille de l'œil de l'utilisateur.

12. Procédé d'affichage d'images en formant une région éclairée sur une rétine d'au moins un œil d'un utilisateur, comprenant : fournir une source de lumière modulée ; fournir un élément optique proximal à monter sur la tête de l'utilisateur et positionné adjacent à un œil de l'utilisateur pour recevoir la lumière modulée, l'élément optique proximal ayant une pluralité de régions optiquement redirectrices ; diriger une pluralité de faisceaux de la lumière modulée dans une pupille de l'œil de l'utilisateur pour former une partie éclairée contiguë de la rétine de l'œil de l'utilisateur, comprenant : diriger la lumière modulée de la source sur un premier groupe des régions optiquement redirectrices pour créer des faisceaux de lumière modulée dirigés dans la pupille de l'œil de l'utilisateur pour éclairer une première partie de la rétine ; et diriger la lumière modulée de la source sur un deuxième groupe des régions optiquement redirectrices pour créer des faisceaux de lumière modulée dirigés dans la pupille de l'œil de l'utilisateur pour éclairer une deuxième partie de la rétine ;

dans lequel la source de lumière modulée est sélectionnable entre un premier groupe de régions optiquement redirectrices pour éclairer une partie centrale de la rétine et le deuxième groupe de régions optiquement redirectrices pour éclairer une partie périphérique de la rétine ;

détecter la position de la pupille de l'œil de l'utilisateur ;

sélectionner, par la source de lumière modulée, les trajets de lumière le long desquels la lumière modulée est dirigée vers les régions optiquement redirectrices, en réponse à une position détectée de la pupille de l'œil de l'utilisateur ;

dans lequel l'élément optique proximal est au moins partiellement transparent et configuré pour permettre à l'œil de l'utilisateur (4) de voir à travers vers l'environnement au-delà ;

dans lequel au moins une région optiquement redirectrice parmi la pluralité comprend une structure de diffraction ; et

dans lequel au moins certaines des régions optiquement redirectrices sont des dispositifs de redirection qui sont optiquement discrets les uns des autres, et pour une paire adjacente de dispositifs de redirection éclairée simultanément par un faisceau de la lumière modulée, lorsque montée sur la tête de l'utilisateur au plus un dispositif de redirection dans la paire dirige une partie respective du faisceau dans la pupille de l'œil de l'utilisateur, et l'autre dispositif de redirection de la paire dirige une partie respective du faisceau de manière angulaire à l'écart de la pupille de l'œil de l'utilisateur.

**Fig. 1**

Fig. 2

FIELD OF VIEW

PERIPHERAL

IRIS
41

LENS
49

"FOVEAL"
REGION
43

CENTRAL

PERIPHERAL

RETINA
42

EYE
4

**Fig. 3**

"GAZE DIRECTION"
OR
"LOOK DIRECTION"

"PUPIL
SPHERE"
45

IRIS
41

RETINA
42

CENTER OF
ROTATION
OF EYE
44

EYE
4

**Fig. 4**

```
┌─────────────────────────┐
│  PROJECTOR (2) PRODUCES  │
│     SCANNING BEAM        │
└─────────────────────────┘
            │
            ▼
┌─────────────────────────┐
│   BEAM SCANNED ACROSS    │
│  FACETED REFLECTOR (3) TO│
│  COVER FULL FIELD OF VIEW│
└─────────────────────────┘
       │              │
       ▼              ▼
┌──────────────┐  ┌──────────────┐
│   CENTRAL    │  │  PERIPHERAL  │
│  PORTION OF  │  │  PORTION OF  │
│ FIELD OF VIEW│  │ FIELD OF VIEW│
│ GETS "HIGH"  │  │ GETS "LOWER" │
│  RESOLUTION  │  │  RESOLUTION  │
└──────────────┘  └──────────────┘
       │              │
       ▼              ▼
┌──────────────┐  ┌──────────────┐
│ REFLECT OFF  │  │ REFLECT OFF  │
│   "HIGH"     │  │   "LOWER"    │
│  RESOLUTION  │  │  RESOLUTION  │
│CENTRAL-REGION│  │ PERIPHERAL-  │
│  FACETS (31) │  │REGION FACETS │
│              │  │    (32)      │
└──────────────┘  └──────────────┘
       │              │
       ▼              ▼
   ┌───────────────────────────┐
   │ SPECIFIC FACETS (31, 32) ON│
   │  FACETED REFLECTOR (3)     │
   │  REFLECT LIGHT INTO IRIS   │
   │     (41) OF EYE (4)        │
   └───────────────────────────┘
```

# Fig. 5

**Fig. 6**

**Fig. 7**

**Fig. 8**

**Fig. 9**

**Fig. 10**

Fig. 11

Fig. 12

Fig. 13

Fig. 14

Fig. 15

45

48A

48A

48A

48A

48A

48A

48A

48A

48A

41

48

48A

48A

48A

48A

48A

48A

48A

48A

**Fig. 16**

Fig. 17

1700

Image Source
1710

Head Tracker
1730

Image
Processor

1720

Focus Tracker
1750

Pupil Tracker
1740

Alignment
Controller
1770

Light
Controller
1760

Focus
Controller
1780

Fig. 18

```
┌─────────────────────┐
│ Layout              │
│ predetermined       │
│ pupil locations     │
│                     │
│              1800   │
└─────────────────────┘
          │
          ▼
┌─────────────────────┐
│ Select first        │
│ predetermined       │
│ location            │
│                     │
│              1810   │
└─────────────────────┘
          │
          ▼
┌─────────────────────┐          ┌─────────────────────┐
│   MAIN LOOP         │          │ Repeat main loop    │
│ Map the central     │          │ for each of the     │
│ and peripheral      │◄─────────│ remaining           │
│ projectors for this │          │ predetermined       │
│ location            │          │ locations           │
│              1820   │          │              1890   │
└─────────────────────┘          └─────────────────────┘
          │                                 ▲
          ▼                                 │
┌─────────────────────┐          ┌─────────────────────┐
│ Start with the      │          │ Repeat steps 1840   │
│ central             │          │ through 1870 for    │
│ projector           │          │ the peripheral      │
│                     │          │ projector           │
│              1830   │          │              1880   │
└─────────────────────┘          └─────────────────────┘
          │                                 ▲
          ▼                                 │
┌─────────────────────┐          ┌─────────────────────┐
│ Select first        │          │ Build pixel table Q │
│ vertical            │          │ by eliminating      │
│ position v=1        │          │ duplicated entries  │
│                     │          │ in P                │
│              1840   │          │              1870   │
└─────────────────────┘          └─────────────────────┘
          │                                 ▲
          ▼                                 │
┌─────────────────────┐          ┌─────────────────────┐
│   INNER LOOP        │          │ Repeat inner        │
│ Map each horizontal │─────────►│ loop for each       │
│ position from h=1 to│          │ vertical position   │
│ h=H and fill position│◄────────│ from v=2 to         │
│ table P             │  v ≤ V   │ v=V                 │
│              1850   │          │              1860   │
└─────────────────────┘          └─────────────────────┘
```

127

Fig. 19

Fig. 20

Select first frame entry
(h1,v1,r1,g1,b1)

2000

Select first vertical
position v1 and first
horizontal position h1
as the next position
(h,v) to scan with data
(r,g,b)←(r1,g1,b1)
2010

MAIN LOOP
Advance the projector
to the next vertical
position v

2020

Else vn≠v, so continue
processing with next
vertical postion v←vn

2080

vn≠v

INNER LOOP
Advance projector to
the next horizontal
position h        2030

vn=v

If vn=v, then still
processing same
vertical position

2070

Scan the retina with
light intensity data
(r,g,b)

2040

Set h←hn and
(r,g,b)←(rn,gn,bn)

2060

Advance to the next frame
buffer entry (hn,vn,rn,gn,bn),
if any (else scan is done)

2050

Fig. 21

Fig. 22

Fig. 23

Process next image
frame
                    2300

Has pupil location
changed? If so, adjust
image processor and
light controller.    2310

Has head location
changed? If so, adjust
image processor and
light controller.    2320

Is the user blinking? If
so, wait for eye to
reopen.
                    2330

Has focus changed? If
so, adjust image
processor or focus
controller.          2340

Has alignment
changed? If so, adjust
alignment controller.
                    2350

Fig. 24a

2410

2400

2420

2440

Fig. 24b

2400

2450

Fig. 24c

2400

2430

2460

EP 2 486 450 B1

beam
2520

Fig. 25a

eye

2500

2510

2520

Fig. 25b

pupil

2510

2500

2530

Fig. 25c

2500

2510

2530

Fig. 25d

2510

2500

clipping
2550

Fig. 25e

2570

2560

2540

2500

2510

Fig. 25f

2540

2560

2570

2510

2500

Fig. 26a
no spillover

Fig. 26b
gutter spillover

Fig. 26c
neighbor spillover

no spillover, partial fill
Fig. 26d

gutter spillover, partial fill
Fig. 26e

gutter spillover, full fill
Fig. 26f

neighbor spillover, partial fill
Fig. 26g

neighbor spillover, full fill
Fig. 26h

neighbor plus gutter spillover, full fill
Fig. 26i

double neighbor spillover, full fill
Fig. 26j

redirector walk

no redirector walk

2600
2610

Fig. 27

2710
collimator

corrector
2720

2700

static fold mirrors
2730

2740
scan mirror

2750

ellipsoid surface
2760

collimated beam
2770

EP 2 486 450 B1

Fig. 28a

Fig. 28b

Fig. 29a
2900
2910
2914
2912
any-angle/position

Fig. 29b
2900
2920
2922
overlapping footprints
on a launch surface

Fig. 29c
2930
spatial light modulator
2932
2934
steering a foveal
image beam

Fig. 29d
2900
2901
2940
increasing angular range with
multiple sources

Fig. 29e
2950
2900
2952
non-colinear, separately
modulated sources

Fig. 29f
2960
2900
2962
steerably feeding beams among
multiple launch surfaces

Fig. 29g
2972
2970
2974
2976
multiple launch surfaces fed
from same beam

EP 2 486 450 B1

EP 2 486 450 B1

Fig. 30a

quatdralateral redirectors in brick pattern

Fig. 30b

hexagonal redirectors in honeycomb pattern

Fig. 30c

circular redirectors in honeycomb pattern

139

Fig. 31

redirector
3120

3110

launch surface array
3100

center of eye rotation
3140

example eye pupil
3130

Fig. 32a

Fig. 32b

Fig. 32c

optional additional redirector layer(s) 3236

first beam 3200

second beam 3210

eye pupil 3220

walkable launch mirror 3230

first beam 3200

beamwidth redirectors 3234

3232

walkable redirectors 3246

fourth beam 3211

fourth beam 3211

third beam 3201

eye pupil 3221

optional additional launch layer(s) 3244

third beam 3201

beamwidth launch mirrors 3242

3240

3248

optional additional redirector layer(s) 3259

walkable redirectors 3258

sixth 3212 beam

3256

sixth 3212 beam 3250

fifth beam 3202

fifth beam 3202

eye pupil 3222

walkable launch mirrors 3252

optional additional launch layer(s) 3254

Fig. 32d

Fig. 32e

Fig. 32f

EP 2 486 450 B1

Fig. 32g

Fig. 33a

3300

flavor aim points on pupil sphere

example footprint of
beam from feed galvo
3310

Fig. 33b

launch galvo array
(2mm mirrors)

block of redirectors
3330

Fig. 33c

imaginary   3320
1.2mm
grid on
proximal
optic

①  ③  ⑤

②  ④  ⑥

144

## Fig. 34a

```
( originate light )
        │
        ▼
┌─────────────────────────┐
│ modulate pre-source(s)  │
│ (optionally vary color) │
└─────────────────────────┘
        │
        ▼
┌─────────────────────────┐
│   condition beam(s)     │
└─────────────────────────┘
        │
        ▼
┌─────────────────────────┐
│ optionally combine at   │
│ least some beams        │
└─────────────────────────┘
```

## Fig. 34b

```
( originate light )
        │
        ▼
┌─────────────────────────┐
│   pre-source light      │
│ (optionally vary color) │
└─────────────────────────┘
        │
        ▼
┌─────────────────────────┐
│  pre-condition light    │
│        beam(s)          │
└─────────────────────────┘
        │
        ▼
┌─────────────────────────┐
│    modulate beam(s)     │
└─────────────────────────┘
        │
        ▼
┌─────────────────────────┐
│  post-condition beam(s) │
└─────────────────────────┘
        │
        ▼
┌─────────────────────────┐
│ optionally combine at   │
│ least some beams        │
└─────────────────────────┘
```

## Fig. 34c

```
( originate light )
        │
        ▼
┌─────────────────────────┐
│   pre-source light      │
│ (optionally vary color) │
└─────────────────────────┘
        │
        ▼
┌─────────────────────────┐
│  pre-condition light    │
│        beam(s)          │
└─────────────────────────┘
        │
        ▼
┌─────────────────────────┐
│   split beam(s) into    │
│    multiple beams       │
└─────────────────────────┘
        │
        ▼
┌─────────────────────────┐
│    modulate beams       │
└─────────────────────────┘
        │
        ▼
┌─────────────────────────┐
│  post-condition beams   │
└─────────────────────────┘
        │
        ▼
┌─────────────────────────┐
│ optionally combine at   │
│ least some beams        │
└─────────────────────────┘
```

## Fig. 34d

```
( originate light )
        │
        ▼
┌─────────────────────────┐
│   pre-source light      │
│ (optionally vary color) │
└─────────────────────────┘
        │
        ▼
┌─────────────────────────┐
│  pre-condition beam(s)  │
└─────────────────────────┘
        │
        ▼
┌─────────────────────────┐
│  multiplex and modulate │
│        beam(s)          │
└─────────────────────────┘
        │
        ▼
┌─────────────────────────┐
│  post-condition beams   │
└─────────────────────────┘
        │
        ▼
┌─────────────────────────┐
│ optionally combine at   │
│ least some beams        │
└─────────────────────────┘
```

## Fig. 34e

```
( originate light )
        │
        ▼
┌─────────────────────────┐
│   pre-source light      │
│ (optionally vary color) │
└─────────────────────────┘
        │
        ▼
┌─────────────────────────┐
│  pre-condition beam(s)  │
└─────────────────────────┘
        │
        ▼
┌─────────────────────────┐
│    modulate beam(s)     │
└─────────────────────────┘
        │
        ▼
┌─────────────────────────┐
│   mid-condition beam(s) │
└─────────────────────────┘
        │
        ▼
┌─────────────────────────┐
│  multiplex beam(s) into │
│    separate beams       │
└─────────────────────────┘
        │
        ▼
┌─────────────────────────┐
│  post-condition beams   │
└─────────────────────────┘
        │
        ▼
┌─────────────────────────┐
│ optionally combine at   │
│ least some beams        │
└─────────────────────────┘
```

EP 2 486 450 B1

EP 2 486 450 B1

## Fig. 35a

modulation

pre-source → pre-condition (optional) → modulation → colimator (post-conditioning)

optional color variation

## Fig. 35d

modulation (optional)

pre-pre-source → effective pre-source

optional color variation

effective pre-source

modulation/ multiplex

pre-source → pre-condition (optional) → multiplex/ modulation → colimator (post-conditioning)

optional color variation

## Fig. 35b

colimator (post-conditioning)

modulation

multiplex

pre-source → pre-conditioning (optional) → modulation → mid-conditioning (optional) → multiplex → colimator (post-conditioning)

optional color variation

## Fig. 35c

colimator (post-conditioning)

EP 2 486 450 B1

**Fig 101A**

$$Q = \tan^{-1}\left(\frac{D\sin\varphi}{d}\right)$$

**Fig 101B**

Fig 101C

Fig 101D

$$\left|\theta_{j+m}-\theta_{j+m-1}\right|\approx Q$$

Fig 101F

$\theta_{j+2}$

10101

10102

Fig 101E

a

D-h

$\theta_{j+2}$

10101

10102

Fig 101G

retinal power

input angle

$\theta_{j+2}$

$\theta_{j+2}+\theta_p/2$

**Fig 101H**

Fig 102

Fig 103A

Fig 103B

Fig 103C

Fig 104

EP 2 486 450 B1

Fig 105

EP 2 486 450 B1

10601

10607      10609

$o_1$        $i_1$        $f_3$        $f_4$        $f_4$        $f_e$

10603

10605    $f_1$      10620    $f_2$    $f_3$    10611    $f_4$    10613    $f_e$    10617

10615

$$\frac{1}{o_1} + \frac{1}{i_1} = \frac{1}{f_1}$$

$$\frac{1}{i_i} + \frac{1}{f_3} = \frac{1}{f_2}$$

## Fig 106

$f_1$      $f_2$    $f_3$      $f_4$      $f_e$

**Fig 107**

$$\frac{1}{o_1} + \frac{1}{i_1} = \frac{1}{f_1}$$

$$\frac{1}{i_i} + \frac{1}{f_3} = \frac{1}{f_2}$$

**Fig 108**

# Fig 109A

Infrastructure

| Power Source | Communication interface | Processing / memory |
|---|---|---|
| Split interface | On/Off Switch | Monitoring / Security |

# Fig 109B

Human Interface

| Audio transducer(s) interface | Visible image controller interface | Touch / gaze / blink interface |
|---|---|---|

# Fig 109C

Content Capture

| Internal clock | Temperature / Pressure / Humidity | Body monitoring |
|---|---|---|
| Camera(s) / image sensor(s) | Location | Microphone |

11002

11001

11003

**Fig 110A**

11001

11001

**Fig 110B**

11004

11001

11001

**Fig 110C**

11005

11001

11001

11006

11001

**Fig 110D**

11102

11101

11104

**Fig 111A**

11103

11102

11104

11101

**Fig 111B**

11106

11105

**Fig 111C**

Fig 112A

Fig 112B

Fig 112C

11102

11104

11301

**Fig 113A**

11102

11104

11302

11302

**Fig 113B**

11104

11102

11104

11303

**Fig 113C**

Fig 114A

Fig 114B

Fig 114C

Fig 114D

Fig 115A

Fig 115B

EP 2 486 450 B1

11102

11104

11601

11601

**Fig 116A**

11601

11602

11602

11602

**Fig 116B**

Fig 117A

Fig 117B

Fig 117C

Fig 118A

Fig 118B

Fig 120

Fig 119A

Fig 119B

Fig 121

Fig 122

Fig 123

2.3 mm

12401
(diameter 1.65mm)

12402
(diameter 0.2 mm)

Fig 124

Fig 125

Paramacular region ±5° (d=2100μ)

Macular region ±2° (d=860μ)

······· = Example shifted regions

mirror portion d=400μ
retinal coverage d=5200μ

**Fig 126**

65 mm
(d = 133 mm)

2.3 mm spacing

1.65 mm beam width

25.4 mm

source
origin point
(or points)

eye

25.4 mm

**Fig 127**

**Fig 128**

Fig 129

EP 2 486 450 B1

Fig 130

13004
13003
13003
13003
13002
13006
13005
13007
13008
13009
13001
13010

13101

13102

13103

Fig 131

13201

Fig 132

Fig 133

EP 2 486 450 B1

EP 2 486 450 B1

**Fig 134**

Fig 135A

EP 2 486 450 B1

Fig 135B

Fig 136

EP 2 486 450 B1

Fig 137

EP 2 486 450 B1

Fig 138

Fig 139

EP 2 486 450 B1

**Fig 194A**

EP 2 486 450 B1

Fig 194B

Fig 194C

Fig 194D

Fig 194E

19419

19423

19420

19421

19422

19424

EP 2 486 450 B1

Fig 194F

Fig 194G

14601

14701

14601

14701

14702

**Fig 147B**

14702

14603

14602

14604

**Fig 147A**

EP 2 486 450 B1

Fig 148

Fig 149A

Fig 149B

Fig 149C

Fig 149D

14901

14902

14903

14904

14905

14906

14907

14908

14909

Fig. 150A

Fig. 150B

Fig 151

Fig 152

Fig 153A

Fig 153B

Fig 154

**Fig 155A**

**Fig 155B**

# Fig 156

EP 2 486 450 B1

Fig 157

Start
15800

Reset
15810

Set volume
small
15811

Fig 158A

Repeat
15801

Adjust position
relative to head
movement
15802

15812
Repeat

Measure
within volume
15813

No movement
15814

Y

Fixation
15820

Ballistic
motion
15815

Y

Saccade
15840

15816

15817
Increase volume
(within limits)

Eyelid closed

Y

Blink

15860

15820 Fixation **Fig 158B**

Repeat 15821

Render and measure 15822

Adjust focus 15823

15824 Small movement —— Y

Pursuit 15880

Reset

Y

No movement 15801

15825

**Fig 158E** Pursuit 15880

Repeat 15881

Render and measure 15882

Adjust focus 15883

15884 Move and adjust prediction

Movement tracked —— Y

Reset 15801

15885

15840 Saccade

15860 Blink

15841 Repeat

15861 Repeat

Ballistic movement prediction  15843

Render blurry

15842

Measure at predicted location  15844

Increase volume

Adjust movement prediction  15845

Search volume

15862

15863

End saccade

15847

Adjust focus  15846

Open

Unexpected

15848

Y

Fixation  15820

15865

Y  15864

Fixation

Y

Reset  15801

**Fig 158C  Fig 158D**

**Fig 159**

Fig 160

Fig 161

16202
16203
16201
16204
16205
16206
**Fig 162A**
16207

Q
**Fig 162B**
Q'
**Fig 162C**
D
D'

16301

Fig 163

Fig 164

**Fig 165A**

16501

16502

**Fig 165B**

16503

**Fig 165C** 16505

16504

start

repeat x times
for each mirror

move mirror
angle step

move SLM
locations one
step

**Fig 166**

**Fig 167**

Fig 168A

Fig 168B

Fig 168C

Fig 169A

Fig 169B

Fig 169C

17003

17003

17002

17003

17005

17001

17003

17004

Fig 170

Fig. 171

EP 2 486 450 B1

Fig 172A — 17201, 17202

Fig 172B — 17103, 17203, 17204, 17202, 17205

Fig 172C — 17207, 17208, 17206, 17103, 17201, 17202

Fig 172D — 17206, 17209, 17201, 17202

EP 2 486 450 B1

Fig 173A  Fig 173B  Fig 173C  Fig 173D  Fig 173E

**Fig 174**

EP 2 486 450 B1

Fig. 175

EP 2 486 450 B1

# Fig. 176

**Fig 177**

EP 2 486 450 B1

Fig 178

17901

17802

17906

17905

17908

17903

17906

17905

17907

17904

17902

17813

R G B

17812

17803

17909

**Fig 179**

EP 2 486 450 B1

Fig 180A

18002

18001

Fig 180C

18002

Fig 180D

18002

18003

Fig 180B

18002

18004

228

Fig 180E

Fig 180F

Fig 181A

Fig 181B

Fig 181C

Fig 181D

Fig 181E

Fig 181F

EP 2 486 450 B1

Fig
181G

Fig 182A

Fig 182B

Fig 183B

Fig 183A

Fig 184A

Fig 184B

18408
18417
18409
18414
18415
18413
18412
18411
18410
18416

EP 2 486 450 B1

**Fig 185**

focus/vergence sensing

eyetracking

control

focus adjust

modulation

laser source

launch mirrors

foveal distribution mirrors

peripheral distribution mirrors

Fig 186

18701    18702    **Fig 187A**

18708

18707

18703    **Fig 187B**

18708

18706    18705

**Fig 187C**

18704

Fig 188A

18806 —— 18805

18801

Z

18803

Y

18806

Y

18804 — 18807

18802

18801

18803

18805 — 18806

18805

18807

Y-Y

Z-Z

Fig 188C

Fig 188D

Fig 188B

Fig 189A          Fig 189B          Fig 189C

Fig 189D

Fig 190

Fig 191A

Fig 191B

Fig 191C

Fig 191F

Fig 191E

Fig 191D

Fig 192A

Fig 192B

Fig 192C

Fig 193A

19305
19304
19303
19302
19301

Fig 193B

19305
19304
19303
19306
19302
19301

**Fig 193C**

19305

19304

19303

19307

19302

19301

**Fig 193D**

19305

19304

19303

19308

19307

19302

19301

**Fig 193E**

19305

19304

19309

19303

19307

19308

19302

19301

Fig 194A

Fig 194B

Fig 194C

Fig 194D

19419   19423
19420   19421   19422   19420

Fig 194E

19419    19423

19420    19421    19422    19424

EP 2 486 450 B1

Fig 194F

19425

19424

19427

19419

19421

19420

19426

**Fig 194G**

**Fig 194H**

19430 · 19425 · 19431 · 19427 · 19421

**Fig 195**

19430 · 19501 · 19501 · 19502

**Fig 196B**

19602

**Fig 196D**

19601

**Fig 196A**

**Fig 196C**

## Fig 301A

30110 30127 30114 30112 30129

30130b 30130c 30125

30124

30130a

30126

30116

## Fig 301B

30114' 30130d 30130e

30124

30128 30130f

30126

## Fig 301C

30130g 30117 30120 30130h 30130i

30118 30118

30116 30116

30122 30122

**Fig 302**

**Fig 303**

**Fig 304**

**Fig 305A**

**Fig 305B**

**Fig 305C**

30616

30612

30610

30631

30654

A

30652

30614

**Fig 306A**

30617

30614

30618

30656

30616

**Fig 306B**

30618b

30618a

**Fig 306C**

**Fig 306D**

**Fig 306E**

**Fig 306F**

Fig 307A

Fig 307B

Fig 307C

Fig 307D

Fig 308B

Fig 308A

Fig 308D

Fig 308C

EP 2 486 450 B1

30810

30812

30816

30818

30862

30862a

30814

**Fig 308E**

30864a

30864a

30864

30864

30868a

30868

**Fig 308F**

Fig 308H

Fig 308G

# Fig 309A

30910

30980

30914

30926

# Fig 309B

30982

30980

30914'

30928

30930

# Fig 309C

30916

30982
30980

30914'

30929

**Fig 310A**

31012

31084

31084

31086

31084

31088a

**Fig 310B**

31030

31086

31090

31086

31084

31086

31088b

**Fig 310D**　　**Fig 310C**

**FIG 311A**

Obtain user input ⟋31102

Obtain state ⟋31104

Apply user interface logic to user input and state ⟋31106

Provide user feedback (confirming user input) ⟍31108

31110⟍ Respond to user input

Provide content ⟍31112

Obtain content ⟋31114

Operate electrical component ⟋31116

Change setting 31118⟋

Repeat

repeat

*31120*

obtain user input
(e.g. look angle,
blinks, look dwell,
audible, gestrure,
expresion, etc.)

*31122*

apply user interface
logic interacting with
state information

*31124*

provide, according to
user interface logi,
user feedback (e.g.
visible, tactile,
audible, etc.)

repeat

select content from
sources (e.g.
supplied foveated,
supplied full
resolution
modeled, UI/
rendering/user
control) responsive
to user interface
logic

*31126*

render/control
content responsive
to rendering options
(e.g. position to
ground, position to
head, block out
background, etc.)
and user controls
(e.g., brightness/
color, audio, etc.)

*31128*

# FIG 311B

# FIG 311C

Start

User initiates with sound, gesture, touch, blink, etc.

_____

Feedback to user

31130

User indicates selection among alternative by gesture, touch, blink, etc.

_____

Feedback to user

31132

Optional repeat or cancel and try again

31136

User confirms selection by gesture, touch, blink, etc..

_____

Feedback to user

31134

**FIG 311D**

```
┌─────────────┐
│ Obtain input│──────31140
└─────────────┘
       │
       ▼
┌─────────────┐
│  Determine  │
│  component  │──────31142
│   state(s)  │
└─────────────┘
       │
       ▼
┌─────────────┐
│  Determine  │──────31144
│  response   │
└─────────────┘
       │
       ▼
┌─────────────┐
│   Provide   │──────31146
│  feedback   │
└─────────────┘
       │
       ▼
    (Repeat)
```

**FIG 312**

**User Input**

- look angle
- blink(s)
- look dwell
- tactile
- audible
- gesture
- expression

31399

31392 → user interface logic

User feedback

31391 — user interface state

**User feedback**

- visible
- tactile
- audible

31393

**Rendering Options (per item or for all items)**

- audio levels/fader, etc
- brightness/color, etc.
- block out background
- hidden/transparent shapes
- distinguish content sources
- fixed positon to ground
- fixed position to head

31398

**Content Sources**

- supplied foveated
- supplied full resolution
- modeled
- UI, rendering, user controls

31394

content selection

31395

rendering/ control(s)

31396

31397

**User Interface Options**

- navigation type/style
- UI/control type, etc.

# FIG 313

# FIG 314A

31476

memory

31473a  31474a  31475a

amp  A to D

31477

DSP

amp  A to D

31473b  31474b  31475b

program

31478

31476

memory

31479a  31474a  31475c

amp  A to D

31477

DSP

amp  A to D

31479b  31474b  31475d

program

31478

# FIG 314B

**Fig 315A**

**Fig 315B**

**Fig 315C**

Fig 316

**Fig 317A**

**Fig 317B**

**Fig 317C**

**Fig 317D**

Fig 318A

**Fig 318C**   **Fig 318D**   **Fig 318B**

section Y-Y   section Z-Z

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2008212195 A1
- US 2005068255 A1
- US 4140357 A
- US 3860312 A
- US 37671406
- US 5251048 A
- US 6359673 B
- US 5875012 A
- US 5847798 A

- US 6034752 A
- US 6677086 B
- US 20060106426 A
- US 6545815 B
- US 4353624 A
- US 61142347 B
- US 61169708 B
- US 5572367 A, Jung

**Non-patent literature cited in the description**

- **ANDREW T. DUCHOWSKI.** Eye Tracking Methodology: Theory and Practice. Springer-Verlag, 2007
- Dynamic focus control in high-speed optical coherence tomography based on a microelectromechanical mirro. **BING QI et al.** Optics Communications. 2004, vol. 232, 123-128
- **TORAZAWA ; ARIMAIN.** Reed Switches Developed Using Micromachine Technology. *Oki Technical Review,* April 2005, 76-79
- **K. CHANDRASEKAR et al.** Inductively Coupled Board-to-Board Connectors. *Electronic Components and Technology Conference,* 2005

- **HIKMET ; KEMPERMAN.** Switchable mirrors of chiral liquid crystal gels. *Liquid Crystals,* 01 November 1999, vol. 26 (11), 1645-1653
- **HOU ; SMITH ; HEIKENFELD.** Electrowetting Micro-prisms and Micro-mirrors. *Journal of Lasers and Electro-Optics Society, LEOS 2007, 20th Annual Meeting of the IEEE,* 457-458
- **M. OREN.** Computer-generated holograms fabricated on photopolymer for optical interconnect applications. *SPIE Vol. 1389, International Conference on Advances in Interconnection and Packaging,* 1990, vol. 1389